(19) Europäisches Patentamt / European Patent Office / Office européen des brevets

(11) **EP 2 651 135 A1**

(12) **EUROPEAN PATENT APPLICATION**
published in accordance with Art. 153(4) EPC

(43) Date of publication:
**16.10.2013 Bulletin 2013/42**

(51) Int Cl.:
***H04N 7/32*** *(2006.01)*

(21) Application number: **11846167.2**

(22) Date of filing: **07.12.2011**

(86) International application number:
**PCT/JP2011/078235**

(87) International publication number:
**WO 2012/077695 (14.06.2012 Gazette 2012/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.12.2010 JP 2010273220
20.01.2011 JP 2011009562
11.03.2011 JP 2011054557
30.06.2011 JP 2011145752**

(71) Applicant: **Sony Corporation
Tokyo 108-0075 (JP)**

(72) Inventor: **KONDO, Kenji
Tokyo 108-0075 (JP)**

(74) Representative: **Malden, Nicholas
D Young & Co LLP
120 Holborn
London EC1N 2DY (GB)**

(54) **IMAGE PROCESSING DEVICE, IMAGE PROCESSING METHOD, AND PROGRAM**

(57)    The present invention relates to an image processing device, an image processing method, and a program that can reduce usage of memory bandwidth when motion compensation operations with fractional precision are performed in inter predictions. A reference image read unit reads predetermined reference pixels from a reference image in an inter prediction so that the number of the predetermined reference pixels corresponding to an outer pixel in a predicted image in the inter prediction is smaller than the number of the predetermined reference pixels corresponding to an inner pixel in the predicted image. Using the read predetermined reference pixels, a 2-tap FIR filter, a 4-tap FIR filter, or a 6-tap FIR filter calculates a pixel having a fractional position in the reference image as a pixel in the predicted image. The present technique can be applied to encoding devices that perform compression encoding by H. 264/AVC, for example.

*FIG. 4*

EP 2 651 135 A1

**Description**

TECHNICAL FIELD

The present technique relates to image processing devices, image processing methods, and programs, and more particularly, to an image processing device, an image processing method, and a program that can reduce usage of memory bandwidth when motion compensation operations with fractional precision are performed in inter predictions.

BACKGROUND ART

As a standard for image compression, there is H.264/MPEG (Moving Picture Experts Group)-4 Part10 Advanced Video Coding (hereinafter referred to as H.264/AVC).

According to H.264/AVC, inter predictions are performed by taking advantage of correlations between frames or fields. In an inter prediction, a motion compensation operation is performed by using a part of a referable image that has already been stored, and a predicted image is generated.

In recent years, there have been attempts to improve the motion vector resolution in motion compensation operations so as to achieve fractional precision such as 1/2 or 1/4.

In such a motion compensation operation with fractional precision, virtual pixels having fractional positions, called Sub pels, are set between adjacent pixels in a reference image, and operations to generate the Sub pels are additionally performed (hereinafter referred to as interpolations) (see Patent Document 1, for example). That is, in a motion compensation operation with fractional precision, the lowest motion vector resolution is a fractional multiple of the number of pixels, and therefore, interpolations to generate pixels in fractional positions are performed.

Interpolation filters (IF) used in interpolations are normally finite impulse response (FIR) filters.

For example, in conventional interpolations, 6-tap FIR filters are used in interpolations to generate Sub pels in 1/2 pixel positions. A Sub pel in a 1/4 pixel position is generated by performing a bi-linear operation using the Sub pels in the 1/2 pixel positions or the pixels in the integer positions on both sides of the Sub pel.

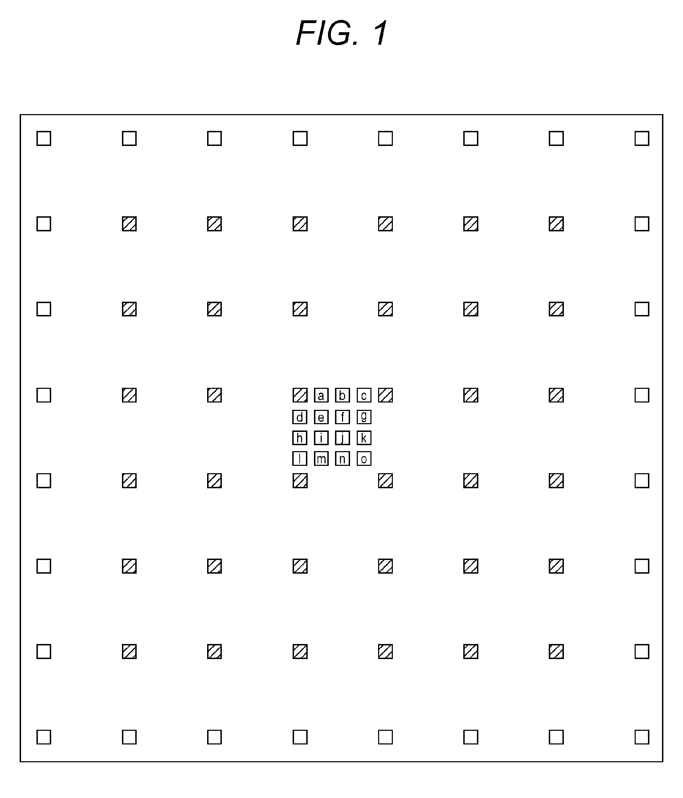

Fig. 1 is a diagram showing the pixels to be used in generating Sub pels a through o in conventional interpolations.

In Fig. 1, the squares having no alphabetical characters assigned thereto represent pixels in integer positions, and the squares having alphabetical characters assigned thereto represent the Sub pels of the respective alphabetical characters.

The Sub pel b in a 1/2 pixel position in Fig. 1 is generated by a 6-tap FIR filter using the six pixels in the integer positions represented by the shaded squares having the same position as the Sub pel b in the horizontal direction. The Sub pel h in a 1/2 pixel position is generated by the 6-tap FIR filter using the six pixels in the integer positions represented by the shaded squares having the same position as the Sub pel h in the vertical direction. Further, the Sub pel j in a 1/2 pixel position is generated by the 6-tap FIR filter using the 6 x 6 pixels represented by the shaded squares, six pixels at a time. Pixels a, c through g, i, and k through o in 1/4 pixel positions are generated by using the pixels b, h, and j, or the pixels in the integer positions represented by the shaded squares on both sides.

CITATION LIST

NON-PATENT DOCUMENT

Non- Patent Document 1: Dmytro Rusanovskyy, Kemal Ugur, Antti Hallapuro, Jani Lainema, and Moncef Gabbouj, Video Coding With Low- Complexity Directional Adaptive Interpolation Filters, IEEE TRANSACTIONS ON CIRCUITS AND SYSTEMS FOR VIDEO TECHNOLOGY, AUGUST 2009, VOL. 19, No. 8

SUMMARY OF THE INVENTION

PROBLEMS TO BE SOLVED BY THE INVENTION

As shown in Fig. 1, in conventional interpolations, a maximum of 6 x 6 pixels around the Sub pels to be generated through the interpolations are required. Therefore, in a motion compensation operation with fractional precision, pixels in a much larger area than the target block of the motion compensation operation are required.

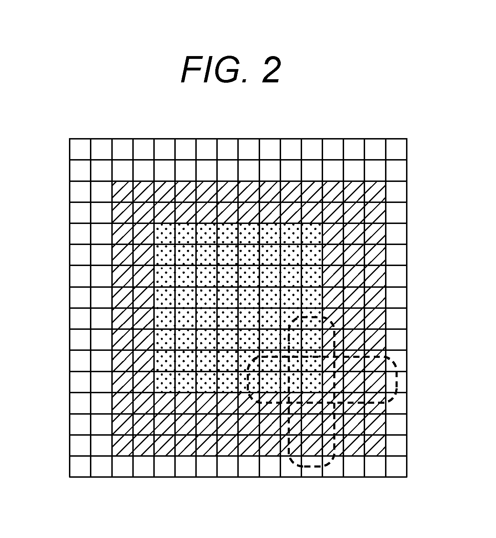

As shown in Fig. 2, a fractional-precision motion compensation operation to be performed on a block of 8 x 8 pixels requires the 8 x 8 pixels represented by the dotted squares corresponding to the block, and the 13 x 13 pixels including the pixels represented by the shaded squares on the outside of the 8 x 8 pixels. Therefore, in a case where motion compensation operations with fractional precision are performed in inter predictions, usage of the bandwidth of the memory that stores reference images is large.

The present technique has been developed in view of the above circumstances, and is to reduce usage of memory bandwidth when motion compensation operations with fractional precision are performed in inter predictions.

SOLUTIONS TO PROBLEMS

An image processing device of one aspect of the present technique is an image processing device that includes: a pixel read unit that reads predetermined pixels from a reference image in an inter prediction; and an arithmetic operation unit that calculates a pixel in a fractional position in the reference image as a pixel in a predicted image in the inter prediction, by using the predetermined pixels read by the pixel read unit. The pixel read unit reads the predetermined pixels so that the number of the predetermined pixels corresponding to an outer pixel in the predicted image is smaller than the number of the predetermined pixels corresponding to an inner pixel in the predicted image.

An image processing method and a program of the one aspect of the present technique are compatible with the image processing device of the one aspect of the present technique.

In the one aspect of the present technique, predetermined pixels are read from a reference image in an inter prediction, and a pixel in a fractional position in the reference image is calculated as a pixel in a predicted image in the inter prediction by using the read predetermined pixels. The predetermined pixels are read so that the number of the predetermined pixels corresponding to an outer pixel in the predicted image is smaller than the number of the predetermined pixels corresponding to an inner pixel in the predicted image.

EFFECTS OF THE INVENTION

According to the present technique, usage of memory bandwidth can be reduced when motion compensation operations with fractional precision are performed in inter predictions.

BRIEF DESCRIPTION OF DRAWINGS

Fig. 1 is a diagram showing an example of pixels to be used in generating Sub pels.

Fig. 2 is a diagram showing a reference pixel range in a case where a motion compensation operation with fractional precision is performed.

Fig. 3 is a block diagram showing an example structure of an embodiment of an encoding device as an image processing device to which the present technique is applied.

Fig. 4 is a block diagram showing a first example structure of the inter prediction unit shown in Fig. 3.

Fig. 5 is a diagram showing an example of reference pixels in a case where the block size is 8 x 8 pixels.

Fig. 6 is a diagram showing an example reference pixel range in a case where the block size is 8 x 8 pixels.

Fig. 7 is a diagram showing an example reference pixel range in a case where the block size is 32 x 32 pixels.

Fig. 8 is a diagram showing an example reference pixel range in a case where the block size is 16 x 32 pixels.

Fig. 9 is a diagram showing an example reference pixel range in a case where the block size is 32 x 16 pixels.

Fig. 10 is a diagram showing an example reference pixel range in a case where the block size is 16 x 16 pixels.

Fig. 11 is a diagram showing an example reference pixel range in a case where the block size is 8 x 16 pixels.

Fig. 12 is a diagram showing an example reference pixel range in a case where the block size is 16 x 8 pixels.

Fig. 13 is a diagram showing an example reference pixel range in a case where the block size is 4 x 8 pixels.

Fig. 14 is a diagram showing an example reference pixel range in a case where the block size is 8 x 4 pixels.

Fig. 15 is a diagram showing an example reference pixel range in a case where the block size is 4 x 4 pixels.

Fig. 16 is a first diagram for explaining a method of generating predicted pixels.

Fig. 17 is a second diagram for explaining the method of generating predicted pixels.

Fig. 18 is a third diagram for explaining the method of generating predicted pixels.

Fig. 19 is a fourth diagram for explaining the method of generating predicted pixels.

Fig. 20 is a first flowchart for explaining an encoding operation by the encoding device shown in Fig. 3.

Fig. 21 is a second flowchart for explaining the encoding operation by the encoding device shown in Fig. 3.

Fig. 22 is a first flowchart for explaining a first example of the inter prediction operation in detail.

Fig. 23 is a second flowchart for explaining the first example of the inter prediction operation in detail.

Fig. 24 is a block diagram showing an example structure of a decoding device as an image processing device to which the present technique is applied.

Fig. 25 is a flowchart for explaining a decoding operation by the decoding device shown in Fig. 24.

Fig. 26 is a block diagram showing a second example structure of the inter prediction unit shown in Fig. 3.

Fig. 27 is a diagram showing a first example of generation pixels.

Fig. 28 is a first flowchart for explaining a second example of the inter prediction operation in detail.

Fig. 29 is a second flowchart for explaining the second example of the inter prediction operation in detail.

Fig. 30 is a block diagram showing a third example structure of the inter prediction unit shown in Fig. 3.

Fig. 31 is a diagram showing a first range of post-replication generation pixels to be used in generating Sub pels a through c.

Fig. 32 is a diagram showing a first range of post-replication generation pixels to be used in generating Sub pels d, h, and l.

Fig. 33 is a diagram showing a first range of post-replication generation pixels to be used in generating Sub pels e, f, g, i, j, k, m, n, and o.

Fig. 34 is a diagram showing a second range of post-replication generation pixels to be used in generating Sub pels a through c.

Fig. 35 is a diagram showing a second range of post-replication generation pixels to be used in  generating Sub pels d, h, and l.

Fig. 36 is a diagram showing a second range of post-replication generation pixels to be used in generating Sub pels e, f, g, i, j, k, m, n, and o.

Fig. 37 is a first flowchart for explaining a third example of the inter prediction operation in detail.

Fig. 38 is a second flowchart for explaining the third example of the inter prediction operation in detail.

Fig. 39 is a flowchart for explaining the read operation of Fig. 37 in detail.

Fig. 40 is a first diagram for explaining a first example of a reference pixel range.

Fig. 41 is a second diagram for explaining the first example of a reference pixel range.

Fig. 42 is a diagram showing a second example of generation pixels.

Fig. 43 is a diagram showing a third example of generation pixels.

Fig. 44 is a block diagram showing a fourth example structure of the inter prediction unit shown in Fig. 3.

Fig. 45 is a first flowchart for explaining a fourth example of the inter prediction operation in detail.

Fig. 46 is a second flowchart for explaining the fourth example of the inter prediction operation in detail.

Fig. 47 is a flowchart for explaining the read operation of Fig. 45 in detail.

Fig. 48 is a block diagram showing a fifth example structure of the inter prediction unit shown in Fig. 3.

Fig. 49 is a first flowchart for explaining a fifth  example of the inter prediction operation in detail.

Fig. 50 is a second flowchart for explaining the fifth example of the inter prediction operation in detail.

Fig. 51 is a flowchart for explaining the read operation of Fig. 49 in detail.

Fig. 52 is a block diagram showing a sixth example structure of the inter prediction unit shown in Fig. 3.

Fig. 53 is a diagram showing first examples of reference pixel ranges in the inter prediction unit shown in Fig. 52.

Fig. 54 is a diagram showing second examples of reference pixel ranges in the inter prediction unit shown in Fig. 52.

Fig. 55 is a first flowchart for explaining a sixth example of the inter prediction operation in detail.

Fig. 56 is a second flowchart for explaining the sixth example of the inter prediction operation in detail.

Fig. 57 is a flowchart for explaining the read operation of Fig. 55 in detail.

Fig. 58 is a diagram showing third examples of reference pixel ranges in the inter prediction unit shown in Fig. 52.

Fig. 59 is a diagram showing fourth examples of reference pixel ranges in the inter prediction unit shown in Fig. 52.

Fig. 60 is a diagram showing fifth examples of reference pixel ranges in the inter prediction unit shown in Fig. 52.

Fig. 61 is a block diagram showing a seventh example structure of the inter prediction unit shown in Fig. 3.

Fig. 62 is a first flowchart for explaining a seventh example of the inter prediction operation in detail.

Fig. 63 is a second flowchart for explaining the seventh example of the inter prediction operation in detail.

Fig. 64 is a block diagram showing an eighth example structure of the inter prediction unit shown in Fig. 3.

Fig. 65 is a diagram showing a first example of reference pixels in the inter prediction unit shown in Fig. 64.

Fig. 66 is a first flowchart for explaining an eighth example of the inter prediction operation in detail.

Fig. 67 is a second flowchart for explaining the eighth example of the inter prediction operation in detail.

Fig. 68 is a diagram showing a second example of reference pixels in the inter prediction unit shown in Fig. 64.

Fig. 69 is a diagram showing third examples of reference pixels in the inter prediction unit shown in Fig. 64.

Fig. 70 is a diagram showing a fourth example of reference pixels in the inter prediction unit shown in Fig. 64.

Fig. 71 is a block diagram showing a ninth example structure of the inter prediction unit shown in Fig. 3.

Fig. 72 is a diagram showing a first example of post-replication generation pixels.

Fig. 73 is a first flowchart for explaining a ninth example of the inter prediction operation in detail.

Fig. 74 is a second flowchart for explaining the ninth example of the inter prediction operation in detail.

Fig. 75 is a diagram showing a second example of post-replication generation pixels.

Fig. 76 is a diagram showing a third example of post-replication generation pixels.

Fig. 77 is a block diagram showing a tenth example structure of the inter prediction unit shown in Fig. 3.

Fig. 78 is a diagram showing example reference pixels in a case where the number of outer generation pixels aligned in the horizontal direction is the same as that in the vertical direction.

Fig. 79 is a diagram showing example reference pixels in the inter prediction unit shown in Fig. 77.

Fig. 80 is a diagram showing an example layout of the pixel values of one frame in the frame memory.

Fig. 81 is a first flowchart for explaining a tenth example of the inter prediction operation in detail.

Fig. 82 is a second flowchart for explaining the tenth example of the inter prediction operation in detail.

Fig. 83 is a block diagram showing an eleventh example structure of the inter prediction unit shown in Fig. 3.

Fig. 84 is a block diagram showing an example structure of the color inter prediction unit shown in Fig. 83.

Fig. 85 is a graph showing the relationship between the number of generation pixels and the number of reference pixels.

Fig. 86 is a diagram showing examples of the numbers of generation pixels stored in the LUT shown in Fig. 83.

Fig. 87 is a diagram showing examples of the numbers of generation pixels stored in the LUT shown in Fig. 83.

Fig. 88 is a block diagram showing an example structure of the luminance inter prediction unit shown in Fig. 83.

Fig. 89 is a diagram showing examples of the numbers of generation pixels stored in the LUT shown in Fig. 88.

Fig. 90 is a diagram showing examples of the numbers of generation pixels stored in the LUT shown in Fig. 88.

Fig. 91 is a first flowchart for explaining a color inter prediction operation.

Fig. 92 is a second flowchart for explaining the color inter prediction operation.

Fig. 93 is a diagram for explaining the characteristics of a normalized reference pixel number.

Fig. 94 is a diagram for explaining the characteristics of a normalized reference pixel number.

Fig. 95 is a diagram for explaining the characteristics of a normalized reference pixel number.

Fig. 96 is a diagram for explaining the characteristics of a normalized reference pixel number.

Fig. 97 is a diagram for explaining the characteristics of a normalized reference pixel number.

Fig. 98 is a diagram for explaining the characteristics of a normalized reference pixel number.

Fig. 99 is a diagram for explaining the characteristics of a normalized reference pixel number.

Fig. 100 is a diagram for explaining the characteristics of a normalized reference pixel number.

Fig. 101 is a block diagram showing an example structure of an embodiment of a computer.

Fig. 102 is a block diagram showing a typical example structure of a television receiver.

Fig. 103 is a block diagram showing a typical example structure of a portable telephone device.

Fig. 104 is a block diagram showing a typical example structure of a hard disk recorder.

Fig. 105 is a block diagram showing a typical example structure of a camera.

## MODE FOR CARRYING OUT THE INVENTION

### <First Embodiment>

[Example Structure of an Embodiment of an Encoding Device]

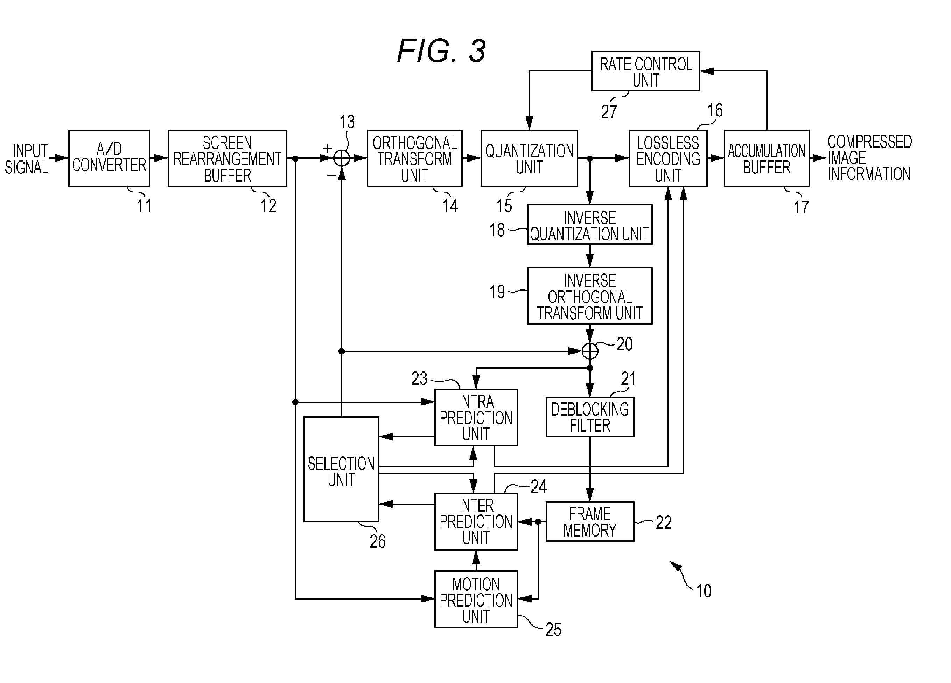

Fig. 3 is a block diagram showing an example structure of an embodiment of an encoding device as an image processing device to which the present technique is applied.

The encoding device 10 shown in Fig. 3 includes an A/D converter 11, a screen rearrangement buffer 12, an arithmetic operation unit 13, an orthogonal transform unit 14, a quantization unit 15, a lossless encoding unit 16, an accumulation buffer 17, an inverse quantization unit 18, an inverse orthogonal transform unit 19, an  addition unit 20, a deblocking filter 21, a frame memory 22, an intra prediction unit 23, an inter prediction unit 24, a motion prediction unit 25, a selection unit 26, and a rate control unit 27. The encoding device 10 shown in Fig. 3 performs compression encoding on input images by H.264/AVC.

Specifically, the A/D converter 11 of the encoding device 10 performs an A/D conversion on a frame- based image input as an input signal, and outputs and stores the image into the screen rearrangement buffer 12. The screen rearrangement buffer 12 rearranges the frames of the image stored in displaying order, so that the frames of the image are arranged in encoding order in accordance with the GOP (Group of Pictures) structure. The rearranged frame- based image is output to the arithmetic operation unit 13, the intra prediction unit 23, and the motion prediction unit 25.

The arithmetic operation unit 13 functions as a difference calculating unit, and calculates the difference between a predicted image supplied from the selection unit 26 and an encoding target image output from the screen rearrangement buffer 12. Specifically, the arithmetic operation unit 13 subtracts a predicted image supplied from the selection unit 26 from an encoding target image output from the screen rearrangement buffer 12. The arithmetic operation unit 13 outputs the image obtained as a result of the subtraction, as residual error information to the orthogonal transform unit 14. When any predicted image  is not supplied from the selection unit 26, the arithmetic operation unit 13 outputs an image read from the screen rearrangement buffer 12 as the residual error information to the orthogonal transform unit 14.

The orthogonal transform unit 14 performs an orthogonal transform, such as a discrete cosine transform or a Karhunen-Loeve transform, on the residual error information supplied from the arithmetic operation unit 13, and supplies the resultant coefficient to the quantization unit 15.

The quantization unit 15 quantizes the coefficient supplied from the orthogonal transform unit 14. The quantized coefficient is input to the lossless encoding unit 16.

The lossless encoding unit 16 obtains information indicating an optimum intra prediction mode (hereinafter referred to as intra prediction mode information) from the intra prediction unit 23, and obtains information indicating an optimum inter prediction mode (hereinafter referred to as inter prediction mode information), a motion vector, and the like from the inter prediction unit 24.

The lossless encoding unit 16 performs lossless encoding, such as variable-length encoding (CAVLC (Context-Adaptive Variable Length Coding), for example) or arithmetic encoding (CABAC (Context-Adaptive Binary Arithmetic Coding), for example), on the quantized coefficient supplied from the quantization unit 15, and turns the resultant information into an compressed image. The lossless encoding unit 16 also performs lossless encoding on the intra prediction mode information, or on the inter prediction mode information, the motion vector, and the like, and turns the resultant information into header information to be added to the compressed image. The lossless encoding unit 16 supplies and stores the compressed image to which the header information obtained as a result of the lossless encoding is added, as compressed image information into the accumulation buffer 17.

The accumulation buffer 17 temporarily stores the compressed image information supplied from the lossless encoding unit 16, and outputs the compressed image information to a recording device, a transmission path, or the like (not shown) in a later stage, for example.

The quantized coefficient that is output from the quantization unit 15 is also input to the inverse quantization unit 18, and after inversely quantized, is supplied to the inverse orthogonal transform unit 19.

The inverse orthogonal transform unit 19 performs an inverse orthogonal transform such as an inverse discrete cosine transform or an inverse Karhunen-Loeve transform on the coefficient supplied from the inverse quantization unit 18, and supplies the resultant residual error information to the addition unit 20.

The addition unit 20 functions as an adding operation unit, adding the residual error information supplied as the decoding target image from the inverse orthogonal transform unit 19 to a predicted image supplied from the selection unit 26, and obtaining a locally decoded image. If there are no predicted images supplied from the selection unit 26, the addition unit 20 sets the residual error information supplied from the inverse orthogonal transform unit 19 as a locally decoded image. The addition unit 20 supplies the locally decoded image to the deblocking filter 21, and supplies the locally decoded image as a reference image to the intra prediction unit 23.

The deblocking filter 21 performs filtering on the locally decoded image supplied from the addition unit 20, to remove block distortions. The deblocking filter 21 supplies and stores the resultant image into the frame memory 22. The image stored in the frame memory 22 is then output as a reference image to the inter prediction unit 24 and the motion prediction unit 25.

Based on the image read from the screen rearrangement buffer 12 and the reference image supplied from the addition unit 20, the intra prediction unit 23 performs intra predictions in all candidate intra prediction modes, and generates predicted images.

The intra prediction unit 23 also calculates cost function values (described later in detail) for all the candidate intra prediction modes. The intra prediction unit 23 then determines the intra prediction mode with the smallest cost function value to be the optimum intra prediction mode. The intra prediction unit 23 supplies the predicted image generated in the optimum intra prediction mode and the corresponding cost function value to the selection unit 26. When notified of selection of the predicted image generated in the optimum intra prediction mode by the selection unit 26, the intra prediction unit 23 supplies the intra prediction mode to the lossless encoding unit 16.

It should be noted that a cost function value is also called a RD (Rate Distortion) cost, and is calculated by the technique of High Complexity mode or Low Complexity mode, as specified in the JM (Joint Model), which is the reference software in H.264/AVC, for example.

Specifically, where the High Complexity mode is used as a method of calculating cost function values, operations ending with the lossless encoding are provisionally carried out on all candidate prediction modes, and a cost function value expressed by the following equation (1) is calculated for each of the prediction modes.

$$\mathrm{Cost(Mode)} \ = \ D \ + \ \lambda \cdot R \qquad\qquad \cdots(1)$$

D represents the difference (distortion) between the original image and the decoded image, R represents the bit generation rate including the orthogonal transform coefficient, and $\lambda$ represents the Lagrange multiplier given as the function of a quantization parameter QP.

Where the Low Complexity mode is used as the method of calculating cost function values, on the other hand, decoded images are generated, and header bits such as information indicating a prediction mode are calculated in all the candidate prediction modes. A cost function value expressed by the following equation (2) is then calculated for each of the prediction modes.

$$Cost(Mode) = D + QPtoQuant(QP) \cdot Header\_Bit \qquad \cdots (2)$$

D represents the difference (distortion) between the original image and the decoded image, Header_Bit represents the header bit corresponding to the prediction mode, and QPtoQuant is the function given as the function of the quantization parameter QP.

In the Low Complexity mode, decoded images are simply generated in all the prediction modes, and there is no need to perform lossless encoding. Accordingly, the amount of calculation is small. It should be noted that the High Complexity mode is used as the method of calculating cost function values herein.

Based on inter prediction mode information and a motion vector supplied from the motion prediction unit 25, the inter prediction unit 24 reads the reference image from the frame memory 22. Based on the motion vector and the reference image read from the frame memory 22, the inter prediction unit 24 performs an inter prediction operation. Specifically, the inter prediction unit 24 performs interpolations on the reference image based on the motion vector, to perform a motion compensation operation with fractional precision. The inter prediction unit 24 supplies the resultant predicted image and a cost function value supplied from the motion prediction unit 25, to the selection unit 26. When notified of selection of the predicted image generated in the optimum inter prediction mode by the selection unit 26, the inter prediction unit 24 outputs the inter prediction mode information, the corresponding motion vector, and the like to the lossless encoding unit 16.

Based on the image supplied from the screen rearrangement buffer 12 and the reference image supplied from the frame memory 22, the motion prediction unit 25 performs a motion prediction operation in all the candidate inter prediction modes, and generates motion vectors with fractional precision. Specifically, the motion prediction unit 25 performs interpolations on the reference image in each inter prediction mode in the same manner as the inter prediction unit 24. In each inter prediction mode, the motion prediction unit 25 performs matching between the interpolated reference image and the image supplied from the screen rearrangement buffer 12, to generate a motion vector with fractional precision. In this embodiment, Sub pels in 1/2 pixel positions are generated through the interpolations, and the motion vector precision is 1/2 pixel precision.

At this point, the motion prediction unit 25 calculates cost function values for all the candidate inter prediction modes, and determines the inter prediction mode with the smallest cost function value to be the optimum inter prediction mode. The motion prediction unit 25 then supplies the inter prediction mode information, the corresponding motion vector, and the corresponding cost function value to the inter prediction unit 24.

It should be noted that an inter prediction mode is information indicating the size, the predicting direction, and the reference index of a block to be subjected to an inter prediction. As for predicting directions, there are forward predictions ("L0 prediction") each using a reference image having an earlier display time than an image to be subjected to an inter prediction, backward predictions ("L1 prediction") each using a reference image having a later display time than an image to be subjected to an inter prediction, and bidirectional predictions (Bi- predictions) each using a reference image having an earlier display time and a reference image having a later display time than an image to be subjected to an inter prediction. A reference index is a number for identifying a reference image, and an image that is located closer to an image to be subjected to an inter prediction has a smaller reference index number.

Based on the cost function values supplied from the intra prediction unit 23 and the inter prediction unit 24, the selection unit 26 determines the optimum intra prediction mode or the optimum inter prediction mode to be an optimum prediction mode. The selection unit 26 then supplies the predicted image in the optimum prediction mode to the arithmetic operation unit 13 and the addition unit 20. The selection unit 26 also notifies the intra prediction unit 23 or the inter prediction unit 24 of the selection of the predicted image in the optimum prediction mode.

Based on the compressed image information stored in the accumulation buffer 17, the rate control unit 27 controls the quantization operation rate of the quantization unit 15 so as not to cause an overflow or underflow.

[First Example Structure of the Inter Prediction Unit]

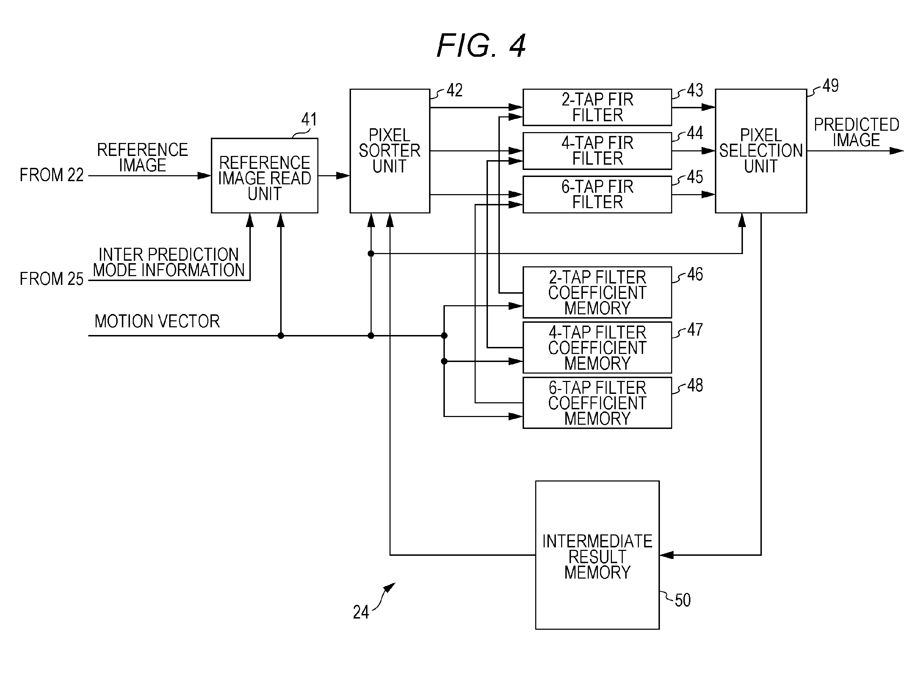

Fig. 4 is a block diagram showing a first example structure of the inter prediction unit 24 shown in Fig. 3.

For ease of explanation, Fig. 4 shows only the blocks concerning the inter prediction operation of the inter prediction unit 24, and does not show blocks that output cost function values, inter prediction mode information, motion vectors, and the like.

In Fig 4, the inter prediction unit 24 includes a reference image read unit 41, a pixel sorter unit 42, a 2-tap FIR filter 43, a 4-tap FIR filter 44, a 6-tap FIR filter 45, a 2-tap filter coefficient memory 46, a 4-tap filter coefficient memory 47, a 6-tap filter coefficient memory 48, a pixel selection unit 49, and an intermediate result memory 50.

Based on the reference index and the predicting direction contained in the inter prediction mode information supplied from the motion prediction unit 25 shown in Fig. 3, the reference image read unit 41 of the inter prediction unit 24 identifies the reference image among the images stored in the frame memory 22. Based on the block size contained in the inter prediction mode information and the integer value of the motion vector, the reference image read unit 41 reads, from the frame memory 22, the pixels of the reference image (hereinafter referred to as reference pixels) to be used in generating a predicted image, and temporarily stores those reference pixels.

The reference image read unit 41 functions as a pixel read unit. For each of the pixels of a predicted image (hereinafter referred to as predicted pixels), the reference image read unit 41 reads the reference pixels to be used in generating the predicted pixel among the temporarily stored reference pixels. At this point, the reference image read unit 41 reads reference pixels so that the number of reference pixels to be used in generating an outer predicted pixel becomes smaller than the number of reference pixels to be used in generating an inner predicted pixel. Here, the number of reference pixels to be used in generating a predicted pixel is two, four, or six. The reference image read unit 41 then supplies the read reference pixels to the pixel sorter unit 42.

The pixel sorter unit 42 sets the reference pixels supplied from the reference image read unit 41 as generation pixels. Based on the fractional value of the motion vector supplied from the motion prediction unit 25, the pixel sorter unit 42 also reads, from the intermediate result memory 50, Sub pels corresponding to the generation target predicted pixel as generation pixels. At this point, the pixel sorter unit 42 reads Sub pels so that the number of Sub pels to be used in generating an outer predicted pixel becomes smaller than the number of Sub pels to be used in generating an inner predicted pixel. Here, the number of Sub pels to be used in generating a predicted pixel is two, four, or six.

In accordance with the number of generation pixels, the pixel sorter unit 42 supplies the generation pixels to the 2-tap FIR filter 43, the 4-tap FIR filter 44, or the 6-tap FIR filter 45. Specifically, when the number of generation pixels is two, the pixel sorter unit 42 supplies the generation pixels to the 2-tap FIR filter 43, and, when the number of generation pixels is four, the pixel sorter unit 42 supplies the generation pixels to the 4-tap FIR filter 44. When the number of generation pixels is six, the pixel sorter unit 42 supplies the generation pixels to the 6-tap FIR filter 45.

The 2-tap FIR filter 43 functions as an arithmetic operation unit, and performs a calculation by using the two generation pixels supplied from the pixel sorter unit 42 and filter coefficients supplied from the 2-tap filter coefficient memory 46. The 2-tap FIR filter 43 supplies the resultant one pixel to the pixel selection unit 49.

The 4-tap FIR filter 44 functions as an arithmetic operation unit, and performs a calculation by using the four generation pixels supplied from the pixel sorter unit 42 and filter coefficients supplied from the 4-tap filter coefficient memory 47. The 4-tap FIR filter 44 supplies the resultant one pixel to the pixel selection unit 49.

The 6-tap FIR filter 45 functions as an arithmetic operation unit, and performs a calculation by using the six generation pixels supplied from the pixel sorter unit 42 and filter coefficients supplied from the 6-tap filter coefficient memory 48. The 6-tap FIR filter 45 supplies the resultant one pixel to the pixel selection unit 49.

The 2-tap filter coefficient memory 46 functions as a storage unit, and stores filter coefficients for the 2-tap FIR filter 43 associated with fractional values of motion vectors. Based on the fractional value of the motion vector supplied from the motion prediction unit 25, the 2-tap filter coefficient memory 46 supplies the filter coefficients stored and associated with the fractional value, to the 2-tap FIR filter 43.

The 4-tap filter coefficient memory 47 functions as a storage unit, and stores filter coefficients for the 4-tap FIR filter 44 associated with fractional values of motion vectors. Based on the fractional value of the motion vector supplied from the motion prediction unit 25, the 4-tap filter coefficient memory 47 supplies the filter coefficients stored and associated with the fractional value, to the 4-tap FIR filter 44.

The 6-tap filter coefficient memory 48 functions as a storage unit, and stores filter coefficients for the 6-tap FIR filter 45 associated with fractional values of motion vectors. Based on the fractional value of the motion vector supplied from the motion prediction unit 25, the 6-tap filter coefficient memory 48 supplies the filter coefficients stored and associated with the fractional value, to the 6-tap FIR filter 45.

Based on the fractional value of the motion vector supplied from the motion prediction unit 25, the pixel selection unit 49 outputs the predicted pixel that is a pixel supplied from the 2-tap FIR filter 43, the 4-tap FIR filter 44, or the 6-tap FIR filter 45 to the selection unit 26 shown in Fig. 3, or supplies the predicted pixel to the intermediate result memory 50.

Specifically, when the fractional value of at least one of the horizontal component and the vertical component of the motion vector is zero, the pixel selection unit 49 supplies a pixel supplied from the 2- tap FIR filter 43, the 4- tap FIR filter 44, or the 6- tap FIR filter 45, as the predicted pixel to the selection unit 26. When the fractional values of both the horizontal component and the vertical component of the motion vector are not zero, on the other hand, the pixel selection unit 49 supplies a Sub pel that is a pixel supplied from the 2- tap FIR filter 43, the 4- tap FIR filter 44, or the 6- tap FIR filter 45, to the intermediate result memory 50, which then stores the supplied pixel. As a result, the 2- tap FIR filter 43, the 4- tap FIR filter 44, and the 6- tap FIR filter 45 again perform calculations, using the Sub pels stored in the intermediate result memory 50. The pixel selection unit 49 then outputs the resultant Sub pel as the predicted pixel to the selection unit 26.

The intermediate result memory 50 stores Sub pels supplied from the pixel selection unit 49.

[Description of Reference Pixels]

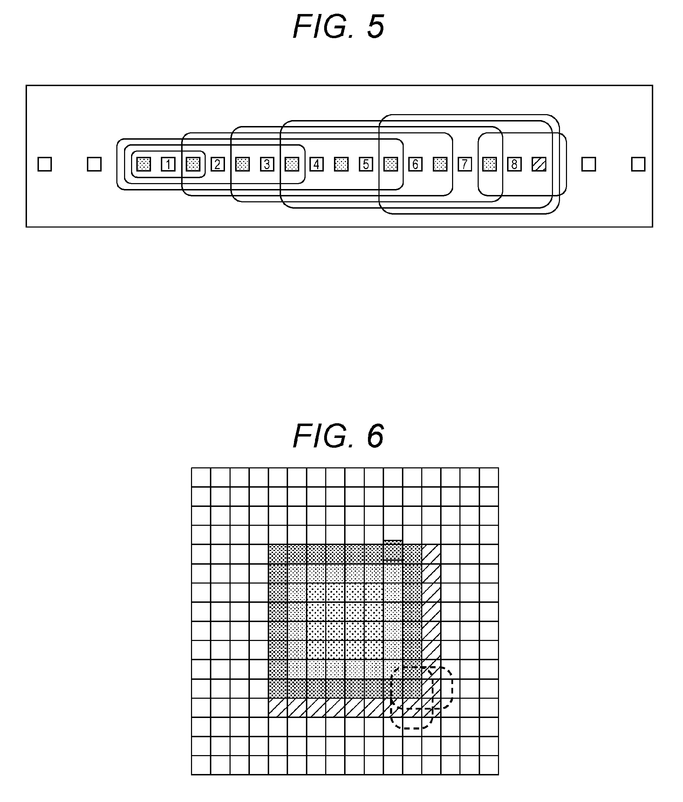

Fig. 5 is a diagram showing an example of reference pixels to be used in generating each of eight predicted pixels that are aligned in the horizontal direction, have 1/2 pixel positions in the horizontal direction, and have integer positions in the vertical direction in a case where the size of the inter prediction block is 8 x 8 pixels.

In Fig. 5, each square having a number assigned thereto represents a predicted pixel, and each square without a number represents a reference pixel. Each dotted square represents a reference pixel located within the range of the size of the inter prediction block among the reference pixels to be used in generating the predicted pixels, and the shaded square represents a reference pixel outside the range of the size of the inter prediction block.

In the example illustrated in Fig. 5, each outermost predicted pixel is generated by using two reference pixels, each second outermost predicted pixel is generated by using four reference pixels, and each of the predicted pixels located on the inner sides of the second outermost predicted pixels, including the innermost predicted pixels, is generated by using six reference pixels.

Specifically, each of the predicted pixels represented by the squares that have number 1 and number 8 assigned thereto and are located outermost among the eight predicted pixels that are aligned in the horizontal direction, have 1/2 pixel positions in the horizontal direction, and have integer positions in the vertical direction is generated by using a total of two reference pixels including one on each side of the predicted pixel. That is, the position of the predicted pixel represented by the square having number 8 assigned thereto in the reference image is a position on the boundary between the range of the size of the inter prediction block and the range outside the range of the size of the inter prediction block in the range (the reference block) of all the reference pixels to be used in generating the respective predicted pixels.

The predicted pixel represented by the second outermost square that has number 2 assigned thereto and is located on the inner side of the predicted pixel represented by the square having number 1 assigned thereto, and the predicted pixel represented by the second outermost square that has number 7 assigned thereto and is located on the inner side of the predicted pixel represented by the square having number 8 assigned thereto are each generated by using a total of four reference pixels including two on each side of the predicted pixel. That is, the predicted pixel represented by the square having number 7 assigned thereto is generated by using the rightmost reference pixel represented by the shaded square, which is also used in generating the predicted pixel represented by the square having number 8 assigned thereto.

Each of the predicted pixels represented by the squares that have numbers 3 through 6 assigned thereto and are located on the inner sides of the predicted pixel represented by the square having number 2 assigned thereto and the predicted pixel represented by the square having number 7 assigned thereto is generated by using a total of six reference pixels including three on each side of the predicted pixel.

Fig. 6 is a diagram showing an example of all the reference pixels to be used in generating predicted pixels in arbitrary fractional positions in a case where the size of the inter prediction block is 8 x 8 pixels.

In Fig. 6, each square represents a reference pixel. Each square with the smallest dots represents a reference pixel to be used in generating predicted pixels located on the right side thereof, immediately therebelow, and on the lower right side thereof. Each of the predicted pixels is generated by using two reference pixels. Each square with the second smallest dots represents a reference pixel to be used in generating predicted pixels located on the right side thereof, immediately therebelow, and on the lower right side thereof. Each of the predicted pixels is generated by using four reference pixels. Each square with the third smallest dots represents a reference pixel to be used in generating predicted pixels located on the right side thereof, immediately therebelow, and on the lower right side thereof. Each of the predicted pixels is generated by using six reference pixels. Further, each shaded square represents a reference pixel located in a range outside the range of the size of the inter prediction block among all the reference pixels to be used in generating predicted pixels.

In the example illustrated in Fig. 6, each outermost predicted pixel is generated by using two reference pixels, each second outermost predicted pixel is generated by using four reference pixels, and each of the predicted pixels located on the inner sides of the second outermost predicted pixels, including the innermost predicted pixels, is generated by using six reference pixels, as in the example case of Fig. 5.

For example, the predicted pixel located on the right side of the reference pixel at the lower right corner is generated by using the two reference pixels that are aligned in the horizontal direction and are surrounded by a dashed line in Fig. 6. The predicted pixel located immediately below the reference pixel at the lower right corner is generated by using the two reference pixels that are aligned in the vertical direction and are surrounded by a dashed line in Fig. 6.

Accordingly, in the example illustrated in Fig. 6, when the size of the inter prediction block is 8 x 8 pixels, the range (the reference block) of all the reference pixels to be used in generating the predicted pixels in arbitrary fractional positions is the range of 8 x 8 pixels, which is the size of the inter prediction block, and the 9 x 9 pixels including the one column of pixels on the right side of the range of the size of the inter prediction block and the one row of pixels immediately below the range of the size of the inter prediction block. In view of this, the reference image read unit 41 should read the reference pixels in the range of 9 x 9 pixels from the frame memory 22.

As described above, in the encoding device 10, the number of reference pixels to be used in generating an outer predicted pixel is smaller than the number of reference pixels to be used in generating an inner predicted pixel. Accordingly, the number of reference pixels required for inter predictions can be made smaller than in the conventional case illustrated in Fig. 2. As a result, usage of memory bandwidth in the frame memory 22 can be reduced.

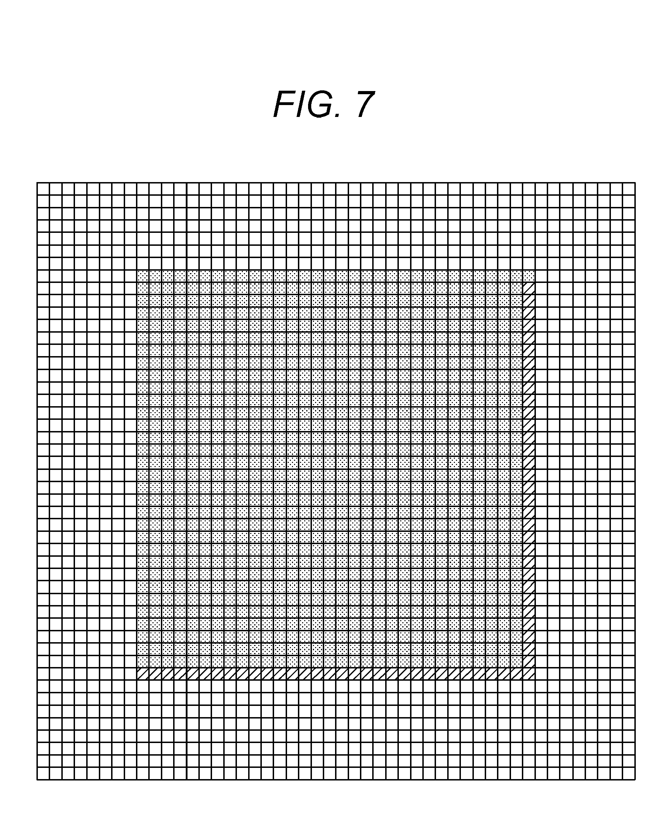

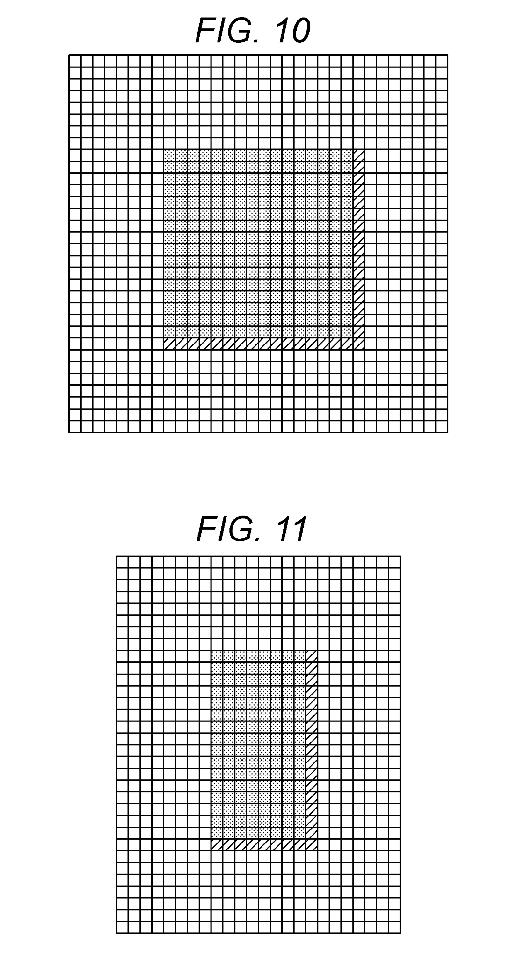

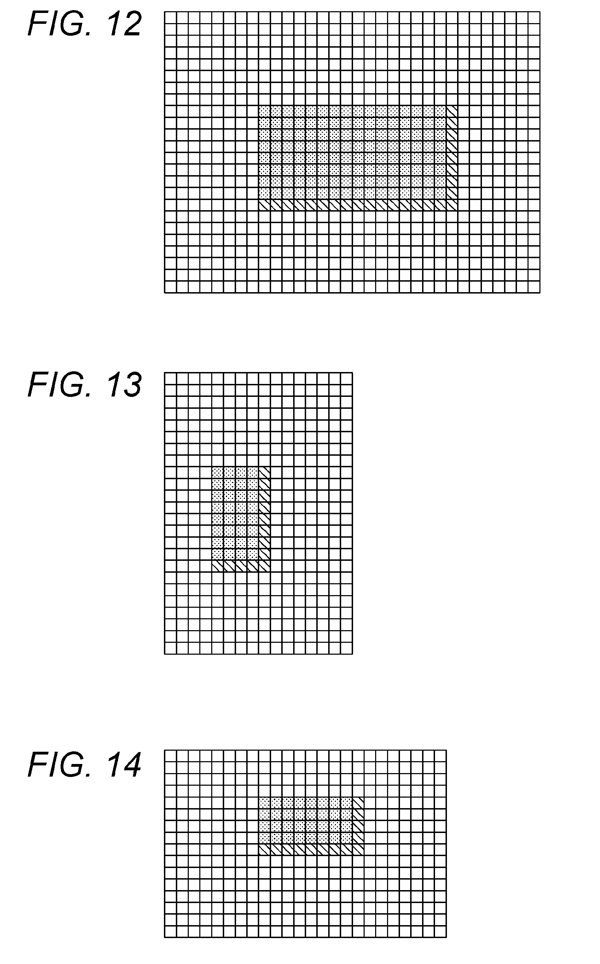

Figs. 7 through 15 are diagrams showing examples of all the reference pixels to be used in generating predicted pixels in arbitrary fractional positions in cases where the size of the inter prediction block is 32 x 32 pixels, 16 x 32 pixels, 32 x 16 pixels, 16 x 16 pixels, 8 x 16 pixels, 16 x 8 pixels, 4 x 8 pixels, 8 x 4 pixels, and 4 x 4 pixels.

In Figs. 7 through 15, each square represents a reference pixel. Each dotted square represents a reference pixel located within the range of the size of the inter prediction block among all the reference pixels to be used in generating the predicted pixels, and each shaded square represents a reference pixel outside the range of the size of the inter prediction block.

In the examples illustrated in Figs. 7 through 15, each outermost predicted pixel is generated by using two reference pixels, each second outermost predicted pixel is generated by using four reference pixels, and each of the predicted pixels located on the inner sides of the second outermost predicted pixels, including the innermost predicted pixels, is generated by using six reference pixels, as in the example cases illustrated in Figs. 5 and 6.

Accordingly, as shown in Fig. 7, when the size of the inter prediction block is 32 x 32 pixels, the range of all the reference pixels to be used in generating predicted pixels in arbitrary fractional positions is the range of 32 x 32 pixels, which is the size of the inter  prediction block, and the 33 x 33 pixels including the one column of pixels on the right side of the range of the size of the inter prediction block and the one row of pixels immediately below the range of the size of the inter prediction block.

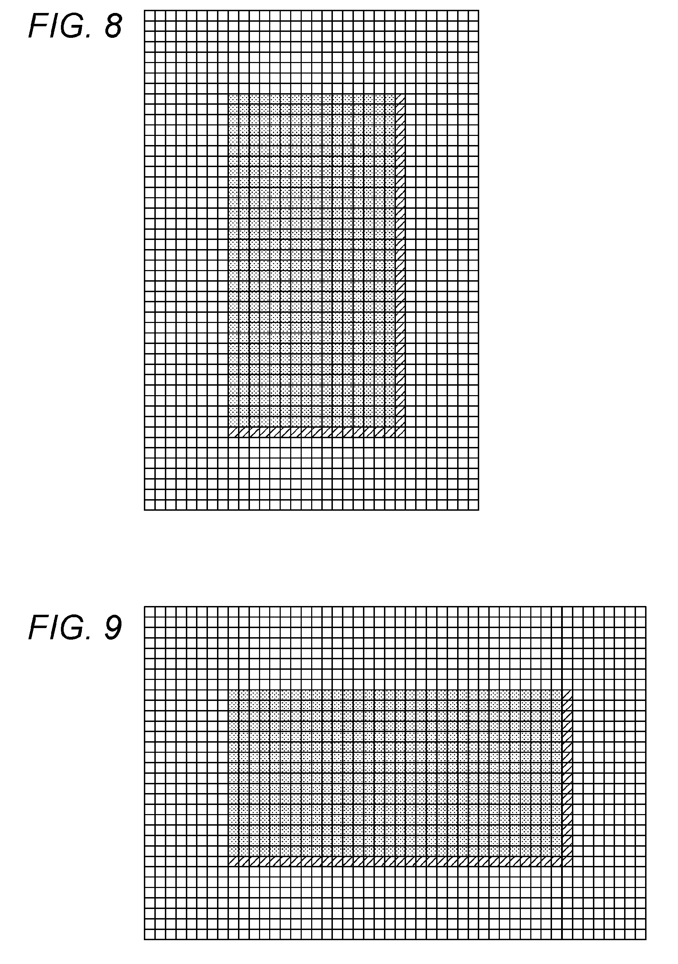

Likewise, as shown in Figs. 8 through 15, when the size of the inter prediction block is 16 x 32 pixels, 32 x 16 pixels, 16 x 16 pixels, 8 x 16 pixels, 16 x 8 pixels, 4 x 8 pixels, 8 x 4 pixels, and 4 x 4 pixels, the range of all the reference pixels to be used in generating predicted pixels in arbitrary fractional positions is the range of the size of the inter prediction block, and the range including the one column of pixels on the right side of the range of the size of the inter prediction block and the one row of pixels immediately below the range of the size of the inter prediction block.

On the other hand, where the conventional interpolations that invariably use a 6-tap FIR filter are performed at the time of an inter prediction, the range of all the reference pixels to be used in generating predicted pixels in arbitrary fractional positions greatly differs from those shown in Figs. 7 through 15. For example, when the size of the inter prediction block is 4 x 4 pixels, the range of all the reference pixels to be used in generating predicted pixels in arbitrary fractional positions is the range of 4 x 4 pixels, which is the size of the inter prediction block, and the range of 9 x 9 pixels including two columns of pixels on the left side, two rows of pixels immediately above, three  columns of pixels on the right side, and three rows of pixels immediately below the range of the size of the inter prediction block.

[Description of a Method of Generating Predicted Pixels]

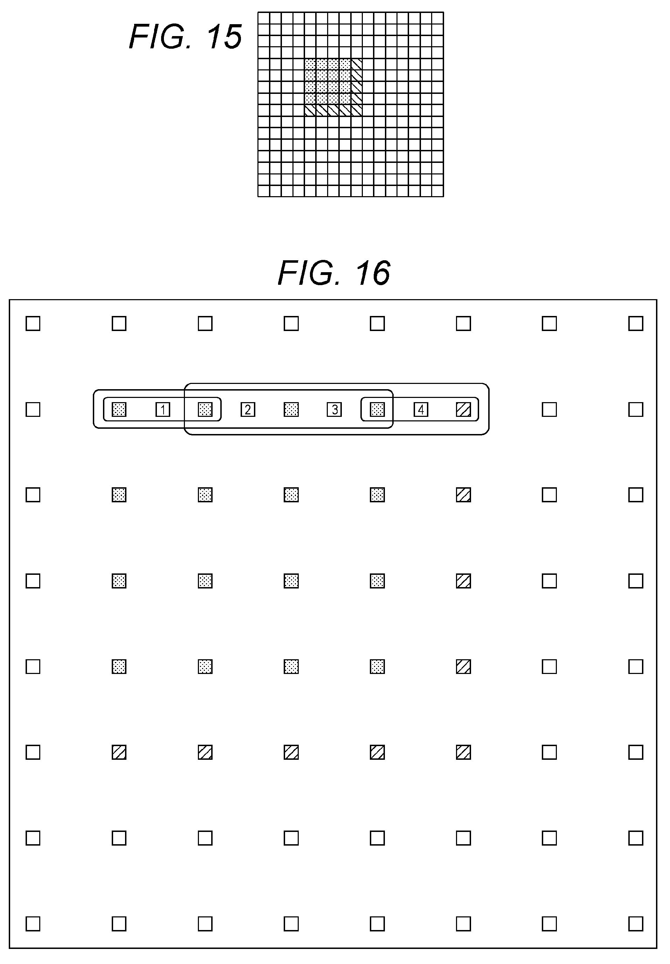

Figs. 16 through 19 are diagrams for explaining a method of generating predicted pixels at the inter prediction unit 24 shown in Fig. 4.

In Figs. 16 through 19, each square having a number assigned thereto represents a Sub pel, and each square without a number represents a reference pixel. Each dotted square represents a reference pixel located within the range of the size of the inter prediction block among the reference pixels to be used in generating predicted pixels, and each shaded square represents a reference pixel outside the range of the size of the inter prediction block.

In the examples illustrated in Figs. 16 through 19, the size of each inter prediction block is 4 x 4 pixels, and the positions of predicted pixels in the horizontal direction and the vertical direction are 1/2 pixel positions.

In this case, as first shown in Fig. 16, the Sub pels represented by the squares that have numbers 1 through 4 assigned thereto and are located in the top row among Sub pels whose positions in the horizontal direction are 1/2 pixel positions and positions in the vertical direction are integer positions are generated. At this point, the outermost Sub pels are each generated by using two reference pixels, and the Sub pels located on the inner sides of the outermost Sub pels, or the innermost Sub pels, are each generated by using four reference pixels.

Specifically, the reference image read unit 41 first supplies the two reference pixels located on the right and left sides of the upper left Sub pel represented by the square having number 1 assigned thereto, to the 2- tap FIR filter 43 via the pixel sorter unit 42. Of the two reference pixels, one is located on each side. The 2- tap FIR filter 43 then generates the Sub pel represented by the square having number 1 assigned thereto from the two reference pixels, and the pixel selection unit 49 supplies and stores the Sub pel into the intermediate result memory 50.

The reference image read unit 41 then supplies the four reference pixels located on the right and left sides of the Sub pel represented by the square that has number 2 assigned thereto and is located on the right side of the Sub pel represented by the square having number 1 assigned thereto, to the 4-tap FIR filter 44 via the pixel sorter unit 42. Of the four reference pixels, two are located on each side. The 4-tap FIR filter 44 then generates the Sub pel represented by the square having number 2 assigned thereto from the four reference pixels, and the pixel selection unit 49 supplies and stores the Sub pel into the intermediate result memory 50.

The reference image read unit 41 then supplies the four reference pixels located on the right and left sides of the Sub pel represented by the square that has number 3 assigned thereto and is located on the right side of the Sub pel represented by the square having number 2 assigned thereto, to the 4-tap FIR filter 44 via the pixel sorter unit 42. Of the four reference pixels, two are located on each side. The 4-tap FIR filter 44 then generates the Sub pel represented by the square having number 3 assigned thereto from the four reference pixels, and the pixel selection unit 49 supplies and stores the Sub pel into the intermediate result memory 50.

The reference image read unit 41 then supplies the two reference pixels located on the right and left sides of the upper right Sub pel represented by the square having number 4 assigned thereto, to the 2-tap FIR filter 43 via the pixel sorter unit 42. Of the two reference pixels, one is located on each side. The 2-tap FIR filter 43 then generates the Sub pel represented by the square having number 4 assigned thereto from the two reference pixels, and the pixel selection unit 49 supplies and stores the Sub pel into the intermediate result memory 50.

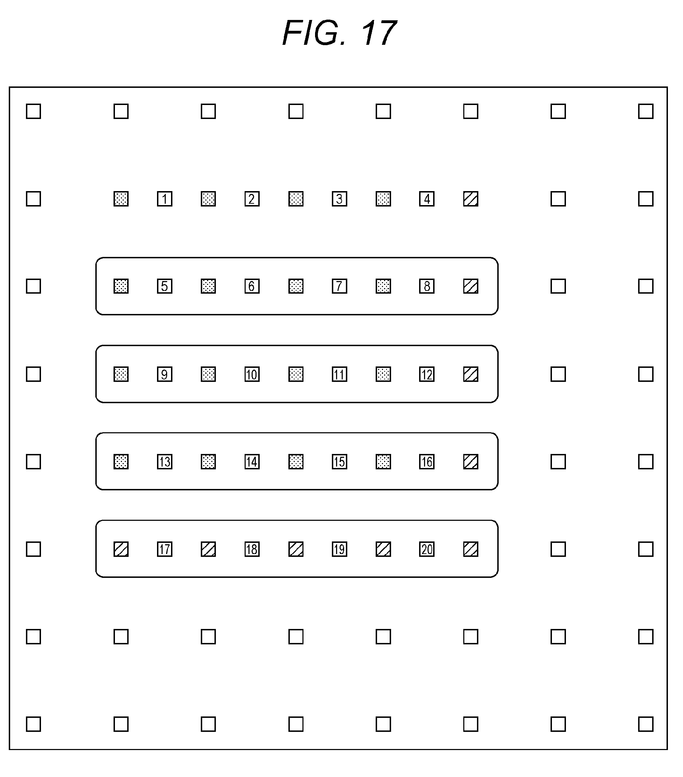

After the Sub pels represented by the squares having numbers 1 through 4 assigned thereto are generated in the above described manner, the second through fifth uppermost rows of Sub pels represented by squares having numbers 5 through 20 assigned thereto among the Sub pels whose positions in the horizontal direction are 1/2 pixel positions and positions in the horizontal direction are integer positions as shown in Fig. 17 are sequentially generated, one Sub pel at a time in the horizontal direction, in the same manner as above. The generated Sub pels are stored into the intermediate result memory 50.

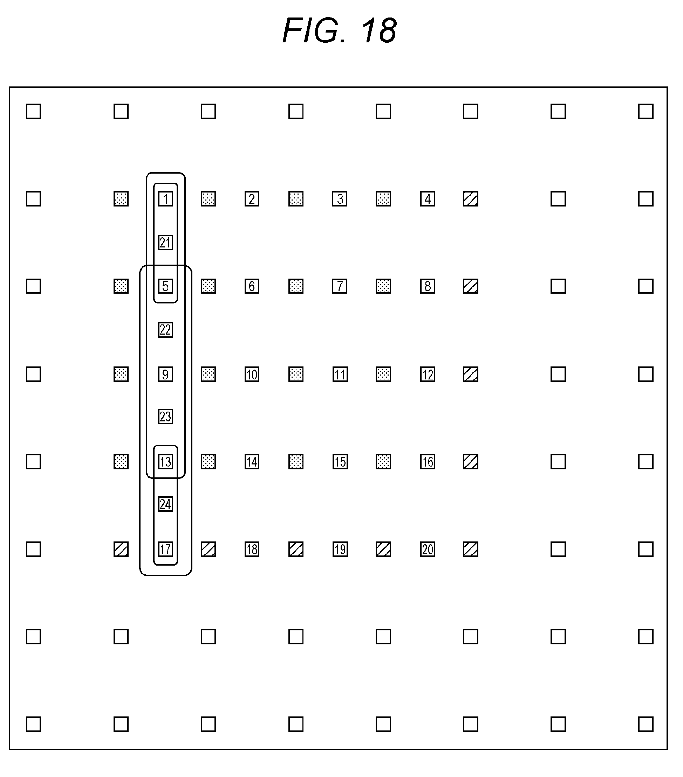

As the predicted pixels located on the leftmost side, the Sub pels represented by the squares having numbers 21 through 24 assigned thereto are then generated as shown in Fig. 18. At this point, the outermost predicted pixels are each generated by using two Sub pels, and the predicted pixels located on the inner sides of the outermost predicted pixels, or the innermost predicted pixels, are each generated by using four Sub pels.

Specifically, the pixel sorter unit 42 reads, from the intermediate result memory 50, the two Sub pels that are located, one each, above and below the Sub pel represented by the square having number 21 assigned thereto and are represented by the squares having numbers 1 and 5 assigned thereto, and supplies the two Sub pels to the 2- tap FIR filter 43. The 2- tap FIR filter 43 then generates, from the two Sub pels, the Sub pel represented by the square having number 21 assigned thereto as a predicted pixel, and the pixel selection unit 49 outputs the predicted pixel to the selection unit 26 (Fig. 3) .

The pixel sorter unit 42 then reads, from the intermediate result memory 50, the four Sub pels that are located, two each, above and below the Sub pel represented by the square having number 22 assigned thereto below the Sub pel represented by the square having number 21 assigned thereto and are represented by the squares that have numbers 1, 5, 9, and 13 assigned thereto and have integer positions as the positions in the vertical direction, and supplies the four Sub pels to the 4-tap FIR filter 44. The 4-tap FIR filter 44 then generates, from the four Sub pels, the Sub pel represented by the square having number 22 assigned thereto as a predicted pixel, and the pixel selection unit 49 outputs the predicted pixel to the selection unit 26.

The pixel sorter unit 42 then reads, from the intermediate result memory 50, the four Sub pels that are located, two each, above and below the Sub pel represented by the square having number 23 assigned thereto below the Sub pel represented by the square having number 22 assigned thereto and are represented by the squares that have numbers 5, 9, 13, and 17 assigned thereto and have integer positions as the positions in the vertical direction, and supplies the four Sub pels to the 4-tap FIR filter 44. The 4-tap FIR filter 44 then generates, from the four Sub pels, the Sub pel represented by the square having number 23 assigned thereto as a predicted pixel, and the pixel selection unit 49 outputs the predicted pixel to the selection unit 26.

The pixel sorter unit 42 then reads, from the  intermediate result memory 50, the two Sub pels that are located, one each, above and below the Sub pel represented by the square having number 24 assigned thereto below the Sub pel represented by the square having number 23 assigned thereto and are represented by the squares having numbers 13 and 17 assigned thereto, and supplies the two Sub pels to the 2-tap FIR filter 43. The 2-tap FIR filter 43 then generates, from the two Sub pels, the Sub pel represented by the square having number 24 assigned thereto as a predicted pixel, and the pixel selection unit 49 outputs the predicted pixel to the selection unit 26.

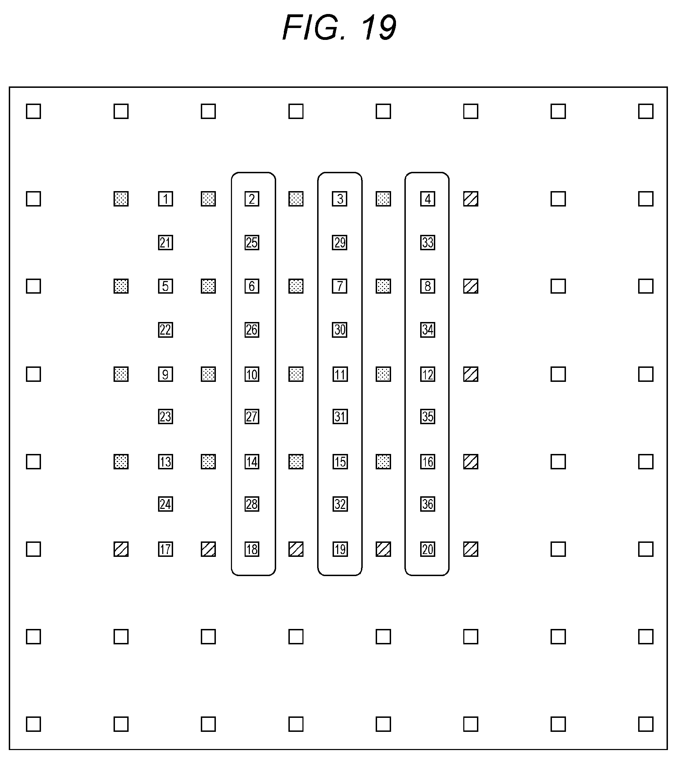

After the Sub pels on the leftmost side represented by the squares having numbers 21 through 24 assigned thereto are generated in the above described manner, the second through fourth leftmost columns of Sub pels represented by squares having numbers 25 through 36 assigned thereto are sequentially generated as predicted pixels as shown in Fig. 19, one predicted pixel at a time in the vertical direction, in the same manner as above. The generated Sub pels are output to the selection unit 26.

[Description of an Operation of the Encoding Device]

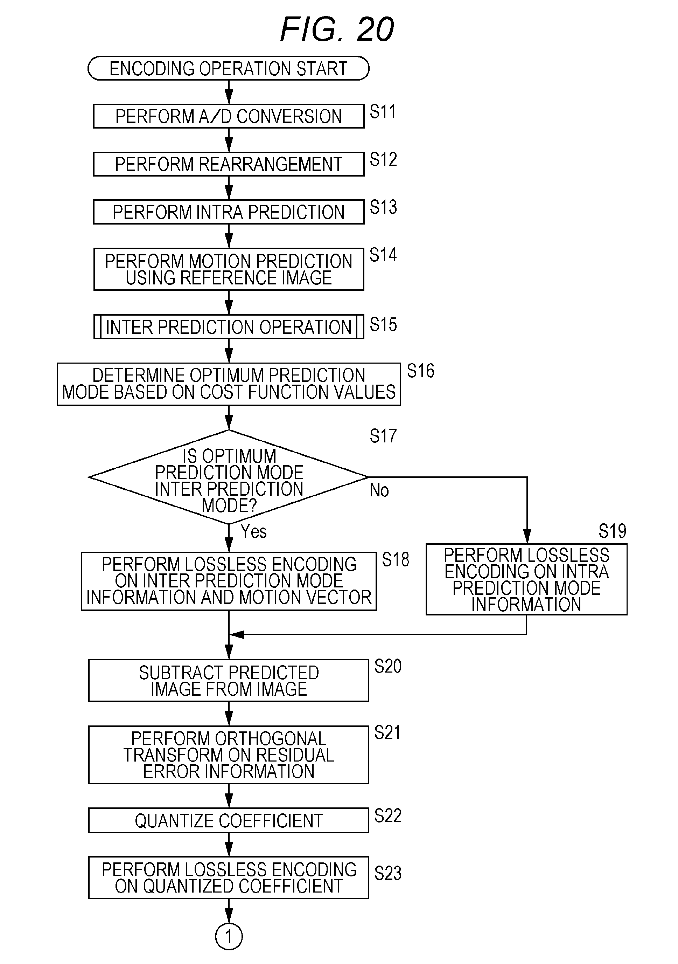

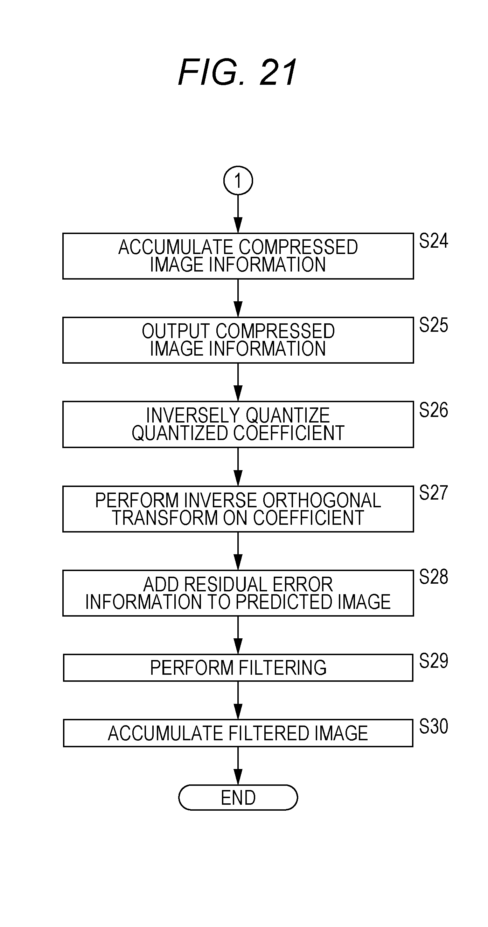

Figs. 20 and 21 show a flowchart for explaining an encoding operation by the encoding device 10 shown in Fig. 3. This encoding operation is performed every time a frame-based image is input as an input signal to the encoding device 10.

In step S11 of Fig. 20, the A/D converter 11 of the encoding device 10 performs an A/D conversion on a frame-based image input as an input signal, and outputs and stores the image into the screen rearrangement buffer 12.

In step S12, the screen rearrangement buffer 12 rearranges the frames of the image stored in displaying order, so that the frames of the image are arranged in encoding order in accordance with the GOP (Group of Pictures) structure. The screen rearrangement buffer 12 supplies the rearranged frame-based image to the arithmetic operation unit 13, the intra prediction unit 23, and the motion prediction unit 25.

It should be noted that the procedures of steps S13 through S30 described below are carried out for each macroblock, for example. However, at the time of processing of a macroblock of an I-slice such as the first macroblock of the first frame, the procedures of steps S13 through S20 and S28 are not carried out, and the image of the first frame is set as residual error information and a locally decoded image.

In step S13, based on the image read from the screen rearrangement buffer 12 and a reference image supplied from the addition unit 20, the intra prediction unit 23 performs intra predictions in all candidate intra prediction modes, and generates predicted images. The intra prediction unit 23 also calculates cost function values for all the candidate intra prediction modes. The intra prediction unit 23 then determines the intra  prediction mode with the smallest cost function value to be the optimum intra prediction mode. The intra prediction unit 23 supplies the predicted image generated in the optimum intra prediction mode and the corresponding cost function value to the selection unit 26.

In step S14, the motion prediction unit 25 performs a motion prediction operation on the image supplied from the screen rearrangement buffer 12 in all candidate inter prediction modes by using a reference image supplied from the frame memory 22, and generates motion vectors with fractional precision. The motion prediction unit 25 also calculates cost function values for all the candidate inter prediction modes, and determines the inter prediction mode with the smallest cost function value to be the optimum inter prediction mode. The motion prediction unit 25 then supplies the inter prediction mode information, the corresponding motion vector, and the corresponding cost function value to the inter prediction unit 24.

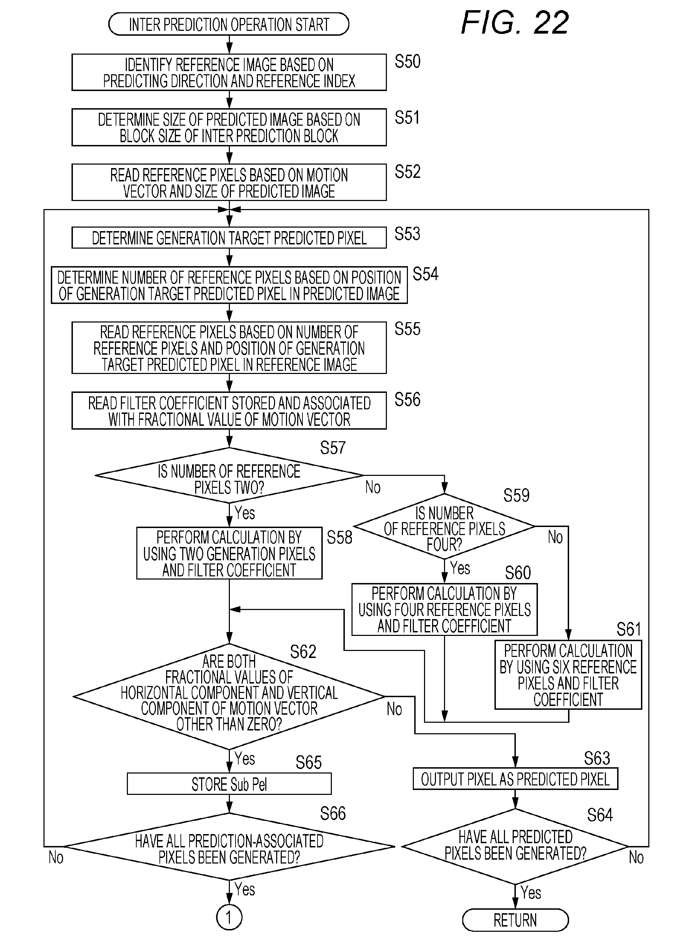

In step S15, the inter prediction unit 24 performs an inter prediction operation, based on the motion vector and the inter prediction mode information supplied from the motion prediction unit 25. This inter prediction operation will be described later in detail, with reference to Figs. 22 through 23. The inter prediction unit 24 supplies the predicted image generated as a result of the inter prediction operation and the cost function value supplied from the motion prediction unit  25, to the selection unit 26.

In step S16, based on the cost function values supplied from the intra prediction unit 23 and the inter prediction unit 24, the selection unit 26 determines an optimum prediction mode that is the optimum intra prediction mode or the optimum inter prediction mode, whichever has the smallest cost function value. The selection unit 26 then supplies the predicted image in the optimum prediction mode to the arithmetic operation unit 13 and the addition unit 20.

In step S17, the selection unit 26 determines whether the optimum prediction mode is the optimum inter prediction mode. If the optimum prediction mode is determined to be the optimum inter prediction mode in step S17, the selection unit 26 notifies the inter prediction unit 24 of selection of the predicted image generated in the optimum inter prediction mode. The inter prediction unit 24 then outputs the inter prediction mode information, the corresponding motion vector, and the like to the lossless encoding unit 16.

In step S18, the lossless encoding unit 16 performs lossless encoding on the inter prediction mode information, the motion vector, and the like supplied from the inter prediction unit 24, and sets the resultant information as the header information to be added to a compressed image. The operation then moves on to step S20.

If the optimum prediction mode is determined not to be the optimum inter prediction mode in step S17, or if the optimum prediction mode is determined to be the optimum intra prediction mode, on the other hand, the selection unit 26 notifies the intra prediction unit 23 of selection of the predicted image generated in the optimum intra prediction mode. Accordingly, the intra prediction unit 23 supplies the intra prediction mode information to the lossless encoding unit 16.

In step S19, the lossless encoding unit 16 performs lossless encoding on the intra prediction mode information and the like supplied from the intra prediction unit 23, and sets the resultant information as the header information to be added to the compressed image. The operation then moves on to step S20.

In step S20, the arithmetic operation unit 13 subtracts the predicted image supplied from the selection unit 26 from the image supplied from the screen rearrangement buffer 12. The arithmetic operation unit 13 outputs the image obtained as a result of the subtraction, as residual error information to the orthogonal transform unit 14.

In step S21, the orthogonal transform unit 14 performs an orthogonal transform on the residual error information supplied from the arithmetic operation unit 13, and supplies the resultant coefficient to the quantization unit 15.

In step S22, the quantization unit 15 quantizes the coefficient supplied from the orthogonal transform unit 14. The quantized coefficient is input to the lossless encoding unit 16 and the inverse quantization unit 18.

In step S23, the lossless encoding unit 16 performs lossless encoding on the quantized coefficient supplied from the quantization unit 15, and sets the resultant information as the compressed image. The lossless encoding unit 16 then adds the header information generated through the procedure of step S18 or S19 to the compressed image, to generate compressed image information.

In step S24 of Fig. 21, the lossless encoding unit 16 supplies and stores the compressed image information into the accumulation buffer 17.

In step S25, the accumulation buffer 17 outputs the compressed image information to a recording device, a transmission path, or the like (not shown) in a later stage, for example.

In step S26, the inverse quantization unit 18 inversely quantizes the quantized coefficient supplied from the quantization unit 15.

In step S27, the inverse orthogonal transform unit 19 performs an inverse orthogonal transform on the coefficient supplied from the inverse quantization unit 18, and supplies the resultant residual error information to the addition unit 20.

In step S28, the addition unit 20 adds the residual error information supplied from the inverse orthogonal transform unit 19 to the predicted image supplied from the selection unit 26, and obtains a locally decoded image. The addition unit 20 supplies the obtained image to the deblocking filter 21, and also supplies the obtained image as a reference image to the intra prediction unit 23.

In step S29, the deblocking filter 21 performs filtering on the locally decoded image supplied from the addition unit 20, to remove block distortions.

In step S30, the deblocking filter 21 supplies and stores the filtered image into the frame memory 22. The image stored in the frame memory 22 is then output as a reference image to the inter prediction unit 24 and the motion prediction unit 25. The operation then comes to an end.

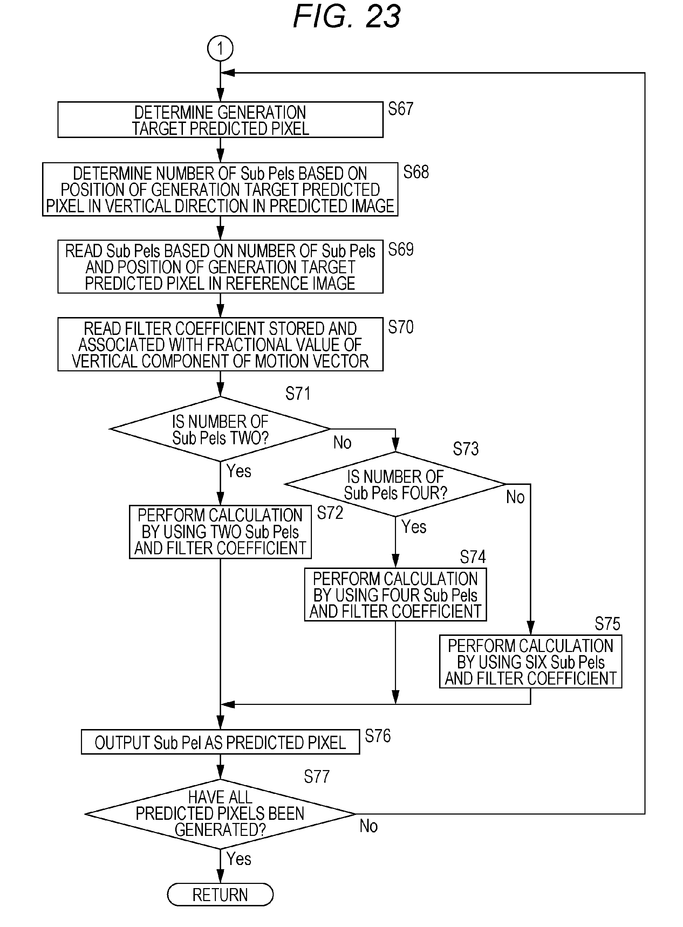

Figs. 22 and 23 show a flowchart for explaining, in detail, a first example of the inter prediction operation of step S15 in Fig. 20.

In step S50 of Fig. 22, the reference image read unit 41 (Fig. 4) of the inter prediction unit 24 identifies the reference image among the images stored in the frame memory 22, based on the predicting direction and the reference index contained in the inter prediction mode information supplied from the motion prediction unit 25 shown in Fig. 3.

In step S51, the reference image read unit 41 determines the size of a predicted image, based on the inter prediction block size contained in the inter prediction mode information.

In step S52, based on the integer value of the motion vector contained in the inter prediction mode information and the size of the predicted image, the reference image read unit 41 reads, from the frame memory 22, the reference pixels to be used in generating the predicted image, and temporarily stores those reference pixels.

In step S53, the reference image read unit 41 determines a generation target predicted pixel among the predicted pixels forming the predicted image. The determined generation target predicted pixel is a predicted pixel that has not yet been determined to be a generation target predicted pixel in the procedure of step S53.

In step S54, based on the position of the generation target predicted pixel in the predicted image, the reference image read unit 41 determines two, four, or six to be the number of reference pixels to be used in generating a pixel whose position in the horizontal direction or the vertical direction in the reference image corresponding to the predicted image is an integer position (the pixel will be hereinafter referred to as a prediction-associated pixel).

It should be noted that, where the position of a generation target predicted pixel is an integer position in at least one of the horizontal direction and the vertical direction in the reference image, the prediction-associated pixel is a predicted pixel. Where the position of a generation target predicted pixel is fractional in both the horizontal direction and the vertical direction in the reference image, on the other hand, the prediction-associated pixel is a pixel that has not yet been generated, is to be used in generating a predicted pixel, has the same position in the horizontal direction as a predicted pixel, and has an integer position in the vertical direction. If there is more than one prediction-associated pixel, the procedures of steps S54 through S65 are carried out for each prediction-associated pixel.

In step S55, based on the number of reference pixels determined in step S54 and the position of the generation target predicted pixel in the reference image, the reference image read unit 41 reads the reference pixels to be used in generating the prediction-associated pixel among the reference pixels stored in step S52. The reference image read unit 41 then supplies the read reference pixels to the pixel sorter unit 42.

In step S56, based on the fractional value of the component corresponding to the prediction-associated pixel of the motion vector supplied from the motion prediction unit 25, the 2-tap filter coefficient memory 46 reads filter coefficients (outer coefficients) stored and associated with the fractional value, and supplies the filter coefficients to the 2-tap FIR filter 43. Likewise, based on the fractional value of the component corresponding to the prediction-associated pixel of the motion vector, the 4-tap filter coefficient memory 47 and the 6-tap filter coefficient memory 48 each read filter coefficients (inner coefficients) stored and associated with the fractional value, and supply the filter coefficients to the 4-tap FIR filter 44 and the 6-tap FIR filter 45.

Where the position of a generation target predicted pixel is fractional in only one of the horizontal direction and the vertical direction in the reference image, the component corresponding to the prediction-associated pixel is a component in the one direction. Where the position of a generation target predicted pixel is an integer position or a fractional position in both the horizontal direction and the vertical direction in the reference image, the component corresponding to the prediction-associated pixel is a component in the horizontal direction.

In step S57, the pixel sorter unit 42 determines whether the number of reference pixels supplied from the reference image read unit 41 is two. If the number of reference pixels is determined to be two in step S57, the pixel sorter unit 42 supplies two reference pixels as generation pixels to the 2-tap FIR filter 43.

In step S58, the 2-tap FIR filter 43 performs a calculation by using the two reference pixels supplied as generation pixels from the pixel sorter unit 42 and the filter coefficients supplied from the 2-tap filter coefficient memory 46. The 2-tap FIR filter 43 supplies the resultant one prediction-associated pixel to the pixel selection unit 49, and the operation then moves on to step S62.

If the number of reference pixels is determined not to be two in step S57, on the other hand, the pixel sorter unit 42 determines whether the number of reference pixels supplied from the reference image read unit 41 is four in step S59. If the number of reference pixels is determined to be four in step S59, the pixel sorter unit 42 supplies four reference pixels as generation pixels to the 4-tap FIR filter 44.

In step S60, the 4-tap FIR filter 44 performs a calculation by using the four reference pixels supplied as generation pixels from the pixel sorter unit 42 and the filter coefficients supplied from the 4-tap filter coefficient memory 47. The 4-tap FIR filter 44 supplies the resultant one prediction-associated pixel to the pixel selection unit 49, and the operation then moves on to step S62.

If the number of reference pixels is determined not to be four in step S59, or if the number of reference pixels is six, on the other hand, the pixel sorter unit 42 supplies six reference pixels as generation pixels to the 6-tap FIR filter 45.

In step S61, the 6-tap FIR filter 45 performs a calculation by using the six reference pixels supplied as generation pixels from the pixel sorter unit 42 and the filter coefficients supplied from the 6-tap filter coefficient memory 48. The 6-tap FIR filter 45 supplies the resultant one prediction-associated pixel to the pixel selection unit 49, and the operation then moves on to step S62.

In step S62, the pixel selection unit 49 determines whether both the fractional values of the horizontal component and the vertical component of the motion vector supplied from the motion prediction unit 25 are other than zero, or whether the positions of the predicted pixel in both the horizontal direction and the vertical direction in the reference image are fractional positions. If it is determined in step S62 that the fractional value of at least one of the horizontal component and the vertical component of the motion vector is zero, or if the position of the predicted pixel in at least one of the horizontal direction and the vertical direction in the reference image is an integer position, the operation moves on to step S63.

In step S63, the pixel selection unit 49 outputs the prediction-associated pixel supplied from the 2-tap FIR filter 43, the 4-tap FIR filter 44, or the 6-tap FIR filter 45, as a predicted pixel to the selection unit 26 shown in Fig. 3.

In step S64, the reference image read unit 41 determines whether all the predicted pixels have been generated, or whether all the predicted pixels forming the predicted image have been determined to be generation target predicted pixels in step S53. If it is determined in step S64 that not all the predicted pixels have been generated, the operation returns to step S53, and the procedures of steps S53 through S64 are repeated until all the predicted pixels are generated.

If it is determined in step S64 that all the predicted pixels have been generated, on the other hand, the operation returns to step S15 of Fig. 20, and then moves on to step S16.

If it is determined in step S62 that the fractional values of both the horizontal component and the vertical component of the motion vector are other than zero, or if the positions of the predicted pixel in both the horizontal direction and the vertical direction in the reference image are fractional positions, the operation moves on to step S65.

In step S65, the pixel selection unit 49 outputs the Sub pel as a prediction-associated pixel supplied from the 2-tap FIR filter 43, the 4-tap FIR filter 44, or the 6-tap FIR filter 45, to the intermediate result memory 50 to store the Sub pel.

In step S66, the reference image read unit 41 determines whether all the prediction-associated pixels have been generated, or whether all the predicted pixels forming the predicted image have been determined to be generation target predicted pixels in step S53. If it is determined in step S66 that not all the prediction-associated pixels have been generated, the operation returns to step S53, and the procedures of steps S53 through S62, step S65, and step S66 are repeated until all the prediction-associated pixels are generated.

If it is determined in step S66 that all the prediction-associated pixels have been generated, on the other hand, the operation moves on to step S67 of Fig. 23.

In step S67, the reference image read unit 41 determines a generation target predicted pixel among the predicted pixels forming the predicted image. The determined generation target predicted pixel is a predicted pixel that has not yet been determined to be a generation target predicted pixel in the procedure of step S67.

In step S68, the pixel sorter unit 42 determines two, four, or six to be the number of Sub pels to be read from the intermediate result memory 50, based on the position of the generation target predicted pixel in the vertical direction in the predicted image.

In step S69, the pixel sorter unit 42 reads Sub pels as generation pixels from the intermediate result memory 50, based on the number of Sub pels determined in step S68 and the position of the generation target predicted pixel in the reference image.

In step S70, based on the fractional value of the vertical component of the motion vector supplied from the motion prediction unit 25, the 2-tap filter coefficient memory 46 supplies the filter coefficients stored and associated with the fractional value, to the 2-tap FIR filter 43. Likewise, based on the fractional value of the vertical component of the motion vector, the 4-tap filter coefficient memory 47 and the 6-tap filter coefficient memory 48 each supply filter coefficients stored and associated with the fractional value, to the 4-tap FIR filter 44 and the 6-tap FIR filter 45.

The procedures of steps S71 through S75 are the same as the procedures of steps S57 through S61 of Fig. 22, except that the procedures are carried out on Sub pels, instead of reference pixels. Therefore, explanation of those steps is not repeated herein.

In step S76, the pixel selection unit 49 outputs the Sub pel supplied from the 2-tap FIR filter 43, the 4-tap FIR filter 44, or the 6-tap FIR filter 45, as a predicted pixel to the selection unit 26.

In step S77, the reference image read unit 41 determines whether all the predicted pixels have been generated, or whether all the predicted pixels forming the predicted image have been determined to be generation target predicted pixels in step S67. If it is determined in step S77 that not all the predicted pixels have been generated, the operation returns to step S67, and the procedures of steps S67 through S77 are repeated until all the predicted pixels are generated.

If it is determined in step S77 that all the predicted pixels have been generated, on the other hand, the operation returns to step S15 of Fig. 20, and then moves on to step S16.

As described above, at the time of an inter prediction in the encoding device 10, the number of reference pixels to be used in generating an outer predicted pixel is smaller than the number of reference pixels to be used in generating an inner predicted pixel. Accordingly, the number of reference pixels to be used in generating an entire predicted image can be reduced. As a result, usage of memory bandwidth in the frame memory 22 can be reduced. Also, as the number of reference pixels to be used in generating each outer predicted pixel is small, the amount of calculation can be reduced.

Further, as a FIR filter with a greater tap length can have ideal characteristics, there is a trade- off relationship between FIR filter performance and usage of memory bandwidth. Therefore, when the number of reference pixels to be used in generating all the predicted pixels is reduced so as to reduce usage of memory bandwidth, inter prediction precision becomes lower. In the encoding device 10, on the other hand, only the number of reference pixels to be used in generating outer predicted pixels is reduced, and accordingly, decreases in inter prediction precision can be prevented.

Also, when an inter prediction is performed, the prediction precision at a location near the outer circumference might be lower than the prediction precision at a location near the center of an inter prediction block. Specifically, where the motion to be motion- compensated through an inter prediction is a perfectly parallel movement, for example, there is little difference in prediction precision within the block. However, where the motion involves a rotation or deformation no matter how small it is, there might a larger prediction variation at a location near the outer circumference than at a location near the center of the block. Accordingly, a reduction in the number of reference pixels to be used in generating outer predicted pixels hardly affects the inter prediction precision.

It should be noted that filter coefficients with different characteristics from one another can be stored in the 2-tap filter coefficient memory 46, the 4-tap filter coefficient memory 47, and the 6-tap filter coefficient memory 48.

Where the prediction precision at a location near the outer circumference of an inter prediction block is low, for example, such filter coefficients as not to interpolate the high-frequency component at a location near the outer circumference or as to reduce the high-frequency component are used so that the prediction error can be made smaller by virtue of the characteristics of an FIR filter. Therefore, in the encoding device 10, such filter coefficients as to reduce the high-frequency component are stored in the 2-tap filter coefficient memory 46, for example. In this manner, inter prediction precision can be increased.


[Example Structure of a Decoding Device]


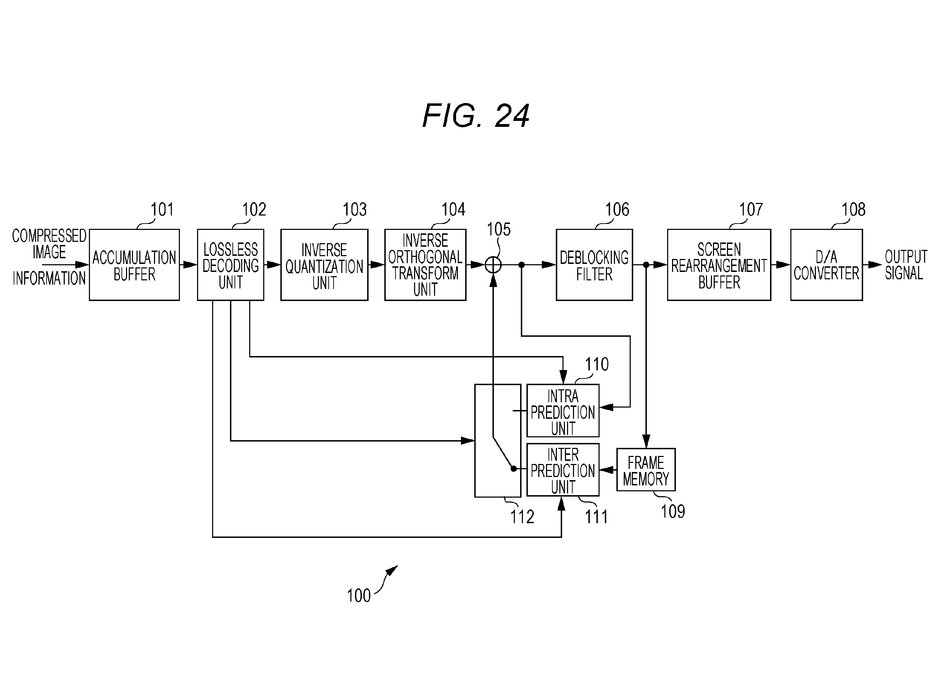

Fig. 24 is a block diagram showing an example structure of a decoding device as an image processing device to which the present technique is applied. This decoding device decodes compressed image information that is output from the encoding device 10 shown in Fig. 3.

The decoding device 100 shown in Fig. 24 includes an accumulation buffer 101, a lossless decoding unit 102, an inverse quantization unit 103, an inverse orthogonal transform unit 104, an addition unit 105, a deblocking filter 106, a screen rearrangement buffer 107, a D/A converter 108, a frame memory 109, an intra prediction unit 110, an inter prediction unit 111, and a switch 112.

The accumulation buffer 101 of the decoding device 100 receives and accumulates compressed image information from the encoding device 10 shown in Fig. 3. The accumulation buffer 101 supplies the accumulated compressed image information to the lossless decoding unit 102.

The lossless decoding unit 102 obtains a quantized coefficient and a header by performing lossless decoding such as variable-length decoding or arithmetic decoding on the compressed image information supplied from the accumulation buffer 101. The lossless decoding unit 102 supplies the quantized coefficient to the inverse quantization unit 103. The lossless decoding unit 102 also supplies intra prediction mode information and the like contained in the header to the intra prediction unit 110, and supplies a motion vector, inter prediction mode information, and the like to the inter prediction unit 111. The lossless decoding unit 102 further supplies the intra prediction mode information or the inter prediction mode information contained in the header to the switch 112.

The inverse quantization unit 103, the inverse orthogonal transform unit 104, the addition unit 105, the deblocking filter 106, the frame memory 109, the intra prediction unit 110, and the inter prediction unit 111 perform the same operations as the inverse quantization unit 18, the inverse orthogonal transform unit 19, the addition unit 20, the deblocking filter 21, the frame memory 22, the intra prediction unit 23, and the inter prediction unit 24 shown in Fig. 3, so as to decode images.

Specifically, the inverse quantization unit 103 inversely quantizes the quantized coefficient supplied from the lossless decoding unit 102, and supplies the resultant coefficient to the inverse orthogonal transform unit 104.

The inverse orthogonal transform unit 104 performs an inverse orthogonal transform such as an inverse discrete cosine transform or an inverse Karhunen-Loeve transform on the coefficient supplied from the inverse quantization unit 103, and supplies the resultant residual error information to the addition unit 105.

The addition unit 105 functions as an adding operation unit, and adds the residual error information as a decoding target image supplied from the inverse orthogonal transform unit 104 to a predicted image supplied from the switch 112. The addition unit 105 supplies the resultant image to the deblocking filter 106, and supplies the resultant image as a reference image to the intra prediction unit 110. Where there are no predicted images supplied from the switch 112, the addition unit 105 supplies an image that is the residual error information supplied from the inverse orthogonal transform unit 104, to the deblocking filter 106, and also supplies the image as a reference image to the intra prediction unit 110.

The deblocking filter 106 performs filtering on the image supplied from the addition unit 105, to remove block distortions. The deblocking filter 106 supplies and stores the resultant image into the frame memory 109, and also supplies the resultant image to the screen rearrangement buffer 107. The image stored in the frame memory 109 is supplied as a reference image to the inter prediction unit 111.

The screen rearrangement buffer 107 stores the image supplied from the deblocking filter 106 by the frame. The screen rearrangement buffer 107 rearranges the frames of the stored image in the original displaying order, instead of the encoding order, and supplies the rearranged image to the D/A converter 108.

The D/A converter 108 performs a D/A conversion on the frame-based image supplied from the screen rearrangement buffer 107, and outputs an output signal.

Using the reference image supplied from the addition unit 105, the intra prediction unit 110 performs an intra prediction in the intra prediction mode indicated by the intra prediction mode information supplied from the lossless decoding unit 102, and generates a predicted image. The intra prediction unit 110 supplies the predicted image to the switch 112.

The inter prediction unit 111 has the same structure as the inter prediction unit 24 shown in Fig. 4. Based on the inter prediction mode information and the motion vector supplied from the lossless decoding unit 102, the inter prediction unit 111 reads a reference image from the frame memory 109. Based on the motion vector and the reference image read from the frame memory 109, the inter prediction unit 111 performs an inter prediction operation. The inter prediction unit 111 supplies the resultant predicted image to the switch 112.

When the intra prediction mode information is supplied from the lossless decoding unit 102, the switch 112 supplies the predicted image supplied from the intra prediction unit 110 to the addition unit 105. When the inter prediction mode information is supplied from the lossless decoding unit 102, on the other hand, the switch 112 supplies the predicted image supplied from the inter prediction unit 111 to the addition unit 105.

[Description of an Operation of the Decoding Device]

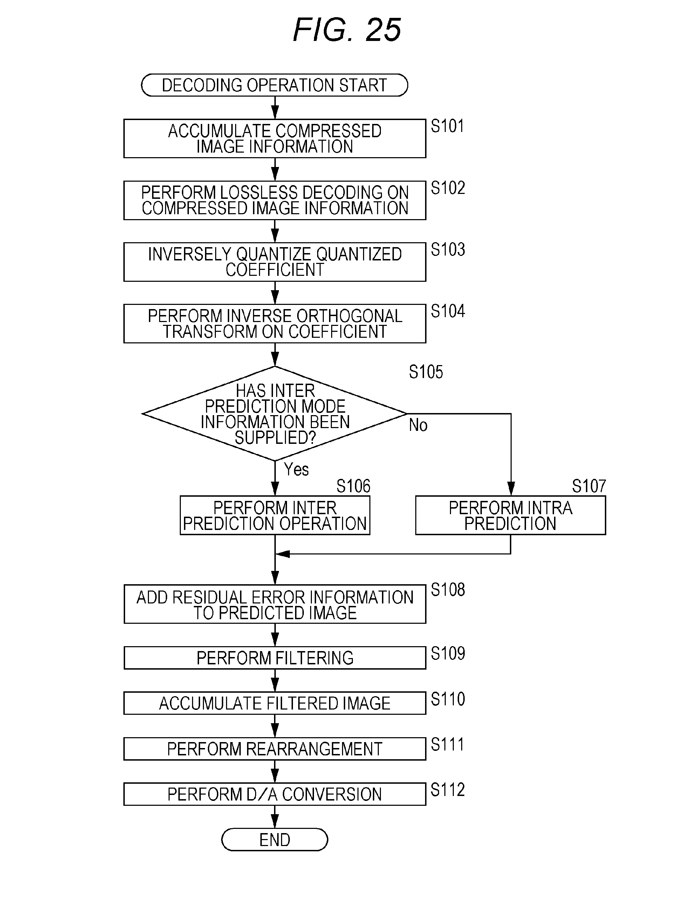

Fig. 25 is a flowchart for explaining a decoding operation by the decoding device 100 shown in Fig. 24. This decoding operation is performed every time frame-based compressed image information is input to the decoding device 100, for example.

In step S101 of Fig. 25, the accumulation buffer 101 of the decoding device 100 receives and accumulates frame-based compressed image information from the encoding device 10 shown in Fig. 3. The accumulation buffer 101 supplies the accumulated compressed image information to the lossless decoding unit 102. It should be noted that the procedures of steps S102 through S110 described below are carried out for each macroblock, for example.

In step S102, the lossless decoding unit 102 performs lossless decoding on the compressed image information supplied from the accumulation buffer 101, to obtain a quantized coefficient and a header. The lossless decoding unit 102 supplies the quantized coefficient to the inverse quantization unit 103. The lossless decoding unit 102 also supplies intra prediction mode information and the like contained in the header to the intra prediction unit 110, and supplies a motion vector, inter prediction mode information, and the like to the inter prediction unit 111. The lossless decoding unit 102 further supplies the intra prediction mode information or the inter prediction mode information contained in the header to the switch 112.

In step S103, the inverse quantization unit 103 inversely quantizes the quantized coefficient supplied from the lossless decoding unit 102, and supplies the resultant coefficient to the inverse orthogonal transform unit 104.

In step S104, the inverse orthogonal transform unit 104 performs an inverse orthogonal transform on the coefficient supplied from the inverse quantization unit 103, and supplies the resultant residual error information to the addition unit 105.

In step S105, the inter prediction unit 111 determines whether the inter prediction mode information has been supplied from the lossless decoding unit 102. If it is determined in step S105 that the inter prediction mode information has been supplied, the operation moves on to step S106.

In step S106, based on the motion vector and the inter prediction mode information supplied from the lossless decoding unit 102, the inter prediction unit 111 performs the inter prediction operation described with reference to Figs. 22 and 23. The inter prediction unit 111 supplies the resultant predicted image to the addition unit 105 via the switch 112, and the operation then moves on to step S108.

If it is determined in step S105 that the inter prediction mode information has not been supplied, or that the intra prediction mode information has been supplied to the intra prediction unit 110, the operation moves on to step S107.

In step S107, using a reference image supplied from the addition unit 105, the intra prediction unit 110 performs an intra prediction in the intra prediction mode indicated by the intra prediction mode information supplied from the lossless decoding unit 102. The intra prediction unit 110 supplies the resultant predicted image to the addition unit 105 via the switch 112, and the operation then moves on to step S108.

In step S108, the addition unit 105 adds the residual error information supplied from the inverse orthogonal transform unit 104 to the predicted image supplied from the switch 112. The addition unit 105 supplies the resultant image to the deblocking filter 106, and also supplies the resultant image as a reference image to the intra prediction unit 110. At the time of processing of the first macroblock of the first frame, the procedures of steps S105 through S108 are not carried out, since there are no reference images. Instead, an image that is the residual error information is supplied to the deblocking filter 106, and is also supplied as a reference image to the intra prediction unit 110.

In step S109, the deblocking filter 106 performs filtering on the image supplied from the addition unit 105, to remove block distortions.

In step S110, the deblocking filter 106 supplies and stores the filtered image into the frame memory 109, and also supplies the filtered image to the screen rearrangement buffer 107. The image stored in the frame memory 109 is supplied as a reference image to the inter prediction unit 111.

In step S111, the screen rearrangement buffer 107 stores the image supplied from the deblocking filter 106 by the frame, rearranges the frames of the stored image in the original displaying order, instead of the encoding order, and supplies the rearranged image to the D/A converter 108.

In step S112, the D/A converter 108 performs a D/A conversion on the frame-based image supplied from the screen rearrangement buffer 107, and outputs an output signal.

As described above, at the time of an inter prediction in the decoding device 100, the number of reference pixels to be used in generating an outer predicted pixel is smaller than the number of reference pixels to be used in generating an inner predicted pixel. Accordingly, the number of reference pixels to be used in generating an entire predicted image can be reduced. As a result, usage of memory bandwidth in the frame memory 109 can be reduced. Also, as the number of reference pixels to be used in generating each outer predicted pixel is small, the amount of calculation can be reduced.

Further, in the decoding device 100, only the number of reference pixels to be used in generating outer predicted pixels is reduced, and accordingly, decreases in inter prediction precision can be prevented, as in the encoding device 10.

[Second Example Structure of the Inter Prediction Unit]

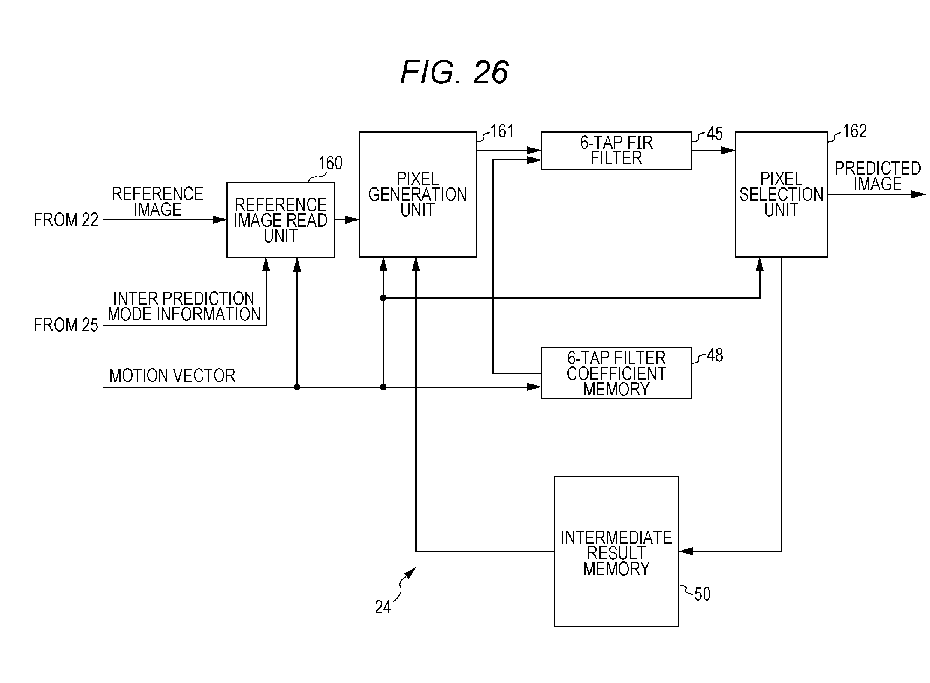

Fig. 26 is a block diagram showing a second example structure of the inter prediction unit 24 shown in Fig. 3.

Of the components shown in Fig. 26, the same components as those in Fig. 4 are denoted by the same reference numerals as those in Fig. 4. The explanations that have already been made will not be repeated.

The structure of the inter prediction unit 24 shown in Fig. 26 differs from the structure shown in Fig. 4 mainly in that the reference image read unit 41, the pixel sorter unit 42, and the pixel selection unit 49 are replaced with a reference image read unit 160, a pixel generation unit 161, and a pixel selection unit 162, and that the 2-tap FIR filter 43, the 4-tap FIR filter 44, the 2-tap filter coefficient memory 46, and the 4-tap filter coefficient memory 47 are removed. The inter prediction unit 24 shown in Fig. 26 creates and uses replicas of reference pixels that are read from the frame memory 22 (Fig. 3) in the same manner as in the case of the inter prediction unit 24 shown in Fig. 4, so that the number of pixels to be used in generating each Sub pel is set at six.

Specifically, like the reference image read unit 41 shown in Fig. 4, the reference image read unit 160 of the inter prediction unit 24 shown in Fig. 26 identifies the reference image among the images stored in the frame memory 22, based on the reference index and the predicting direction contained in the inter prediction mode information supplied from the motion prediction unit 25 shown in Fig. 3. Like the reference image read unit 41, the reference image read unit 160 reads, from the frame memory 22, the reference pixels to be used in generating a predicted image, based on the block size contained in the inter prediction mode information and the motion vector, and temporarily stores those reference pixels.

For each predicted pixel, the reference image read unit 160 reads the reference pixels to be used in generating the predicted pixel among the temporarily stored reference pixels, like the reference image read unit 41. Here, the number of reference pixels to be used in generating a predicted pixel is four, five, or six. Like the reference image read unit 41, the reference image read unit 160 supplies the read reference pixels to the pixel generation unit 161.

Like the pixel sorter unit 42 shown in Fig. 4, the pixel generation unit 161 sets the reference pixels supplied from the reference image read unit 41 as generation pixels. Like the pixel sorter unit 42, the pixel generation unit 161 also reads, from the intermediate result memory 50, Sub pels corresponding to the generation target predicted pixel as generation pixels, based on the fractional value of the motion vector supplied from the motion prediction unit 25. Here, the number of Sub pels to be used in generating a predicted pixel is four, five, or six.

When the number of generation pixels is smaller than six, the pixel generation unit 161 replicates an outer pixel among the generation pixels by the difference number between the number of generation pixels and six, and generates six pixels as new generation pixels consisting of the replicated pixels and the generation pixels.

Specifically, when the number of generation pixels is four, the pixel generation unit 161 replicates an outer generation pixel among the generation pixels, to generate two pixels located on the outer side of the outer generation pixel. The six pixels consisting of the two pixels and the four generation pixels are set as six generation pixels. When the number of generation pixels is five, the pixel generation unit 161 replicates an outer generation pixel among the generation pixels, to generate one pixel located on the outer side of the outer generation pixel. The six pixels consisting of the one pixel and the five generation pixels are set as six generation pixels. When the number of generation pixels is six, on the other hand, the pixel generation unit 161 sets the generation pixels as six generation pixels as they are. The pixel generation unit 161 supplies the generated six generation pixels to the 6- tap FIR filter 45.

Based on the fractional value of the motion vector supplied from the motion prediction unit 25, the pixel selection unit 162 outputs a predicted pixel that is a pixel supplied from the 6-tap FIR filter 45 to the selection unit 26 shown in Fig. 3, or supplies the predicted pixel to the intermediate result memory 50, like the pixel selection unit 49 shown in Fig. 4.

[Description of Post-Replication Generation Pixels]

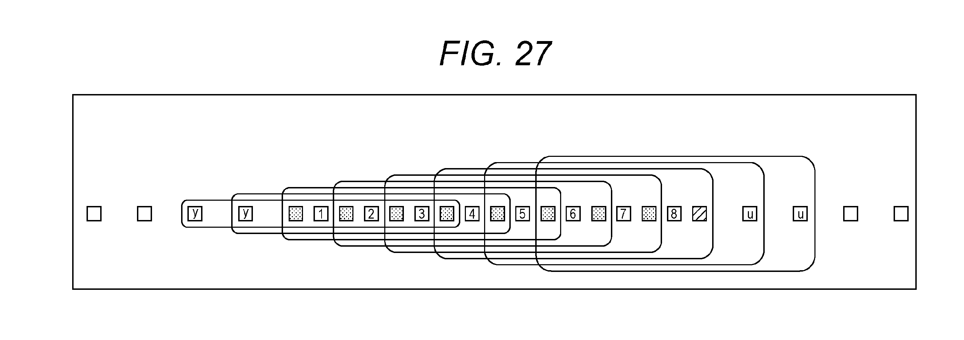

Fig. 27 is a diagram showing example post-replication generation pixels to be used in generating respective eight predicted pixels that are aligned in the horizontal direction, have 1/2 pixel positions in the horizontal direction, and have integer positions in the vertical direction in a case where the size of the inter prediction block is 8 x 8 pixels.

In Fig. 27, each square having a number assigned thereto represents a predicted pixel, and each square having neither a number nor an alphabetical character assigned thereto represents a reference pixel. Each dotted square represents a reference pixel located within the range of the size of the inter prediction block among the reference pixels to be used in generating the predicted pixels, and the shaded square represents a reference pixel outside the range of the size of the inter prediction block. Further, each square having an alphabetical character assigned thereto represents a pixel formed by replicating a reference pixel.

In the example illustrated in Fig. 27, the outermost predicted pixels are each generated by using six generation pixels including four reference pixels, and the second outermost predicted pixels are each generated by using six generation pixels including five reference pixels. The predicted pixels located on the inner sides of the second outermost predicted pixels, including the innermost predicted pixels, are each generated by using six reference pixels as generation pixels.

Specifically, in a case where the generation target is the predicted pixel represented by the square that has number 1 assigned thereto and is one of the outermost predicted pixels among eight predicted pixels that are aligned in the horizontal direction, have 1/2 pixel positions in the horizontal direction, and have integer positions in the vertical direction, the reference image read unit 160 supplies a total of four reference pixels consisting of one on the left side of the predicted pixel and three on the right side of the predicted pixel, to the pixel generation unit 161. The pixel generation unit 161 replicates the leftmost reference pixel among the four reference pixels, to generate two pixels in integer positions on the left side of the leftmost reference pixel. By doing so, the pixel generation unit 161 generates six generation pixels consisting of the two pixels and the four reference pixels supplied from the pixel generation unit 161.

In a case where the generation target is the second outermost predicted pixel represented by the square that has number 2 assigned thereto and is located on the inner side of the predicted pixel represented by the square having number 1 assigned thereto, the reference image read unit 160 supplies a total of five reference pixels consisting of two on the left side of the predicted pixel and three on the right side of the predicted pixel, to the pixel generation unit 161. The pixel generation unit 161 replicates the leftmost reference pixel among the five reference pixels, to generate one pixel in an integer position on the left side of the leftmost reference pixel. By doing so, the pixel generation unit 161 generates six generation pixels consisting of the one pixel and the five reference pixels supplied from the pixel generation unit 161.

Further, in a case where the generation target is the predicted pixel represented by the square that has one of numbers 3 through 6 assigned thereto and is located on the inner side of the predicted pixel represented by the square having number 2 assigned thereto, the reference image read unit 160 supplies a total of six reference pixels including three on each side of the predicted pixel to the pixel generation unit 161. The pixel generation unit 161 sets the six reference pixels as six generation pixels as they are.

In a case where the generation target is the second outermost predicted pixel represented by the square that has number 7 assigned thereto and is located on the inner side of the outermost predicted pixel represented by the square having number 8 assigned thereto, the reference image read unit 160 supplies a total of five reference pixels consisting of two on the right side of the predicted pixel and three on the left side of the predicted pixel, to the pixel generation unit 161. The pixel generation unit 161 replicates the rightmost reference pixel among the five reference pixels, to generate one pixel in an integer position on the right side of the rightmost reference pixel. By doing so, the pixel generation unit 161 generates six generation pixels consisting of the one pixel and the five reference pixels supplied from the pixel generation unit 161.

Further, in a case where the generation target is the outermost predicted pixel represented by the square having number 8 assigned thereto, the reference image read unit 160 supplies a total of four reference pixels consisting of one on the right side of the predicted pixel and three on the left side of the predicted pixel, to the pixel generation unit 161. The pixel generation unit 161 replicates the rightmost reference pixel among the four reference pixels, to generate two pixels in integer positions on the right side of the rightmost reference pixel. By doing so, the pixel generation unit 161 generates six generation pixels consisting of the two pixels and the four reference pixels supplied from the pixel generation unit 161.

Although not described herein, when a predicted pixel that has an integer position in the horizontal direction and has a fractional position in the vertical direction is generated, the outermost reference pixel, which is the uppermost or lowermost reference pixel, is replicated, to generate six generation pixels. Also, when a predicted pixel that has a fractional position in both the horizontal direction and the vertical direction, six generation pixels are first generated by using reference pixels as in the case of Fig. 27, and prediction-associated pixels are then generated by using the generation pixels and are stored into the intermediate result memory 50. The uppermost or lowermost reference pixel among the prediction-associated pixels read from the intermediate result memory 50 is then replicated, to generate six generation pixels.

[Description of a Second Example of the Inter Prediction Operation]

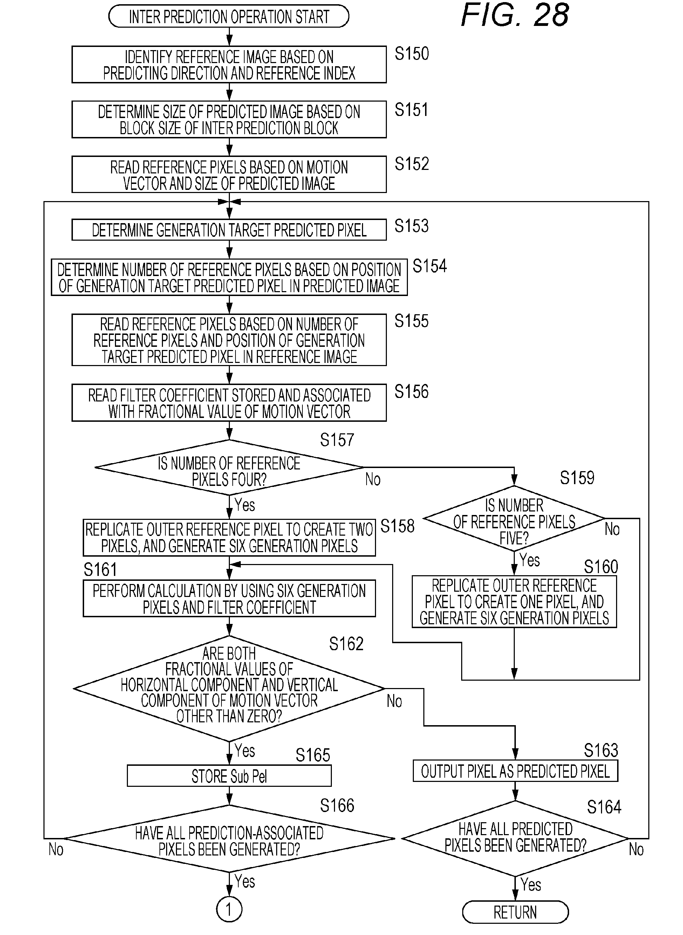

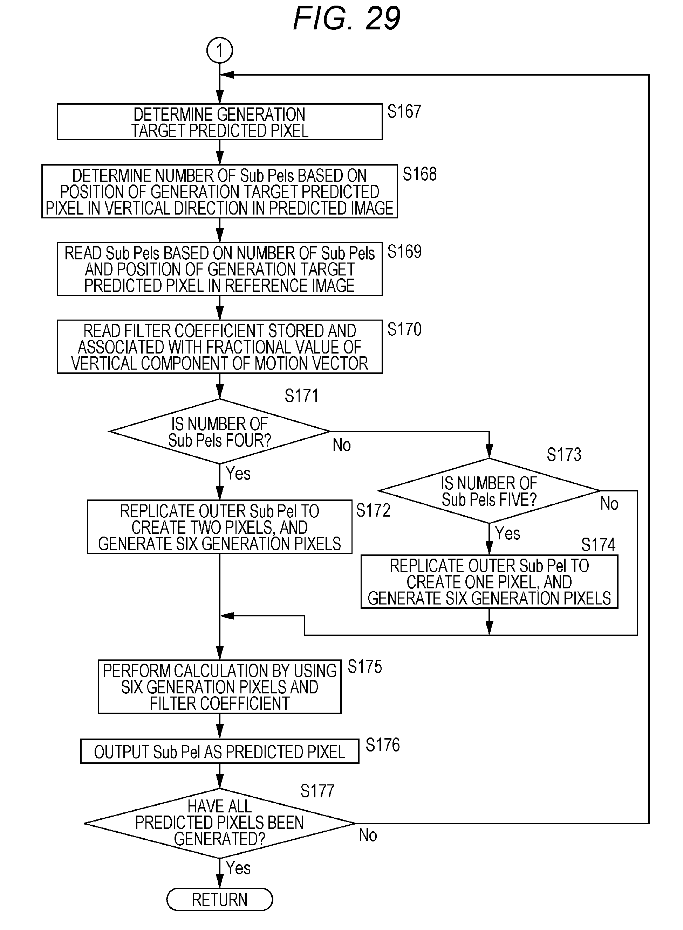

Figs. 28 and 29 show a flowchart for explaining, in detail, the inter prediction operation of step S15 of Fig. 20 to be performed by the inter prediction unit 24 of Fig. 26.

The procedures of steps S150 through S153 of Fig. 28 are the same as the procedures of steps S50 through S53 of Fig. 22, and therefore, explanation of them is not repeated herein. If there is more than one prediction-associated pixel, the procedures of steps S154 through S165 described below are carried out for each prediction-associated pixel.

After the procedure of step S153, in step S154, the reference image read unit 160 determines four, five, or six to be the number of reference pixels to be used in generating the prediction-associated pixel, based on the position of the generation target predicted pixel in the predicted image.

In step S155, based on the number of reference pixels determined in step S154 and the position of the generation target predicted pixel in the reference image, the reference image read unit 160 reads the reference pixels to be used in generating the prediction-associated pixel among the reference pixels stored in step S152. The reference image read unit 160 supplies the read reference pixels to the pixel generation unit 161.

In step S156, based on the fractional value of the component corresponding to the prediction-associated pixel in the motion vector supplied from the motion prediction unit 25, the 6-tap filter coefficient memory 48 supplies the filter coefficients stored and associated with the fractional value, to the 6-tap FIR filter 45.

In step S157, the pixel generation unit 161 determines whether the number of reference pixels supplied from the reference image read unit 160 is four. If the number of reference pixels is determined to be four in step S157, the operation moves on to step S158.

In step S158, the pixel generation unit 161 replicates an outer reference pixel among the four reference pixels supplied from the reference image read unit 160, to generate two pixels on the outer side of the outer reference pixel. By doing so, the pixel generation unit 161 generates six generation pixels consisting of the two pixels and the four reference pixels. The pixel generation unit 161 supplies the generated six generation pixels to the 6-tap FIR filter 45, and the operation then moves on to step S161.

If the number of reference pixels is determined not to be four in step S157, on the other hand, the pixel generation unit 161 determines whether the number of reference pixels supplied from the reference image read unit 160 is five in step S159.

If the number of reference pixels is determined to be five in step S159, the operation moves on to step S160. In step S160, the pixel generation unit 161 replicates an outer reference pixel among the five reference pixels supplied from the reference image read unit 160, to generate one pixel on the outer side of the outer reference pixel. By doing so, the pixel generation unit 161 generates six generation pixels consisting of the one pixel and the five reference pixels. The pixel generation unit 161 supplies the generated six generation pixels to the 6-tap FIR filter 45, and the operation then moves on to step S161.

If the number of reference pixels is determined not to be five in step S159, or if the number of reference pixels is six, on the other hand, the pixel generation unit 161 supplies the six reference pixels as generation pixels to the 6-tap FIR filter 45, and the operation then moves on to step S161.

In step S161, the 6-tap FIR filter 45 performs a calculation by using the six generation pixels supplied from the pixel generation unit 161 and the filter coefficients supplied from the 6-tap filter coefficient memory 48. The 6-tap FIR filter 45 supplies the resultant one prediction-associated pixel to the pixel selection unit 162. The operation then moves on to step S162.

The procedures of steps S162 through S166 of Fig. 28 and the procedure of step S167 of Fig. 29 are the same as the procedures of steps S62 through S66 of Fig. 22 and the procedure of step S67 of Fig. 23, and therefore, explanation of them is not repeated herein.

In step S168, the pixel generation unit 161 determines four, five, or six to be the number of Sub pels to be read from the intermediate result memory 50, based on the position of the generation target predicted pixel in the vertical direction in the predicted image.

In step S169, the pixel generation unit 161 reads Sub pels as generation pixels from the intermediate result memory 50, based on the number of Sub pels determined in step S168 and the position of the generation target predicted pixel in the reference image.

In step S170, based on the fractional value of the vertical component of the motion vector supplied from the motion prediction unit 25, the 6-tap filter coefficient memory 48 supplies the filter coefficients stored and associated with the fractional value, to the 6-tap FIR filter 45. The operation then moves on to step S171.

The procedures of steps S171 through S175 are the same as the procedures of steps S157 through S161 of Fig. 28, except that the procedures are carried out on Sub pels, instead of reference pixels. Therefore, explanation of those steps is not repeated herein.

After the procedure of step S175, in step S176, the pixel selection unit 162 outputs the Sub pel, which is the pixel supplied from the 6-tap FIR filter 45, as a predicted pixel to the selection unit 26.

In step S177, the reference image read unit 160 determines whether all the predicted pixels have been generated, or whether all the predicted pixels forming the predicted image have been determined to be generation target predicted pixels in step S167. If it is determined in step S177 that not all the predicted pixels have been generated, the operation returns to step S167, and the procedures of steps S167 through S177 are repeated until all the predicted pixels are generated.

If it is determined in step S177 that all the predicted pixels have been generated, on the other hand, the operation returns to step S15 of Fig. 20, and then moves on to step S16.

As described above, at the time of an inter prediction by the inter prediction unit 24 of Fig. 26, the number of reference pixels to be used in generating an outer predicted pixel is smaller than the number of reference pixels to be used in generating an inner predicted pixel. Accordingly, the number of reference pixels to be used in generating an entire predicted image can be reduced, as in the case of the inter prediction unit 24 shown in Fig. 4. As a result, usage of memory bandwidth in the frame memory 22 can be reduced. Also, as the number of reference pixels to be used in generating each outer predicted pixel is small, the amount of calculation can be reduced.

Further, the inter prediction unit 24 of Fig. 26 creates replicated pixels by using an outer generation pixel, and generates a predicted pixel by using new generation pixels that are six pixels consisting of the replicated pixels and generation pixels. Accordingly, the tap number of the FIR filter to generate predicted pixels is six only, which simplifies the operation, compared with the inter prediction unit 24 of Fig. 4, which changes tap numbers of the FIR filter in accordance with the positions of predicted pixels.

Although not shown in the drawings, when the encoding device 10 includes the inter prediction unit 24 of Fig. 26, the inter prediction unit 111 of the decoding device 100 also has the same structure as the inter prediction unit 24 of Fig. 26.

Also, in the above description, Sub pels in 1/2 pixel positions are generated through interpolations. However, Sub pels in 1/4 pixel positions or 1/8 pixel positions may be generated instead. In that case, the same operation as the operation to generate Sub pels in 1/2 pixel positions is performed, except that different filter coefficients are used.

[Third Example Structure of the Inter Prediction Unit]

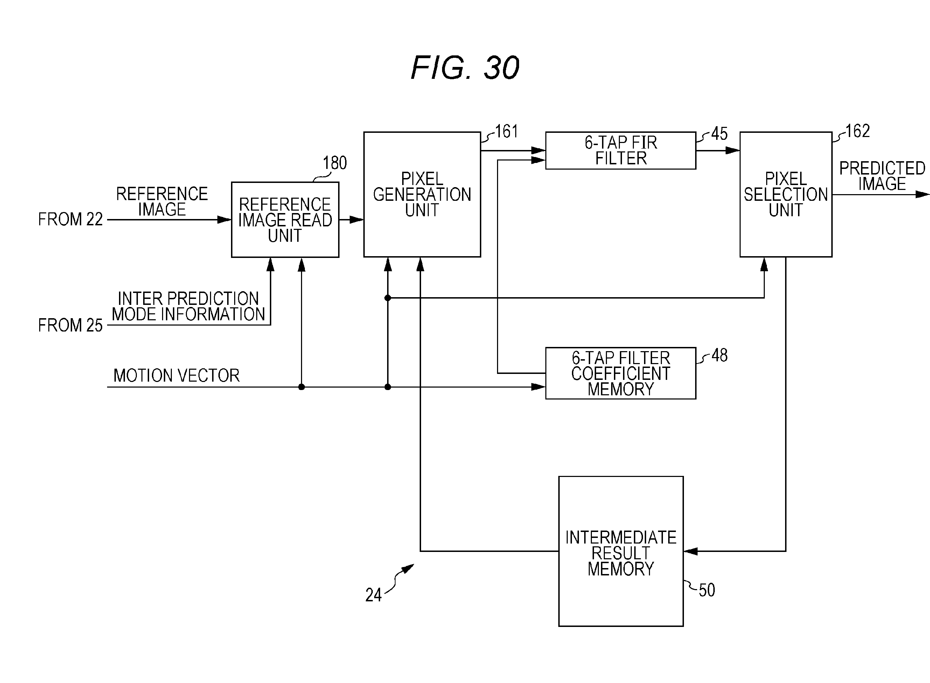

Fig. 30 is a block diagram showing a third example structure of the inter prediction unit 24 shown in Fig. 3.
Of the components shown in Fig. 30, the same components as those in Fig. 26 are denoted by the same reference numerals as those in Fig. 26. The explanations that have already been made will not be repeated.
The structure of the inter prediction unit 24 shown in Fig. 30 differs from the structure shown in Fig. 26 mainly in that the reference image read unit 160 is replaced with a reference image read unit 180. The inter prediction unit 24 shown in Fig. 30 changes the number of reference pixels to be used in generating an outer predicted pixel in accordance with the motion vector.
Specifically, like the reference image read unit 41 of Fig. 4, the reference image read unit 180 of the inter prediction unit 24 of Fig. 30 identifies a reference image among the images stored in the frame memory 22 as a DPB (Decoded Picture Buffer), based on the reference index and the predicting direction contained in the inter prediction mode information supplied from the motion prediction unit 25 shown in Fig. 3. The reference image read unit 180 determines the range of reference pixels to be used in generating a predicted image, based on the block size contained in the inter prediction mode information and the motion vector. Based on the motion vector, the reference image read unit 180 reads the reference pixels in the determined range from the frame memory 22, and temporarily stores those reference pixels.
For each predicted pixel, the reference image read unit 180 reads the reference pixels to be used in generating the predicted pixel among the temporarily stored reference pixels, like the reference image read unit 41. Here, the number of reference pixels to be used in generating a predicted pixel is four, five, or six. Like the reference image read unit 41, the reference image read unit 180 supplies the read reference pixels to the pixel generation unit 161.

[Description of Reference Pixel Ranges Based on Motion Vectors and Block Sizes]

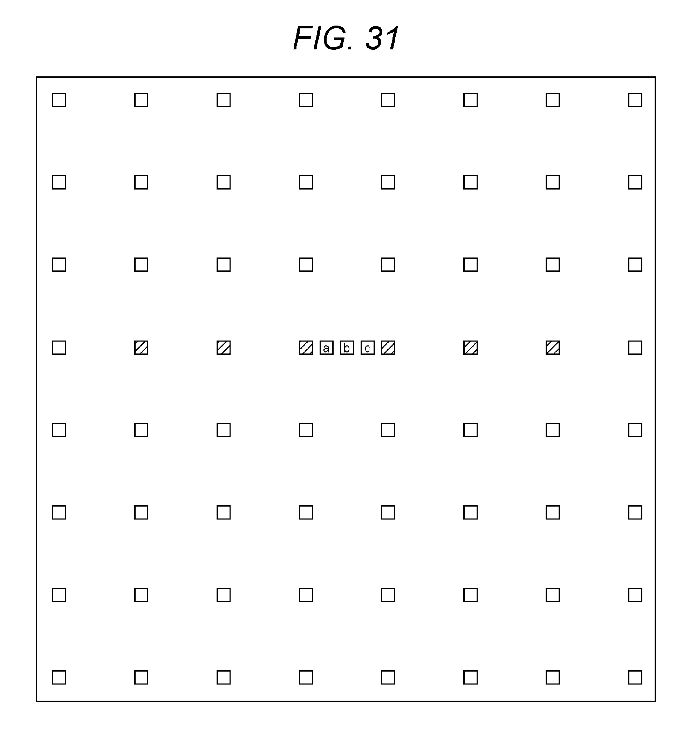

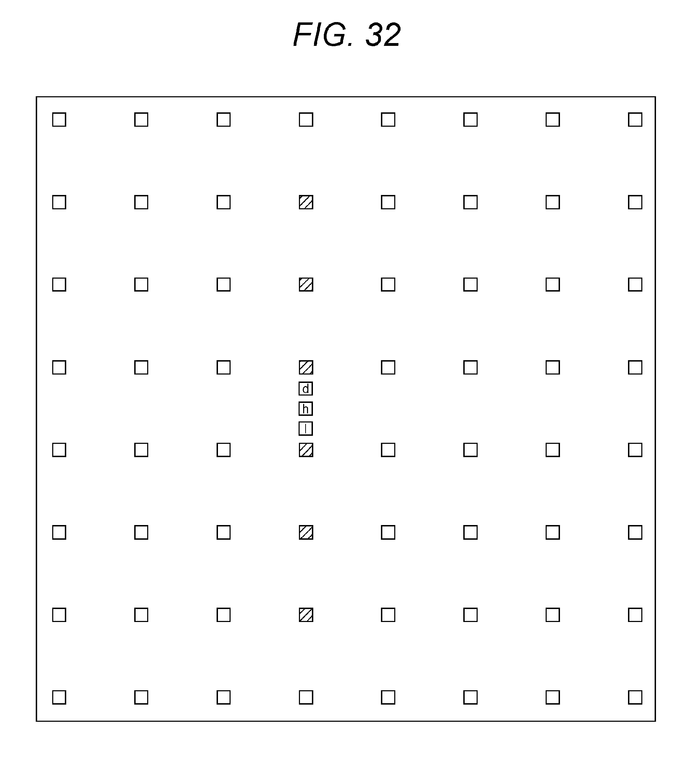

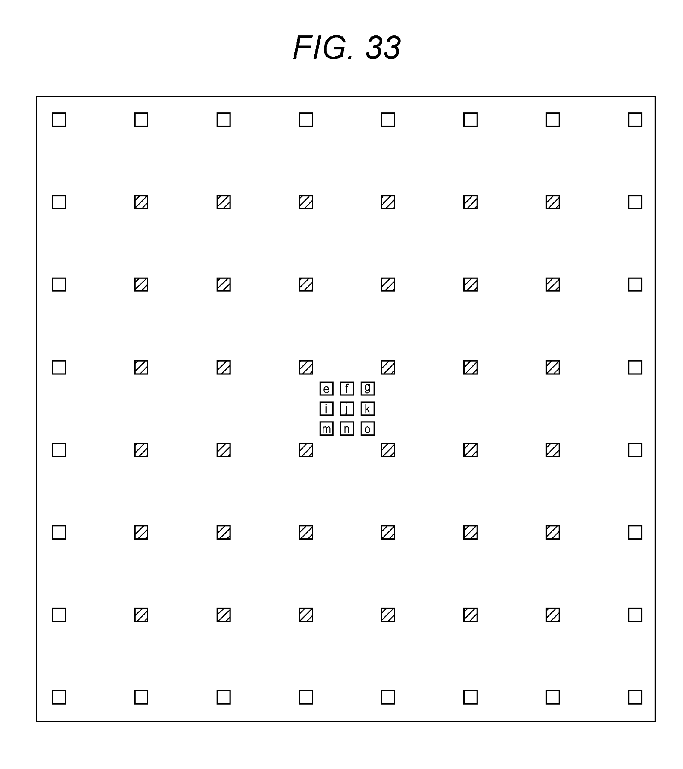

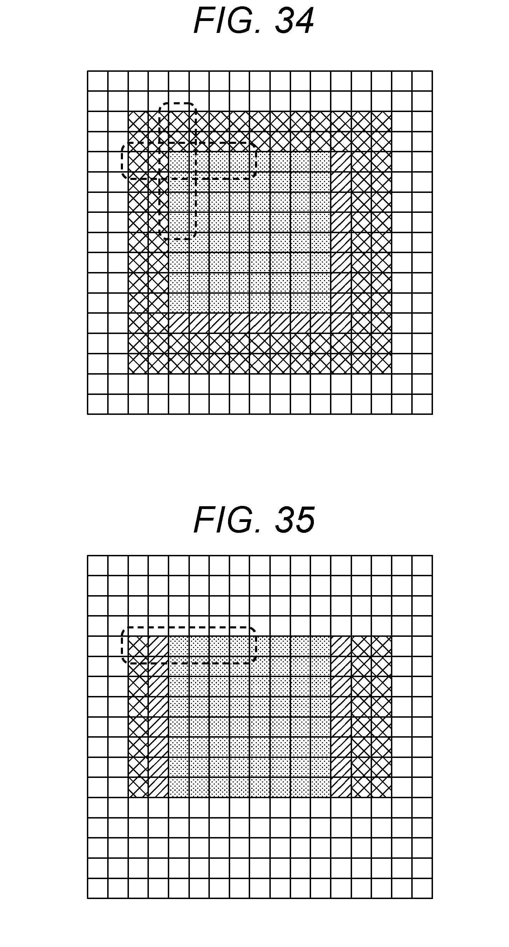

Figs. 31 through 33 are diagrams showing respective ranges of post-replication generation pixels to be used by the inter prediction unit 24 of Fig. 26 in generating Sub pels a through o as predicted pixels.
In Figs. 31 through 33, each square having an alphabetical character assigned thereto represents a Sub pel of each corresponding alphabetical character, and each shaded square represents a generation pixel to be used in generating Sub pels. Each plain square having no alphabetical character assigned thereto represents a reference pixel not to be used in generating Sub pels.
As shown in Fig. 31, in a case where the predicted pixel is a Sub pel a, b, or c, which has an integer position in the vertical direction and has a fractional position in the horizontal direction in a reference image, each three post-replication generation pixels located on the right and left sides of the Sub pels a through c are used in generating the predicted pixel. As shown in Fig. 32, in a case where the predicted pixel is a Sub pel d, h, or 1, which has an integer position in the horizontal direction and has a fractional position in the horizontal direction in a reference image, each three post-replication generation pixels located above and below the Sub pels d, h, and 1 are used in generating the predicted pixel.
As shown in Fig. 33, in a case where the predicted pixel is a Sub pel e, f, g, i, j, k, m, n, or o, which has a fractional position in both the horizontal direction and the vertical direction in a reference image, 6x6 post-replication generation pixels located around the Sub pels e, f, g, i, j, k, m, n, and o are used in generating the predicted pixel.
Accordingly, the number of post-replication generation pixels to be used in generating a predicted pixel that has a fractional position in only one of the horizontal direction and the vertical direction in a reference image is smaller than the number of post-replication generation pixels to be used in generating a predicted pixel that has a fractional position in both directions. That is, the number of generation pixels in a case where each predicted pixel is generated through a filtering operation performed in one of the horizontal direction and the vertical direction is smaller than the number of generation pixels in a case where a predicted pixel is generated through a filtering operation performed in both directions.
In view of this, when each predicted pixel is generated through a filtering operation performed only in one of the horizontal direction and the vertical direction, or when the fractional value of the horizontal component or the vertical component of the motion vector is zero, the reference image read unit 180 of Fig. 30 makes the number of replicated pixels small among generation pixels, compared with the reference image read unit 160 of Fig. 26.
Specifically, when each predicted pixel is generated through a filtering operation performed in both the horizontal direction and the vertical direction, or when the fractional values of the horizontal component and the vertical component of the motion vector are not zero, the reference image read unit 180 performs the same operation as the reference image read unit 160.
As a result, in a case where the size of the inter prediction block is 8 x 8 pixels, the generation pixels to be used in generating a predicted image are those represented by the squares that are dotted, shaded, or double-shaded in Fig. 34.

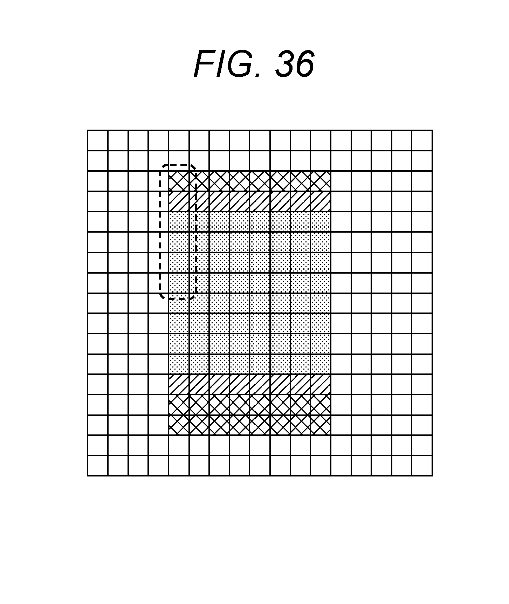

In Fig. 34, each square represents a reference pixel. Each dotted square represents a reference pixel located within the range of the size of the inter prediction block among the reference pixels to be used in generating the predicted image, and each shaded square represents a reference pixel outside the range of the size of the inter prediction block. Further, each double-shaded square represents a pixel formed by replicating an outermost reference pixel among those used in generating the predicted image. The same applies to Figs. 35 and 36 described later.

In the example illustrated in Fig. 34, the outermost predicted pixels are each generated by using six generation pixels consisting of four reference pixels and two replicated pixels, as in the case of Fig. 27. The second outermost predicted pixels located on the inner sides of the outermost predicted pixels are each generated by using six generation pixels consisting of five reference pixels and one replicated pixel. The predicted pixels located on the inner sides of the second outermost predicted pixels, including the innermost predicted pixels, are each generated by using six reference pixels as six generation pixels. As a result, the range of the reference pixels read from the frame memory 22 is 9 x 9 pixels.

As shown in Fig. 35, in a case where each predicted pixel is generated by a filtering operation performed in the horizontal direction, or where the fractional value of the horizontal component of the motion vector is not zero but the fractional value of the vertical component is zero, the number of replicated pixels is made smaller than that in the case of Fig. 34.

Specifically, the generation pixels to be used in generating each leftmost predicted pixel consist of five reference pixels and one replicated pixel, as indicated by the dashed line in Fig. 35. As a result, the horizontal range of the reference pixels read from the frame memory 22 is one pixel larger than that in the case of Fig. 34. However, the filtering operation in the vertical direction is not performed, and therefore, the vertical range is the same as the size of the inter prediction block. Accordingly, the range of reference pixels read from the frame memory 22 is 10 x 8 pixels, which is smaller than that in the case of Fig. 34.

Likewise, as shown in Fig. 36, in a case where each predicted pixel is generated by a filtering operation performed in the vertical direction, or where the fractional value of the vertical component of the motion vector is not zero but the fractional value of the horizontal component is zero, the number of replicated pixels is made smaller than that in the case of Fig. 34.

Specifically, the generation pixels to be used in generating each uppermost predicted pixel consist of five reference pixels and one replicated pixel, as indicated by the dashed line in Fig. 36. As a result, the vertical range of the reference pixels read from the frame memory 22 is one pixel larger than that in the case of Fig. 34. However, the filtering operation in the horizontal direction is not performed, and therefore, the horizontal range is the same as the size of the inter prediction block. Accordingly, the range of reference pixels read from the frame memory 22 is 8 x 10 pixels, which is smaller than that in the case of Fig. 34.

As described above, in a case where only one of the fractional values of the horizontal component and the vertical component of the motion vector is not zero, the inter prediction unit 24 of Fig. 30 increases the number of reference pixels to be used in the outer predicted pixels and reduces the number of replicated pixels, compared with the case where the fractional values of both components are not zero. As a result, inter prediction precision can be made higher than that of the inter prediction unit 24 of Fig. 26, while usage of memory bandwidth in the frame memory 22 is reduced.

Also, as shown in Figs. 34 through 36, in a case where the number of reference pixels to be used in generating outer predicted pixels is increased so that the range of reference pixels to be read when only one of the fractional values of the horizontal component and the vertical component of the motion vector is not zero becomes equal to or smaller than the range of reference pixels to be read when the fractional values of both components are not zero, inter prediction precision can be made higher without an increase in maximum usage of memory bandwidth in the frame memory 22, compared with the inter prediction unit 24 of Fig. 26.

As the frame memory 22, a DRAM (Dynamic Random Access Memory) is normally installed. If usage of memory bandwidth becomes as large as that in a conventional case, the production costs become higher.

[Description of a Third Example of the Inter Prediction Operation]

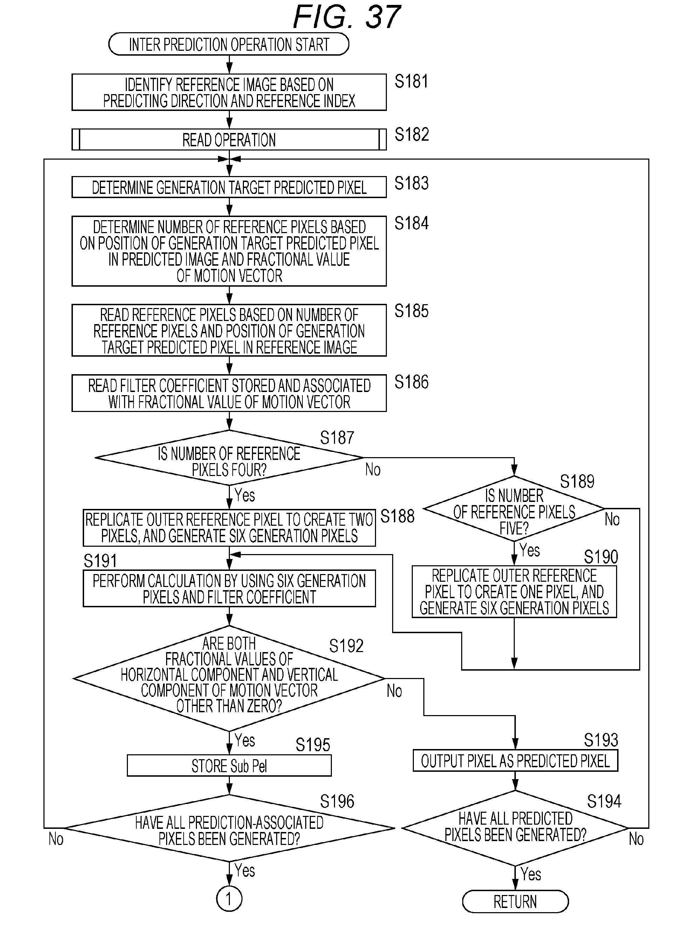

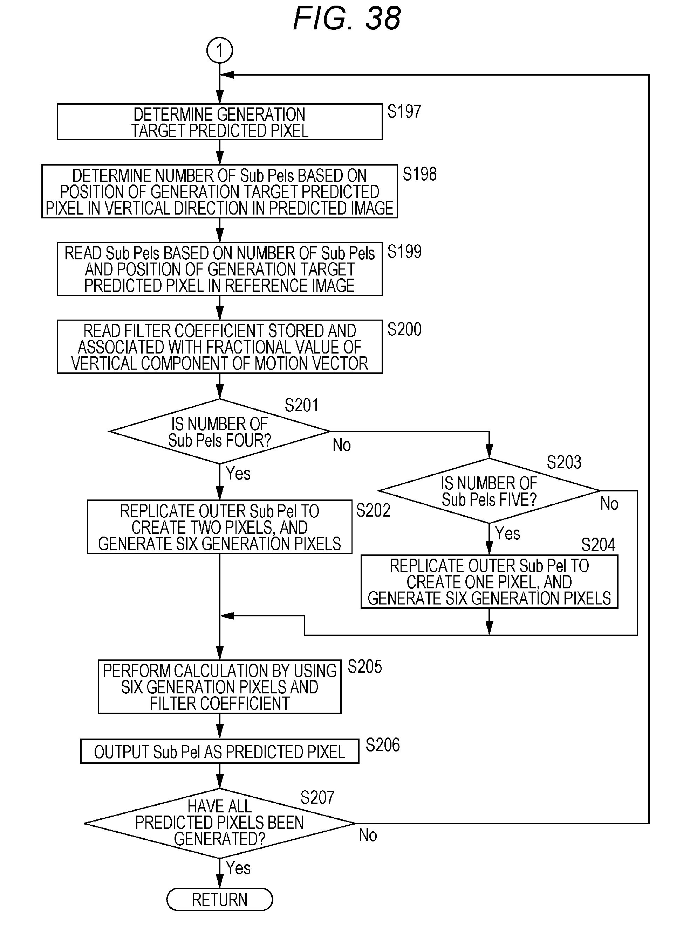

Figs. 37 and 38 show a flowchart for explaining, in detail, the inter prediction operation of step S15 in Fig. 20 to be performed by the inter prediction unit 24 of Fig. 30.

The procedures of steps S181 through S207 of Figs. 37 and 38 are the same as the procedures of steps S150 through S177 of Figs. 28 and 29, except that the procedures of steps S151 and S152 are replaced with the procedure of step S182, and the procedure of step S154 is replaced with the procedure of step S184.

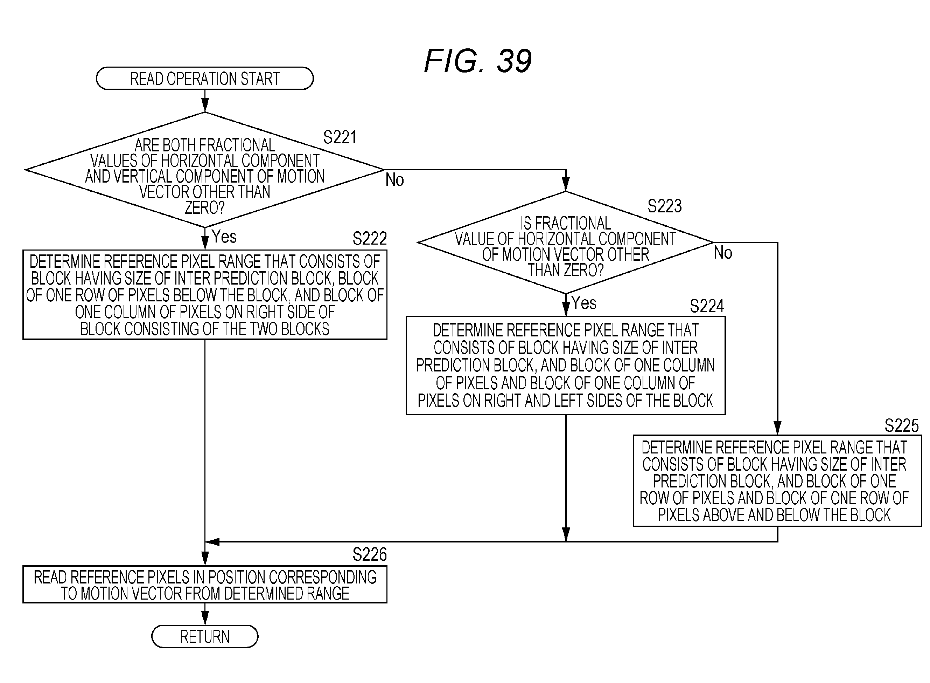

The procedure of step S182 of Fig. 37 is a read operation to be performed by the reference image read unit 180 to read reference pixels, and the read operation will be described later in detail, with reference to Fig. 39.

In step S184 of Fig. 37, the reference image read unit 180 determines four, five, or six to be the number of reference pixels to be used in generating a prediction-associated pixel, based on the position of the generation target predicted pixel in the predicted image and the fractional value of the motion vector. For example, the reference image read unit 180 determines the number of reference pixels to be five, when the position of the generation target predicted pixel in the predicted image is on the leftmost side, and the fractional value of the horizontal component of the motion vector is not zero but the fractional value of the vertical component is zero.

Fig. 39 is a flowchart for explaining, in detail, the read operation of step S182 of Fig. 37.

In step S221 of Fig. 39, the reference image read unit 180 determines whether the fractional values of both the horizontal component and the vertical component of the motion vector supplied from the motion prediction unit 25 are other than zero.

If the fractional values of both the horizontal component and the vertical component of the motion vector are determined to be other than zero in step S221, the operation moves on to step S222. That is, if the position of the predicted pixel in the reference image is a fractional position in both the horizontal direction and the vertical direction (if the predicted pixel is Sub pel e, f, g, i, j, k, m, n, or o, for example), the operation moves on to step S222.

In step S222, the reference image read unit 180 determines a reference pixel range consisting of a block having the size of the inter prediction block, a block of one row of pixels below the block, and a block of one column of pixels on the right side of a block formed with those two blocks. For example, in a case where the size of the inter prediction block is 8 x 8 pixels, the reference image read unit 180 determines the reference pixel range to be 9 x 9 pixels. The operation then moves on to step S226.

If it is determined in step S221 that one of the fractional values of the horizontal component and the vertical component of the motion vector is not other than zero, the reference image read unit 180 determines whether only the fractional value of the horizontal component of the motion vector is other than zero in step S223.

If it is determined in step S223 that only the fractional value of the horizontal component of the motion vector is other than zero, the operation moves on to step S224. That is, if the position of the predicted pixel in the reference image is a fractional position in the horizontal direction and is an integer position in the vertical direction (if the predicted pixel is Sub pel a, b, or c, for example), the operation moves on to step S224.

In step S224, the reference image read unit 180 determines a reference pixel range consisting of a block having the size of the inter prediction block, and each block of one column of pixels on the right and left sides of the block. For example, in a case where the size of the inter prediction block is 8 x 8 pixels, the reference image read unit 180 determines the reference pixel range to be 10 x 8 pixels. The operation then moves on to step S226.

If the fractional value of the horizontal component of the motion vector is determined to be zero in step S223, on the other hand, the operation moves on to step S225. That is, if the position of the predicted pixel in the reference image is a fractional position in the vertical direction and is an integer position in the horizontal direction (if the predicted pixel is Sub pel d, h, or l, for example), or if the predicted pixel has an integer position in both the horizontal direction and the vertical direction, the operation moves on to step S225.

In step S225, the reference image read unit 180 determines a reference pixel range consisting of a block having the size of the inter prediction block, and each block of one row of pixels above and below the block. For example, in a case where the size of the inter prediction block is 8 x 8 pixels, the reference image read unit 180 determines the reference pixel range to be 8 x 10 pixels. The operation then moves on to step S226.

In step S226, the reference image read unit 180 reads, from the frame memory 22, the reference pixels located in the positions corresponding to the motion vector and in the range determined through the procedure of step S222, S224, or S225, and temporarily stores those reference pixels. The operation returns to step S182 of Fig. 37, and then moves on to step S183.

Although the number of generation pixels to be used in generating each prediction-associated pixel is six in Figs. 30 through 39, the number of generation pixels may be eight.

[Description of Reference Pixel Ranges in Cases Where the Number of Generation Pixels to be Used in Generating Each Prediction-Associated Pixel is Eight]

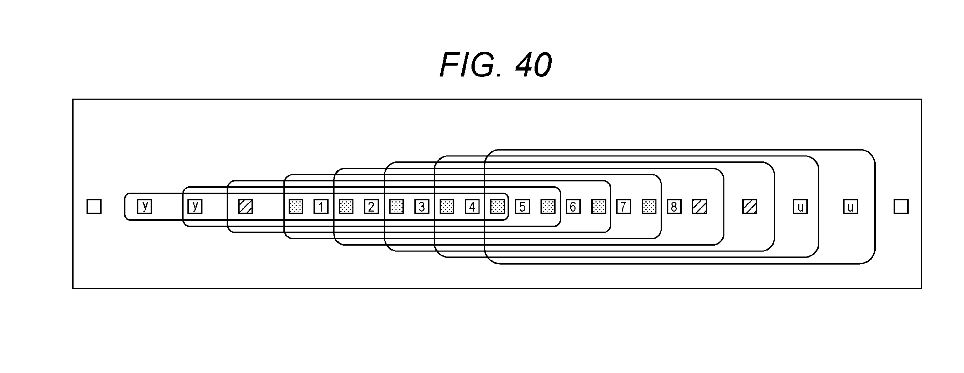

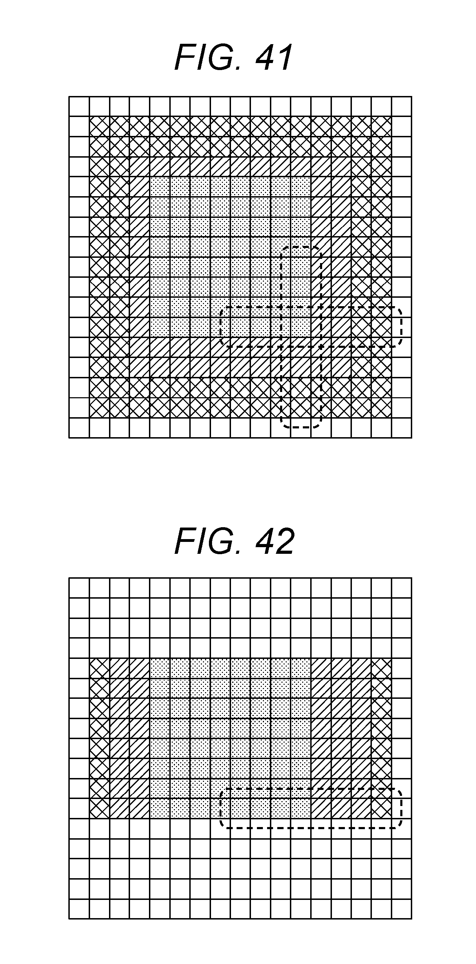

Figs. 40 and 41 are diagrams showing an example of a reference pixel range in a case where the fractional values of the horizontal component of the vertical component of the motion vector are not zero.

In the example illustrated in Fig. 40, the size of the inter prediction block is 8 x 8 pixels. In Fig. 40, each square having a number assigned thereto represents a prediction-associated pixel, and each square having neither a number nor an alphabetical character assigned thereto represents a reference pixel. Each dotted square represents a reference pixel located within the range of the size of the inter prediction block among the reference pixels to be used in generating the prediction-associated pixels, and each shaded square represents a reference pixel outside the range of the size of the inter prediction block. Further, each square having an alphabetical character assigned thereto represents a pixel formed by replicating a reference pixel.

As shown in Fig. 40, in a case where the fractional values of the horizontal component of the vertical component of the motion vector are not zero, the outermost prediction-associated pixels are each generated by using eight generation pixels including six reference pixels. The second outermost prediction-associated pixels located on the inner side of the outermost prediction-associated pixels are each generated by using eight generation pixels including seven reference pixels, and the prediction-associated pixels located on the inner sides of the second outermost prediction-associated pixels, including the innermost prediction-associated pixels, are each generated by using eight reference pixels as generation pixels.

Specifically, in a case where the generation target is the outermost prediction- associated pixel represented by the square having number 1 assigned thereto among the eight prediction- associated pixels that are aligned in the horizontal direction, have 1/2 pixel positions in the horizontal direction, and have integer positions in the vertical direction, a total of six reference pixels consisting of two on the left side of the prediction- associated pixel and four on the right side of the prediction- associated pixel are set as generation pixels. The leftmost reference pixel among the six reference pixels is replicated to create two pixels in integer positions on the left side of the leftmost reference pixel, and new eight generation pixels consisting of the two pixels and the six reference pixels as the generation pixels are used in generating the prediction- associated pixel.

In a case where the generation target is the second outermost prediction-associated pixel represented by the square that has number 2 assigned thereto and is located on the inner side of the prediction-associated pixel represented by the square having number 1 assigned thereto, a total of seven reference pixels consisting of three on the left side of the prediction-associated pixel and four on the right side of the prediction-associated pixel are set as generation pixels. The leftmost reference pixel among the seven reference pixels is replicated to create one pixel in an integer position on the left side of the leftmost reference pixel, and new eight generation pixels consisting of the one pixel and the seven reference pixels as the generation pixels are used in generating the prediction-associated pixel.

Further, in a case where the generation target is a prediction- associated pixel that is represented by a square having one of numbers 3 through 6 and is located on the inner side of the prediction- associated pixel represented by the square having number 2 assigned thereto, a total of eight reference pixels including four on each side of the prediction-associated pixel are used as generation pixels in generating the prediction- associated pixel.

In a case where the generation target is the second outermost prediction-associated pixel represented by the square that has number 7 assigned thereto and is located on the inner side of the outermost prediction-associated pixel represented by the square having number 8 assigned thereto, a total of seven reference pixels consisting of three on the right side of the prediction-associated pixel and four on the left side of the prediction-associated pixel are set as generation pixels. The rightmost reference pixel among the seven reference pixels is replicated to create one pixel in an integer position on the right side of the rightmost reference pixel, and new eight generation pixels consisting of the one pixel and the seven reference pixels are used in generating the prediction-associated pixel.

Further, in a case where the generation target is the outermost prediction- associated pixel represented by the square having number 8 assigned thereto, a total of six reference pixels consisting of two on the right side of the prediction- associated pixel and four on the left side of the prediction- associated pixel are set as generation pixels. The rightmost reference pixel among the six reference pixels is replicated to create two pixels in integer positions on the right side of the rightmost reference pixel, and eight generation pixels consisting of the two pixels and the six reference pixels are used in generating the prediction- associated pixel.

The Sub pels as the prediction-associated pixels generated in the above manner are used like reference pixels to generate eight generation pixels, and the eight generation pixels are used in generating predicted pixels.

As a result, the generation pixels to be used in generating a predicted image are those represented by the squares that are dotted, shaded, or double-shaded in Fig. 41. That is, the range of the reference pixels read from the frame memory 22 is 11 x 11 pixels.

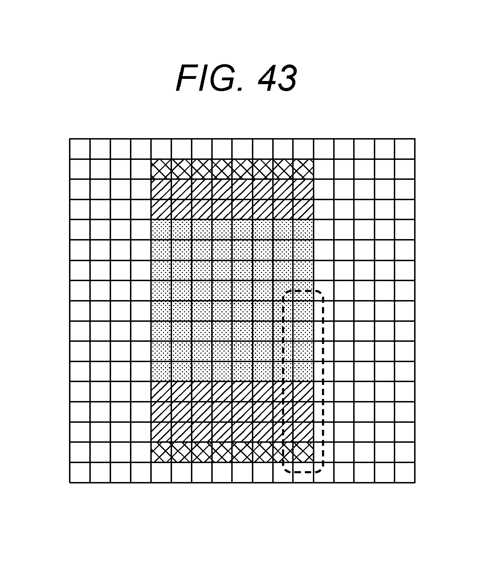

In Fig. 41, each square represents a reference pixel. Each dotted square represents a reference pixel located within the range of the size of the inter prediction block among the reference pixels to be used in generating the predicted image, and each shaded square represents a reference pixel outside the range of the size of the inter prediction block. Further, each double-shaded square represents a pixel formed by replicating an outermost reference pixel among those used in generating the predicted image. The same applies to Figs. 42 and 43 described later.

Fig. 42 is a diagram showing an example of generation pixels to be used in generating a predicted image in a case where the fractional value of the horizontal component of the motion vector is not zero but the fractional value of the vertical component is zero. In the example illustrated in Fig. 42, the size of the inter prediction block is 8 x 8 pixels.

In the example illustrated in Fig. 42, the generation pixels to be used in generating each rightmost or leftmost predicted pixel consist of seven reference pixels and one replicated pixel, as indicated by the dashed line in Fig. 42. On the other hand, generation pixels to be used in generating any one of the predicted pixels on the inner sides of the rightmost and leftmost predicted pixels consist of eight reference pixels. As a result, the horizontal range of the reference pixels read from the frame memory 22 is two pixels larger than that in the case of Fig. 41. However, the filtering operation in the vertical direction is not performed, and therefore, the vertical range is the same as the size of the inter prediction block. Accordingly, the range of reference pixels read from the frame memory 22 is 13 x 8 pixels, which is smaller than that in the case of Fig. 41.

Fig. 43 is a diagram showing an example of generation pixels to be used in generating a predicted image in a case where the fractional value of the vertical component of the motion vector is not zero but the fractional value of the horizontal component is zero. In the example illustrated in Fig. 43, the size of the inter prediction block is 8 x 8 pixels.

In the example illustrated in Fig. 43, the generation pixels to be used in generating each uppermost or lowermost predicted pixel consist of seven reference pixels and one replicated pixel, as indicated by the dashed line in Fig. 43. On the other hand, generation pixels to be used in generating any one of the predicted pixels on the inner sides of the uppermost and lowermost predicted pixels consist of eight reference pixels. As a result, the vertical range of the reference pixels read from the frame memory 22 is two pixels larger than that in the case of Fig. 41. However, the filtering operation in the horizontal direction is not performed, and therefore, the horizontal range is the same as the size of the inter prediction block. Accordingly, the range of reference pixels read from the frame memory 22 is 8 x 13 pixels, which is smaller than that in the case of Fig. 41.

It should be noted that the structure of the inter prediction unit 24 and the operations by the inter prediction unit 24 in cases where the number of generation pixels to be used in generated a prediction-associated pixel is eight are the same as above, except that the number of generation pixels is eight, instead of six, and the number of reference pixels included in the generation pixels is seven or eight, instead of four, five, or six. Therefore, explanation of them is not repeated herein.

[Fourth Example Structure of the Inter Prediction Unit]

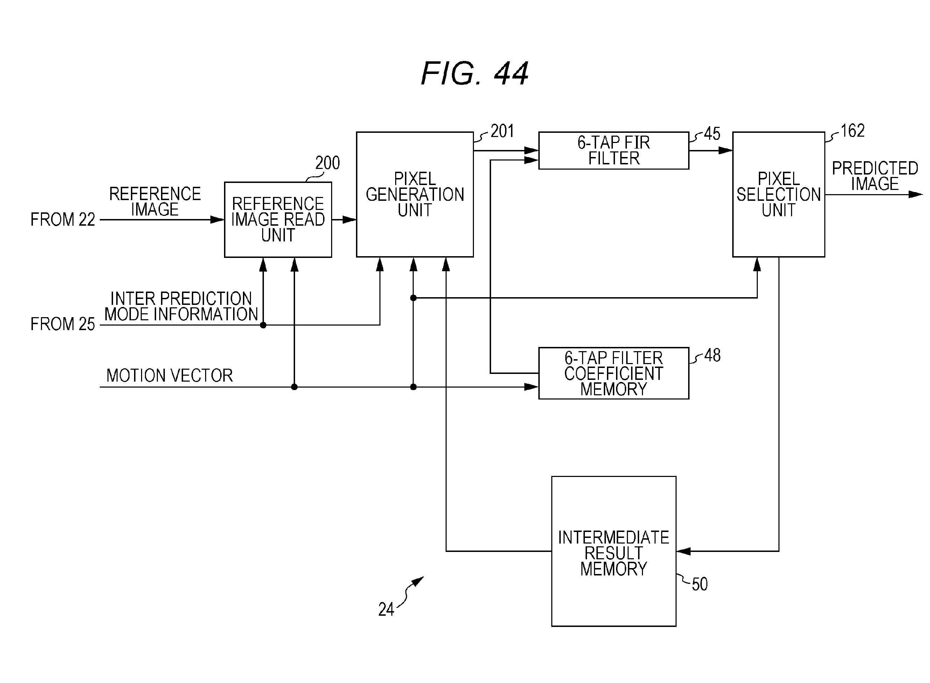

Fig. 44 is a block diagram showing a fourth example structure of the inter prediction unit 24 shown in Fig. 3.

Of the components shown in Fig. 44, the same components as those in Fig. 26 are denoted by the same reference numerals as those in Fig. 26. The explanations that have already been made will not be repeated.

The structure of the inter prediction unit 24 shown in Fig. 44 differs from the structure shown in Fig. 26 mainly in that the reference image read unit 160 is replaced with a reference image read unit 200, and the pixel generation unit 161 is replaced with a pixel generation unit 201. The inter prediction unit 24 shown in Fig. 44 changes the number of reference pixels to be used in generating an outer predicted pixel in accordance with the size of each inter prediction block.

Specifically, like the reference image read unit 41 shown in Fig. 4, the reference image read unit 200 of the inter prediction unit 24 shown in Fig. 44 identifies the reference image among the images stored in the frame memory 22, based on the reference index and the predicting direction contained in the inter prediction mode information supplied from the motion prediction unit 25 shown in Fig. 3.

The reference image read unit 200 determines the range of reference pixels to be used in generating a predicted image, based on the block size contained in the inter prediction mode information and the motion vector. Based on the motion vector, the reference image read unit 200 reads the reference pixels in the determined range from the frame memory 22, and temporarily stores those reference pixels.

For each predicted pixel, the reference image read unit 200 reads the reference pixels to be used in generating the predicted pixel among the temporarily stored reference pixels, like the reference image read unit 41. Here, the number of reference pixels to be used in generating a predicted pixel is four, five, or six. Like the reference image read unit 41, the reference image read unit 200 supplies the read reference pixels to the pixel generation unit 201.

Like the pixel generation unit 161 shown in Fig. 26, the pixel generation unit 201 sets the reference pixels supplied from the reference image read unit 200 as generation pixels. Based on the inter prediction block size contained in the inter prediction mode information supplied from the motion prediction unit 25, the fractional value of the motion vector, and the position of a predicted pixel in the predicted image, the pixel generation unit 201 determines the number of Sub pels to be used in generating the predicted pixel. The pixel generation unit 201 then reads, from the intermediate result memory 50, the determined number of Sub pels as the generation pixels corresponding to the generation target predicted pixel. Here, the number of Sub pels to be used in generating a predicted pixel is four, five, or six.

When the number of generation pixels is smaller than six, the pixel generation unit 201 replicates an outer pixel among the generation pixels by the difference number between the number of generation pixels and six, and generates six pixels as new generation pixels consisting of the replicated pixels and the generation pixels, like the pixel generation unit 161. The pixel generation unit 201 supplies the generated six generation pixels to the 6-tap FIR filter 45.

[Description of a Fourth Example of the Inter Prediction Operation]

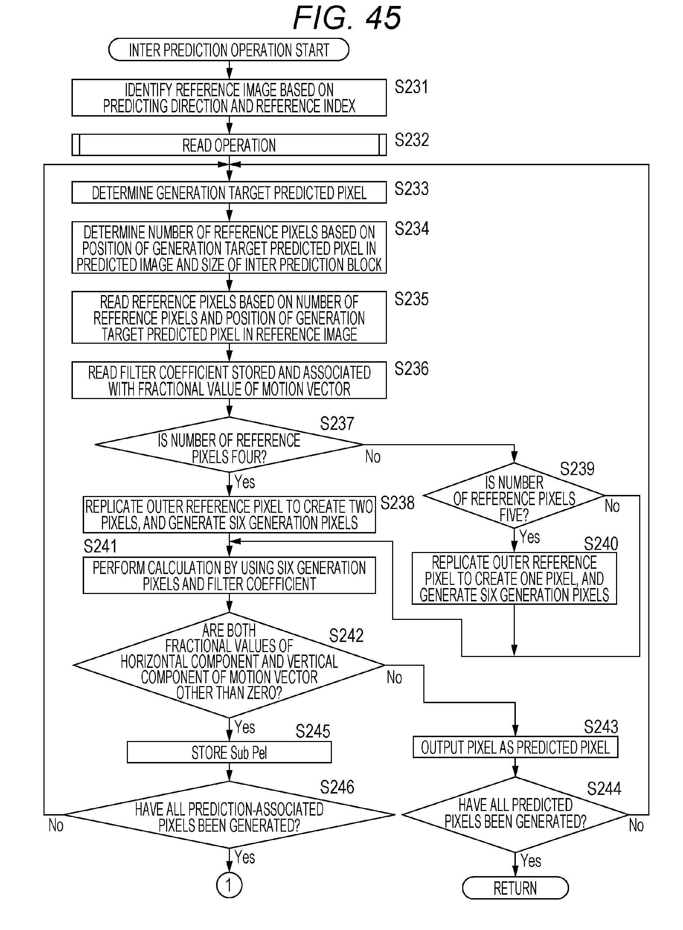

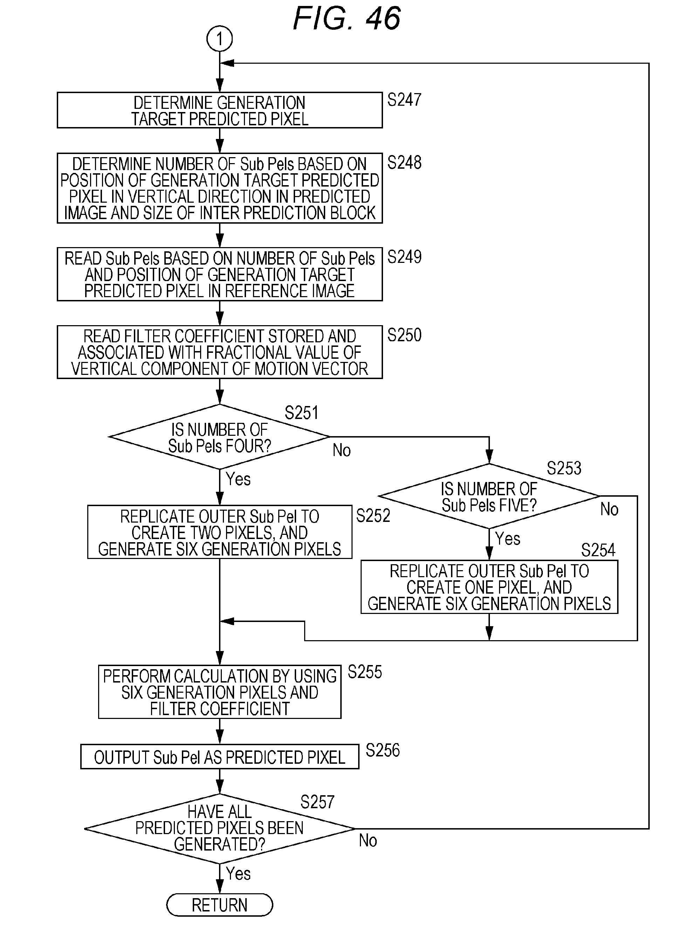

Figs. 45 and 46 show a flowchart for explaining, in detail, the inter prediction operation of step S15 in Fig. 20 to be performed by the inter prediction unit 24 of Fig. 44.

The procedures of steps S231 through S257 of Figs. 45 and 46 are the same as the procedures of steps S150 through S177 of Figs. 28 and 29, except that the procedures of steps S151 and S152 are replaced with the procedure of step S232, the procedure of step S154 is replaced with the procedure of step S234, and the procedure of step S168 is replaced with the procedure of step S248.

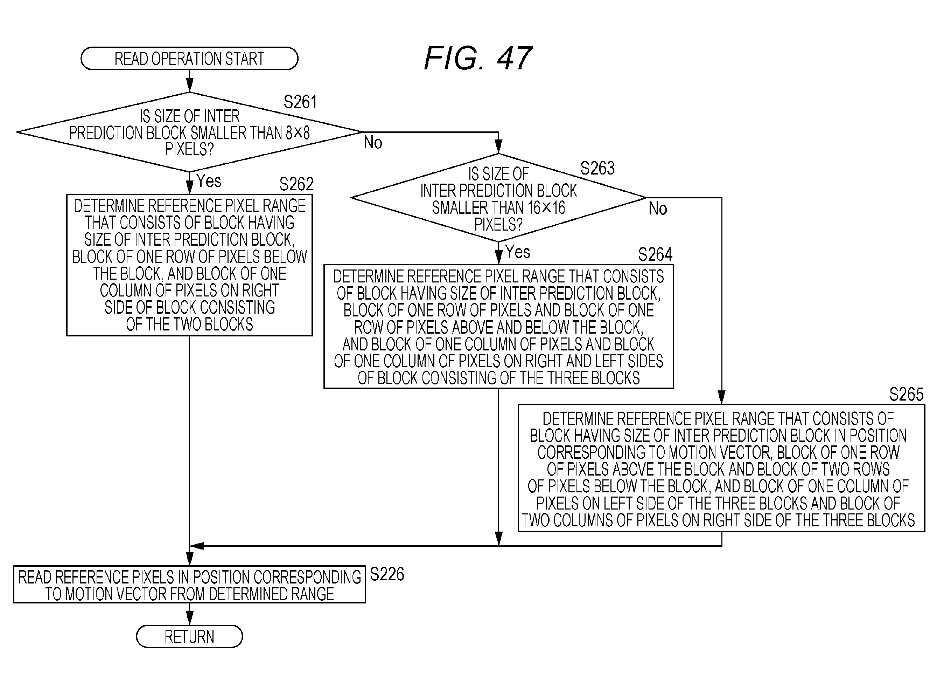

The procedure of step S232 of Fig. 45 is a read operation to be performed by the reference image read unit 200 to read reference pixels, and the read operation will be described later in detail, with reference to Fig. 47.

In step S234 of Fig. 45, the reference image read unit 200 determines four, five, or six to be the number of reference pixels to be used in generating a prediction-associated pixel, based on the position of the generation target predicted pixel in the predicted image and the size of the inter prediction block.

In step S248 of Fig. 46, the pixel generation unit 201 determines four, five, or six to be the number of Sub pels to be read from the intermediate result memory 50, based on the position of the generation target predicted pixel in the vertical direction in the predicted image and the size of the inter prediction block.

Fig. 47 is a flowchart for explaining, in detail, the read operation of step S232 of Fig. 45.

In step S261 of Fig. 47, the reference image read unit 200 of the inter prediction unit 24 of Fig. 44 determines whether the size of the inter prediction block contained in the inter prediction mode information supplied from the motion prediction unit 25 is smaller than 8 x 8 pixels.

If the size of the inter prediction block is determined to be smaller than 8 x 8 pixels in step S261, or if the size of the inter prediction block is 4 x 4 pixels, 8 x 4 pixels, or 4 x 8 pixels, for example, the operation moves on to step S262.

In step S262, the reference image read unit 200 determines a reference pixel range consisting of a block having the size of the inter prediction block, a block of one row of pixels below the block, and a block of one column of pixels on the right side of a block formed with those two blocks. For example, in a case where the size of the inter prediction block is 4 x 4 pixels, the reference image read unit 200 determines the reference pixel range to be 5 x 5 pixels. The operation then moves on to step S266.

If the size of the inter prediction block is determined not to be smaller than 8 x 8 pixels in step S261, on the other hand, the reference image read unit 200 determines whether the size of the inter prediction block is smaller than 16 x 16 pixels in step S263.

If the size of the inter prediction block is determined to be smaller than 16 x 16 pixels in step S263, or if the size of the inter prediction block is 8 x 8 pixels, 16 x 8 pixels, or 8 x 16 pixels, for example, the operation moves on to step S264.

In step S264, the reference image read unit 200 determines a reference pixel range consisting of a block having the size of the inter prediction block, each block of one row of pixels above and below the block, and each block of one column of pixels on the right and left sides of a block formed with those three blocks. For example, in a case where the size of the inter prediction block is 8 x 8 pixels, the reference image read unit 200 determines the reference pixel range to be 10 x 10 pixels. The operation then moves on to step S266.

If the size of the inter prediction block is determined not to be smaller than 16 x 16 pixels in step S263, or if the size of the inter prediction block is 16 x 16 pixels, 32 x 16 pixels, 16 x 32 pixels, or 32 x 32 pixels, for example, the operation moves on to step S265.

In step S265, the reference image read unit 200 determines a reference pixel range consisting of a block having the size of the inter prediction block, a block of one row of pixels above the block and a block of two rows of pixels below the block, and a block of one column of pixels on the left side of a block formed with those three blocks and a block of two columns of pixels on the right side of the block formed with the three blocks. For example, in a case where the size of the inter prediction block is 16 x 16 pixels, the reference image read unit 200 determines the reference pixel range to be 19 x 19 pixels. The operation then moves on to step S266.

In step S266, the reference image read unit 200 reads, from the frame memory 22, the reference pixels located in the positions corresponding to the motion vector and in the range determined through the procedure of step S262, S264, or S265, and temporarily stores those reference pixels. The operation returns to step S232 of Fig. 45, and then moves on to step S233.

As described above, when the size of the inter prediction block is large, the inter prediction unit 24 shown in Fig. 44 increases the number of reference pixels to be used in generating outer predicted pixels, and reduces the number of replicated pixels, compared with a case where the size of the inter prediction block is small. As a result, inter prediction precision can be made higher than that of the inter prediction unit 24 of Fig. 26, while usage of memory bandwidth in the frame memory 22 is reduced.

As in the read operation shown in Fig. 47, the number of reference pixels to be used in generating outer predicted pixels is increased so that the ratio of the range of reference pixels to be used in generating a predicted image in a fractional position (hereinafter referred to as the reference pixel ratio) to the inter prediction block size in a case where the size of the inter prediction block is large becomes equal to or lower than the reference pixel ratio in a case where the inter prediction block is small. In this manner, inter prediction precision can be made higher without an increase in the maximum reference pixel ratio, compared with the inter prediction unit 24 of Fig. 26.

Specifically, in the case of the inter prediction unit 24 of Fig. 26, the reference pixel ratio is higher when the size of the inter prediction block is small than when the size of the inter prediction block is large. In a case where the size of the inter prediction block is 8 x 8 pixels, for example, 9 x 9 reference pixels need to be read at the inter prediction unit 24 of Fig. 26, and as a result, the reference pixel ratio is 1.3 (= 9 x 9/ (8 x 8) ) . In a case where the size of the inter prediction block is 4 x 4 pixels, on the other hand, the size of the region of reference pixels that need to be read is 5 x 5 pixels, and therefore, the reference pixel ratio is 1.6 (= 5 x 5/ (4 x 4) ) . Accordingly, the reference pixel ratio in a case where the size of the inter prediction block is 4 x 4 pixels is higher than that in a case where the size of the inter prediction block is 8 x 8 pixels.

Thus, as in the read operation shown in Fig. 47, the inter prediction unit 24 of Fig. 44 increases the number of reference pixels to be used in generating outer predicted pixels so that the reference pixel ratio in a case where the size of the inter prediction block is large becomes equal to or lower than the reference pixel ratio in a case where the size of the inter prediction block is small. In this manner, inter prediction precision can be made higher without an increase in the maximum reference pixel ratio, compared with the inter prediction unit 24 of Fig. 26.

[Fifth Example Structure of the Inter Prediction Unit]

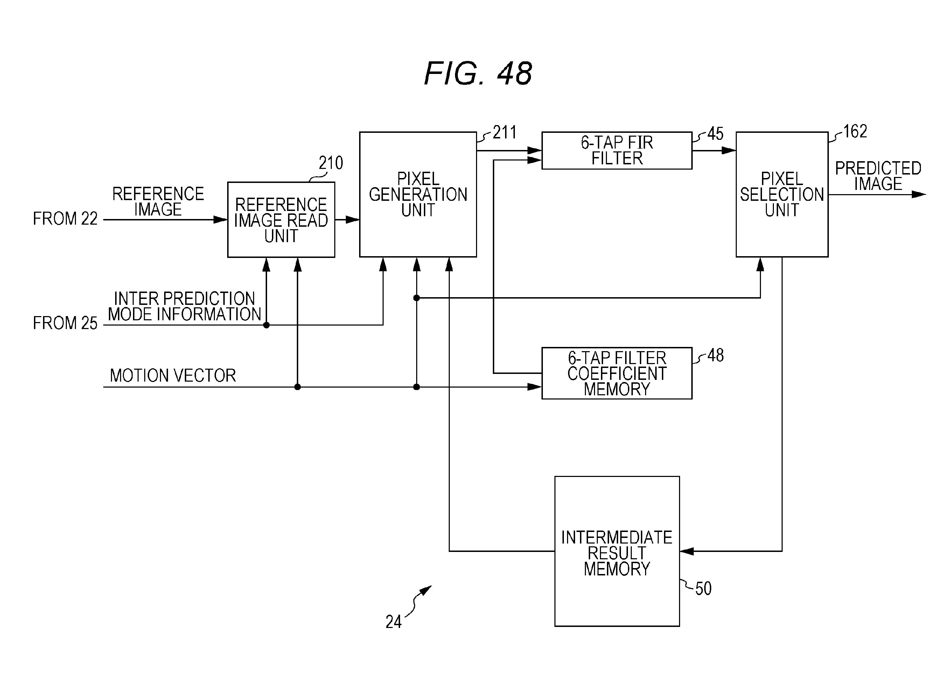

Fig. 48 is a block diagram showing a fifth example structure of the inter prediction unit 24 shown in Fig. 3.

Of the components shown in Fig. 48, the same components as those in Fig. 26 are denoted by the same reference numerals as those in Fig. 26. The explanations that have already been made will not be repeated.

The structure of the inter prediction unit 24 shown in Fig. 48 differs from the structure shown in Fig. 26 mainly in that the reference image read unit 160 is replaced with a reference image read unit 210, and the pixel generation unit 161 is replaced with a pixel generation unit 211. The inter prediction unit 24 shown in Fig. 48 changes the number of reference pixels to be used in generating an outer predicted pixel in accordance with the predicting direction.

Specifically, like the reference image read unit 41 shown in Fig. 4, the reference image read unit 210 of the inter prediction unit 24 shown in Fig. 48 identifies the reference image among the images stored in the frame memory 22, based on the reference index and the predicting direction contained in the inter prediction mode information supplied from the motion prediction unit 25 shown in Fig. 3.

The reference image read unit 210 determines the range of reference pixels to be used in generating a predicted image, based on the predicting direction and the block size contained in the inter prediction mode information, and the motion vector. Based on the motion vector, the reference image read unit 210 reads the reference pixels in the determined range from the frame memory 22, and temporarily stores those reference pixels.

For each predicted pixel, the reference image read unit 210 reads the reference pixels to be used in generating the predicted pixel among the temporarily stored reference pixels, like the reference image read unit 41. Here, the number of reference pixels to be used in generating a predicted pixel is four, five, or six. Like the reference image read unit 41, the reference image read unit 210 supplies the read reference pixels to the pixel generation unit 211.

Like the pixel generation unit 161 shown in Fig. 26, the pixel generation unit 211 sets the reference pixels supplied from the reference image read unit 210 as generation pixels. Based on the predicting direction contained in the inter prediction mode information supplied from the motion prediction unit 25, the fractional value of the motion vector, and the position of a predicted pixel in the predicted image, the pixel generation unit 211 determines the number of Sub pels to be used in generating the predicted pixel. The pixel generation unit 211 then reads, from the intermediate result memory 50, the determined number of Sub pels as the generation pixels corresponding to the generation target predicted pixel. Here, the number of Sub pels to be used in generating a predicted pixel is four, five, or six.

When the number of generation pixels is smaller than six, the pixel generation unit 211 replicates an outer pixel among the generation pixels by the difference number between the number of generation pixels and six, and generates six pixels as new generation pixels consisting of the replicated pixels and the generation pixels, like the pixel generation unit 161. The pixel generation unit 211 supplies the generated six generation pixels to the 6-tap FIR filter 45.

[Description of a Fifth Example of the Inter Prediction Operation]

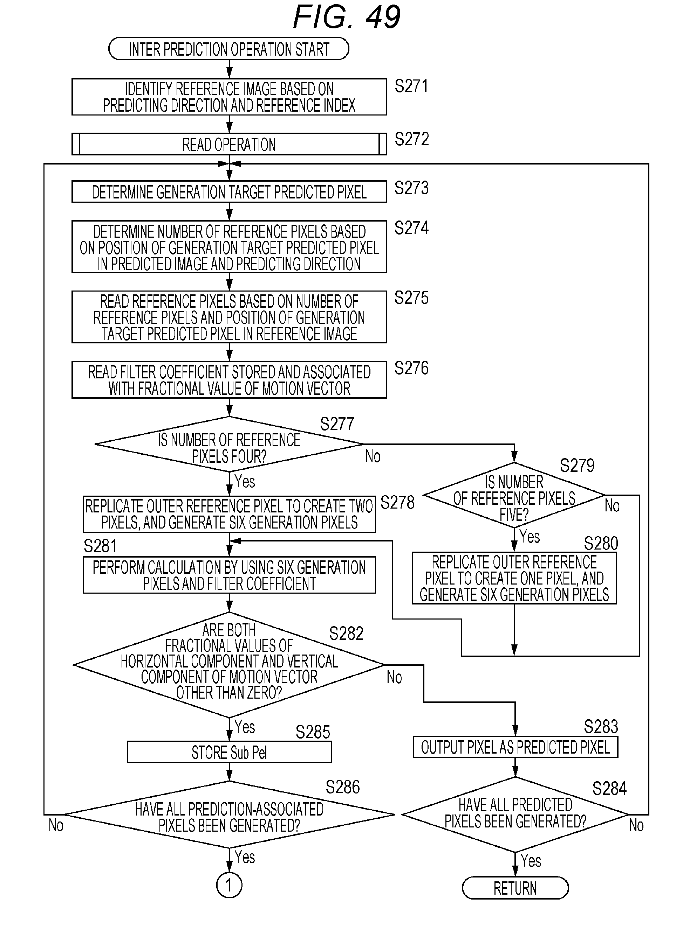

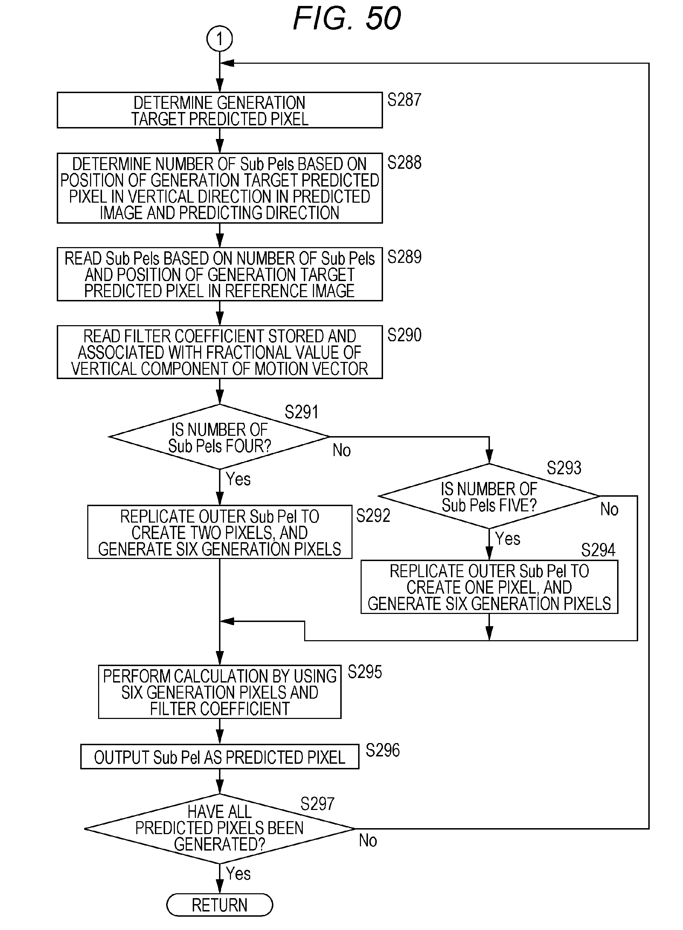

Figs. 49 and 50 show a flowchart for explaining, in detail, the inter prediction operation of step S15 in Fig. 20 to be performed by the inter prediction unit 24 of Fig. 48.

The procedures of steps S271 through S297 of Figs. 49 and 50 are the same as the procedures of steps S150 through S177 of Figs. 28 and 29, except that the procedures of steps S151 and S152 are replaced with the procedure of step S272, the procedure of step S154 is replaced with the procedure of step S274, and the procedure of step S168 is replaced with the procedure of step S288.

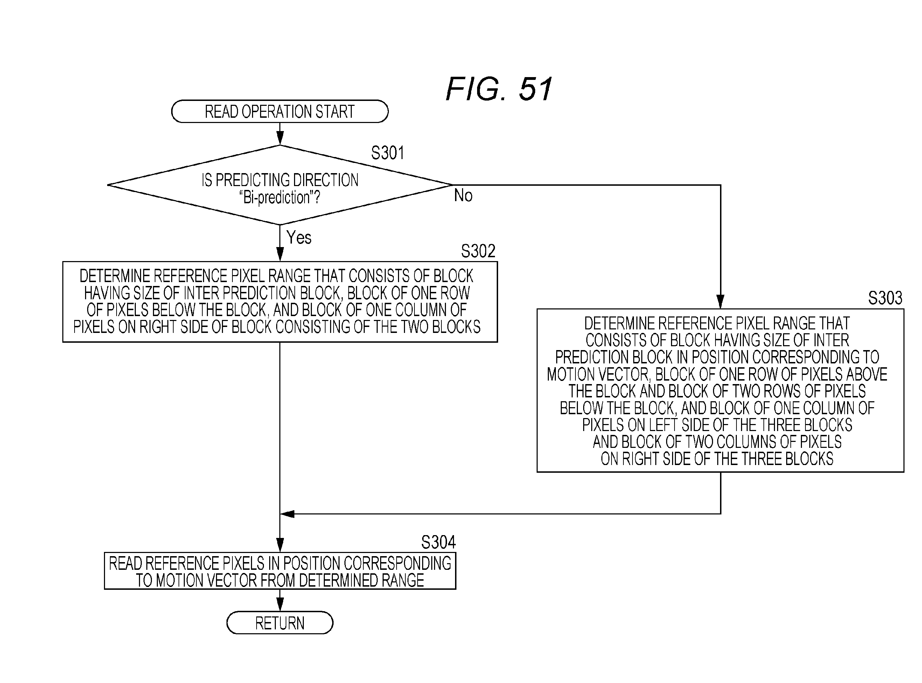

The procedure of step S272 of Fig. 49 is a read operation to be performed by the reference image read unit 210 to read reference pixels, and the read operation will be described later in detail, with reference to Fig. 51.

In step S274 of Fig. 49, the reference image read unit 210 determines four, five, or six to be the number of reference pixels to be used in generating a prediction-associated pixel, based on the position of the generation target predicted pixel in the predicted image and the predicting direction.

In step S288 of Fig. 50, the pixel generation unit 211 determines four, five, or six to be the number of Sub pels to be read from the intermediate result memory 50, based on the position of the generation target predicted pixel in the

EP 2 651 135 A1

vertical direction in the predicted image and the predicting direction.

Fig. 51 is a flowchart for explaining, in detail, the read operation of step S272 of Fig. 49.

In step S301 of Fig. 51, the reference image read unit 210 of the inter prediction unit 24 shown in Fig. 48 determines whether the predicting direction contained in the inter prediction mode information supplied from the motion prediction unit 25 is "Bi-prediction".

If the predicting direction is determined to be "Bi-prediction" in step S301, the operation moves on to step S302. In step S302, the reference image read unit 210 determines a reference pixel range consisting of a block having the size of the inter prediction block, a block of one row of pixels below the block, and a block of one column of pixels on the right side of a block formed with those two blocks. The operation then moves on to step S304.

If the predicting direction is determined not to be "Bi-prediction" in step S301, or if the predicting direction is "L0 prediction" or "L1 prediction", the operation moves on to step S303. In step S303, the reference image read unit 210 determines a reference pixel range consisting of a block having the size of the inter prediction block, a block of one row of pixels above the block and a block of two rows of pixels below the block, and a block of one column of pixels on the left side of a block formed with those three blocks and a block of two columns of pixels on the right side of the block formed with the three blocks. The operation then moves on to step S304.

In step S304, the reference image read unit 210 reads, from the frame memory 22, the reference pixels located in the positions corresponding to the motion vector and in the range determined through the procedure of step S302 or S303, and temporarily stores those reference pixels. The operation returns to step S272 of Fig. 49, and then moves on to step S273.

As described above, when the predicting direction is "L0 prediction" or "L1 prediction", the inter prediction unit 24 shown in Fig. 48 increases the number of reference pixels to be used in generating outer predicted pixels, and reduces the number of replicated pixels, compared with a case where the predicting direction is "Bi-prediction". As a result, inter prediction precision can be made higher than that of the inter prediction unit 24 of Fig. 26, while usage of memory bandwidth in the frame memory 22 is reduced.

Also, as in the read operation shown in Fig. 51, in a case where the number of reference pixels to be used in generating outer predicted pixels is increased so that the range of reference pixels to be read when the predicting direction is "L0 prediction" or "L1 prediction" becomes equal to or smaller than the range of reference pixels to be read when the predicting direction is "Bi- prediction", inter prediction precision can be made higher without an increase in maximum usage of memory bandwidth in the frame memory 22, compared with the inter prediction unit 24 of Fig. 26.

Specifically, in a case where the predicting direction is "Bi- prediction", the number of reference pixels to be read is twice as large as that in a case where the predicting direction is "L0 prediction" or "L1 prediction". Therefore, the inter prediction unit 24 shown in Fig. 48 increases the number of reference pixels to be used in generating outer predicted pixels so that the range of reference pixels to be read when the predicting direction is "L0 prediction" or "L1 prediction" becomes equal to or smaller than the range of reference pixels to be read when the predicting direction is "Bi- prediction". In this manner, inter prediction precision can be made higher without an increase in maximum usage of memory bandwidth in the frame memory 22, compared with the inter prediction unit 24 of Fig. 26.

In the above descriptions, when the fractional values of both the horizontal component of the vertical component of the motion vector are zero, or when the position of a predicted pixel is an integer position, calculations are performed, with zero being the filter coefficient corresponding to the pixels other than the reference pixels corresponding to the predicted pixel. However, the calculations may not be performed. In such a case, the reference image read unit 41 of Fig. 4, the reference image read unit 160 of Fig. 26, the reference image read unit 180 of Fig. 30, the reference image read unit 200 of Fig. 44, and the reference image read unit 210 of Fig. 48 read, from the frame memory 22, a block that is in the position corresponding to the motion vector and has the size of the inter prediction block, and outputs the block as the predicted image as it is.

[Sixth Example Structure of the Inter Prediction Unit]

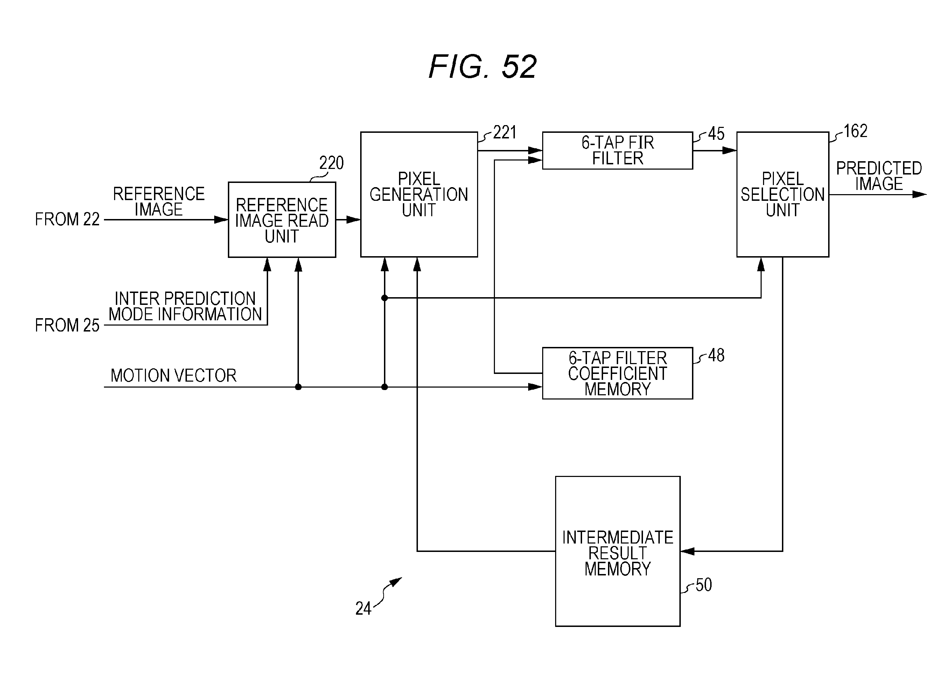

Fig. 52 is a block diagram showing a sixth example structure of the inter prediction unit 24 shown in Fig. 3.

Of the components shown in Fig. 52, the same components as those in Fig. 26 are denoted by the same reference numerals as those in Fig. 26. The explanations that have already been made will not be repeated.

The structure of the inter prediction unit 24 shown in Fig. 52 differs from the structure shown in Fig. 26 mainly in that the reference image read unit 160 is replaced with a reference image read unit 220, and the pixel generation unit 161 is replaced with a pixel generation unit 221. The inter prediction unit 24 shown in Fig. 52 changes the number of reference pixels to be used in generating an outer predicted pixel in accordance with the motion vector, the size of the inter prediction block, and the predicting direction.

Specifically, like the reference image read unit 41 shown in Fig. 4, the reference image read unit 220 of the inter prediction unit 24 shown in Fig. 52 identifies the reference image among the images stored in the frame memory 22, based on the reference index and the predicting direction contained in the inter prediction mode information supplied from the motion prediction unit 25 shown in Fig. 3.

The reference image read unit 220 determines the range of reference pixels to be used in generating a predicted image, based on the predicting direction and the block size contained in the inter prediction mode information, and the motion vector. The reference image read unit 220 reads the reference pixels in the determined range from the frame memory 22, and temporarily stores those reference pixels.

For each predicted pixel, the reference image read unit 220 reads the reference pixels to be used in generating the predicted pixel among the temporarily stored reference pixels, like the reference image read unit 41. Here, the number of reference pixels to be used in generating a predicted pixel is two, three, four, five, or six. Like the reference image read unit 41, the reference image read unit 220 supplies the read reference  pixels to the pixel generation unit 221.

Like the pixel generation unit 161 shown in Fig. 26, the pixel generation unit 221 sets the reference pixels supplied from the reference image read unit 220 as generation pixels. Based on the block size and the predicting direction contained in the inter prediction mode information supplied from the motion prediction unit 25, the fractional value of the motion vector, and the position of a predicted pixel in the predicted image, the pixel generation unit 221 determines the number of Sub pels to be used in generating the predicted pixel. The pixel generation unit 221 then reads, from the intermediate result memory 50, the determined number of Sub pels as the generation pixels corresponding to the generation target predicted pixel. Here, the number of Sub pels to be used in generating a predicted pixel is two, three, four, five, or six.

When the number of generation pixels is smaller than six, the pixel generation unit 221 replicates an outer pixel among the generation pixels by the difference number between the number of generation pixels and six, and generates six pixels as new generation pixels consisting of the replicated pixels and the generation pixels, like the pixel generation unit 161. The pixel generation unit 221 supplies the generated six generation pixels to the 6-tap FIR filter 45.

[Examples of Reference Pixel Ranges]

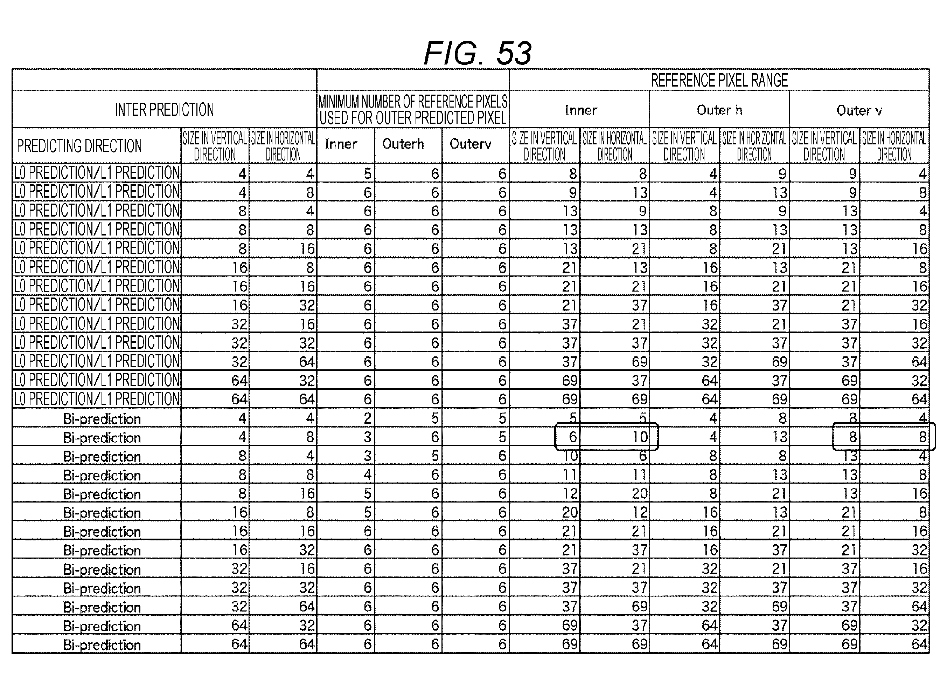

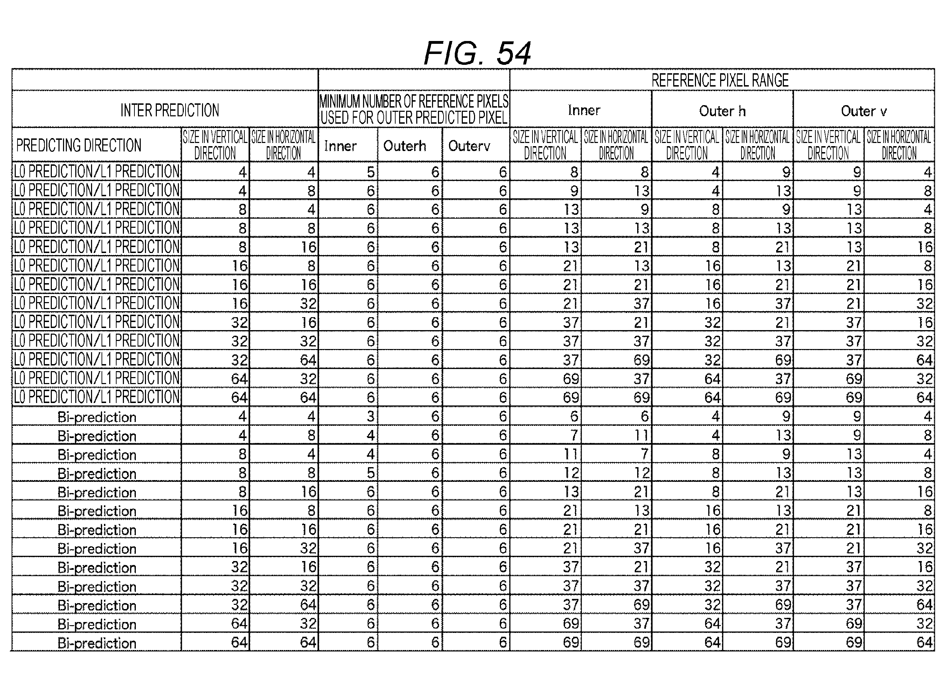

Figs. 53 and 54 are diagrams showing examples of  relationships among the reference pixel range determined by the reference image read unit 220 of Fig. 52, the group of predicted pixels corresponding to the motion vector, the size of the inter prediction block, and the predicting direction.

Fig. 53 is a diagram showing examples of relationships in cases where the reference pixel ratio is 4 or lower, and Fig. 54 is a diagram showing examples of relationships in cases where the reference pixel ratio is 5 or lower.

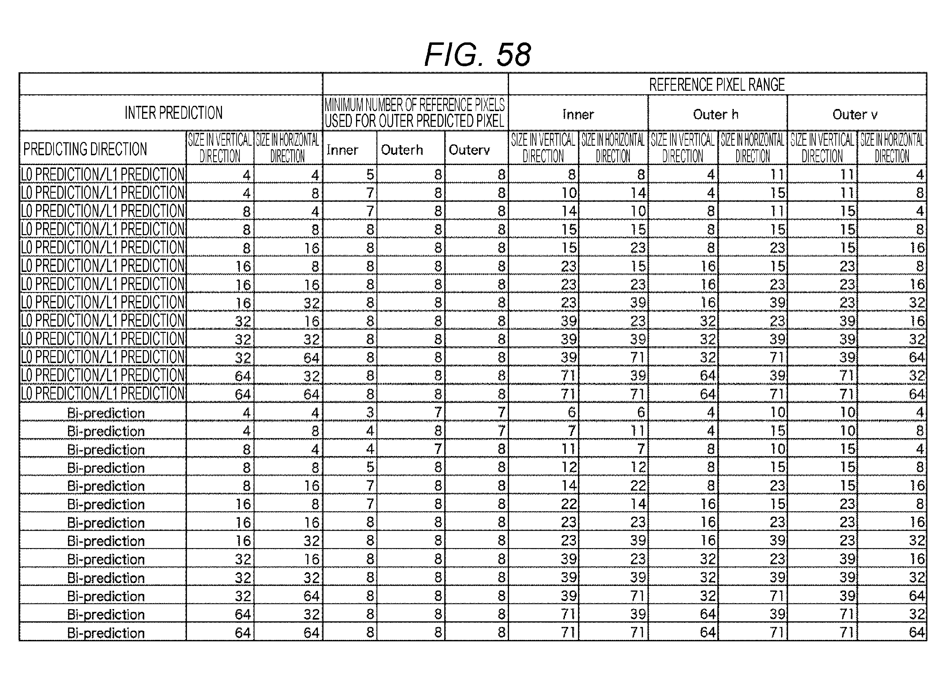

In Figs. 53 and 54, "Inner" represents the groups of predicted pixels (such as Sub pels e, f, g, i, j, k, m, n, and o) in cases where the fractional values of both the horizontal component of the vertical component of the motion vector are other than zero. "Outer h" represents the groups of predicted pixels (such as Sub pels a, b, and c) in cases where the fractional value of the horizontal component of the motion vector is other than zero but the fractional value of the vertical component is zero. "Outer v" represents the groups of predicted pixels (such as Sub pels d, h, and l) in cases where the fractional value of the vertical component of the motion vector is other than zero but the fractional value of the horizontal component is zero. The same applies to Figs. 58 through 60 described later.

The following is a description of a reference pixel range that is determined based on the relationships shown in Fig. 53 in a case where the size of the inter  prediction block is 4 x 8 pixels, and the predicting direction is "Bi-prediction". In this case, when the position of the Sub pel corresponding to the motion vector of "L0 prediction" is j, and the position of the Sub pel corresponding to the motion vector of "L1 prediction" is d, the range of reference pixels for "L0 prediction" is determined to be 6 x 10 pixels, and the range of reference pixels for "L1 prediction" is determined to be 8 x 8 pixels, among the ranges for "Bi-prediction". At this point, the reference pixel ratio is 3.875 = (6 x 10 + 8 x 8)/(4 x 8), which is lower than 5.

[Description of a Sixth Example of the Inter Prediction Operation]

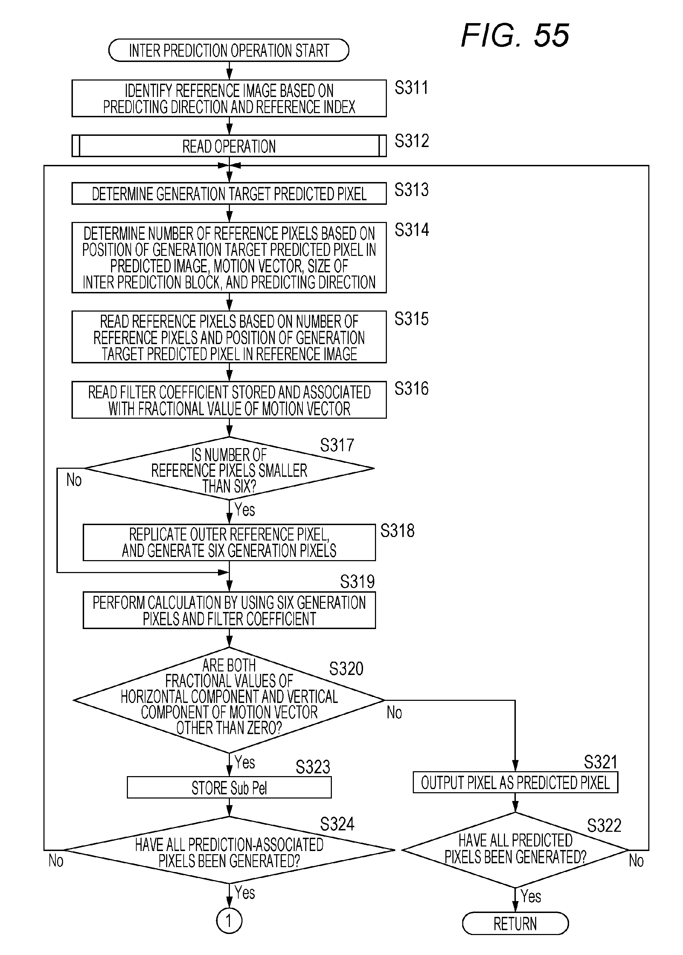

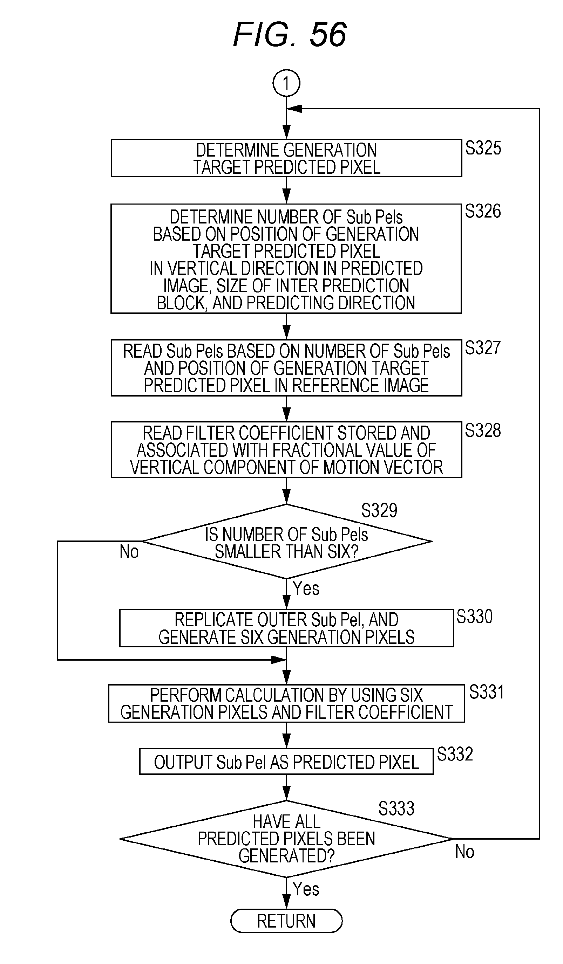

Figs. 55 and 56 show a flowchart for explaining, in detail, the inter prediction operation of step S15 in Fig. 20 to be performed by the inter prediction unit 24 of Fig. 52.

In step S311 of Fig. 55, the reference image read unit 220 (Fig. 52) of the inter prediction unit 24 identifies the reference image among the images stored in the frame memory 22, based on the predicting direction and the reference index contained in the inter prediction mode information supplied from the motion prediction unit 25 shown in Fig. 3.

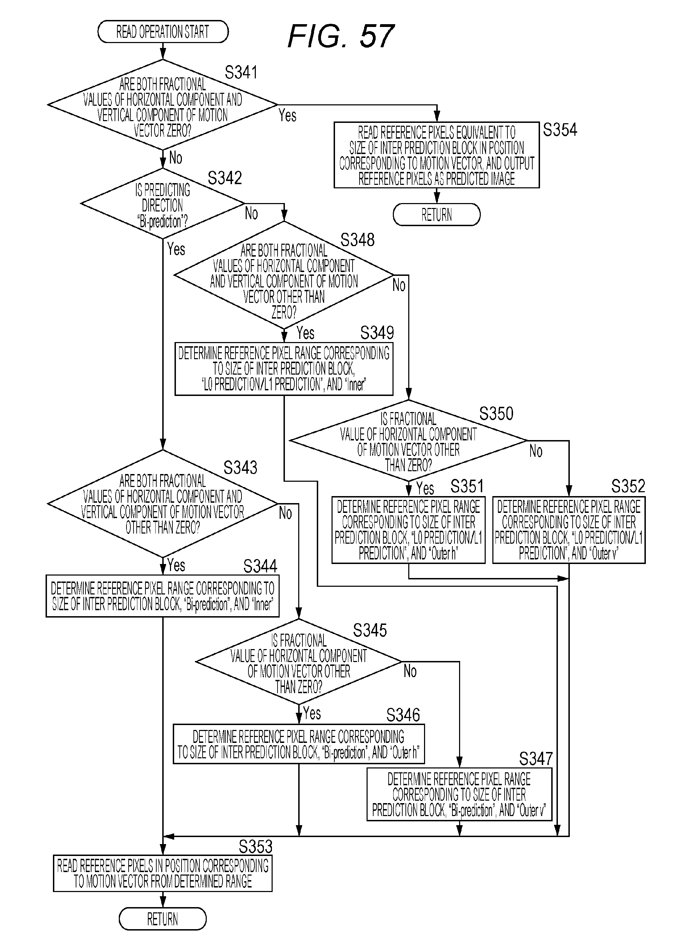

In step S312, the reference image read unit 220 performs a read operation to read the reference image. This read operation will be described later in detail, with reference to Fig. 57.

In step S313, the reference image read unit 220 determines a generation target predicted pixel among the predicted pixels forming the predicted image. The determined generation target predicted pixel is a predicted pixel that has not yet been determined to be a generation target predicted pixel in the procedure of step S313. If there is more than one prediction-associated pixel, the procedures of steps S314 through S323 described below are carried out for each prediction-associated pixel.

In step S314, the reference image read unit 220 determines two, three, four, five, or six to be the number of reference pixels to be used in generating a prediction-associated pixel, based on the position of the generation target predicted pixel in the predicted image, the motion vector, the size of the inter prediction block, and the predicting direction.

In step S315, based on the number of reference pixels determined in step S314 and the position of the generation target predicted pixel in the reference image, the reference image read unit 220 reads the reference pixels to be used in generating the prediction-associated pixel among the reference pixels stored in step S312. The reference image read unit 220 supplies the read reference pixels to the pixel generation unit 221.

In step S316, based on the fractional value of the component corresponding to the prediction-associated pixel in the motion vector supplied from the motion prediction unit 25, the 6-tap filter coefficient memory 48 supplies the filter coefficients stored and associated with the fractional value, to the 6-tap FIR filter 45.

In step S317, the pixel generation unit 221 determines whether the number of reference pixels supplied from the reference image read unit 220 is smaller than six. If the number of reference pixels is determined to be smaller than six in step S317, the operation moves on to step S318.

In step S318, the pixel generation unit 221 replicates an outer reference pixel among the reference pixels supplied from the reference image read unit 220, to generate pixels on the outer side of the outer reference pixel. By doing so, the pixel generation unit 221 generates six generation pixels consisting of the replicated pixels and the reference pixels. The pixel generation unit 221 supplies the generated six generation pixels to the 6-tap FIR filter 45, and the operation then moves on to step S319.

If the number of reference pixels is determined not to be smaller than six in step S317, or if the number of reference pixels is six, on the other hand, the pixel generation unit 221 supplies the six reference pixels as generation pixels to the 6-tap FIR filter 45, and the operation then moves on to step S319.

The procedures of steps S319 through S325 are the same as the procedures of steps S161 through S167 of Figs. 28 and 29, and therefore, explanation of them is not repeated herein.

After the procedure of step S325 of Fig. 56, in step S326, the pixel generation unit 221 determines two, three, four, five, or six to be the number of Sub pels to be read from the intermediate result memory 50, based on the position of the generation target predicted pixel in the vertical direction in the predicted image, the size of the inter prediction block, and the predicting direction.

In step S327, the pixel generation unit 221 reads Sub pels as generation pixels from the intermediate result memory 50, based on the number of Sub pels determined in step S326 and the position of the generation target predicted pixel in the reference image.

In step S328, based on the fractional value of the vertical component of the motion vector supplied from the motion prediction unit 25, the 6-tap filter coefficient memory 48 supplies the filter coefficients stored and associated with the fractional value, to the 6-tap FIR filter 45. The operation then moves on to step S329.

The procedures of steps S329 and S330 are the same as the procedures of steps S317 and S318 of Fig. 55, except that the procedures are carried out on Sub pels, instead of reference pixels. Therefore, explanation of those steps is not repeated herein. Also, the procedures of steps S331 through S333 are the same as the procedures of steps S175 through S177 of Fig. 29, and therefore, explanation of them is not repeated herein.

Fig. 57 is a flowchart for explaining, in detail, the read operation of step S312 of Fig. 55.

In step S341 of Fig. 57, the reference image read unit 220 of the inter prediction unit 24 shown in Fig. 52 determines whether the fractional values of both the horizontal component and the vertical component of the motion vector supplied from the motion prediction unit 25 are zero.

If the fractional values of both the horizontal component and the vertical component of the motion vector are determined not to be zero in step S341, the reference image read unit 220 determines whether the predicting direction is "Bi-prediction" in step S342.

If the predicting direction is determined to be "Bi-prediction" in step S342, the reference image read unit 220 determines whether the fractional values of both the horizontal component and the vertical component of the motion vector are other than zero in step S343.

If the fractional values of both the horizontal component and the vertical component of the motion vector are determined to be other than zero in step S343, the operation moves on to step S344. In step S344, the reference image read unit 220 determines a reference pixel range corresponding to the inter prediction block size contained in the inter prediction mode information, "Bi-prediction", and "Inner". The operation then moves on to step S353.

If it is determined in step S343 that one of the fractional values of the horizontal component and the vertical component of the motion vector is zero, on the other hand, the reference image read unit 220 determines whether only the fractional value of the horizontal component of the motion vector is other than zero in step S345.

If it is determined in step S345 that only the fractional value of the horizontal component of the motion vector is other than zero, the operation moves on to step S346. In step S346, the reference image read unit 220 determines a reference pixel range corresponding to the inter prediction block size contained in the inter prediction mode information, "Bi-prediction", and "Outer h". The operation then moves on to step S353.

If the fractional value of the horizontal component of the motion vector is determined not to be other than zero in step S345, or if it is determined that only the fractional value of the vertical component of the motion vector is other than zero, the operation moves on to step S347. In step S347, the reference image read unit 220 determines a reference pixel range corresponding to the inter prediction block size contained in the inter prediction mode information, "Bi-prediction", and "Outer v". The operation then moves on to step S353.

If the predicting direction is determined not to be "Bi-prediction" in step S342, or if the predicting direction is "L0 prediction" or "L1 prediction", the operation moves on to step S348.

If the fractional values of both the horizontal component and the vertical component of the motion vector are determined to be other than zero in step S348, the operation moves on to step S349. In step S349, the reference image read unit 220 determines a reference pixel range corresponding to the inter prediction block size contained in the inter prediction mode information, "L0 prediction/L1 prediction", and "Inner". The operation then moves on to step S353.

If it is determined in step S348 that one of the fractional values of the horizontal component and the vertical component of the motion vector is zero, the reference image read unit 220 determines whether only the fractional value of the horizontal component of the motion vector is other than zero in step S350.

If it is determined in step S350 that only the fractional value of the horizontal component of the motion vector is other than zero, the operation moves on to step S351. In step S351, the reference image read unit 220 determines a reference pixel range corresponding to the inter prediction block size contained in the inter prediction mode information, "L0 prediction/L1 prediction", and "Outer h". The operation then moves on to step S353.

If the fractional value of the horizontal component of the motion vector is determined not to be other than zero in step S350, or if it is determined that only the fractional value of the vertical component of the motion vector is other than zero, the operation moves on to step S352. In step S352, the reference image read unit 220 determines a reference pixel range corresponding to the inter prediction block size contained in the inter prediction mode information, "L0 prediction/L1 prediction", and "Outer v". The operation then moves on to step S353.

In step S353, the reference image read unit 220 reads, from the frame memory 22, the reference pixels located in the positions corresponding to the motion vector and in the range determined through the procedure of step S344, S346, S347, S349, S351, or S352, and temporarily stores those reference pixels. The operation returns to step S312 of Fig. 55, and then moves on to step S313.

If the fractional values of both the horizontal component and the vertical component of the motion vector are determined to be zero in step S341, on the other hand, the reference image read unit 220 reads reference pixels that are in the positions corresponding to the motion vector and are equivalent to the size of the inter prediction block, and outputs the reference pixels as the predicted image in step S354. The operation returns to step S15 of Fig. 20, and then moves on to step S16.

Although the number of generation pixels to be used in generating each prediction-associated pixel is six in Figs. 52 through 57, the number of generation pixels is not limited to that.

[Examples of Reference Pixel Ranges in Cases Where the Number of Generation Pixels to be Used in Generating Each Prediction-Associated Pixel is Eight]

Fig. 58 is a diagram showing examples of relationships among the reference pixel range, the group of predicted pixels corresponding to the motion vector, the size of the inter prediction block, and the predicting direction in cases where the number of generation pixels to be used in generating a prediction-associated pixel is eight, and the reference pixel ratio is 5 or lower.

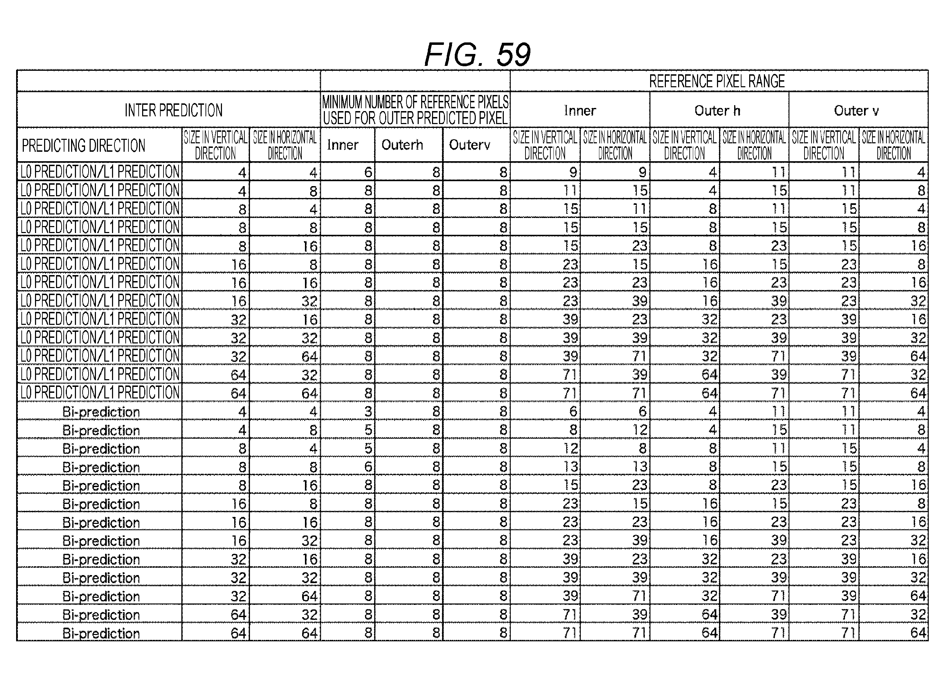

Fig. 59 is a diagram showing examples of relationships among the reference pixel range, the group of predicted pixels corresponding to the motion vector, the size of the inter prediction block, and the predicting direction in cases where the number of generation pixels to be used in generating a prediction-associated pixel is eight, and the reference pixel ratio is 6 or lower.

[Examples of Reference Pixel Ranges in Cases Where the Number of Generation Pixels to be Used in Generating Each Prediction-Associated Pixel is 12]

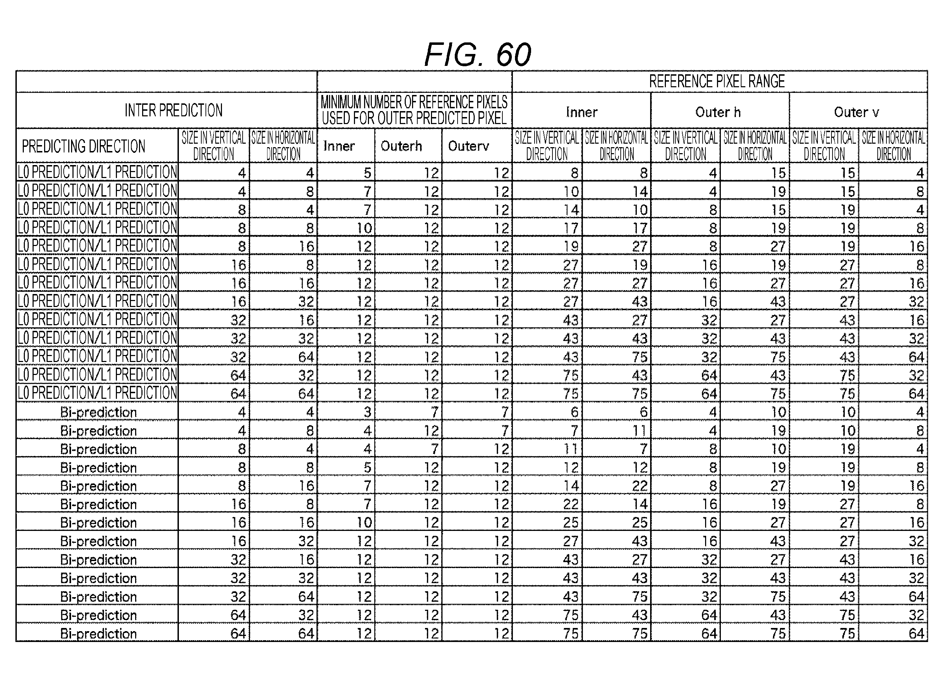

Fig. 60 is a diagram showing examples of relationships among the reference pixel range, the group of predicted pixels corresponding to the motion vector, the size of the inter prediction block, and the predicting direction in cases where the number of generation pixels to be used in generating a prediction-associated pixel is 12, and the reference pixel ratio is 5 or lower.

The technique of changing the number of reference pixels to be used in generating an outer predicted pixel in accordance with at least one of the motion vector, the size of the inter prediction block, and the predicting direction as described above with reference to Figs. 30 through 60 can also be applied to the inter prediction unit 24 shown in Fig. 4.

That is, in a case where the number of generation pixels to be used in generating a predicted pixel varies with the position of the predicted pixel in the predicted image because no replicated reference pixels are used as in the case of the inter prediction unit 24 of Fig. 4, the number of reference pixels to be used in generating an outer predicted pixel can be changed in accordance with at least one of the motion vector, the size of the inter prediction block, and the predicting direction. Such a case will be described below.

[Seventh Example Structure of the Inter Prediction Unit]

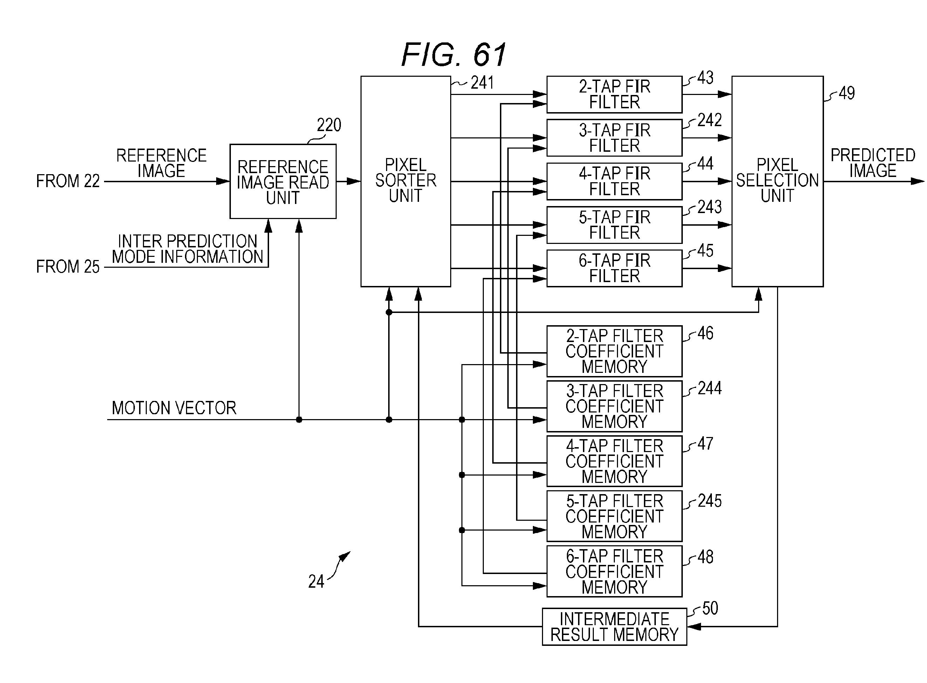

Fig. 61 is a block diagram showing a seventh example structure of the inter prediction unit 24 shown in Fig. 3.

Of the components shown in Fig. 61, the same components as those in Figs. 4 and 52 are denoted by the same reference numerals as those in Figs. 4 and 52. The explanations that have already been made will not be repeated.

The structure of the inter prediction unit 24 shown in Fig. 61 differs from the structure shown in Fig. 4 mainly in that the reference image read unit 41 and the pixel sorter unit 42 are replaced with the reference pixel read unit 220 and a pixel sorter unit 241, and a 3-tap FIR filter 242, a 5-tap FIR filter 243, a 3-tap filter coefficient memory 244, and a 5-tap filter coefficient memory 245 are newly added.

Like the pixel sorter unit 42 shown in Fig. 4, the pixel sorter unit 241 of the inter prediction unit 24 shown in Fig. 61 sets the reference pixels supplied from the reference image read unit 220 as generation pixels. Based on the block size and the predicting direction contained in the inter prediction mode information supplied from the motion prediction unit 25, the fractional value of the motion vector, and the position of a predicted pixel in the predicted image, the pixel sorter unit 241 determines the number of Sub pels to be used in generating the predicted pixel. The pixel sorter unit 241 then reads, from the intermediate result memory 50, the determined number of Sub pels as the generation pixels corresponding to the generation target predicted pixel. Here, the number of Sub pels to be used in generating a predicted pixel is two, three, four, five, or six.

In accordance with the number of generation pixels, the pixel sorter unit 241 supplies the generation pixels to the 2-tap FIR filter 43, the 3-tap FIR filter 242, the 4-tap FIR filter 44, the 5-tap FIR filter 243, or the 6-tap FIR filter 45. Specifically, when the number of generation pixels is two, the pixel sorter unit 241 supplies the generation pixels to the 2-tap FIR filter 43, and, when the number of generation pixels is three, the pixel sorter unit 241 supplies the generation pixels to the 3-tap FIR filter 242. When the number of generation pixels is four, the pixel sorter unit 241 supplies the generation pixels to the 4-tap FIR filter 44, and, when the number of generation pixels is five, the pixel sorter unit 241 supplies the generation pixels to the 5-tap FIR filter 243. When the number of generation pixels is six, the pixel sorter unit 241 supplies the generation pixels to the 6-tap FIR filter 45.

The 3-tap FIR filter 242 functions as an arithmetic operation unit, and performs a calculation by using three generation pixels supplied from the pixel sorter unit 241 and filter coefficients supplied from the 3-tap filter coefficient memory 244. The 3-tap FIR filter 242 supplies the resultant one pixel to the pixel selection unit 49.

The 5-tap FIR filter 243 functions as an arithmetic operation unit, and performs a calculation by using five generation pixels supplied from the pixel sorter unit 241 and filter coefficients supplied from the 5-tap filter coefficient memory 245. The 5-tap FIR filter 243 supplies the resultant one pixel to the pixel selection unit 49.

The 3-tap filter coefficient memory 244 functions as a storage unit, and stores filter coefficients for the 3-tap FIR filter 242 associated with fractional values of motion vectors. Based on the fractional value of the motion vector supplied from the motion prediction unit 25, the 3-tap filter coefficient memory 244 supplies the filter coefficients stored and associated with the fractional value, to the 3-tap FIR filter 242.

The 5-tap filter coefficient memory 245 functions as a storage unit, and stores filter coefficients for the 5-tap FIR filter 243 associated with fractional values of motion vectors. Based on the fractional value of the motion vector supplied from the motion prediction unit 25, the 5-tap filter coefficient memory 245 supplies the filter coefficients stored and associated with the fractional value, to the 5-tap FIR filter 243.

[Description of a Seventh Example of the Inter Prediction Operation]

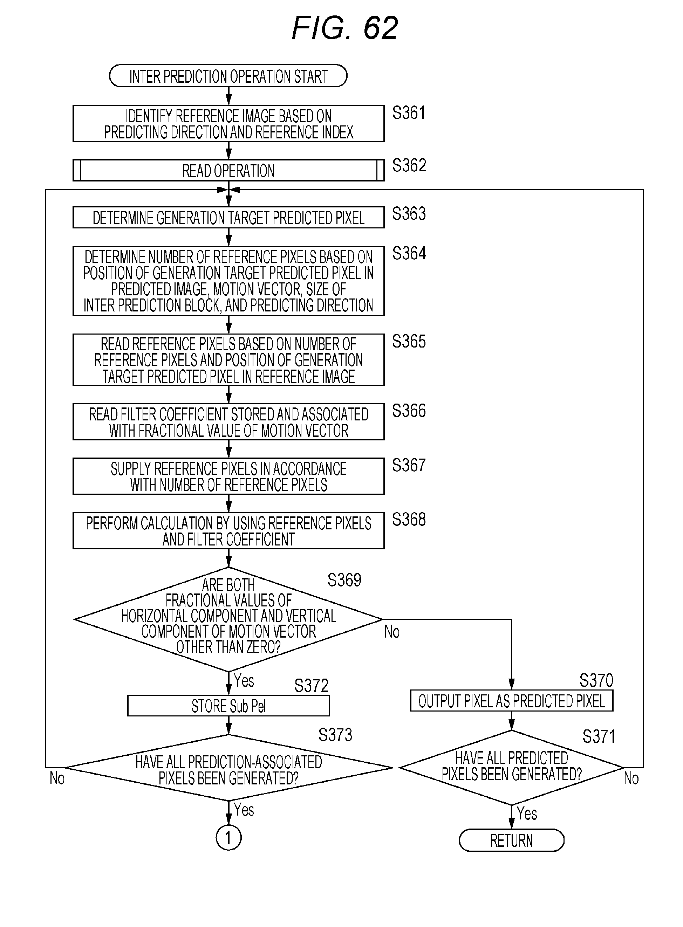

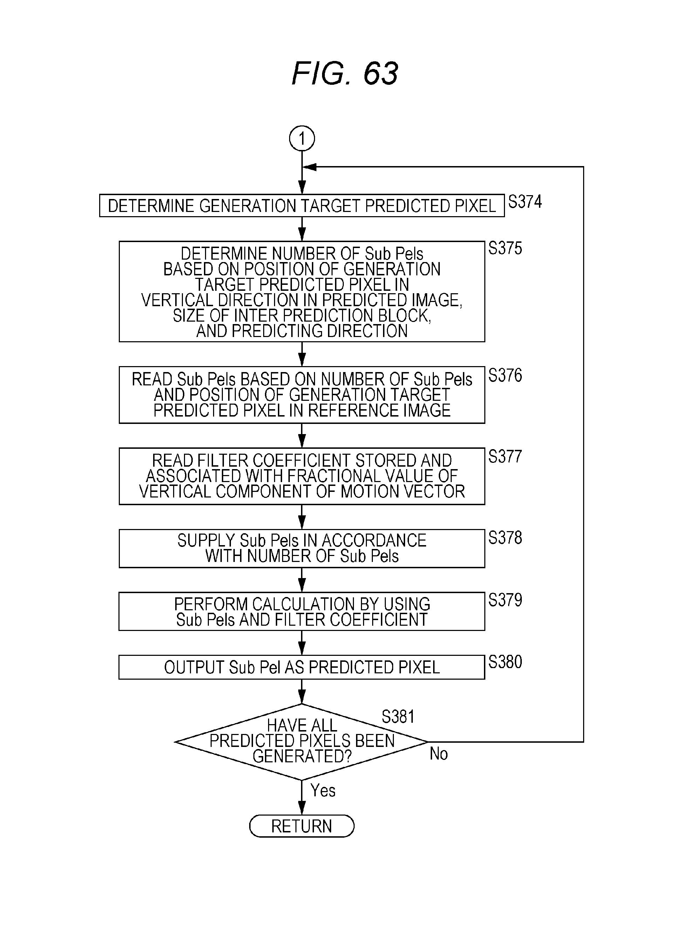

Figs. 62 and 63 show a flowchart for explaining, in detail, the inter prediction operation of step S15 of Fig. 20 to be performed by the inter prediction unit 24 of Fig. 61.

The procedures of steps S361 through S381 of Figs. 62 and 63 are the same as the procedures of steps S311 through S333 of Figs. 55 and 56, except that the procedures of steps S317 and S318 of Fig. 55 are replaced with the procedures of steps S367 and S368 of Fig. 62, and the procedures of steps S329 and S330 of Fig. 56 are replaced with the procedures of steps S378 and S379 of Fig. 63.

In the procedure of step S367 of Fig. 62, in accordance with the number of reference pixels supplied from the reference image read unit 220, the pixel sorter unit 241 supplies the reference pixels to the 2-tap FIR filter 43, the 3-tap FIR filter 242, the 4-tap FIR filter 44, the 5-tap FIR filter 243, or the 6-tap FIR filter 45.

In step S368, the 2-tap FIR filter 43, the 3-tap FIR filter 242, the 4-tap FIR filter 44, the 5-tap FIR filter 243, or the 6-tap FIR filter 45, which has received the reference pixels from the pixel sorter unit 241, performs an operation.

Specifically, in step S368, a calculation is performed by using the reference pixels and the filter coefficients supplied from the 2-tap filter coefficient memory 46, the 3-tap filter coefficient memory 244, the 4-tap filter coefficient memory 47, the 5-tap filter coefficient memory 245, or the 6-tap filter coefficient memory 48.

The procedures of steps S378 and S379 of Fig. 63  are the same as the procedures of steps S367 and S368 of Fig. 62, except that the procedures are carried out on Sub pels, instead of reference pixels. Therefore, explanation of those steps is not repeated herein.

Although not shown in the drawings, when the encoding device 10 includes the inter prediction unit 24 of Fig. 30, 44, 48, 52, or 61, the inter prediction unit 111 of the decoding device 100 also has the same structure as the inter prediction unit 24 of Fig. 30, 44, 48, 52, or 61.

Also, in the above descriptions with reference to Figs. 30 through 63, Sub pels in 1/4 pixel positions are generated through interpolations. However, Sub pels in 1/2 pixel positions or 1/8 pixel positions may be generated instead. In that case, the same operation as the operation to generate Sub pels in 1/4 pixel positions is performed, except that different filter coefficients are used.

Further, the number of reference pixels and the type of the number of reference pixels to be used in generating a predicted pixel are not limited to the above mentioned numbers. Also, the positions in which the number of reference pixels to be used in generating a predicted pixels in a predicted image is changed are not limited to the above described positions.

In this embodiment, the encoding method is based on H.264/AVC. However, the present technique is not limited to that, and can also be applied to encoding devices and decoding devices that use encoding methods and decoding methods for performing other motion prediction/compensation operations.

The present technique can also be applied to encoding devices and decoding devices that are used for receiving image information (bit streams) compressed by a technique of compressing image information through orthogonal transforms such as discrete cosine transforms and motion compensation, like MPEG, H.26x, and the like, via a network medium such as satellite broadcasting, cable television broadcasting, the Internet, or a portable telephone device. The present technique can also be applied to encoding devices and decoding devices that are used for performing operations on storage media such as optical disks, magnetic disks, and flash memories. Further, the present technique can also be applied to motion prediction/compensation devices installed in those encoding devices and decoding devices.

[Eighth Example Structure of the Inter Prediction Unit]

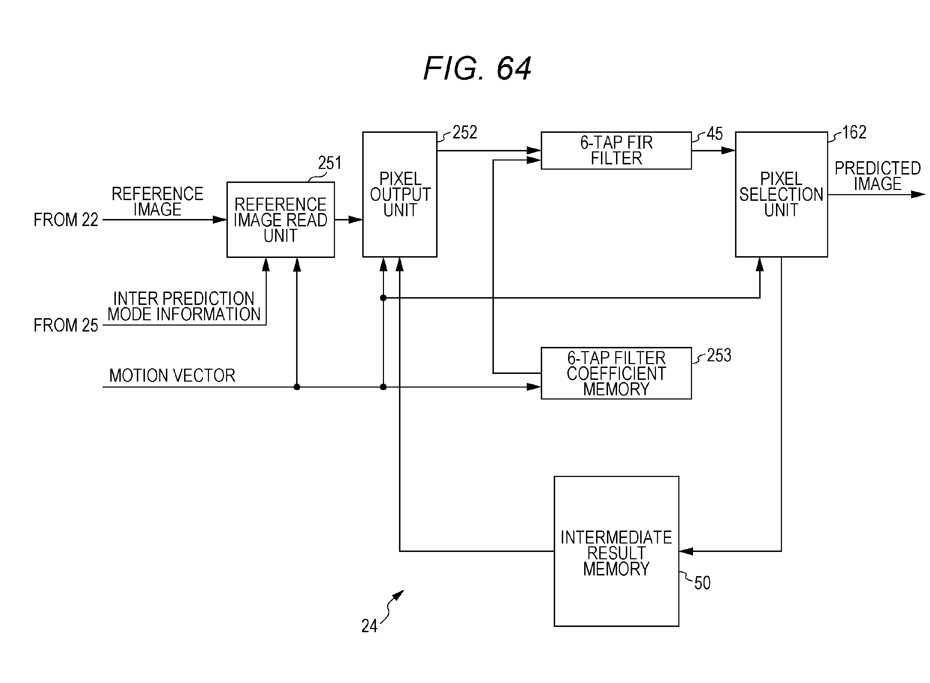

Fig. 64 is a block diagram showing an eighth example structure of the inter prediction unit 24 shown in Fig. 3.

Of the components shown in Fig. 64, the same components as those in Fig. 26 are denoted by the same reference numerals as those in Fig. 26. The explanations that have already been made will not be repeated.

The structure of the inter prediction unit 24 shown in Fig. 64 differs from the structure shown in Fig. 26 mainly in that the reference image read unit 160, the pixel generation unit 161, and the 6-tap filter coefficient memory 48 are replaced with a reference image read unit 251, a pixel output unit 252, and a 6-tap filter coefficient memory 253. The inter prediction unit 24 shown in Fig. 64 determines generation pixels to be used in generating each predicted pixel so that the number of generation pixels (hereinafter referred to as outer generation pixels) located on the outer side of an outer predicted pixel among six generation pixels corresponding to an outer predicted pixel becomes smaller than the number of outer generation pixels among six generation pixels corresponding to an inner predicted pixel.

Specifically, like the reference image read unit 160 shown in Fig. 26, the reference image read unit 251 of the inter prediction unit 24 identifies the reference image among the images stored in the frame memory 22, based on the reference index and the predicting direction contained in the inter prediction mode information. Based on the block size contained in the inter prediction mode information and the integer value of the motion vector, the reference image read unit 251 reads, from the frame memory 22, the reference pixels to be used in generating a predicted image, and temporarily stores those reference pixels.

The reference image read unit 251 functions as a  pixel read unit, and, for each predicted pixel, reads the six reference pixels to be used in generating the predicted pixel among the temporarily stored reference pixels. At this point, the reference image read unit 251 determines six reference pixels for each predicted pixel so that the number of reference pixels located on the outer side of an outer predicted pixel among the six reference pixels for the outer predicted pixel becomes smaller than the number of reference pixels located on the outer side of an inner predicted pixel among the six reference pixels for the inner predicted pixel. The reference image read unit 251 then reads the six reference pixels. The reference image read unit 251 then supplies the read six reference pixels to the pixel output unit 252.

Like the pixel generation unit 161 shown in Fig. 26, the pixel output unit 252 sets the reference pixels supplied from the reference image read unit 251 as generation pixels. Based on the fractional value of the motion vector supplied from the motion prediction unit 25, the pixel output unit 252 also reads, from the intermediate result memory 50, six Sub pels corresponding to the generation target predicted pixel as generation pixels. At this point, the pixel output unit 252 determines six Sub pels as generation pixels for each predicted pixel so that the number of Sub pels to be the outer generation pixels for an outer predicted pixel becomes smaller than the number of Sub pels to be the outer generation pixels for an inner predicted pixel. The pixel output unit 252 then reads the six Sub pels. The pixel output unit 252 supplies the six generation pixels to the 6-tap FIR filter 45.

The 6-tap filter coefficient memory 253 stores filter coefficients for the 6-tap FIR filter 45 associated with fractional values of motion vectors and the numbers of outer generation pixels. Based on the fractional value of the motion vector supplied from the motion prediction unit 25 and the position of the generation target predicted pixel in the predicted image, the 6-tap filter coefficient memory 253 supplies the filter coefficients stored and associated with the fractional value and the number of outer generation pixels corresponding to the position, to the 6-tap FIR filter 45.

[Example Reference Pixels]

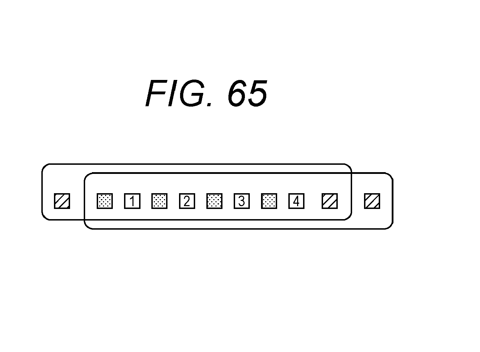

Fig. 65 is a diagram showing example reference pixels in the inter prediction unit 24 shown in Fig. 64.

Fig. 65 shows example reference pixels to be used in generating each of four predicted pixels that are aligned in the horizontal direction, have 1/2 pixel positions in the horizontal direction, and have integer positions in the vertical direction in a case where the size of the inter prediction block is 4 x 4 pixels.

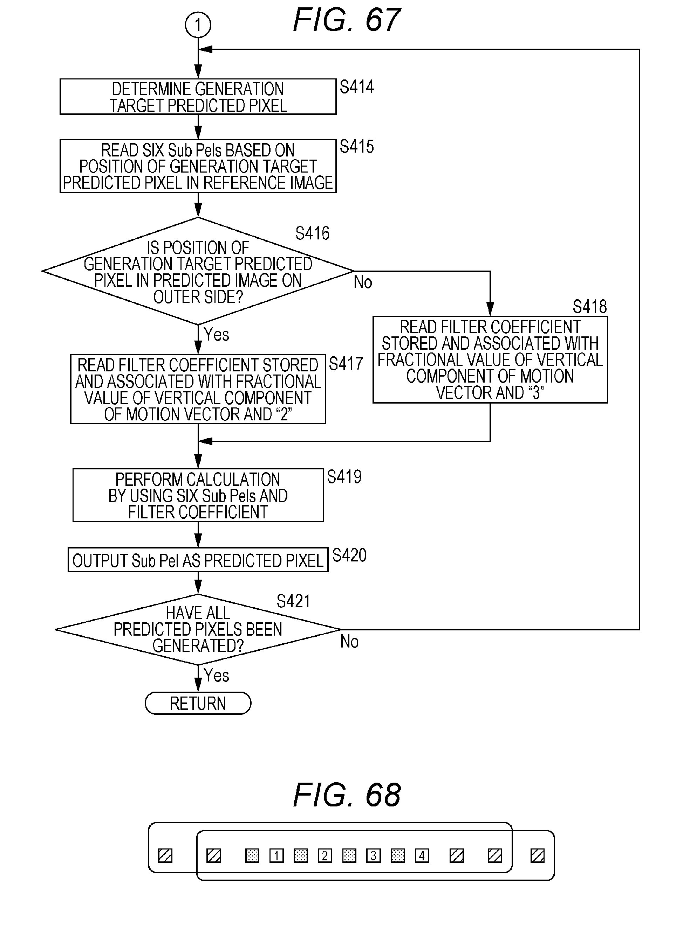

In Fig. 65, each square having a number assigned thereto represents a predicted pixel, and each square without a number represents a reference pixel. Each dotted square represents a reference pixel located within the range of the size of the inter prediction block among the reference pixels to be used in generating the predicted pixels, and each shaded square represents a reference pixel outside the range of the size of the inter prediction block. The same applies to Figs. 68 through 70 described later.

In the example illustrated in Fig. 65, the number of outer generation pixels for each outermost predicted pixel is two, and the number of outer generation pixels for each innermost predicted pixel is three.

Specifically, each of the predicted pixels represented by the squares that have numbers 1 and 4 assigned thereto and are located outermost among the four predicted pixels that are aligned in the horizontal direction, have 1/2 pixel positions in the horizontal direction, and have integer positions in the vertical direction is generated by using two reference pixels located on the outer side of the predicted pixel and four reference pixels located on the inner side of the predicted pixel.

Each of the second outermost predicted pixels represented by the squares that have numbers 2 and 3 assigned thereto and are located on the inner sides of the predicted pixels represented by the squares having numbers 1 and 4 assigned thereto is generated by using a total of six reference pixels including three on each side of the predicted pixel. That is, the number of reference pixels for each of the predicted pixels represented by the squares having numbers 2 and 3 assigned thereto is three, which is larger than two, which is the number of reference pixels for each of the predicted pixels represented by the squares having numbers 1 and 4 assigned thereto.

As described above, in the inter prediction unit 24 shown in Fig. 64, the number of outer generation pixels for each outer predicted pixel is made smaller than the number of outer generation pixels for each inner predicted pixel. Accordingly, the number of reference pixels that are aligned in the horizontal direction and are required in an inter prediction is seven, which is smaller than nine in conventional cases. As a result, usage of memory bandwidth in the frame memory 22 can be reduced. Accordingly, the number of chips can be reduced to lower production costs. Also, the number of accesses to the frame memory 22 can be lowered to reduce power consumption.

In the inter prediction unit 24 shown in Fig. 64, the number of generation pixels for any predicted pixel is six. Accordingly, predicted images are generated with higher precision than in a case where the number of generation pixels corresponding to each outer predicted pixel is set at four so as to reduce the number of reference pixels that are aligned in the horizontal direction and are required in an inter prediction to seven, which is the same as the number in the case of the inter prediction unit 24 shown in Fig. 64.

Although not shown in the drawings, in the example case illustrated in Fig. 65, the six reference pixels to be used in generating each of four predicted pixels that are aligned in the vertical direction, have 1/2 pixel positions in the vertical direction, and have integer positions in the horizontal direction are determined so that the number of outer reference pixels for each outermost predicted pixel or each of the uppermost and lowermost predicted pixels is two, and the number of outer reference pixels for each innermost predicted pixel is three.

Also, the reference pixels to be used in generating each of four predicted pixels that are aligned in the vertical direction and have 1/2 pixel positions in both the horizontal direction and the vertical direction are the reference pixels to be used in generating each of such prediction- associated pixels that the number of outer prediction- associated pixels for each outermost predicted pixel is two, and the number of outer prediction- associated pixels for each innermost predicted pixel is three. Accordingly, the range of the reference pixels to be used in generating a predicted image of 4 x 4 pixels having 1/2 pixel positions in both the horizontal direction and the vertical direction is 7 x 7 pixels, which is smaller than a conventional 9 x 9 pixel range.

[Description of an Eighth Example of the Inter Prediction Operation]

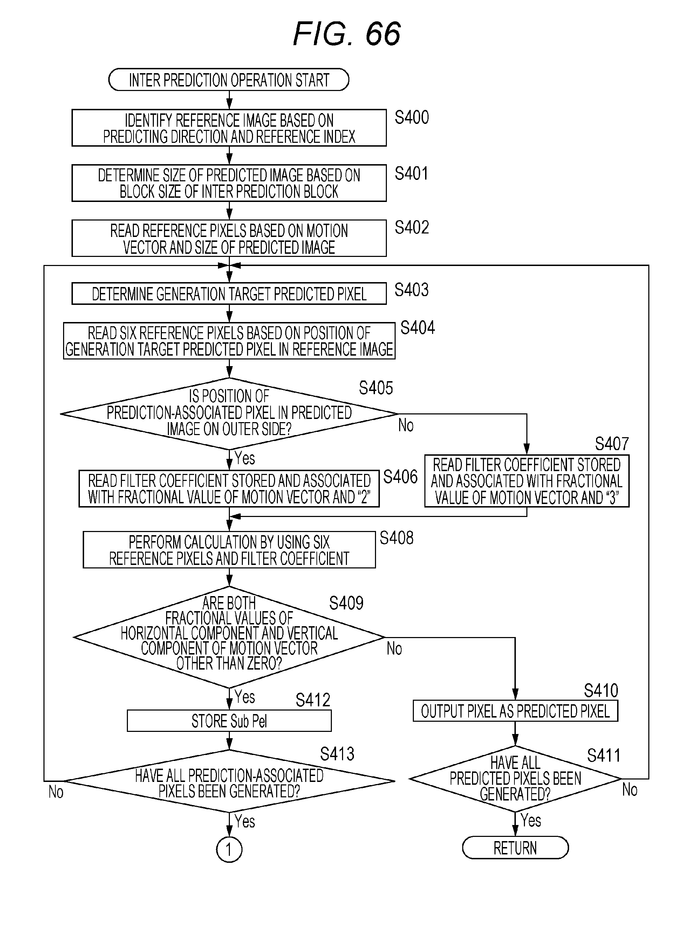

Figs. 66 and 67 show a flowchart for explaining, in detail, the inter prediction operation of step S15 of Fig. 20 to be performed by the inter prediction unit 24 of Fig. 64.

The procedures of steps S400 through S403 of Fig. 66 are the same as the procedures of steps S50 through S53 of Fig. 22, and therefore, explanation of them is not repeated herein. If there is more than one prediction-associated pixel, the procedures of steps S404 through S412 described below are carried out for each prediction-associated pixel.

In step S404, based on the position of the generation target predicted pixel in the reference image, the reference image read unit 251 reads the six reference pixels to be used in generating a prediction-associated pixel among the reference pixels stored in step S402. The reference image read unit 251 then supplies the read six reference pixels as generation pixels to the pixel output unit 252.

In step S405, the 6-tap filter coefficient memory 253 determines whether the position of the prediction-associated pixel in the predicted image is on an outer side. If the position of the prediction-associated pixel in the predicted image is determined to be on an outer side in step S405, the 6-tap filter coefficient memory 253 sets the number of outer generation pixels at two, which is smaller than three or a half of six, which is the total number of generation pixels. The operation then moves on to step S406.

In step S406, the 6-tap filter coefficient memory 253 reads the filter coefficients stored and associated with the fractional value of the motion vector and "2", which is the number of outer generation pixels, and supplies the filter coefficients to the 6-tap FIR filter 45. The operation then moves on to step S408.

If the position of the prediction-associated pixel in the predicted image is determined not to be on an outer side in step S405, on the other hand, the 6-tap filter coefficient memory 253 sets the number of outer generation pixels at three or a half of six, which is the total number of generation pixels. The operation then moves on to step S407.

In step S407, the 6-tap filter coefficient memory 253 reads the filter coefficients stored and associated with the fractional value of the motion vector and "3", which is the number of outer generation pixels, and supplies the filter coefficients to the 6-tap FIR filter 45. The operation then moves on to step S408.

In step S408, the 6-tap FIR filter 45 performs a calculation by using the six reference pixels supplied as generation pixels from the pixel output unit 252 and the filter coefficients supplied from the 6-tap filter coefficient memory 253. The 6-tap FIR filter 45 supplies the resultant one prediction-associated pixel to the pixel selection unit 162.

The procedures of steps S409 through S414 are the same as the procedures of steps S62 through S67 of Figs. 22 and 23, and therefore, explanation of them is not repeated herein.

In step S415, the pixel output unit 252 reads six Sub pels as generation pixels from the intermediate result memory 50, based on the position of the generation target predicted pixel in the reference image.

In step S416, the 6-tap filter coefficient memory 253 determines whether the position of the generation target predicted pixel in the predicted image is on an outer side. If the position of the generation target predicted pixel in the predicted image is determined to be on an outer side in step S416, the 6-tap filter coefficient memory 253 sets the number of outer generation pixels at two, which is smaller than three or a half of six, which is the total number of generation pixels. The operation then moves on to step S417.

In step S417, the 6-tap filter coefficient memory 253 reads the filter coefficients stored and associated with the fractional value of the vertical component of the motion vector and "2" as the number of outer generation pixels, and supplies the filter coefficients to the 6-tap FIR filter 45. The operation then moves on to step S419.

If the position of the generation target predicted pixel in the predicted image is determined not to be on an outer side in step S416, on the other hand, the 6-tap filter coefficient memory 253 sets the number of outer generation pixels at three or a half of six, which is the total number of generation pixels. The operation then moves on to step S418.

In step S418, the 6-tap filter coefficient memory 253 reads the filter coefficients stored and associated with the fractional value of the vertical component of the motion vector and "3" as the number of outer generation pixels, and supplies the filter coefficients to the 6-tap FIR filter 45. The operation then moves on to step S419.

In step S419, the 6-tap FIR filter 45 performs a calculation by using the six Sub pels supplied as generation pixels from the pixel output unit 252 and the filter coefficients supplied from the 6-tap filter coefficient memory 253. The 6-tap FIR filter 45 supplies the resultant one Sub pel to the pixel selection unit 162.

The procedures of steps S420 and S421 are the same as the procedures of steps S76 and S77 of Fig. 23, and therefore, explanation of them is not repeated herein.

In the inter prediction unit 24 shown in Fig. 64, the number of generation pixels to be used in one calculation is six. However, the number of generation pixels is not limited to six. Also, in the inter prediction operation shown in Figs. 66 and 67, the number of outer generation pixels is a half of the total number of generation pixels or is one smaller than a half of the total number of generation pixels. However, the number of outer generation pixels is not limited to that. Still, a predicted image can be obtained with higher precision when the number of outer generation pixels is closer to a half of the total number of generation pixels. That is, when a predicted image is generated, generation pixels that are more similar to the predicted pixels should be used to obtain the predicted image with higher precision.

[Other Example Reference Pixels]

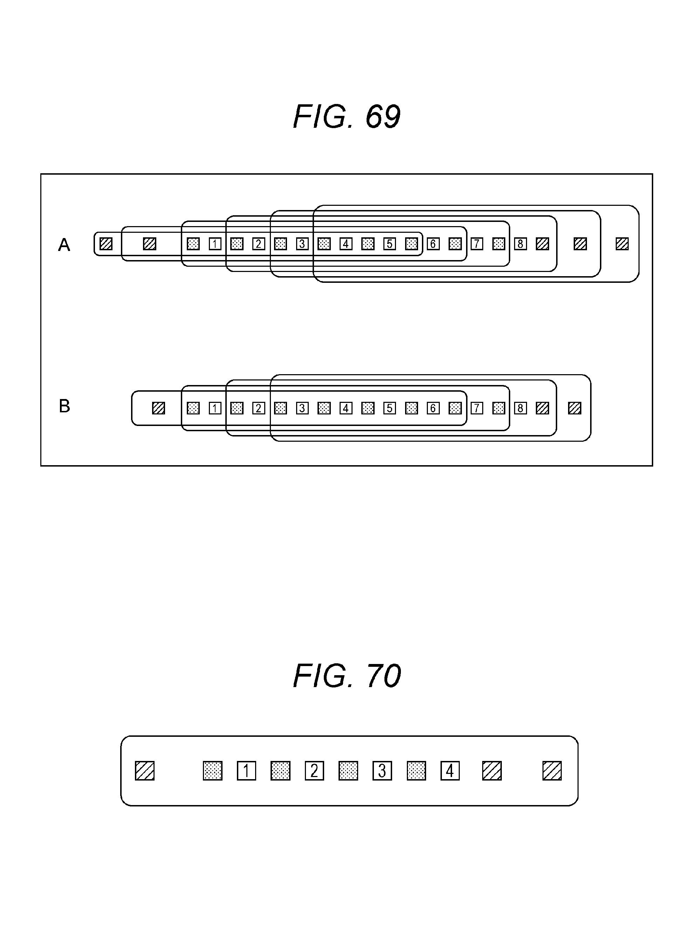

Fig. 68 and 69 are diagrams showing example reference pixels in the inter prediction unit 24 of Fig. 64 in cases where the number of generation pixels is eight. Fig. 70 is a diagram showing example reference pixels in the inter prediction unit 24 of Fig. 64 in a case where the number of generation pixels is seven.

Fig. 68 shows example reference pixels to be used in generating each of four predicted pixels that are aligned in the horizontal direction, have 1/2 pixel positions in the horizontal direction, and have integer positions in the vertical direction in a case where the size of the inter prediction block is 4 x 4 pixels.

In the example illustrated in Fig. 68, the number of outer generation pixels for each outermost predicted pixel is three, and the number of outer generation pixels for each innermost predicted pixel is four.

Specifically, each of the predicted pixels represented by the squares that have numbers 1 and 4 assigned thereto and are located outermost among the four predicted pixels that are aligned in the horizontal direction, have 1/2 pixel positions in the horizontal direction, and have integer positions in the vertical direction is generated by using three reference pixels located on the outer side of the predicted pixel and five reference pixels located on the inner side of the predicted pixel.

Each of the second outermost predicted pixels represented by the squares that have numbers 2 and 3 assigned thereto and are located on the inner sides of the predicted pixels represented by the squares having numbers 1 and 4 assigned thereto is generated by using a total of eight reference pixels including four on each side of the predicted pixel. That is, the number of outer generation pixels for each of the predicted pixels represented by the squares having numbers 2 and 3 assigned thereto is four, which is larger than three, which is the number of outer generation pixels for each of the predicted pixels represented by the squares having numbers 1 and 4 assigned thereto.

As described above, in the inter prediction unit 24 shown in Fig. 64, the number of outer generation pixels for each outer predicted pixel is made smaller than the number of outer generation pixels for each inner predicted pixel. Accordingly, the number of reference pixels that are aligned in the horizontal direction and are required in an inter prediction is nine, which is smaller than 11 in conventional cases. As a result, usage of memory bandwidth in the frame memory 22 can be reduced.

As shown in Fig. 68, when the predicted pixels are Sub pels b, the filter coefficients that are to be used in generating the predicted pixels represented by the squares having numbers 1 and 4 assigned thereto and are associated with 1/2 as the fractional value of the motion vector and "3" as the number of outer generation pixels are 3, -10, 39, 42, -14, 7, -4, and 1 in the order from the outer side of the corresponding generation pixels, for example.

When the predicted pixels are Sub pels a, the filter coefficients that are to be used in generating the outermost predicted pixels and are associated with 1/4 as the fractional value of the motion vector and "3" as the number of outer generation pixels are 2, -9, 56, 20, -8, 4, -2, and 1 in the order from the outer side of the corresponding generation pixels, for example. When the predicted pixels are Sub pels c, the filter coefficients that are to be used in generating the outermost predicted pixels and are associated with 3/4 as the fractional value of the motion vector and "3" as the number of outer generation pixels are 2, -6, 18, 58, -11, 5, -3, and 1 in the order from the outer side of the corresponding generation pixels, for example.

Fig. 69 shows example reference pixels to be used in generating each of four predicted pixels that are aligned in the horizontal direction, have 1/2 pixel positions in the horizontal direction, and have integer positions in the vertical direction in cases where the size of the inter prediction block is 8 x 8 pixels.

In A of Fig. 69, the number of outer generation pixels for each outermost predicted pixel is three, and the number of outer generation pixels for each innermost predicted pixel is four.

Specifically, each of the predicted pixels represented by the squares that have numbers 1 and 8 assigned thereto and are located outermost among the eight predicted pixels that are aligned in the horizontal direction, have 1/2 pixel positions in the horizontal direction, and have integer positions in the vertical direction is generated by using three reference pixels located on the outer side of the predicted pixel and five reference pixels located on the inner side of the predicted pixel, as in the case illustrated in Fig. 68.

Each of the predicted pixels represented by the squares that have numbers 2 through 7 assigned thereto and are located on the inner sides of the predicted pixels represented by the squares having numbers 1 and 8 assigned thereto is generated by using a total of eight reference pixels including four on each side of the predicted pixel. That is, the number of outer generation pixels for each of the predicted pixels represented by the squares having numbers 2 through 7 assigned thereto is four, which is larger than three, which is the number of outer generation pixels for each of the predicted pixels represented by the squares having numbers 1 and 8 assigned thereto.

As described above, in the inter prediction unit 24 shown in Fig. 64, the number of outer generation pixels for each outer predicted pixel is made smaller than the number of outer generation pixels for each inner predicted pixel. Accordingly, the number of reference pixels that are aligned in the horizontal direction and are required in an inter prediction is 13, which is smaller than 15 in conventional cases. As a result, usage of memory bandwidth in the frame memory 22 can be reduced.

In B of Fig. 69, the number of outer generation pixels for each outermost predicted pixel is two, the number of outer generation pixels for each second outermost predicted pixel is three, and the number of outer generation pixels for each innermost predicted pixel is four.

Specifically, each of the predicted pixels represented by the squares that have numbers 1 and 8 assigned thereto and are located outermost among the eight predicted pixels that are aligned in the horizontal direction, have 1/2 pixel positions in the horizontal direction, and have integer positions in the vertical direction is generated by using two reference pixels located on the outer side of the predicted pixel and six reference pixels located on the inner side of the predicted pixel.

Each of the second outermost predicted pixels represented by the squares that have numbers 2 and 7 assigned thereto and are located on the inner sides of the predicted pixels represented by the squares having numbers 1 and 8 assigned thereto is generated by using three reference pixels located on the outer side of the predicted pixel and five reference pixels located on the inner side of the predicted pixel. Further, each of the predicted pixels represented by the squares having numbers 3 through 6 assigned thereto and are located on the inner sides of the predicted pixels represented by the squares having numbers 2 and 7 assigned thereto is generated by the same kinds of reference pixels as in the case of A of Fig. 69.

As is apparent from the above description, in the case of B of Fig. 69, the number of reference pixels that are aligned in the horizontal direction and are required in an inter prediction is 11, which is even smaller than 13 used in the case of A of Fig. 69. As a result, usage of memory bandwidth in the frame memory 22 can be further reduced.

As shown in B of Fig. 69, when the predicted pixels are Sub pels b, the filter coefficients that are to be used in generating the predicted pixels represented by the squares having numbers 1 and 8 assigned thereto and are associated with 1/2 as the fractional value of the motion vector and "2" as the number of outer generation pixels are -6, 36, 44, -16, 9, -5, 3, and -1 in the order from the outer side of the corresponding generation pixels, for example. The filter coefficients that are to be used in generating the predicted pixels represented by the squares having numbers 2 and 7 assigned thereto and are associated with 1/2 as the fractional value of the motion vector and "3" as the number of outer generation pixels are 3, -10, 39, 42, -14, 7, -4, and 1 in the order from the outer side of the corresponding generation pixels, for example. Further, the filter coefficients that are to be used in generating the predicted pixels represented by the squares having numbers 3 through 6 assigned thereto and are associated with 1/2 as the fractional value of the motion vector and "4" as the number of outer generation pixels are -1, 4, -11, 40, 40, -11, 4, and -1 in the order from the outer side of the corresponding generation pixels, for example.

When the predicted pixels are Sub pels a, the filter coefficients that are to be used in generating the outermost predicted pixels and are associated with 1/4 as the fractional value of the motion vector and "2" as the number of outer generation pixels are -5, 54, 22, -10, 6, -4, 2, and -1 in the order from the outer side of the corresponding generation pixels, for example. The filter coefficients that are to be used in generating the second outermost predicted pixels and are associated with 1/4 as the fractional value of the motion vector and "3" as the number of outer generation pixels are 2, -9, 56, 20, -8, 4, -2, and 1 in the order from the outer side of the corresponding generation pixels, for example. Further, the filter coefficients that are to be used in generating the third and fourth outermost predicted pixels and are associated with 1/4 as the fractional value of the motion vector and "4" as the number of outer generation pixels are -1, 4, -10, 57, 19, -7, 3, and -1 in the order from the outer side of the corresponding generation pixels, for example.

When the predicted pixels are Sub pels c, the filter coefficients that are to be used in generating the outermost predicted pixels and are associated with 3/4 as the fractional value of the motion vector and "2" as the number of outer generation pixels are -3, 16, 60, -13, 7, -4, 2, and -1 in the order from the outer side of the corresponding generation pixels, for example. The filter coefficients that are to be used in generating the second outermost predicted pixels and are associated with 3/4 as the fractional value of the motion vector and "3" as the number of outer generation pixels are 2, -6, 18, 58, -11, 5, -3, and 1 in the order from the outer side of the corresponding generation pixels, for example. Further, the filter coefficients that are to be used in generating the third and fourth outermost predicted pixels and are associated with 3/4 as the fractional value of the motion vector and "4" as the number of outer generation pixels are -1, 3, -7, 19, 57, -10, 4 and -1 in the order from the outer side of the corresponding generation pixels, for example.

Fig. 70 shows example reference pixels to be used in generating each of four predicted pixels that are aligned in the horizontal direction, have 1/2 pixel positions in the horizontal direction, and have integer positions in the vertical direction in cases where the size of the inter prediction block is 4 x 4 pixels.

In the example illustrated in Fig. 70, the number of outer generation pixels for each outermost predicted pixel is two, and the number of outer generation pixels for each innermost predicted pixel is three.

Specifically, each of the predicted pixels represented by the squares that have numbers 1 and 4 assigned thereto and are located outermost among the four predicted pixels that are aligned in the horizontal direction, have 1/2 pixel positions in the horizontal direction, and have integer positions in the vertical direction is generated by using two reference pixels located on the outer side of the predicted pixel and five reference pixels located on the inner side of the predicted pixel.

Each of the predicted pixels represented by the squares that have numbers 2 and 3 assigned thereto and are located on the inner sides of the predicted pixels represented by the squares having numbers 1 and 4 assigned thereto is generated by using three reference pixels located on the outer side of the predicted pixel and four reference pixels located on the inner side of the predicted pixel.

As described above, in the inter prediction unit 24 shown in Fig. 64, the number of outer generation pixels for each outer predicted pixel is made smaller than the number of outer generation pixels for each inner predicted pixel. Accordingly, the number of reference pixels that are aligned in the horizontal direction and are required in an inter prediction is seven, which is smaller than 10 in conventional cases. As a result, usage of memory bandwidth in the frame memory 22 can be reduced.

As shown in Fig. 70, when the predicted pixels are Sub pels b, the filter coefficients that are to be used in generating the predicted pixels represented by the squares having numbers 1 and 4 assigned thereto and are associated with 1/2 as the fractional value of the motion vector and "2" as the number of outer generation pixels are -6, 36, 44, -15, 8, -4, and 1 in the order from the outer side of the corresponding generation pixels, for example.

When the predicted pixels are Sub pels a, the filter coefficients that are to be used in generating the outermost predicted pixels and are associated with 1/4 as the fractional value of the motion vector and "2" as the number of outer generation pixels are -5, 54, 21, -9, 5, -3, and 1 in the order from the outer side of the corresponding generation pixels, for example. When the predicted pixels are Sub pels c, the filter coefficients that are to be used in generating the outermost predicted pixels and are associated with 3/4 as the fractional value of the motion vector and "2" as the number of outer generation pixels are -3, 16, 59, -12, 6, -3, and 1 in the order from the outer side of the corresponding generation pixels, for example.

Although not shown in the drawings, in the example cases illustrated in Figs. 68 through 70, the reference pixels for predicted pixels that have integer positions in the horizontal direction and have fractional positions in the vertical direction are determined so that the number of outer reference pixels for each outermost predicted pixel becomes smaller than the number of outer reference pixels for each inner predicted pixel, like the reference pixels shown in Figs. 68 through 70.

Also, the reference pixels to be used in generating each of four predicted pixels that are aligned in the vertical direction and have 1/2 pixel positions in both the horizontal direction and the vertical direction are the reference pixels to be used in generating each of such prediction- associated pixels that the number of outer prediction- associated pixels for each outermost predicted pixel is smaller than the number of outer prediction- associated pixels for each innermost predicted pixel, like the reference pixels shown in Figs. 68 through 70.

It should be noted that the number of outer generation pixels that are aligned in the horizontal direction and are to be used in generating pixels having fractional positions in the horizontal direction, and the number of outer generation pixels that are aligned in the vertical direction and are to be used in generating pixels having fractional positions in the vertical direction may be changed.

Specifically, in a case where a readout unit in the frame memory 22 is a predetermined number of pixels consecutively aligned in the horizontal direction, for example, the number of readout times might not change even when the number of reference pixels aligned in the horizontal direction is reduced. However, when the number of reference pixels aligned in the vertical direction is reduced even by one, the number of readout times is reduced. That is, in such a case, the effect of a reduction in the number of reference pixels in the vertical direction is greater than the effect of a reduction in the number of reference pixels in the horizontal direction. Therefore, in such a case, a reduction in the number of outer generation pixels that are aligned in the vertical direction and are to be used in generating pixels having fractional positions in the vertical direction has priority over a reduction in the number of outer generation pixels that are aligned in the horizontal direction and are to be used in generating pixels having fractional positions in the horizontal direction. With this, memory bandwidth can be reduced while decreases in predicted image precision are prevented.

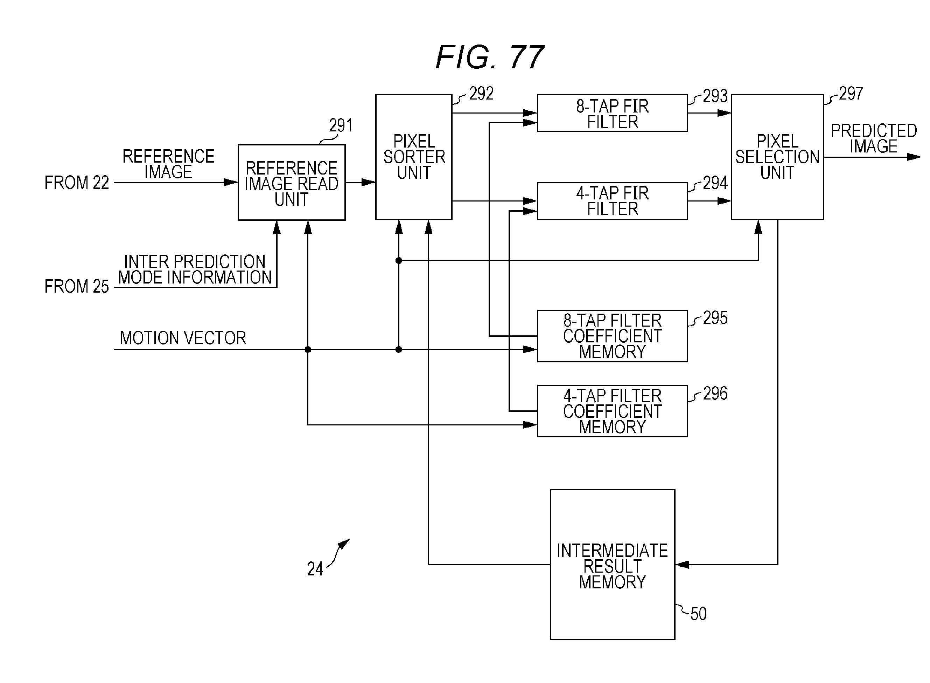

Likewise, in a case a readout unit in the frame memory 22 is a predetermined number of reference pixels consecutively aligned in the vertical direction, a reduction in the number of outer generation pixels that are aligned in the horizontal direction and are to be used in generating pixels having fractional positions in the horizontal direction has priority over a reduction in the number of outer generation pixels that are aligned in the vertical direction and are to be used in generating pixels having fractional positions in the vertical direction. Such cases will be described later in detail, with reference to Figs. 77 through 82.

[Ninth Example Structure of the Inter Prediction Unit]

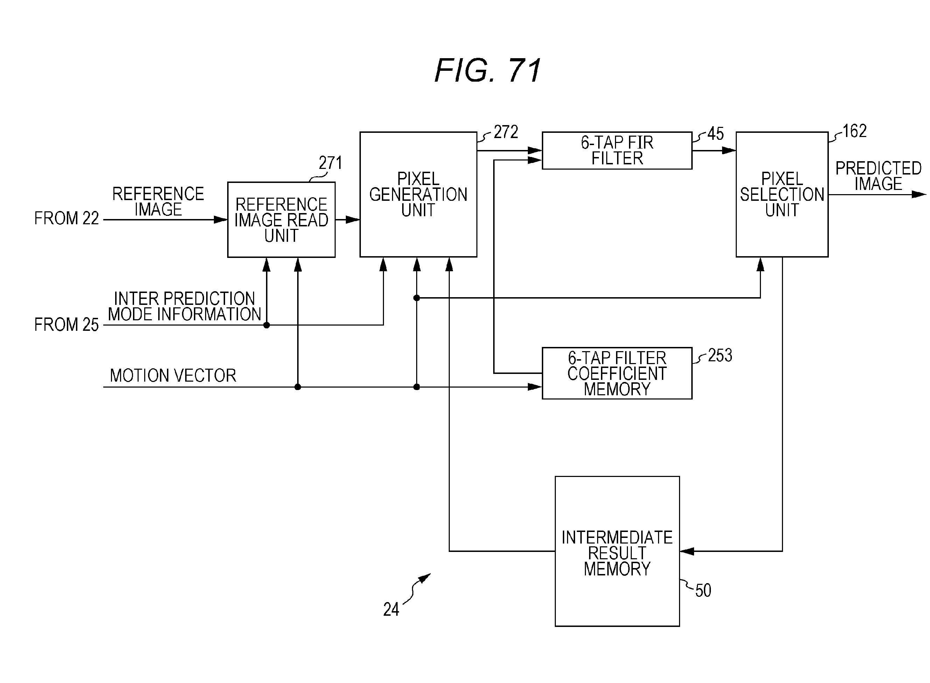

Fig. 71 is a block diagram showing a ninth example structure of the inter prediction unit 24 shown in Fig. 3.

Of the components shown in Fig. 71, the same components as those in Fig. 64 are denoted by the same reference numerals as those in Fig. 64. The explanations that have already been made will not be repeated.

The structure of the inter prediction unit 24 shown in Fig. 71 differs from the structure shown in Fig. 64 mainly in that the reference image read unit 251 and the pixel output unit 252 are replaced with a reference image read unit 271 and a pixel generation unit 272. The inter prediction unit 24 shown in Fig. 71 replicates reference pixels and Sub pels, and generates generation pixels for each predicted pixel so that the number of outer generation pixels among six generation pixels corresponding to an outer predicted pixel becomes smaller than the number of outer generation pixels among six generation pixels corresponding to an inner predicted pixel.

Specifically, like the reference image read unit 251 shown in Fig. 64, the reference image read unit 271 of the inter prediction unit 24 shown in Fig. 71 identifies the reference image among the images stored in the frame memory 22, based on the reference index and the predicting direction contained in the inter prediction mode information. Based on the block size contained in the inter prediction mode information and the integer value of the motion vector, the reference image read unit 271 reads, from the frame memory 22, the reference pixels to be used in generating a predicted image, and temporarily stores those reference pixels.

For each predicted pixel, the reference image read unit 271 reads the reference pixels to be used in generating the predicted pixel among the temporarily stored reference pixels. In doing so, the reference image read unit 271 determines reference pixels for each predicted pixel so that the number of post-replication outer generation pixels for an outer predicted pixel becomes smaller than the number of post-replication outer generation pixels for an inner predicted pixel. The reference image read unit 271 then reads reference pixels. Here, the number of reference pixels to be used in generating a predicted pixel is five or six. The reference image read unit 271 supplies the read reference pixels to the pixel generation unit 272.

Like the pixel output unit 252, the pixel generation unit 272 sets the reference pixels supplied from the reference image read unit 271 as generation pixels. Based on the fractional value of the motion vector supplied from the motion prediction unit 25, the pixel generation unit 272 also reads, from the intermediate result memory 50, Sub pels corresponding to the generation target predicted pixel as generation pixels. In doing so, the pixel generation unit 272 determines Sub pels for each predicted pixel so that the number of post-replication outer generation pixels for an outer predicted pixel becomes smaller than the number of post-replication outer generation pixels for an inner predicted pixel. The pixel generation unit 272 then reads Sub pels. Here, the number of Sub pels to be used in generating a predicted pixel is five or six.

The pixel generation unit 272 also functions as a pixel generator. When the number of generation pixels is smaller than six, the pixel generation unit 272 replicates an outer pixel among the generation pixels by the difference number between the number of generation pixels and six, and generates six pixels as post-replication generation pixels consisting of the replicated pixels and the generation pixels. The pixel generation unit 272 supplies the six post-replication generation pixels to the 6-tap FIR filter 45.

[Example Post-Replication Generation Pixels]

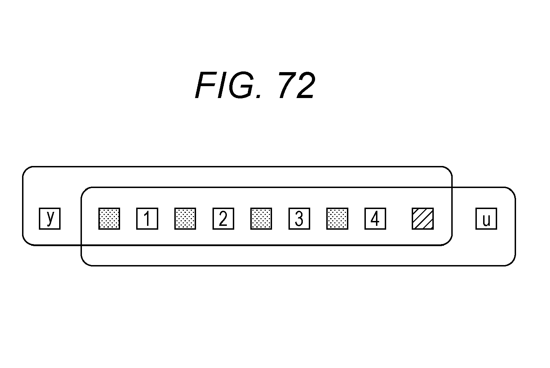

Fig. 72 is a diagram showing example post-replication generation pixels to be used in generating respective four predicted pixels that are aligned in the horizontal direction, have 1/2 pixel positions in the horizontal direction, and have integer positions in the vertical direction in a case where the size of the inter prediction block is 4 x 4 pixels.

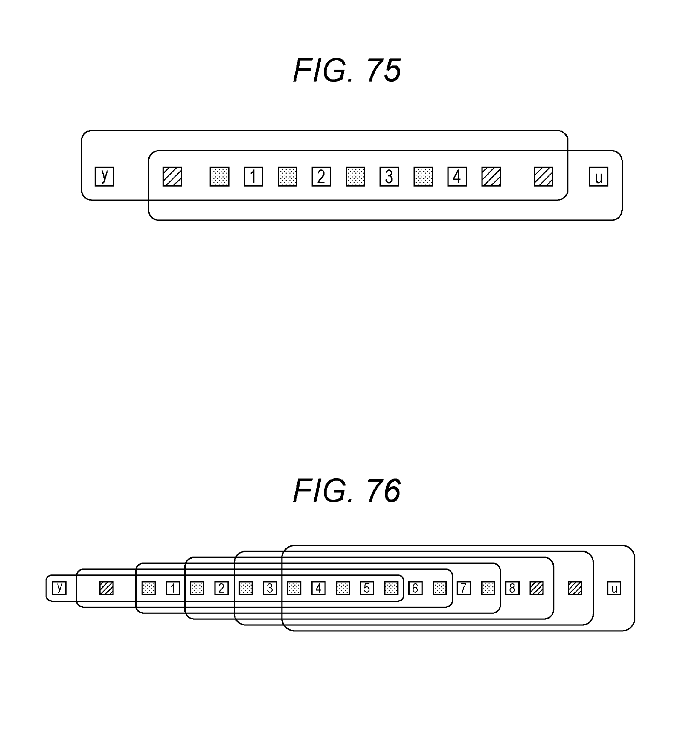

In Fig. 72, each square having a number assigned thereto represents a predicted pixel, and each square having neither a number nor an alphabetical character assigned thereto represents a reference pixel. Each dotted square represents a reference pixel located within the range of the size of the inter prediction block among the reference pixels to be used in generating the predicted pixels, and the shaded square represents a reference pixel outside the range of the size of the inter prediction block. Further, each square having an alphabetical character assigned thereto represents a pixel formed by replicating a reference pixel. The same applies to Figs. 75 and 76 described later.

In the example illustrated in Fig. 72, each predicted pixel is generated by using six post-replication generation pixels including five reference pixels, the number of post-replication outer generation pixels for each outermost predicted pixel is two, and the number of post-replication outer generation pixels for each innermost predicted pixel is three.

Specifically, in a case where the generation target is the predicted pixel represented by the square that has number 1 assigned thereto and is the leftmost predicted pixel among four predicted pixels that are aligned in the horizontal direction, have 1/2 pixel positions in the horizontal direction, and have integer positions in the vertical direction, the reference image read unit 271 supplies a total of five reference pixels consisting of one on the left side of the predicted pixel and four on the right side of the predicted pixel, to the pixel generation unit 272. The pixel generation unit 272 replicates the leftmost reference pixel among the five reference pixels, to create one pixel in an integer position on the left side of the leftmost reference pixel. By doing so, the pixel generation unit 272 generates six post-replication generation pixels consisting of the one pixel and the five reference pixels supplied from the pixel generation unit 272.

In a case where the generation target is the second leftmost predicted pixel represented by the square having number 2 assigned thereto and is located on the inner side of the predicted pixel having number 1 assigned thereto, the same generation pixels as the six post-replication generation pixels corresponding to the predicted pixel represented by the square having number 1 assigned thereto are generated.

Further, in a case where the generation target is the rightmost predicted pixel represented by the square having number 4 assigned thereto, the reference image read unit 271 supplies a total of five reference pixels consisting of one on the right side of the predicted pixel and four on the left side of the predicted pixel, to the pixel generation unit 272. The pixel generation  unit 272 replicates the rightmost reference pixel among the five reference pixels, to create one pixel in an integer position on the right side of the rightmost reference pixel. By doing so, the pixel generation unit 272 generates six post- replication generation pixels consisting of the one pixel and the five reference pixels supplied from the pixel generation unit 272.

In a case where the generation target is the second rightmost predicted pixel represented by the square having number 3 assigned thereto and is located on the inner side of the predicted pixel having number 4 assigned thereto, the same generation pixels as the six post-replication generation pixels corresponding to the predicted pixel represented by the square having number 4 assigned thereto are generated.

As described above, in the inter prediction unit 24 shown in Fig. 71, the number of outer generation pixels for an outer predicted pixel is made smaller than the number of outer generation pixels for an inner predicted pixel, and reference pixels are replicated and are then used as generation pixels. Accordingly, the number of reference pixels that are aligned in the horizontal direction and are required in an inter prediction is five, which is smaller than seven in the case illustrated in Fig. 65. As a result, usage of memory bandwidth in the frame memory 22 can be further reduced. In the case illustrated in Fig. 65, however, the reference pixels in the positions of the outermost generation pixels are used in generating predicted pixels, and accordingly, predicted images can be generated with higher precision than in the case illustrated in Fig. 72.

In the inter prediction unit 24 shown in Fig. 71, the number of generation pixels for any predicted pixel is five. Accordingly, predicted images are generated with higher precision than in a case where the number of generation pixels corresponding to each outer predicted pixel is set at two so as to reduce the number of reference pixels that are aligned in the horizontal direction and are required in an inter prediction to five, which is the same as the number in the case of the inter prediction unit 24 shown in Fig. 71.

Although not shown in the drawings, in the example case illustrated in Fig. 71, the six post-replication generation pixels to be used in generating each of four predicted pixels that are aligned in the vertical direction, have 1/2 pixel positions in the vertical direction, and have integer positions in the horizontal direction are determined so that the number of outer reference pixels for each outermost predicted pixel or each of the uppermost and lowermost predicted pixels is one, and the number of outer reference pixels for each innermost predicted pixel is two.

Also, the reference pixels to be used in generating each of four predicted pixels that are aligned in the vertical direction and have 1/2 pixel positions in both the horizontal direction and the vertical direction are the reference pixels to be used in generating each of  such prediction- associated pixels that the number of outer prediction- associated pixels for each outermost predicted pixel is one, and the number of outer prediction- associated pixels for each innermost predicted pixel is two. Accordingly, the range of the reference pixels to be used in generating a predicted image of 4 x 4 pixels having 1/2 pixel positions in both the horizontal direction and the vertical direction is 5 x 5 pixels, which is smaller than 7 x 7 pixels in Fig. 65.

[Description of a Ninth Example of the Inter Prediction Operation]

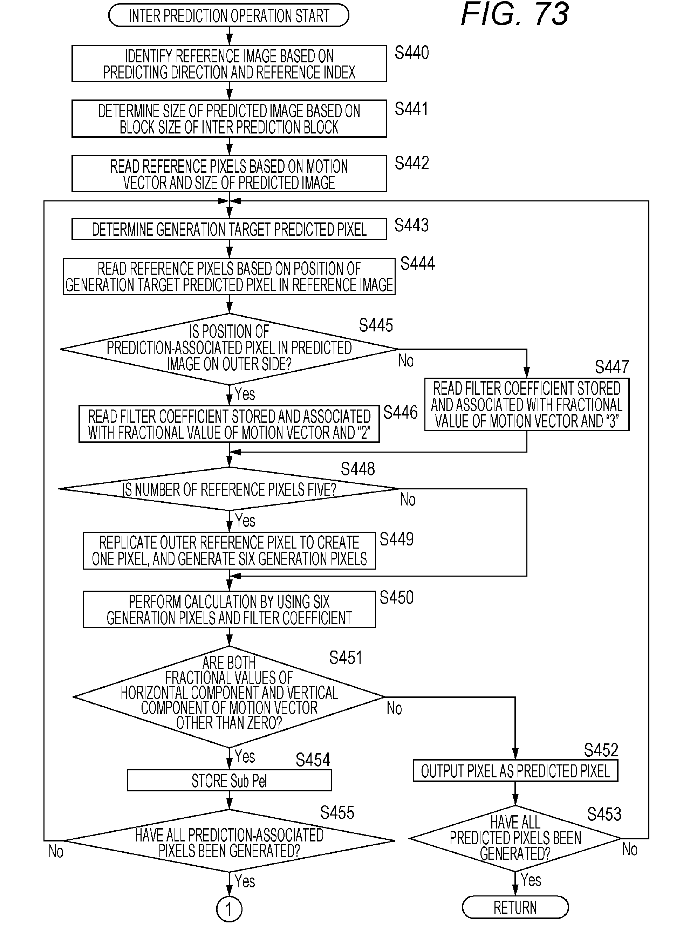

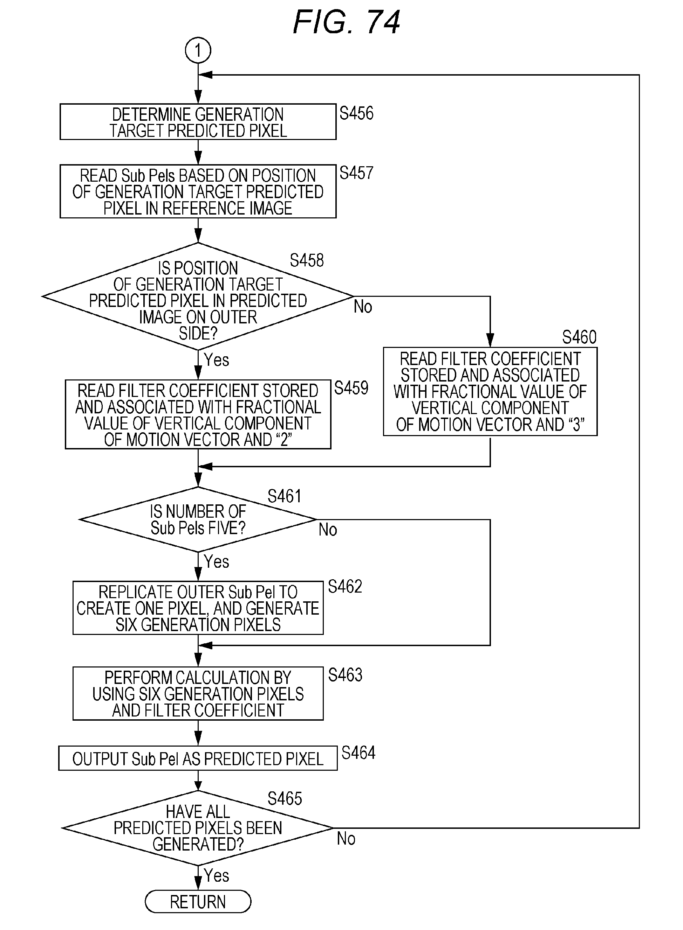

Figs. 73 and 74 show a flowchart for explaining, in detail, the inter prediction operation of step S15 of Fig. 20 to be performed by the inter prediction unit 24 of Fig. 71.

The procedures of steps S440 through S443 of Fig. 73 are the same as the procedures of steps S400 through S403 of Fig. 66, and therefore, explanation of them is not repeated herein. If there is more than one prediction-associated pixel, the procedures of steps S444 through S454 described below are carried out for each prediction-associated pixel.

In step S444, based on the position of the generation target predicted pixel in the reference image, the reference image read unit 271 reads the six reference pixels to be used in generating a prediction-associated pixel among the reference pixels stored in step S442. The reference image read unit 271 supplies the read  reference pixels as generation pixels to the pixel generation unit 272.

The procedures of steps S445 through S447 are the same as the procedures of steps S405 through S407 of Fig. 66, and therefore, explanation of them is not repeated herein.

In step S448, the pixel generation unit 272 determines whether the reference pixels supplied from the reference image read unit 271 is five. If the number of reference pixels is determined to be five in step S448, the operation moves on to step S449.

In step S449, the pixel generation unit 272 replicates an outer reference pixel among the five reference pixels supplied from the reference image read unit 271, to create one pixel in an integer position on the outer side of the outer reference pixel. By doing so, the pixel generation unit 272 generates six generation pixels consisting of the one pixel and the five reference pixels. The pixel generation unit 272 supplies the generated six generation pixels to the 6-tap FIR filter 45, and the operation then moves on to step S450.

If the number of reference pixels is determined not to be five in step S448, or if the number of reference pixels is six, the operation moves on to step S450.

The procedures of steps S450 through S456 are the same as the procedures of steps S408 through S414 of Figs. 66 and 67, and therefore, explanation of them is not repeated herein.

In step S457 of Fig. 74, the pixel generation unit 272 reads Sub pels as generation pixels from the intermediate result memory 50, based on the position of the generation target predicted pixel in the reference image.

The procedures of steps S458 through S460 are the same as the procedures of steps S416 through S418 of Fig. 67, and therefore, explanation of them is not repeated herein.

The procedures of steps S461 through S463 are the same as the procedures of steps S448 through S450 of Fig. 73, except that the procedures are carried out on Sub pels, instead of reference pixels. Therefore, explanation of those steps is not repeated herein.

The procedures of steps S464 and S465 are the same as the procedures of steps S420 and S421 of Fig. 67, and therefore, explanation of them is not repeated herein.

In the inter prediction unit 24 shown in Fig. 71, the number of generation pixels to be used in one calculation is six. However, the number of generation pixels is not limited to six. Also, the number of reference pixels among generation pixels is not limited to five or six. Further, in the inter prediction operation shown in Figs. 73 and 74, the number of outer generation pixels is a half of the total number of generation pixels or is one smaller than a half of the total number of generation pixels. However, the number of outer generation pixels is not limited to that.

[Other Example Post-Replication Generation Pixels]

Figs. 75 and 76 are diagrams showing example post-replication generation pixels in the inter prediction unit 24 shown in Fig. 71 in a case where the number of post-replication generation pixels is eight.

Fig. 75 shows example post-replication generation pixels to be used in generating respective four predicted pixels that are aligned in the horizontal direction, have 1/2 pixel positions in the horizontal direction, and have integer positions in the vertical direction in a case where the size of the inter prediction block is 4 x 4 pixels.

In the example illustrated in Fig. 75, each predicted pixel is generated by using eight post-replication generation pixels including seven reference pixels, the number of post-replication outer generation pixels for each outermost predicted pixel is three, and the number of post-replication outer generation pixels for each innermost predicted pixel is four.

Specifically, each of the predicted pixels represented by the squares that have numbers 1 and 4 assigned thereto and are located leftmost among the four predicted pixels that are aligned in the horizontal direction, have 1/2 pixel positions in the horizontal direction, and have integer positions in the vertical direction is generated by using three post-replication outer generation pixels located on the outer side of the predicted pixel and five reference pixels located on the inner side of the predicted pixel. The three post-replication outer generation pixels consist of two adjacent reference pixels on the outer side of the predicted pixel, and one pixel that is created by replicating the outermost reference pixel among those reference pixels and is located in an integer position on the outer side of the outermost reference pixel.

Each of the predicted pixels represented by the squares that have numbers 2 and 3 assigned thereto and are located on the inner sides of the predicted pixels represented by the squares having numbers 1 and 4 assigned thereto is generated by using four post-replication outer generation pixels located on the outer side of the predicted pixel and four reference pixels located on the inner side of the predicted pixel. The four post-replication outer generation pixels consist of three adjacent reference pixels on the outer side of the predicted pixel, and one pixel that is created by replicating the outermost reference pixel among those reference pixels and is located in an integer position on the outer side of the outermost reference pixel.

As described above, in the inter prediction unit 24 shown in Fig. 71, the number of outer generation pixels for an outer predicted pixel is made smaller than the number of outer generation pixels for an inner predicted pixel, and reference pixels are replicated and are then used as generation pixels. Accordingly, the number of reference pixels that are aligned in the horizontal direction and are required in an inter prediction is seven, which is smaller than nine in the case illustrated in Fig. 68. As a result, usage of memory bandwidth in the frame memory 22 can be further reduced. In the case illustrated in Fig. 68, however, the reference pixels in the positions of the outermost generation pixels are used in generating predicted pixels, and accordingly, predicted images can be generated with higher precision than in the case illustrated in Fig. 75.

As shown in Fig. 75, when the predicted pixels are Sub pels b, the filter coefficients that are to be used in generating the predicted pixels represented by the squares having numbers 1 and 4 assigned thereto and are associated with 1/2 as the fractional value of the motion vector and "3" as the number of outer generation pixels are -6, 36, 44, -16, 9, -5, 3, and -1 in the order from the outer side of the corresponding generation pixels, for example.

When the predicted pixels are Sub pels a, the filter coefficients that are to be used in generating the outermost predicted pixels and are associated with 1/4 as the fractional value of the motion vector and "3" as the number of outer generation pixels are -5, 54, 22, -10, 6, -4, 2, and -1 in the order from the outer side of the corresponding generation pixels, for example. When the predicted pixels are Sub pels c, the filter coefficients that are to be used in generating the outermost predicted pixels and are associated with 3/4 as the fractional value of the motion vector and "3" as the number of outer generation pixels are -3, 16, 60, -13, 7, -4, 2, and -1 in the order from the outer side of the corresponding generation pixels, for example.

Fig. 76 shows example post-replication generation pixels to be used in generating respective eight predicted pixels that are aligned in the horizontal direction, have 1/2 pixel positions in the horizontal direction, and have integer positions in the vertical direction in a case where the size of the inter prediction block is 8 x 8 pixels.

In the example illustrated in Fig. 76, each predicted pixel is generated by using eight post-replication generation pixels including seven or eight reference pixels, the number of post-replication outer generation pixels for each outermost predicted pixel is three, and the number of post-replication outer generation pixels for each innermost predicted pixel is four.

Specifically, each of the predicted pixels represented by the squares that have numbers 1 and 8 assigned thereto and are located outermost among the eight predicted pixels that are aligned in the horizontal direction, have 1/2 pixel positions in the horizontal direction, and have integer positions in the vertical direction is generated by using three post-replication outer generation pixels located on the outer side of the predicted pixel and five reference pixels located on the inner side of the predicted pixel. The three post-replication outer generation pixels consist of two adjacent reference pixels on the outer side of the predicted pixel, and one pixel that is created by replicating the outermost reference pixel among those reference pixels and is located in an integer position on the outer side of the outermost reference pixel.

Each of the second outermost predicted pixels represented by the squares that have numbers 2 and 7 assigned thereto and are located on the inner sides of the predicted pixels represented by the squares having numbers 1 and 8 assigned thereto is generated by using four post-replication generation pixels located on the outer side of the predicted pixel and four reference pixels located on the inner side of the predicted pixel. The four post-replication outer generation pixels consist of three adjacent reference pixels on the outer side of the predicted pixel, and one pixel that is created by replicating the outermost reference pixel among those reference pixels and is located in an integer position on the outer side of the outermost reference pixel.

Each of the predicted pixels represented by the squares that have numbers 3 through 6 assigned thereto and are located on the inner sides of the predicted pixels represented by the squares having numbers 2 and 7 assigned thereto is generated by using a total of eight generation pixels including four on each side of the predicted pixel.

As described above, in the inter prediction unit 24 shown in Fig. 71, the number of outer generation pixels for an outer predicted pixel is made smaller than the number of outer generation pixels for an inner predicted pixel, and reference pixels are replicated and are then used as generation pixels. Accordingly, the number of reference pixels that are aligned in the horizontal direction and are required in an inter prediction is 11, which is smaller than 13 in the case of A of Fig. 69. As a result, usage of memory bandwidth in the frame memory 22 can be further reduced. In the case of A of Fig. 69, however, the reference pixels in the positions of the outermost generation pixels are used in generating predicted pixels, and accordingly, predicted images can be generated with higher precision than in the case illustrated in Fig. 76.

Although not shown in the drawings, in the example cases illustrated in Figs 75 and 76, the reference pixels for predicted pixels that have integer positions in the horizontal direction and have fractional positions in the vertical direction are determined so that the number of post-replication outer generation pixels for each outermost predicted pixel becomes smaller than the number of post-replication outer generation pixels for each innermost predicted pixel, like the reference pixels shown in Figs. 75 and 76.

Also, the reference pixels to be used in generating each of four predicted pixels that are aligned in the vertical direction and have 1/2 pixel positions in both the horizontal direction and the vertical direction are the reference pixels to be used in generating prediction-associated pixels included in such post-replication generation pixels that the number of post-replication outer generation pixels for each outermost predicted pixel is smaller than the number of post-replication outer generation pixels for each innermost predicted pixel, like the reference pixels shown in Figs. 75 and 76.

Although not shown in the drawings, when the encoding device 10 includes the inter prediction unit 24 of Fig. 64 or 71, the inter prediction unit 111 of the decoding device 100 also has the same structure as the inter prediction unit 24 of Fig. 64 or 71.

In a case where the predicting direction is of a bidirectional prediction in the above described inter prediction operation, a predicted image generated from a reference image to be displayed earlier than the inter prediction target image and a predicted image generated from a reference image to be displayed later than the inter prediction target image are averaged pixel by pixel, and the result is output to the selection unit 26.

[Tenth Example Structure of the Inter Prediction Unit]

Fig. 77 is a block diagram showing a tenth example structure of the inter prediction unit 24 shown in Fig. 3.

Of the components shown in Fig. 77, the same components as those in Fig. 64 are denoted by the same reference numerals as those in Fig. 64. The explanations that have already been made will not be repeated.

The structure of the inter prediction unit 24 shown in Fig. 77 differs from the structure shown in Fig. 64 mainly in that the reference image read unit 251, the pixel output unit 252, the 6-tap FIR filter 45, the 6-tap filter coefficient memory 253, and the pixel selection unit 162 are replaced with a reference image read unit 291, a pixel sorter unit 292, an 8-tap FIR filter 293, a 4-tap FIR filter 294, an 8-tap filter coefficient memory 295, a 4-tap filter coefficient memory 296, and a pixel selection unit 297.

In a case where predicted pixels have fractional positions in the horizontal direction and the vertical direction, the inter prediction unit 24 shown in Fig. 77 determines the generation pixels to be used in generating each of the predicted pixels so that the number of outer generation pixels aligned in the vertical direction becomes smaller than the number of outer generation pixels aligned in the horizontal direction.

Specifically, like the reference image read unit 251 shown in Fig. 64, the reference image read unit 291 of the inter prediction unit 24 identifies the reference image among the images stored in the frame memory 22, based on the reference index and the predicting direction contained in the inter prediction mode information. Based on the block size contained in the inter prediction mode information and the integer value of the motion vector, the reference image read unit 291 reads, from the frame memory 22, the reference pixels to be used in generating a predicted image, and temporarily stores those reference pixels, like the reference image read unit 251.

The reference image read unit 291 functions as a pixel read unit, and, for each predicted pixel, reads the eight reference pixels to be used in generating the predicted pixel among the temporarily stored reference pixels. In doing so, the reference image read unit 291 determines eight reference pixels for each predicted pixel so that the number of reference pixels located on the outer side of an outer predicted pixel among the reference pixels for the outer predicted pixel becomes smaller than the number of reference pixels located on the outer side of an inner predicted pixel among the reference pixels for the inner predicted pixel. The reference image read unit 251 then reads the eight reference pixels. The reference image read unit 291 then supplies the read eight reference pixels to the pixel sorter unit 292.

Like the pixel output unit 252 shown in Fig. 64, the pixel sorter unit 292 sets the reference pixels supplied from the reference image read unit 291 as generation pixels. Based on the fractional value of the motion vector supplied from the motion prediction unit 25, the pixel sorter unit 292 also reads, from the intermediate result memory 50, four Sub pels corresponding to the generation target predicted pixel as generation pixels. In doing so, the pixel sorter unit 292 determines four Sub pels as generation pixels for each predicted pixel so that the number of Sub pels to be the outer generation pixels for an outer predicted pixel becomes smaller than the number of Sub pels to be the outer generation pixels for an inner predicted pixel. The pixel sorter unit 292 then reads the four Sub pels. The pixel sorter unit 292 also supplies the eight generation pixels to the 8-tap FIR filter 293, and supplies the four generation pixels to the 4-tap FIR filter 294.

The 8-tap FIR filter 293 functions as an arithmetic operation unit, and performs a calculation by using the eight generation pixels supplied from the pixel sorter unit 292 and filter coefficients supplied from the 8-tap filter coefficient memory 295. The 8-tap FIR filter 293 supplies the resultant one pixel to the pixel selection unit 297.

The 4-tap FIR filter 294 functions as an arithmetic operation unit, and performs a calculation by using the four generation pixels supplied from the pixel sorter unit 292 and filter coefficients supplied from the 4-tap filter coefficient memory 296. The 4-tap FIR filter 294 supplies the resultant one pixel to the pixel selection unit 297.

The 8-tap filter coefficient memory 295 stores filter coefficients for the 8-tap FIR filter 293 associated with fractional values of motion vectors and the numbers of outer generation pixels. Based on the fractional value of the motion vector supplied from the motion prediction unit 25 and the position of the generation target predicted pixel in the predicted image, the 8-tap filter coefficient memory 295 supplies the filter coefficients stored and associated with the fractional value and the number of outer generation pixels corresponding to the position, to the 8-tap FIR filter 293.

The 4-tap filter coefficient memory 296 stores filter coefficients for the 4-tap FIR filter 294 associated with fractional values of motion vectors and the numbers of outer generation pixels. Based on the fractional value of the motion vector supplied from the motion prediction unit 25 and the position of the generation target predicted pixel in the predicted image, the 4-tap filter coefficient memory 296 supplies the filter coefficients stored and associated with the fractional value and the number of outer generation pixels corresponding to the position, to the 4-tap FIR filter 294.

Based on the fractional value of the motion vector supplied from the motion prediction unit 25, the pixel selection unit 297 outputs a predicted pixel that is a pixel supplied from the 8-tap FIR filter 293 or the 4-tap FIR filter 294 to the selection unit 26 shown in Fig. 3, or supplies the predicted pixel to the intermediate result memory 50, like the pixel selection unit 162 shown in Fig. 64.

[Example Reference Pixels]

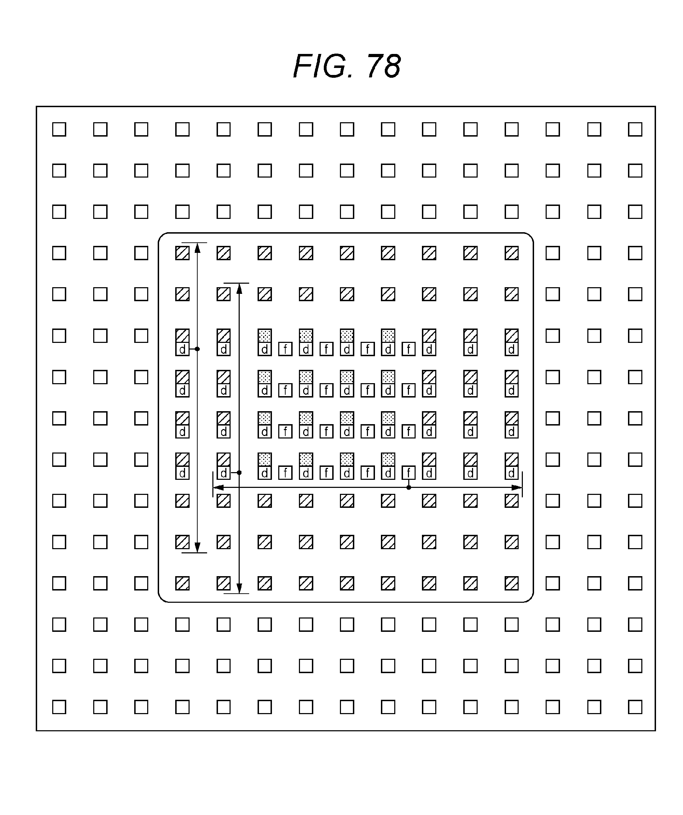

Fig. 78 is a diagram showing example reference pixels in a case where the number of outer generation pixels aligned in the horizontal direction is the same as the number of outer generation pixels aligned in the vertical direction.

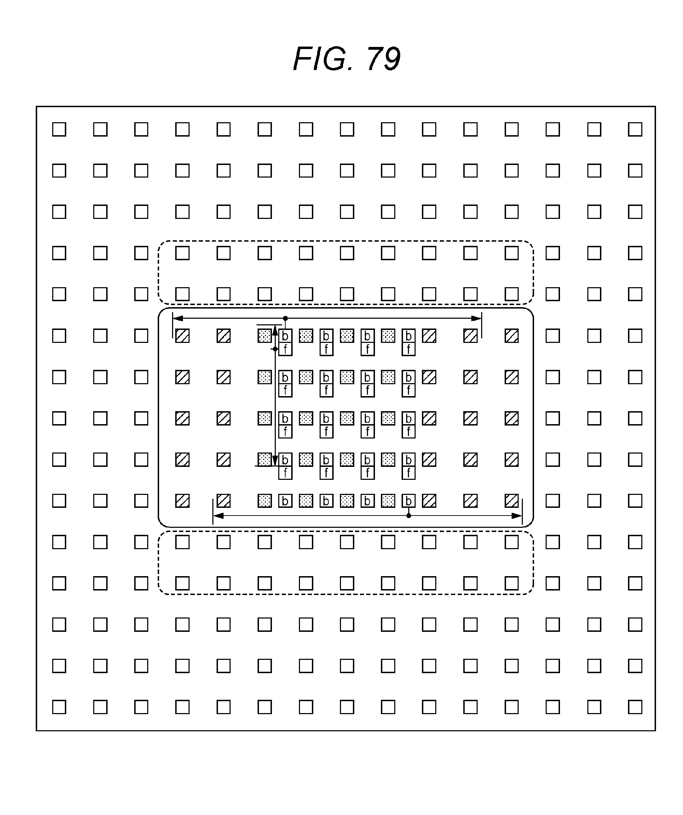

In the example illustrated in Fig. 78, the size of the inter prediction block is 4 x 4 pixels, and the predicted pixels are Sub pels f, which have 1/2 pixel positions in the horizontal direction and 1/2 pixel positions in the vertical direction. The same applies to Fig. 79 described later.

In Fig. 78, the squares having "f" assigned thereto represent Sub pels f as the predicted pixels, and the squares having "d" assigned thereto represent Sub pels d. The squares without alphabetical characters represent reference pixels. Further, each dotted square represents a reference pixel located within the range of the size of the inter prediction block among the reference pixels to be used in generating the predicted pixels, and each shaded square represents a reference pixel outside the range of the size of the inter prediction block. The same applies to Fig. 79 described later.

Further, in the example illustrated in Fig. 78, the number of outer generation pixels for each outermost predicted pixel is three, and the number of outer generation pixels for each innermost predicted pixel is four. The number of generation pixels for each predicted pixel is eight.

First, in this case, 9 x 4 Sub pels d corresponding to the 4 x 4 predicted pixels are each generated as a prediction-associated pixel by using eight reference pixels aligned in the vertical direction, as shown in Fig. 78. At this point, the number of outer generation pixels for each outer Sub pel d is three, and the number of outer generation pixels for each inner Sub pel d is four. Accordingly, the number of reference pixels to be used in generating the 9 x 4 Sub pels d is 81 (= 9 x 9) .

Next, the Sub pels f as the 4 x 4 predicted pixels are each generated by using eight Sub pels d aligned in the horizontal direction among the 9 x 4 Sub pels d as the prediction- associated pixels. Specifically, each outer Sub pel f is generated by using three Sub pels d as outer generation pixels aligned in the horizontal direction and five Sub pels d as generation pixels that are located on the inner side of the Sub pel f and are aligned in the horizontal direction. On the other hand, each inner Sub pel f is generated by using four Sub pels d as outer generation pixels aligned in the horizontal direction and four Sub pels d as generation pixels that are located on the inner side of the Sub pel f and are aligned in the horizontal direction.

Therefore, when the predicting direction is "L0 prediction" or "L1 prediction" in the example case illustrated in Fig. 78, 9 x 9 reference pixels are necessary to generate the 4 x 4 Sub pels f. Also, filtering needs to be performed 36 (= 9 x 4) times to generate the Sub pels d, and filtering needs to be performed 16 (= 4 x 4) times to generate the Sub pels f by using the Sub pels d.

When the predicting direction is "Bi-prediction", twice as many reference pixels as 9 x 9 pixels are necessary to generate the 4 x 4 Sub pels f as predicted pixels. Also, filtering needs to be performed 72 (= 9 x 4 x 2) times to generate the Sub pels d, and filtering needs to be performed 32 (= 4 x 4 x 2) times to generate the Sub pels f.

In view of this, the inter prediction unit 24 shown in Fig. 77 reads reference pixels so that the number of outer generation pixels aligned in the vertical direction becomes smaller than the number of outer generation pixels aligned in the horizontal direction. As a result, the number of reference pixels and the number of times filtering is performed are reduced.

Fig. 79 is a diagram showing example reference pixels in the inter prediction unit 24 shown in Fig. 77.

In the example illustrated in Fig. 79, the number of outer generation pixels that are to be used for an outermost predicted pixel and are aligned in the horizontal direction is three, and the number of outer generation pixels that are to be used for an innermost predicted pixel and are aligned in the horizontal direction is four. On the other hand, the number of outer generation pixels that are to be used for an outermost predicted pixel and are aligned in the vertical direction is one, and the number of outer generation pixels that are to be used for an innermost predicted pixel and are aligned in the vertical direction is two.

As shown in Fig. 79, the inter prediction unit 24 first generates prediction-associated pixels that are 4 x 5 Sub pels b corresponding to 4 x 4 predicted pixels, by using eight reference pixels aligned in the horizontal direction for each Sub pel b. At this point, the number of outer generation pixels for each outer Sub pel b is three, and the number of outer generation pixels for each inner Sub pel b is four. Accordingly, the number of reference pixels to be used in generating the 4 x 5 Sub pels b is 45 (= 9 x 5).

The inter prediction unit 24 next generates each of the Sub pels f that are the 4 x 4 predicted pixels, by using four Sub pels b aligned in the vertical direction among the 4 x 5 Sub pels b serving as the prediction-associated pixels. Specifically, the inter prediction unit 24 generates an outer Sub pel f by using one Sub pel b as an outer generation pixel and three Sub pels b as generation pixels that are located on the inner side the Sub pel f and are aligned in the vertical direction. The inter prediction unit 24 also generates an inner Sub pel f by using two Sub pels b as an outer generation pixels aligned in the vertical direction and two Sub pels b as generation pixels that are located on the inner side of the Sub pel f and are aligned in the vertical direction.

Accordingly, in the example case illustrated in Fig. 79, when the predicting direction is "L0 prediction" or "L1 prediction", the number of reference pixels necessary for generating the 4 x 4 Sub pels f as predicted pixels is 9 x 5, and the number of reference pixels aligned in the vertical direction is reduced, compared with the case illustrated in Fig. 78. Also, the number of times filtering needs to be performed to generate the Sub pels b is 20 (= 4 x 5), and the number of times filtering needs to be performed to generate the Sub pels f by using the Sub pels b is 16 (= 4 x 4) . Accordingly, the number of times filtering needs to be performed to generate the predicted pixels can be made smaller than that in the case illustrated in Fig. 78.

When the predicting direction is "Bi-prediction", the number of reference pixels necessary for generating the 4 x 4 Sub pels f as predicted pixels is reduced to twice as large as 9 x 5. Also, the number of times filtering needs to be performed to generate the Sub pels b is 40 (= 4 x 5x 2), and the number of times filtering needs to be performed to generate the Sub pels f by using the Sub pels b is 32 (= 4 x 4x 2). Accordingly, as in the case where the predicting direction is "L0 prediction" or "L1 prediction", the number of times filtering needs to be performed to generate the predicted pixels can be made smaller than that in the case illustrated in Fig. 78.

[Example Layout of Pixel Values in the Frame Memory]

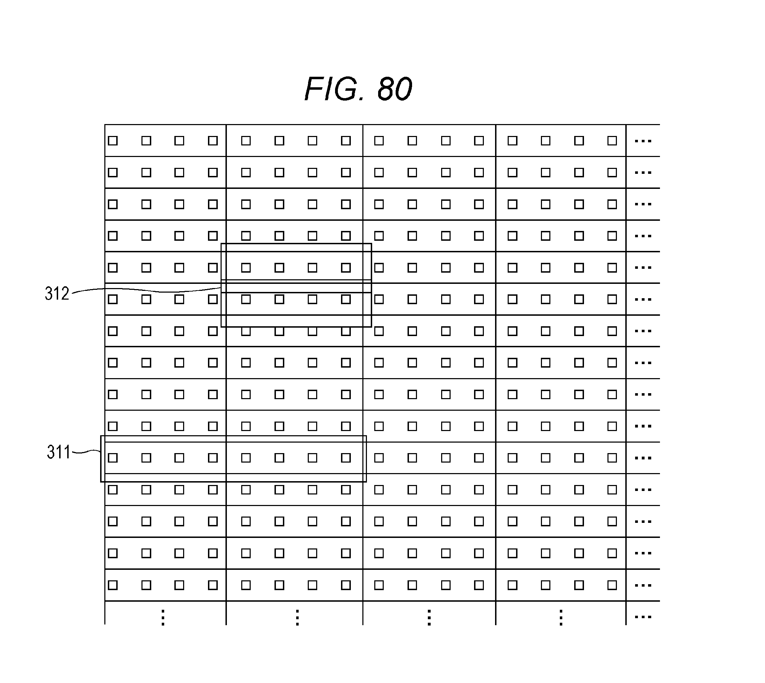

Fig. 80 is a diagram showing an example layout of the pixel values of one frame in the frame memory 22.

In Fig. 80, each square represents a pixel value.

The frame memory 22 is formed with a DRAM (Dynamic Random Access Memory) having a bus width of 32 bits. As shown in Fig. 80, the frame memory 22 assigns an address to each group of four pixels aligned in the horizontal direction so that the addresses assigned to the groups of pixels aligned in the horizontal direction are consecutive addresses. The frame memory 22 stores the 32-bit pixel values of each group of pixels associated with the address assigned to the group of pixels. Accordingly, the pixel values of a group of pixels corresponding to a single address are read in a single access to the frame memory 22.

By reducing the number of reference pixels that are to be used in generating predicted pixels and are aligned in the vertical direction, the number of accesses can be more effectively lowered than in a case where the number of reference pixels aligned in the horizontal direction is reduced. That is, an access unit in the frame memory 22 is a group of four pixels aligned in the horizontal direction. Therefore, the number of reference pixels that are to be used in generating predicted pixels and are aligned in the horizontal direction is not equal to the number of accesses, and there is a possibility that the number of accesses is not changed by reducing the number of reference pixels aligned in the horizontal direction. On the other hand, the number of reference pixels that are to be used in generating predicted pixels and are aligned in the vertical direction is equal to the number of accesses, and accordingly, the number of accesses can be effectively lowered by reducing the number of reference pixels aligned in the vertical direction.

In a case where there is a burst access to the frame memory 22, pixel values corresponding to consecutive addresses can be efficiently read with smaller memory bandwidth. Accordingly, the eight pixel values that are surrounded by a rectangle 311 and correspond to two consecutive addresses, or eight pixel values aligned in the horizontal direction, can be efficiently read in a burst access with smaller memory bandwidth. However, the eight pixel values that are surrounded by a rectangle 312 and correspond to two inconsecutive addresses, or eight pixel values aligned in the vertical direction, cannot be efficiently read in a burst access with smaller memory bandwidth.

In view of the above, when predicted pixels have fractional positions in the horizontal direction and the vertical direction, the inter prediction unit 24 shown in Fig. 77 reduces the number of reference pixels that are to be used in generating the predicted pixels and are aligned in the vertical direction, by reducing the number of outer generation pixels aligned in the vertical direction to a smaller number than the number of outer generation pixels aligned in the horizontal direction. As a result, the number of accesses to the frame memory 22 can be efficiently lowered. Also, memory bandwidth at the time of a burst access can be reduced.

Further, as the number of reference pixels that are to be used in generating predicted pixels and are aligned in the horizontal direction is not reduced, decreases in predicted image precision and encoding efficiency can be prevented.

[Description of a Tenth Example of the Inter Prediction Operation]

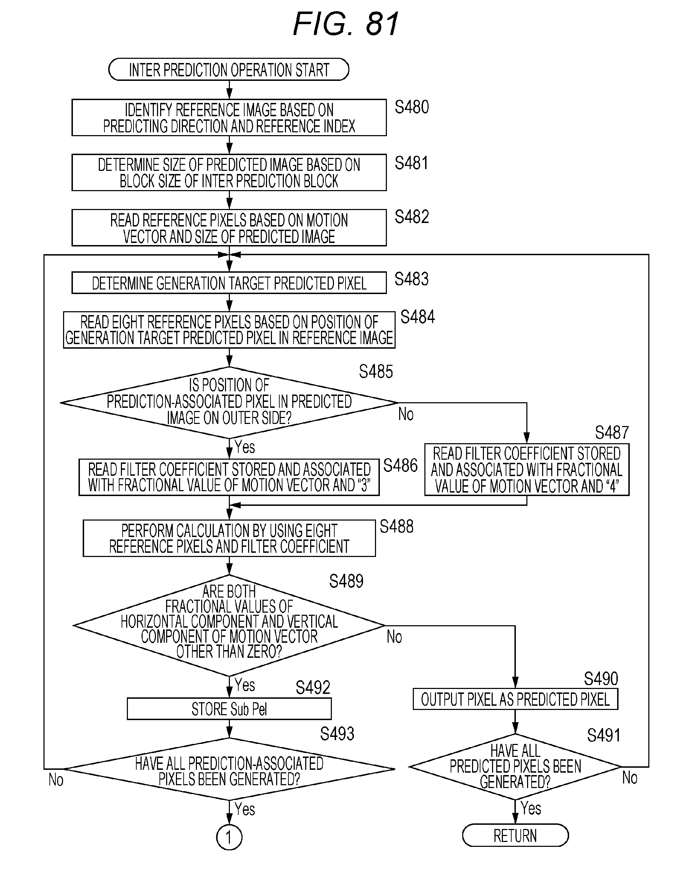

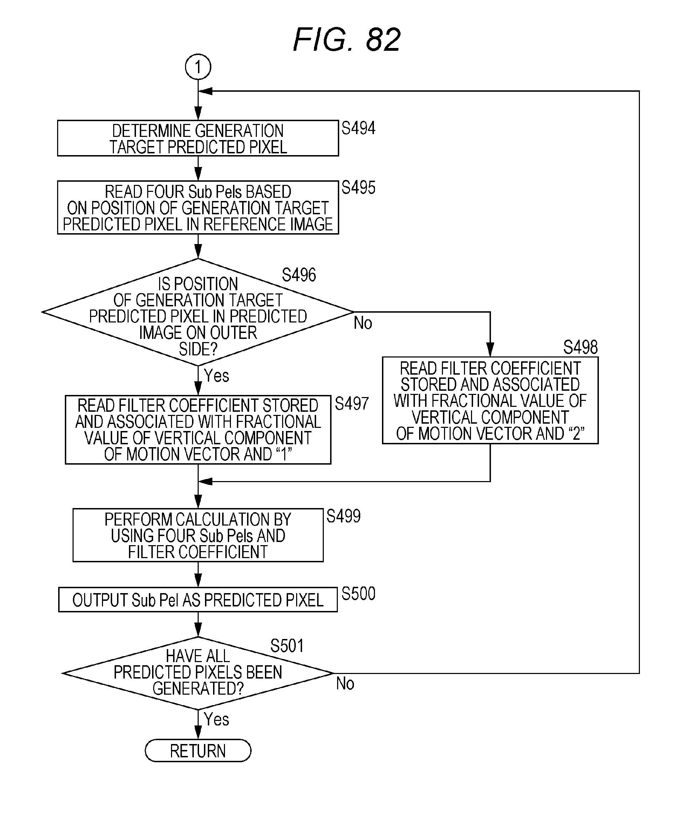

Figs. 81 and 82 show a flowchart for explaining, in detail, the inter prediction operation of step S15 of Fig. 20 to be performed by the inter prediction unit 24 of Fig. 77.

The procedures of steps S480 through S483 of Fig. 81 are the same as the procedures of steps S400 through S403 of Fig. 66, and therefore, explanation of them is not repeated herein. If there is more than one prediction-associated pixel, the procedures of steps S484 through S492 described below are carried out for each prediction-associated pixel.

In step S484, based on the position of the generation target predicted pixel in the reference image, the reference image read unit 291 reads the eight reference pixels to be used in generating a prediction-associated pixel among the reference pixels stored in step S482. When the predicted pixel has a fractional position in the horizontal direction and in the vertical direction, the prediction-associated pixel is a pixel having a fractional position in the horizontal direction. The reference image read unit 291 then supplies the read eight reference pixels as generation pixels to the pixel sorter unit 292.

In step S485, the 8-tap filter coefficient memory 295 determines whether the position of the prediction-associated pixel in the predicted image is on an outer side. If the position of the prediction-associated pixel in the predicted image is determined to be on an outer side in step S485, the 8-tap filter coefficient memory 295 sets the number of outer generation pixels at three, which is smaller than four or a half of eight, which is the total number of generation pixels. The operation then moves on to step S486.

In step S486, the 8-tap filter coefficient memory 295 reads the filter coefficients stored and associated with the fractional value of the motion vector and "3" as the number of outer generation pixels, and supplies the filter coefficients to the 8-tap FIR filter 293. The operation then moves on to step S488.

If the position of the prediction-associated pixel in the predicted image is determined not to be on an outer side in step S485, on the other hand, the 8-tap filter coefficient memory 295 sets the number of outer generation pixels at four or a half of eight, which is the total number of generation pixels. The operation then moves on to step S487.

In step S487, the 8-tap filter coefficient memory 295 reads the filter coefficients stored and associated with the fractional value of the motion vector and "4" as the number of outer generation pixels, and supplies the filter coefficients to the 8-tap FIR filter 293. The operation then moves on to step S488.

In step S488, the 8-tap FIR filter 293 performs a calculation by using the eight reference pixels as generation pixels supplied from the pixel sorter unit 292 and the filter coefficients supplied from the 8-tap filter coefficient memory 295. The 8-tap FIR filter 293 supplies the resultant one prediction-associated pixel to the pixel selection unit 297.

The procedures of steps S489 through S494 are the same as the procedures of steps S409 through S414 of Figs. 66 and 67, and therefore, explanation of them is not repeated herein.

In step S495, the pixel sorter unit 292 reads four Sub pels as generation pixels from the intermediate result memory 50, based on the position of the generation target predicted pixel in the reference image.

In step S496, the 4-tap filter coefficient memory 296 determines whether the position of the generation target predicted pixel in the predicted image is on an outer side. If the position of the generation target predicted pixel in the predicted image is determined to be on an outer side in step S496, the 4-tap filter coefficient memory 296 sets the number of outer generation pixels at one, which is smaller than two or a half of four, which is the total number of generation pixels. The operation then moves on to step S497.

In step S497, the 4-tap filter coefficient memory 296 reads the filter coefficients stored and associated with the fractional value of the vertical component of the motion vector and "1" as the number of outer generation pixels, and supplies the filter coefficients to the 4-tap FIR filter 294. The operation then moves on to step S499.

If the position of the generation target predicted pixel in the predicted image is determined not to be on an outer side in step S496, on the other hand, the 4-tap filter coefficient memory 296 sets the number of outer generation pixels at two or a half of four, which is the total number of generation pixels. The operation then moves on to step S498.

In step S498, the 4-tap filter coefficient memory 296 reads the filter coefficients stored and associated with the fractional value of the vertical component of the motion vector and "2" as the number of outer generation pixels, and supplies the filter coefficients to the 4-tap FIR filter 294. The operation then moves on to step S499.

In step S499, the 4-tap FIR filter 294 performs a calculation by using the four Sub pels as generation pixels supplied from the pixel sorter unit 292 and the filter coefficients supplied from the 4-tap filter coefficient memory 296. The 4-tap FIR filter 294 supplies the resultant one Sub pel to the pixel selection unit 297.

The procedures of steps S500 and S501 are the same as the procedures of steps S420 and S421 of Fig. 67, and therefore, explanation of them is not repeated herein.

As described above, the inter prediction unit 24 shown in Fig. 77 reduces the number of reference pixels that are to be used in generating the predicted pixels and are aligned in the vertical direction, by reducing the number of outer generation pixels aligned in the vertical direction to a smaller number than the number of outer generation pixels aligned in the horizontal direction. As a result, the number of accesses to the frame memory 22 can be lowered, and memory bandwidth at the time of a burst access can be reduced.

Also, when predicted pixels have fractional positions in the horizontal direction and in the vertical direction, the inter prediction unit 24 shown in Fig. 77 sets the prediction- associated pixels that are pixels having fractional positions in the horizontal direction. That is, after generating prediction- associated pixels having the same position as a predicted pixel in the horizontal direction by using reference pixels, the inter prediction unit 24 shown in Fig. 77 generates the predicted pixel by using the prediction- associated pixels. Accordingly, the number of times filtering is performed can be made smaller than that in a case where prediction- associated pixels have fractional positions in the vertical direction.

In a case where prediction-associated pixels are pixels having fractional positions in the vertical direction, for example, under the same conditions as those in the example illustrated in Fig. 79, the number of prediction-associated pixels is 9 x 4, and the number of times filtering needs to be performed to generate the prediction-associated pixels is 36 (= 9 x 4). In a case where prediction-associated pixels are pixels having fractional positions in the horizontal direction, on the other hand, the number of prediction-associated pixels is 4 x 5 as shown in Fig. 79, and the number of times filtering needs to be performed to generate the prediction-associated pixels is 20 (= 4 x 5), which is smaller than 36.

In the inter prediction unit 24 shown in Fig. 77, when each predicted pixel has a fractional position in the horizontal direction and the vertical direction, the number of outer generation pixels aligned in the vertical direction is made smaller than the number of outer generation pixels aligned in the horizontal direction. However, the number of outer generation pixels aligned in the vertical direction may also be made smaller than the number of outer generation pixels aligned in the horizontal direction when each predicted pixel has an integer position in the horizontal direction and a fractional position in the vertical direction.

In the inter prediction unit 24 shown in Fig. 77, the number of outer generation pixels aligned in the vertical direction is made smaller than the number of outer generation pixels aligned in the horizontal direction. In a case where each single address is associated with pixels aligned in the vertical direction in the frame memory 22, however, the number of outer generation pixels aligned in the horizontal direction is made smaller than the number of outer generation pixels aligned in the vertical direction.

In the inter prediction unit 24 shown in Fig. 77, the number of outer generation pixels aligned in the vertical direction is made smaller than the number of outer generation pixels aligned in the horizontal direction for all macroblocks. However, this may be applied only to B- slice macroblocks.

In such a case, the number of reference pixels that are to be used in generating predicted pixels and are aligned in the vertical direction can be reduced in each B-slice macroblock in which the number of reference image frames is two, and the number of reference pixels might increase. As a result, the number of accesses to the frame memory 22 can be lowered, and memory bandwidth at the time of a burst access can be reduced. Meanwhile, the number of reference pixels that are to be used in generating predicted pixels and are aligned in the vertical direction is not reduced in non-B-slice macroblocks in which the number of reference image frames is one. Accordingly, decreases in predicted image precision can be prevented. Further, the number of outer generation pixels aligned in the vertical direction varies slice by slice. Accordingly, variation control is easier than in a case where such variations are made based on the predicting direction and the like.

Alternatively, the number of outer generation pixels aligned in the vertical direction may be made smaller than the number of outer generation pixels aligned in the horizontal direction only when the predicting direction is "Bi- prediction". In such a case, the number of reference pixels that are to be used in generating predicted pixels and are aligned in the vertical direction can be reduced in each macroblock in which the predicting direction is "Bi- prediction", and the number of reference image frames is two. As a result, the number of accesses to the frame memory 22 can be lowered, and memory bandwidth at the time of a burst access can be reduced. Meanwhile, the number of reference pixels that are to be used in generating predicted pixels and are aligned in the vertical direction is not reduced in macroblocks in which the predicting direction is other than "Bi- prediction", and the number of reference image frames is one. Accordingly, decreases in predicted image precision can be prevented. Likewise, the number of outer generation pixels aligned in the vertical direction may be made smaller than the number of outer generation pixels aligned in the horizontal direction only when the size of the inter prediction block is larger than a predetermined size.

Although the number of generation pixels aligned in the vertical direction is made smaller than the number of generation pixels aligned in the horizontal direction by the inter prediction unit 24 shown in Fig. 77, the number of generation pixels aligned in the horizontal direction and the number of generation pixels aligned in the vertical direction may be the same.

Although not shown in the drawings, in the inter prediction unit 24 of any of Figs. 4, 26, 30, 44, 48, 52, 61, and 71, the number of outer generation pixels aligned in the vertical direction can be made smaller than the number of outer generation pixels aligned in the horizontal direction, as in the inter prediction unit 24 shown in Fig. 77. In this case, in the inter prediction unit 24 of any of Figs. 4, 26, 30, 44, 48, 52, and 61, the number of generation pixels aligned in the vertical direction becomes smaller than the number of generation pixels aligned in the horizontal direction.

[Eleventh Example Structure of the Inter Prediction Unit]

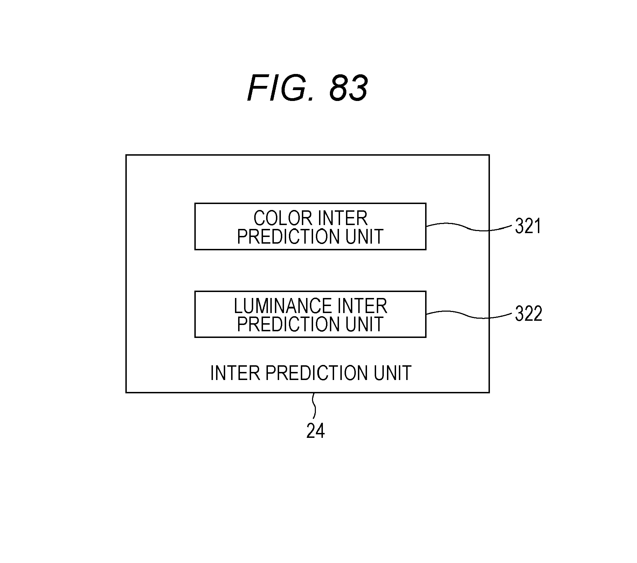

Fig. 83 is a block diagram showing an eleventh example structure of the inter prediction unit 24 shown in Fig. 3.

The inter prediction unit 24 shown in Fig. 83 includes a color inter prediction unit 321 and a luminance inter prediction unit 322. Based on the block size and the predicting direction contained in the inter prediction mode information, and the fractional value of the motion vector, the inter prediction unit 24 shown in Fig. 83 determines the number of generation pixels to be used in generating color components and luminance components of respective predicted pixels.

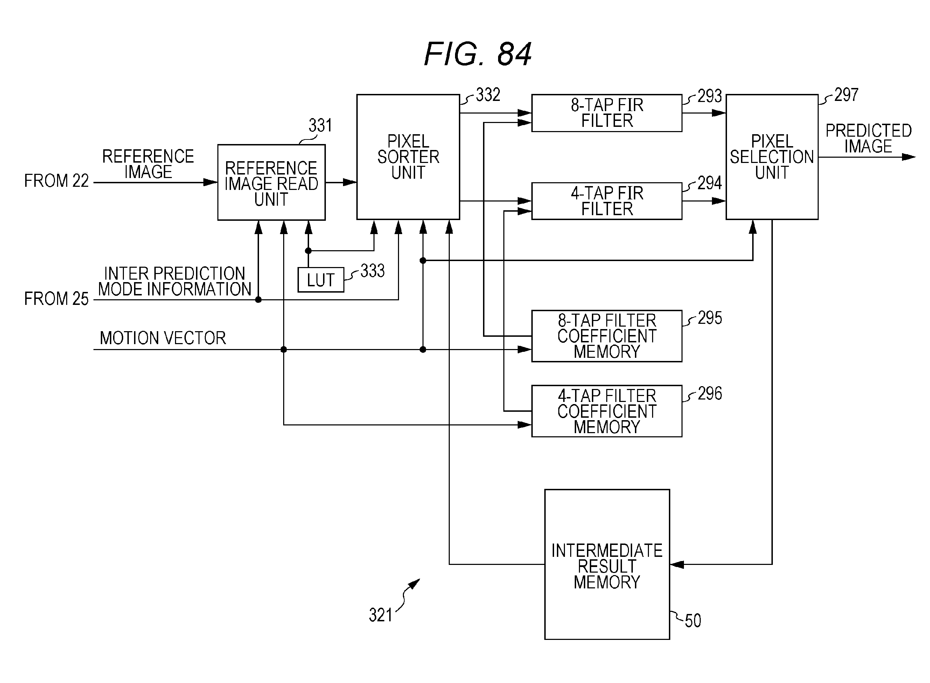

Specifically, the color inter prediction unit 321 of the inter prediction unit 24 shown in Fig. 83 generates and outputs color components of respective predicted pixels, based on a reference image supplied from the frame memory 22 and inter prediction mode information and a motion vector supplied from the motion prediction unit 25. The color inter prediction unit 321 will be described later in detail, with reference to Fig. 84.

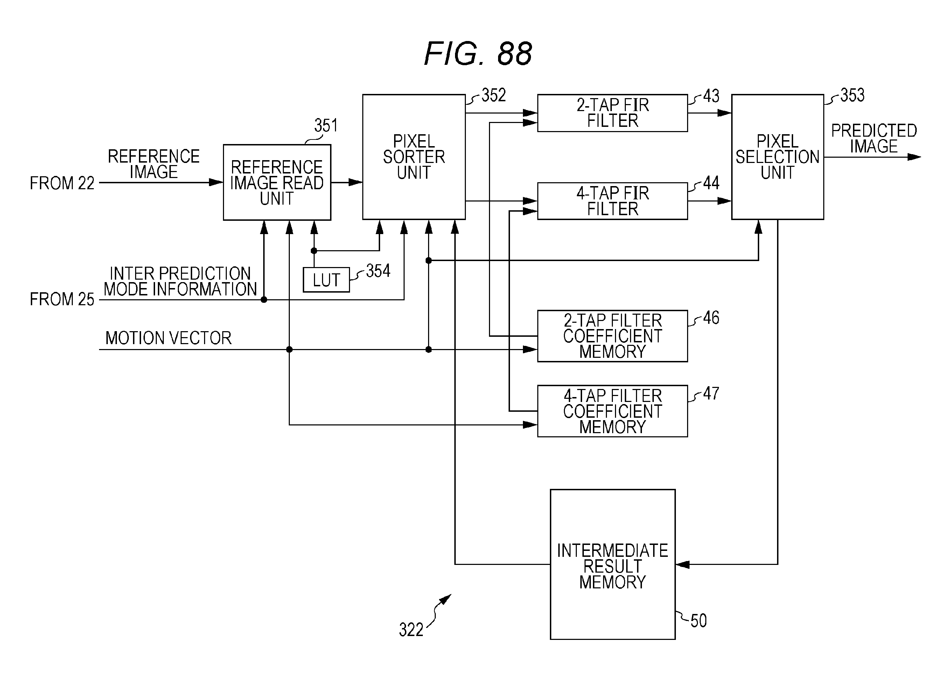

The luminance inter prediction unit 322 generates and outputs luminance components of the respective predicted pixels, based on the reference image supplied from the frame memory 22 and the inter prediction mode information and the motion vector supplied from the motion prediction unit 25. The luminance inter prediction unit 322 will be described later in detail, with reference to Fig. 88.

[Example Structure of the Color Inter Prediction Unit]

Fig. 84 is a block diagram showing an example structure of the color inter prediction unit 321 shown in Fig. 83.

Of the components of the color inter prediction unit 321 shown in Fig. 84, the same components as those in Fig. 77 are denoted by the same reference numerals as those in Fig. 77. The explanations that have already been made will not be repeated.

The structure of the color inter prediction unit 321 shown in Fig. 84 differs from the structure shown in Fig. 77 mainly in that the reference image read unit 291 and the pixel sorter unit 292 are replaced with a reference image read unit 331 and a pixel sorter unit 332, and an LUT (Look Up Table) 333 is newly added.

Like the reference image read unit 291 shown in Fig. 77, the reference image read unit 331 of the inter prediction unit 24 shown in Fig. 84 identifies the reference image among the images stored in the frame memory 22, based on the reference index and the predicting direction contained in the inter prediction mode information. The reference image read unit 331 also reads, from the LUT 333, the numbers of generation pixels in the horizontal direction and the vertical direction in accordance with the block size and the predicting direction contained in the inter prediction mode information and the fractional value of the motion vector.

Based on the numbers of generation pixels in the horizontal direction and the vertical direction, the block size contained in the inter prediction mode information, and the integer value of the motion vector, the reference image read unit 331 reads, from the frame memory 22, the color components of the reference pixels to be used in generating the color components of a predicted image. The reference image read unit 331 then temporarily stores the read color components of the reference pixels.

For each predicted pixel, the reference image read unit 331 reads the color components of four or eight reference pixels as the generation pixels to be used in generating the color component of the predicted pixel among the temporarily stored color components of the reference pixels, based on the number of generation pixels in the horizontal direction or the vertical direction. The reference image read unit 331 supplies the read color components of the four or eight reference pixels to the pixel sorter unit 332.

The pixel sorter unit 332 sets the color components of the reference pixels supplied from the reference image read unit 331 as the color components of generation pixels. The pixel sorter unit 332 also reads, from the LUT 333, the number of generation pixels in the vertical direction in accordance with the block size and the predicting direction contained in the inter prediction mode information supplied from the motion prediction unit 25, and the fractional value of the motion vector.

Based on the number of generation pixels in the vertical direction, the pixel sorter unit 332 reads, from the intermediate result memory 50, the color components of generation pixels that are the color components of four or eight Sub pels, four or eight being the number of generation pixels that are to be used in generating the color component of the generation target predicted pixel and are aligned in the vertical direction. The pixel sorter unit 332 also supplies the color components of the eight generation pixels to the 8-tap FIR filter 293, and supplies the color components of the four generation pixels to the 4-tap FIR filter 294.

The LUT 333 stores numbers of generation pixels associated with sizes of inter prediction blocks, predicting directions, and types of Sub pels as predicted pixels corresponding to fractional values of motion vectors.

[Description of the Numbers of Generation Pixels]

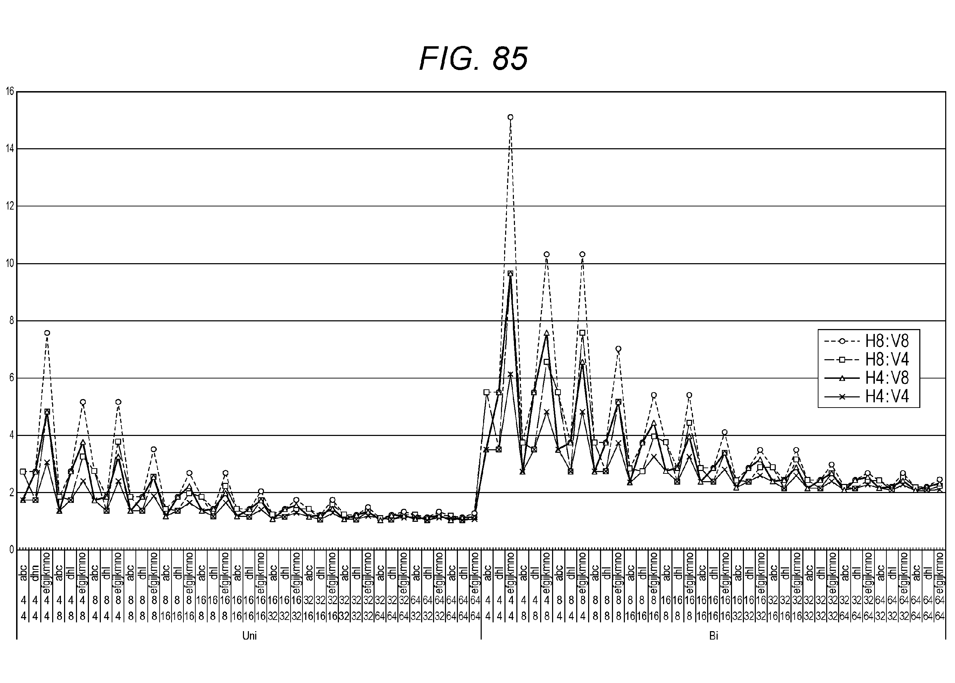

Fig. 85 is a graph showing the relationship between the number of generation pixels and the number of reference pixels.

In Fig. 85, the abscissa axis indicates combinations of a predicting direction, an inter prediction block size, and a type of Sub pel as a predicted pixel. Specifically, "a" through "o" written along the abscissa axis in Fig. 85 indicates that the types of Sub pels are Sub pels a through o. The numbers below "a" through "o" indicate the sizes (the numbers of pixels) of inter prediction blocks in the horizontal direction, and the numbers below the numbers above indicate the sizes (the numbers of pixels) of the inter prediction blocks in the vertical direction. "Uni" below those numbers indicates that the predicting direction is "L0 prediction" or "L1 prediction", and "Bi" indicates that the predicting direction is of a bidirectional prediction.

In Fig. 85, the ordinate axis indicates the numbers of reference pixels normalized by the numbers of predicted pixels (hereinafter referred to as normalized reference pixel numbers). That is, each value indicated by the ordinate axis is a value obtained by dividing the number of reference pixels by the number of predicted pixels. In Fig. 85, each rhombus represents a normalized reference pixel number in a case where the number of generation pixels is eight in both the horizontal direction and the vertical direction, and each square represents a normalized reference pixel number in a case where the number of generation pixels is eight in the horizontal direction while the number of generation pixels is four in the vertical direction. Further, each triangle represents a normalized reference pixel number in a case where the number of generation pixels is four in the horizontal direction while the number of generation pixels is eight in the vertical direction, and each cross mark represents a normalized reference pixel number in a case where the number of generation pixels is four in both the horizontal direction and the vertical direction.

As shown in Fig. 85, the largest normalized reference pixel number is obtained when the predicting direction is of a bidirectional prediction, the size of the inter prediction block is 4 x 4 pixels, and the type of the Sub pel to be the predicted pixel is a Sub pel e, f, g, i, j k, m , n, or o.

In the LUT 333, such numbers of generation pixels in the horizontal direction and the vertical direction that make the largest normalized reference pixel number equal to or smaller than a predetermined value are stored and associated with predicting directions, inter prediction block sizes, and types of Sub pels to be predicted pixels.

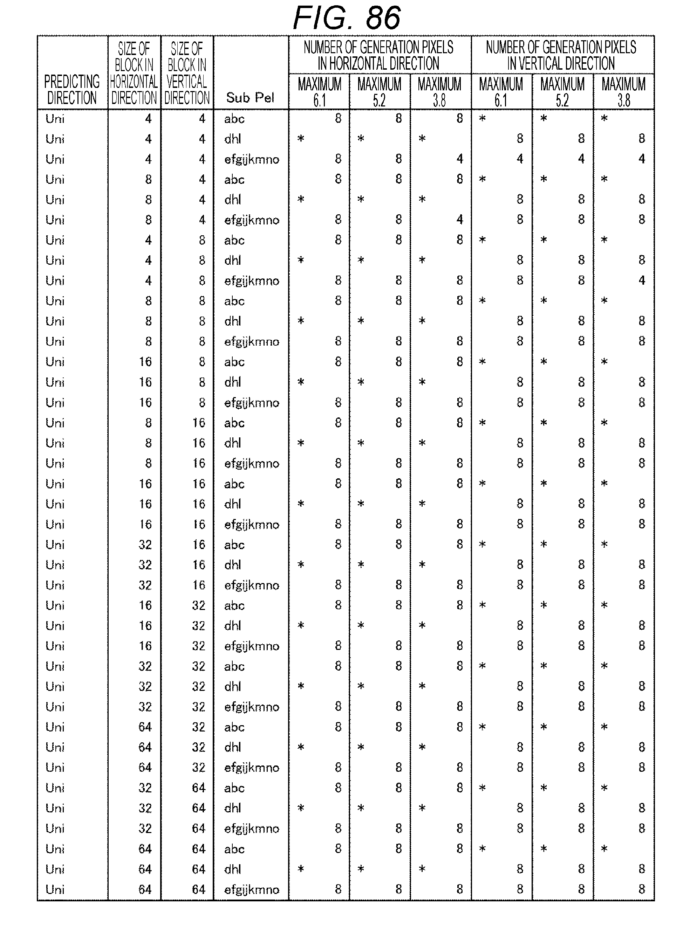

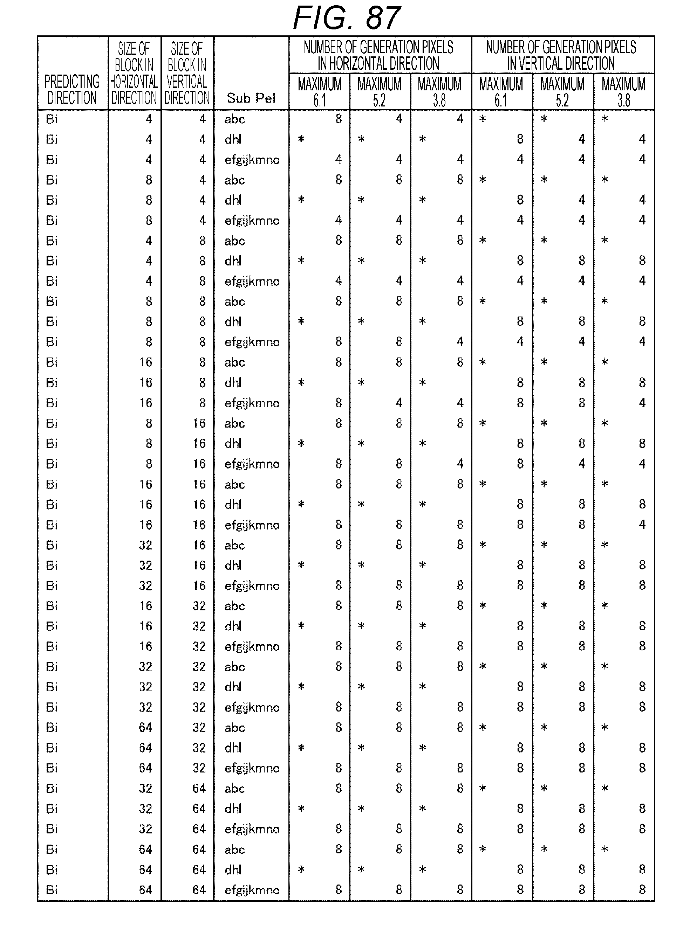

Figs. 86 and 87 are diagrams showing examples of the numbers of generation pixels in the horizontal direction and the vertical direction that are stored in the LUT 333.

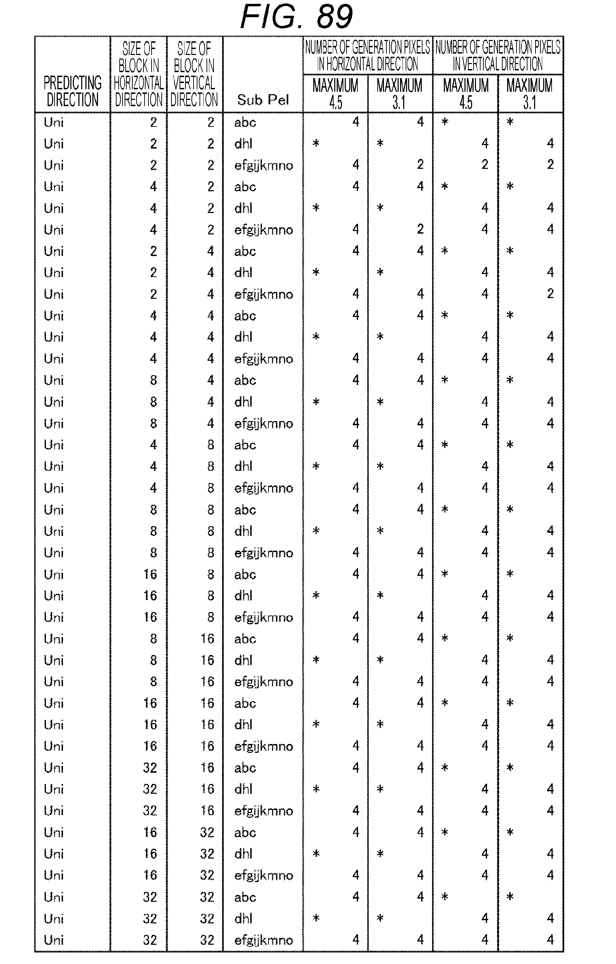

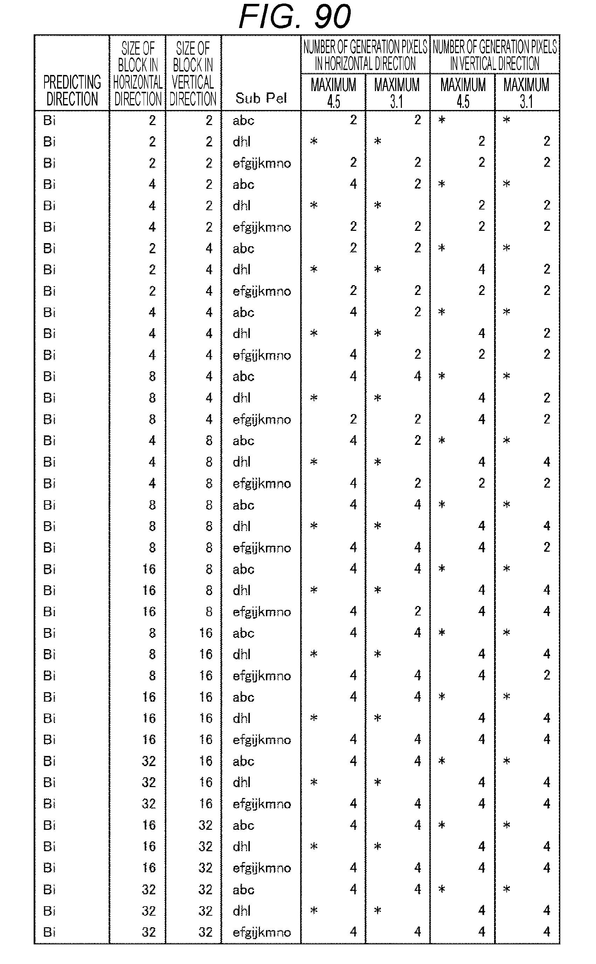

In the tables shown in Figs. 86 and 87, the items "predicting direction", "size of block in horizontal direction", "size of block in vertical direction", and "Sub pel" show information about the predicting direction, the size of the inter prediction block in the horizontal direction, the size of the inter prediction block in the vertical direction, and the type of the Sub pel to be a predicted pixel, respectively. Also, the items "number of generation pixels in horizontal direction" and "number of generation pixels in vertical direction" show  information about the number of generation pixels in the horizontal direction and the number of generation pixels in the vertical direction that are associated with the information in the items "predicting direction", "size of block in horizontal direction", "size of block in vertical direction", and "Sub pel". The same applies to Figs. 89 and 90 described later.

More specifically, the information in the item "maximum 6.1" in the item "number of generation pixels in horizontal direction" indicates such numbers of generation pixels in the horizontal direction that make the normalized reference pixel number equal to or smaller than 6.1. The information in the item "maximum 5.2" and the information in the item "maximum 3.8" in the item "number of generation pixels in horizontal direction" indicate such numbers of generation pixels that make the normalized reference pixel number equal to or smaller than 5.2 and 3.8, respectively, in cases other than the cases where the predicting direction is of a bidirectional prediction, and the size of the inter prediction block is smaller than 8 x 8 pixels. The information in the item "maximum 6.1", the item "maximum 5.2", and the item "maximum 3.8" in the item "number of generation pixels in vertical direction" is the same as that in the item "number of generation pixels in horizontal direction".

In the tables shown in Figs. 86 and 87, each asterisk indicates that there are no corresponding generation pixels in the horizontal direction or the  vertical direction, or that no corresponding filtering is performed in the horizontal direction or the vertical direction. The same applies to Figs. 89 and 90 described later.

The LUT 333 stores the information contained in the item "maximum 6.1", "maximum 5.2", or "maximum 3.8" in the items "number of generation pixels in horizontal direction" and "number of generation pixels in vertical direction", for example, in association with the information contained in the items "predicting direction", "size of block in horizontal direction", "size of block in vertical direction", and "Sub pel".

In the examples shown in Figs. 86 and 87, pixels aligned in the horizontal direction are associated with a single address in the frame memory 22. In a case where the type of the Sub pel to be a predicted pixel is a Sub pel e, f, g, i, j, k, m, n, or o, and the normalized reference pixel number is constant, such pixels that make the number of generation pixels in the vertical direction smaller than the number of generation pixels in the horizontal direction are stored, as a reduction in the number of generation pixels in the vertical direction has the greater effect. The same applies to Figs. 89 and 90 described later.

[Example Structure of the Luminance Inter Prediction Unit]

Fig. 88 is a block diagram showing an example structure of the luminance inter prediction unit 322  shown in Fig. 83.

Of the components of the luminance inter prediction unit 322 shown in Fig. 88, the same components as those in Fig. 4 are denoted by the same reference numerals as those in Fig. 4. The explanations that have already been made will not be repeated.

The structure of the luminance inter prediction unit 322 shown in Fig. 88 differs from the structure shown in Fig. 4 mainly in that the reference image read unit 41, the pixel sorter unit 42, and the pixel selection unit 49 are replaced with a reference image read unit 351, a pixel sorter unit 352, and a pixel selection unit 353, the 6-tap FIR filter 45 and the 6-tap filter coefficient memory 48 are not provided, and an LUT 354 is newly added.

Like the reference image read unit 41 shown in Fig. 4, the reference image read unit 351 of the inter prediction unit 24 shown in Fig. 88 identifies the reference image among the images stored in the frame memory 22, based on the reference index and the predicting direction contained in the inter prediction mode information. The reference image read unit 351 also reads, from the LUT 354, the numbers of generation pixels in the horizontal direction and the vertical direction in accordance with the block size and the predicting direction contained in the inter prediction mode information and the fractional value of the motion vector.

Based on the numbers of generation pixels in the horizontal direction and the vertical direction, the block size contained in the inter prediction mode information, and the integer value of the motion vector, the reference image read unit 351 reads, from the frame memory 22, the luminance components of the reference pixels to be used in generating the luminance components of a predicted image. The reference image read unit 351 then temporarily stores the read luminance components of the reference pixels.

For each predicted pixel, the reference image read unit 351 reads the luminance components of two or four reference pixels as the generation pixels to be used in generating the luminance component of the predicted pixel among the temporarily stored luminance components of the reference pixels, based on the number of generation pixels in the horizontal direction or the vertical direction. The reference image read unit 351 supplies the read luminance components of the two or four reference pixels to the pixel sorter unit 352.

The pixel sorter unit 352 sets the luminance components of the reference pixels supplied from the reference image read unit 351 as the luminance components of generation pixels. The pixel sorter unit 352 also reads, from the LUT 354, the number of generation pixels in the vertical direction in accordance with the block size and the predicting direction contained in the inter prediction mode information supplied from the motion prediction unit 25, and the fractional value of the motion vector.

Based on the number of generation pixels in the vertical direction, the pixel sorter unit 352 reads, from the intermediate result memory 50, the luminance components of generation pixels that are the luminance components of two or four Sub pels, two or four being the number of generation pixels that are to be used in generating the luminance component of the generation target predicted pixel and are aligned in the vertical direction. The pixel sorter unit 352 also supplies the luminance components of the two generation pixels to the 2-tap FIR filter 43, and supplies the luminance components of the four generation pixels to the 4-tap FIR filter 44.

Based on the fractional value of the motion vector supplied from the motion prediction unit 25, the pixel selection unit 353 outputs the luminance component of the predicted pixel that is the luminance component of a pixel supplied from the 2-tap FIR filter 43 or the 4-tap FIR filter 44 to the selection unit 26 shown in Fig. 3, or supplies the luminance component of the predicted pixel to the intermediate result memory 50.

Specifically, when the fractional value of at least one of the horizontal component and the vertical component of the motion vector is zero, the pixel selection unit 353 supplies the luminance component of a pixel supplied from the 2- tap FIR filter 43 or the 4- tap FIR filter 44, as the luminance component of the predicted pixel to the selection unit 26. When the fractional values of both the horizontal component and the vertical component of the motion vector are not zero, on the other hand, the pixel selection unit 353 supplies the luminance component of a Sub pel that is the luminance component of a pixel supplied from the 2- tap FIR filter 43 or the 4- tap FIR filter 44, to the intermediate result memory 50, which then stores the supplied luminance component of the pixel. As a result, the 2- tap FIR filter 43 and the 4- tap FIR filter 44 again perform calculations, using the luminance components of the Sub pels stored in the intermediate result memory 50. The pixel selection unit 353 then outputs the luminance component of the resultant Sub pel as the luminance component of the predicted pixel to the selection unit 26. In a case where the predicting direction is of a bidirectional prediction, the luminance components of predicted pixels generated from a reference image to be displayed earlier than the inter prediction target image and the luminance components of predicted pixels generated from a reference image to be displayed later than the inter prediction target image are averaged, and the result is output to the selection unit 26.

The LUT 354 stores numbers of generation pixels associated with sizes of inter prediction blocks, predicting directions, and types of Sub pels as predicted pixels corresponding to fractional values of motion vectors.

[Examples of the Numbers of Generation Pixels Stored in the LUT 354]

Figs. 89 and 90 are diagrams showing examples of the numbers of generation pixels in the horizontal direction and the vertical direction that are stored in the LUT 354 shown in Fig. 88.

In the tables shown in Figs. 89 and 90, the information in the item "maximum 4.5" in the item "number of generation pixels in horizontal direction" indicates such numbers of generation pixels in the horizontal direction that make the normalized reference pixel number equal to or smaller than 4.5. The information in the item "maximum 3.1" in the item "number of generation pixels in horizontal direction" indicates such numbers of generation pixels that make the normalized reference pixel number equal to or smaller than 3.1 in cases other than the cases where the predicting direction is of a bidirectional prediction, and the size of the inter prediction block is smaller than 8 x 8 pixels. The information in the item "maximum 4.5" and the item "maximum 3.1" in the item "number of generation pixels in vertical direction" is the same as that in the item "number of generation pixels in horizontal direction".

The LUT 354 stores the information contained in the item "maximum 4.5" or "maximum 3.1" in the items "number of generation pixels in horizontal direction" and "number of generation pixels in vertical direction", for example, in association with the information contained in the items "predicting direction", "size of block in horizontal direction", "size of block in vertical direction", and "Sub pel".

[Description of an Eleventh Example of the Inter Prediction Operation]

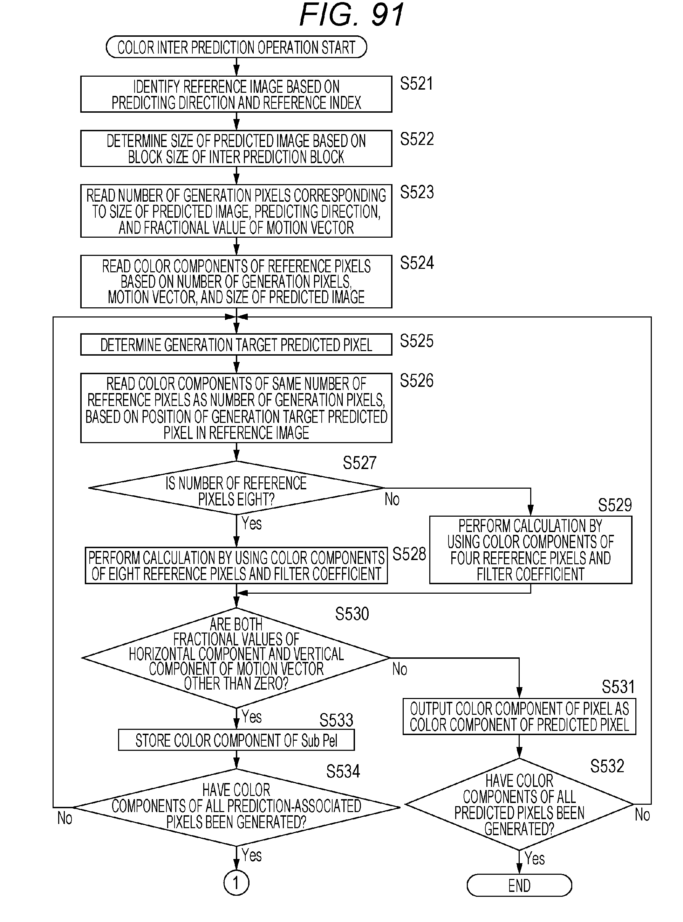

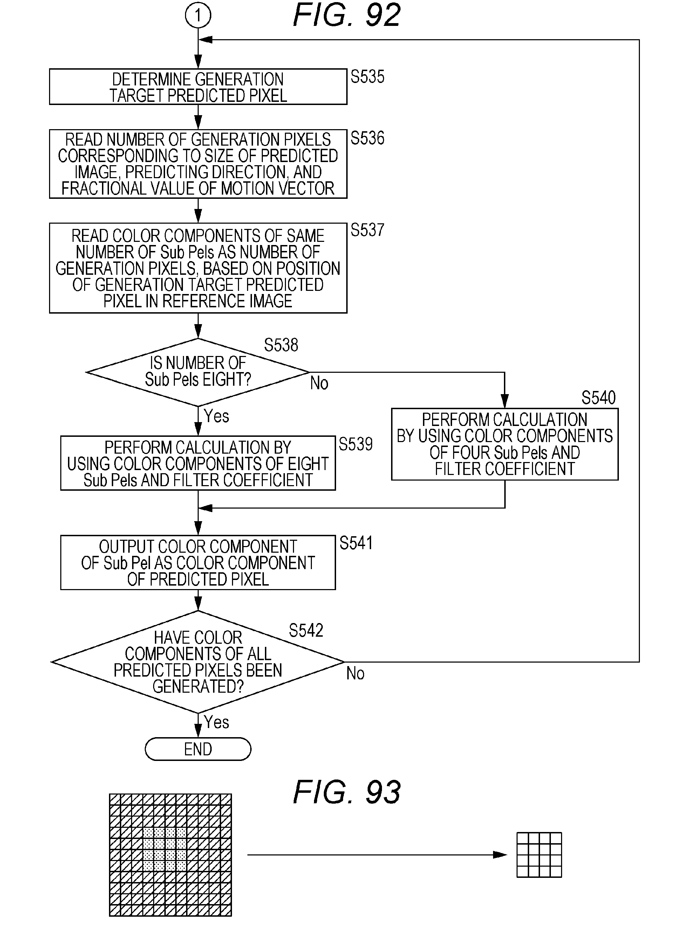

Figs. 91 and 92 show a flowchart for explaining a color inter prediction operation to be performed by the color inter prediction unit 321 in the inter prediction operation of step S15 of Fig. 20 to be performed by the inter prediction unit 24 of Fig. 83.

The procedures of steps S521 and S522 of Fig. 91 are the same as the procedures of steps S480 and S481 of Fig. 81, and therefore, explanation of them is not repeated herein.

In step S523, the reference image read unit 331 of the inter prediction unit 321 shown in Fig. 84 reads, from the LUT 333, the numbers of generation pixels in accordance with the size of the predicted image determined in step S522, the predicting direction contained in the inter prediction mode information, and the fractional value of the motion vector.

In step S524, the reference image read unit 331 reads, from the frame memory 22, the color components of the reference pixels to be used in generating the color components of the predicted image, based on the numbers of generation pixels in the horizontal direction and the vertical direction, the integer value of the motion vector, and the size of the predicted image. The reference image read unit 331 then temporarily stores the  read color components of the reference pixels.

In step S525, the reference image read unit 331 determines a generation target predicted pixel among the predicted pixels forming the predicted image. The determined generation target predicted pixel is a predicted pixel that has not yet been determined to be a generation target predicted pixel in the procedure of step S525.

In step S526, based on the position of the generation target predicted pixel in the reference image, the reference image read unit 331 reads the color components of four or eight reference pixels as the generation pixels to be used in generating the color component of a prediction-associated pixel among the temporarily stored color components of the reference pixels. The reference image read unit 331 supplies the read color components of the four or eight reference pixels to the pixel sorter unit 332.

In step S527, the pixel sorter unit 332 determines whether the number of reference pixels corresponding to the color components supplied from the reference image read unit 331 is eight. If the number of reference pixels is determined to be eight in step S527, the pixel sorter unit 332 supplies the color components of the eight reference pixels to the 8-tap FIR filter 293, and the operation then moves no to step S528.

In step S528, the 8-tap FIR filter 293 performs a  calculation by using the color components of the eight reference pixels as generation pixels supplied from the pixel sorter unit 332 and the filter coefficients supplied from the 8-tap filter coefficient memory 295. The 8-tap FIR filter 293 supplies the resultant one prediction-associated pixel to the pixel selection unit 297.

If the number of reference pixels is determined not to be eight in step S527, or if the number of reference pixels is four, the pixel sorter unit 332 supplies the color components of the four reference pixels to the 4-tap FIR filter 294, and the operation then moves no to step S529.

In step S529, the 4-tap FIR filter 294 performs a calculation by using the color components of the four reference pixels as generation pixels supplied from the pixel sorter unit 332 and the filter coefficients supplied from the 4-tap filter coefficient memory 296. The 4-tap FIR filter 294 supplies the resultant one prediction-associated pixel to the pixel selection unit 297.

In step S530, the pixel selection unit 297 determines whether the fractional values of both the horizontal component and the vertical component of the motion vector supplied from the motion prediction unit 25 are other than zero. If the fractional value of at least one of the horizontal component and the vertical component of the motion vector is determined to be zero  in step S530, the operation moves on to step S531.

In step S531, the pixel selection unit 297 outputs the color component of a prediction-associated pixel supplied from the 4-tap FIR filter 294 or the 8-tap FIR filter 293, as the color component of the predicted pixel to the selection unit 26 shown in Fig. 3. At this point, if the predicting direction is of a bidirectional prediction, the color components of predicted pixels generated from a reference image to be displayed earlier than the inter prediction target image and the color components of predicted pixels generated from a reference image to be displayed later than the inter prediction target image are averaged, and the result is output to the selection unit 26.

In step S532, the reference image read unit 331 determines whether the color components of all the predicted pixels have been generated. If it is determined in step S532 that not all the predicted pixels have color components generated, the operation returns to step S525, and the procedures of steps S525 through S532 are repeated until the color components of all the predicted pixels are generated.

If it is determined in step S532 that all the predicted pixels have been generated, the operation comes to an end.

If the fractional values of both the horizontal component and the vertical component of the motion vector  are determined to be other than zero in step S530, the operation moves on to step S533.

In step S533, the pixel selection unit 297 outputs the color component of a Sub pel as a prediction-associated pixel supplied from the 4-tap FIR filter 294 or the 8-tap FIR filter 293, to the intermediate result memory 50 to store the color component of the Sub pel.

In step S534, the reference image read unit 331 determines whether the color components of all the prediction-associated pixels have been generated. If it is determined in step S534 that not all the prediction-associated pixels have color components generated, the operation returns to step S525, and the procedures of steps S525 through S530, step S533, and step S534 are repeated until the color components of all the prediction-associated pixels are generated.

If it is determined in step S534 that the color components of all the prediction-associated pixels have been generated, on the other hand, the operation moves on to step S535 of Fig. 92.

In step S535, the reference image read unit 331 determines a generation target predicted pixel among the predicted pixels forming the predicted image. The determined generation target predicted pixel is a predicted pixel that has not yet been determined to be a generation target predicted pixel in the procedure of step S535.

In step S536, the pixel sorter unit 332 reads, from the LUT 333, the number of generation pixels in the vertical direction in accordance with the block size and the predicting direction contained in the inter prediction mode information supplied from the motion prediction unit 25, and the fractional value of the motion vector.

In step S537, the pixel sorter unit 332 reads the color components of four or eight Sub pels as generation pixels from the intermediate result memory 50, based on the position of the generation target predicted pixel in the vertical direction in the reference image.

The procedures of steps S538 through S540 are the same as the procedures of steps S527 through S529 of Fig. 91, except that the procedures are carried out on Sub pels, instead of reference pixels. Therefore, explanation of those steps is not repeated herein.

In step S541, the pixel selection unit 297 outputs the color component of a Sub pel that is a pixel supplied from the 4-tap FIR filter 294 or the 8-tap FIR filter 293, as the color component of the predicted pixel to the selection unit 26. At this point, if the predicting direction is of a bidirectional prediction, the color components of predicted pixels generated from a reference image to be displayed earlier than the inter prediction target image and the color components of predicted pixels generated from a reference image to be displayed later than the inter prediction target image are averaged, and the result is output to the selection unit 26.

In step S542, the reference image read unit 331 determines whether the color components of all the predicted pixels have been generated. If it is determined in step S542 that not all the predicted pixels have color components generated, the operation returns to step S535, and the procedures of steps S535 through S542 are repeated until all the predicted pixels are generated.

If it is determined in step S542 that all the predicted pixels have been generated, the operation comes to an end.

When the fractional values of both the horizontal component and the vertical component of the motion vector are other than zero in the color inter prediction operation shown in Figs. 91 and 92, the filtering in the vertical direction is performed after the filtering in the horizontal direction. However, the filtering in the horizontal direction may be performed after the filtering in the vertical direction.

The inter prediction operation of step S15 of Fig. 20 is formed with the color inter prediction operation of Figs. 91 and 92 and a luminance inter prediction operation to be performed by the luminance inter prediction unit 322 of Fig. 88. The luminance inter prediction operation is the same as the color inter prediction operation, except that luminance components, instead of color components, are generated, and the number of generation pixels is two or four, instead of four or eight. Therefore, explanation of the operation is not provided herein.

<Characteristics of Normalized Reference Pixel Numbers>

Figs. 93 through 100 are diagrams for explaining the characteristics of normalized reference pixel numbers.

In Figs. 93 through 100, each dotted square represents a reference pixel located within the range of the size of the inter prediction block among the reference pixels to be used in generating the predicted pixels, and each shaded square represents a reference pixel outside the range of the size of the inter prediction block. Each plain square represents a predicted pixel.

As shown in Fig. 93, in a case where the size of the inter prediction block is $4 \times 4$ pixels, the predicted pixels are Sub pels e, f, g, i, j, k, m, n, or o, the numbers of generation pixels in the horizontal direction and the vertical direction are eight, and the predicting direction is "L0 prediction" or "L1 prediction", the number of reference pixels to be used in generating a predicted image is $11 \times 11$. Accordingly, the normalized reference pixel number in this case is approximately 7.6 (= $(11 \times 11) / (4 \times 4)$).

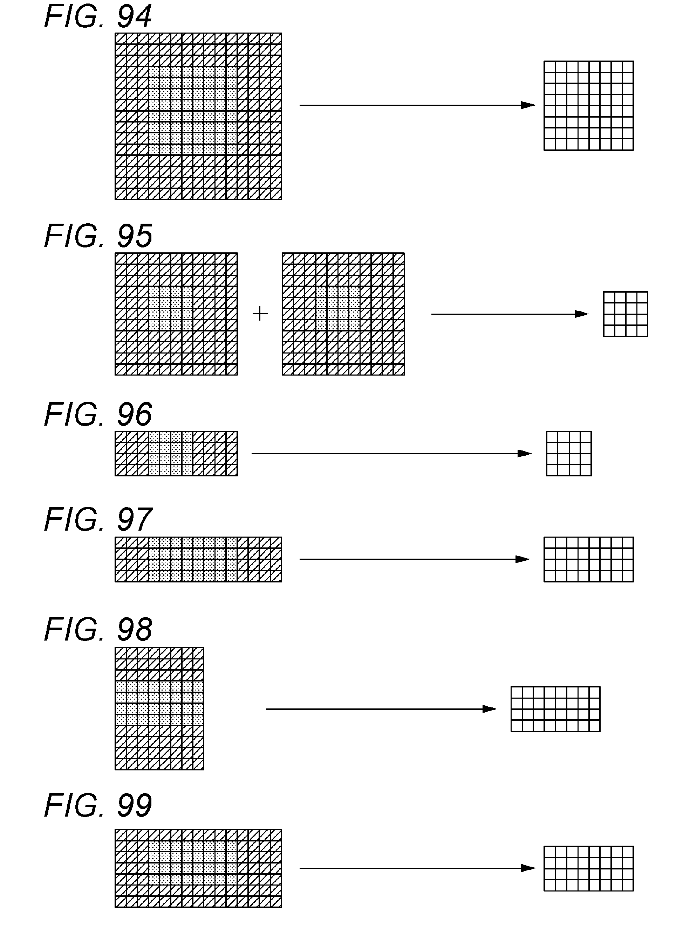

In a case where the size of the inter prediction block is $8 \times 8$ pixels, instead of $4 \times 4$ pixels, as shown in Fig. 94, the number of reference pixels to be used in generating a predicted image is $15 \times 15$ pixels, and the normalized reference pixel number is approximately 3.5 (= $(15 \times 15) / (8 \times 8)$).

As described above, the reference pixel range is larger than the size of the inter prediction block, and the normalized reference pixel number becomes larger as the size of the inter prediction block becomes smaller.

As shown in Fig. 95, in a case where the predicting direction is neither "L0 prediction" nor "L1 prediction", but is of a bidirectional prediction, a predicted image is generated from 11 × 11 pixels of a reference image to be displayed earlier than the inter prediction target image. Also, a predicted image is generated from 11 × 11 pixels of a reference image to be displayed later than the inter prediction target image. The two generated predicted images are averaged pixel by pixel, to form an eventual predicted image. Accordingly, the number of reference pixels used in generating the predicted image is 11 × 11 × 2, and the normalized reference pixel number is approximately 15.1 (= (11 × 11 × 2) / (4 × 4)).

As described above, in a case where the predicting direction is of a bidirectional prediction, the normalized reference pixel number is larger than that in the case of "L0 prediction" or "L1 prediction".

Further, as shown in Fig. 96, in a case where the predicted pixels are Sub pels a, b, or c, instead of Sub pels e, f, g, i, j, k, m, n, or o, the number of reference pixels to be used in generating a predicted image is 4 × 11, and the normalized reference pixel number is approximately 2.8 (= (4 × 11) / (4 × 4)). Also, in a case where the predicted pixels are Sub pels d, h, or l, the number of reference pixels to be used in generating a predicted image is 11 × 4, and the normalized reference pixel number is approximately 2.8 (= (11 × 4) / (4 × 4)), though not shown in any drawing since the horizontal direction and the vertical direction are simply switched.

As described above, in a case where the predicted pixels have integer positions at least in one of the horizontal and vertical directions in the reference image, the normalized reference pixel number is smaller than that in a case where predicted pixels have fractional positions in both directions.

As shown in Fig. 97, in a case where the predicted pixels are not Sub pels e, f, g, i, j, k, m, n, or o, but are Sub pels a, b, or c, if the size of the inter prediction block in the horizontal direction is not four pixels but is eight pixels, which is larger than the size in the vertical direction, the number of reference pixels to be used in generating a predicted image is 4x15. Accordingly, the normalized reference pixel number in this case is approximately 1.9 (= (4 × 15) / (4 × 8)).

On the other hand, in a case where the predicted pixels are not Sub pels a, b, or c, but are Sub pels d, h, or l, as shown in Fig 98, the number of reference pixels to be used in generating a predicted image is 11 × 8, and the normalized reference pixel number is approximately 2.8 (= (11 × 8) / (4 × 8)).

As described above, if the inter prediction block has a larger size in one of the horizontal and vertical directions than in the other, the normalized reference pixel number is larger in a case where only the positions in the one of the two directions in the reference image are fractional positions than that in a case where only the positions in the other direction in the reference image are fractional positions.

Further, as shown in Fig. 99, in a case where the size of the inter prediction block is not 4 × 4 pixels but is 4 × 8 pixels, if the number of generation pixels in the horizontal direction is eight while the number of generation pixels in the vertical direction is four, the number of reference pixels to be used in generating a predicted image is 15x7. Accordingly, the normalized reference pixel number in this case is approximately 3.3 (= (15 × 7) / (4 × 8)).

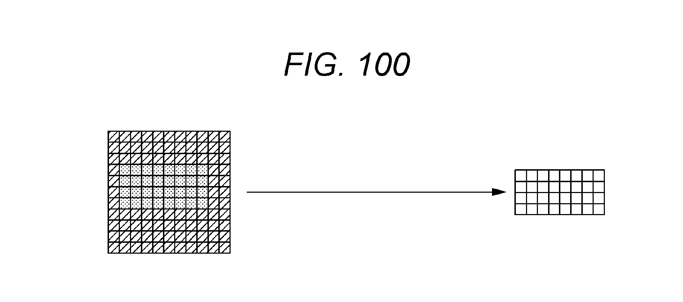

On the other hand, if the number of generation pixels in the vertical direction is eight while the number of generation pixels in the horizontal direction is four, as shown in Fig. 100, the number of reference pixels to be used in generating a predicted image is 11x11. Accordingly, the normalized reference pixel number in this case is approximately 3.8 (= (11 × 11)/(4 × 8)).

As described above, if the size of the inter prediction block is larger in one of the horizontal and vertical directions than in the other, the normalized reference pixel number is smaller in a case where the number of generation pixels in the other one of the two directions is smaller than that in the one, than in a case where the number of generation pixels in the one of the two directions is smaller than that in the other. That is, making the number of generation pixels in the other one of the two directions smaller than the number of generation pixels in the one has a greater effect to lower the normalized reference pixel number than making the number of generation pixels in the one of the two directions smaller than the number of generation pixels in the other.

Although not shown in the drawings, when the encoding device 10 includes the inter prediction unit 24 of Fig. 77 or 83, the inter prediction unit 111 of the decoding device 100 also has the same structure as the inter prediction unit 24 of Fig. 77 or 83.

<Description of a Computer to Which the Present Technique Is Applied>

The above described encoding operation and decoding operation can be performed with hardware, and can also be performed with software. Where encoding operations and decoding operations are performed with software, a program that forms the software is installed into a general-purpose computer or the like.

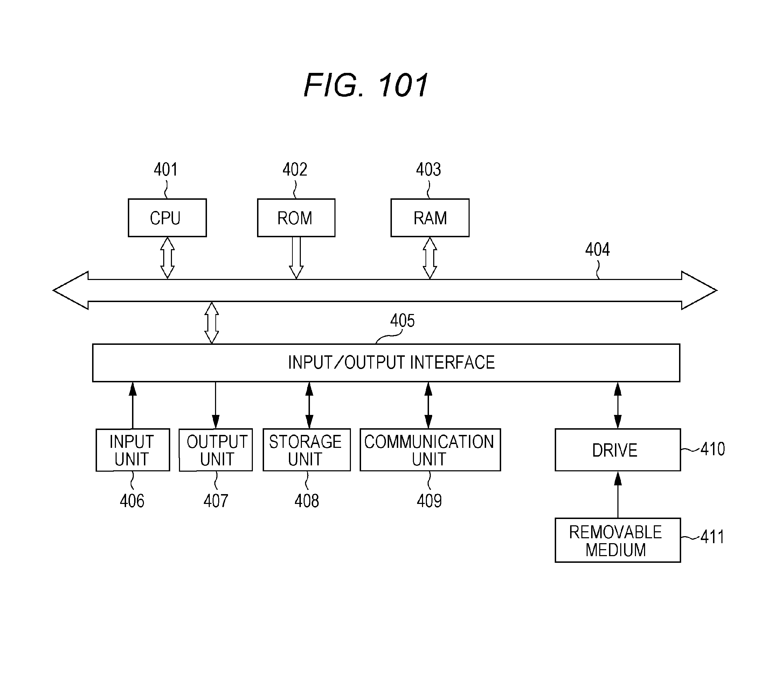

In view of this, Fig. 101 shows an example structure of an embodiment of a computer into which the program for performing the above described series of operations is installed.

The program can be recorded beforehand in a storage unit 408 or a ROM (Read Only Memory) 402 provided as a recording medium in the computer.

Alternatively, the program can be stored (recorded) in a removable medium 411. Such a removable medium 411 can be provided as so- called packaged software. Here, the removable medium 411 may be a flexible disk, a CD-ROM (Compact Disc Read Only Memory), MO (Magneto Optical) disk, a DVD (Digital Versatile Disc), a magnetic disk, or a semiconductor memory, for example.

The program can be installed into the computer from the above described removable medium 411 via a drive 410, but can also be downloaded into the computer via a communication network or a broadcasting network and be installed into the internal storage unit 408. That is, the program can be wirelessly transferred from a download site, for example, to the computer via an artificial satellite for digital satellite broadcasting, or can be transferred by cable to the computer via a network such as a LAN (Local Area Network) or the Internet.

The computer includes a CPU (Central Processing Unit) 401, and an input/output interface 405 is connected to the CPU 401 via a bus 404.

When an instruction is input by a user operating an input unit 406 or the like via the input/output interface 405, the CPU 401 executes the program stored in the ROM 402 accordingly. Alternatively, the CPU 401 loads the program stored in the storage unit 408 into a RAM (Random Access Memory) 403, and executes the program.

By doing so, the CPU 401 performs the operations according to the above described flowcharts, or performs the operations with the structures illustrated in the above described block diagrams. Where necessary, the CPU 401 outputs the operation results from an output unit 407 or transmit the operation results from a communication unit 409, via the input/output interface 405, for example, and further stores the operation results into the storage unit 408.

The input unit 406 is formed with a keyboard, a mouse, a microphone, and the like. The output unit 407 is formed with a LCD (Liquid Crystal Display), a speaker, and the like.

In this specification, the operations performed by the computer in accordance with the program are not necessarily performed in chronological order compliant with the sequences shown in the flowcharts. That is, the operations to be performed by the computer in accordance with the program include operations to be performed in parallel or independently of one another (such as parallel operations or object-based operations).

The program may be executed by one computer (processor), or may be executed in a distributive manner by more than one computer. Further, the program may be transferred to a remote computer, and be executed therein.

<Example Structure of a Television Receiver>

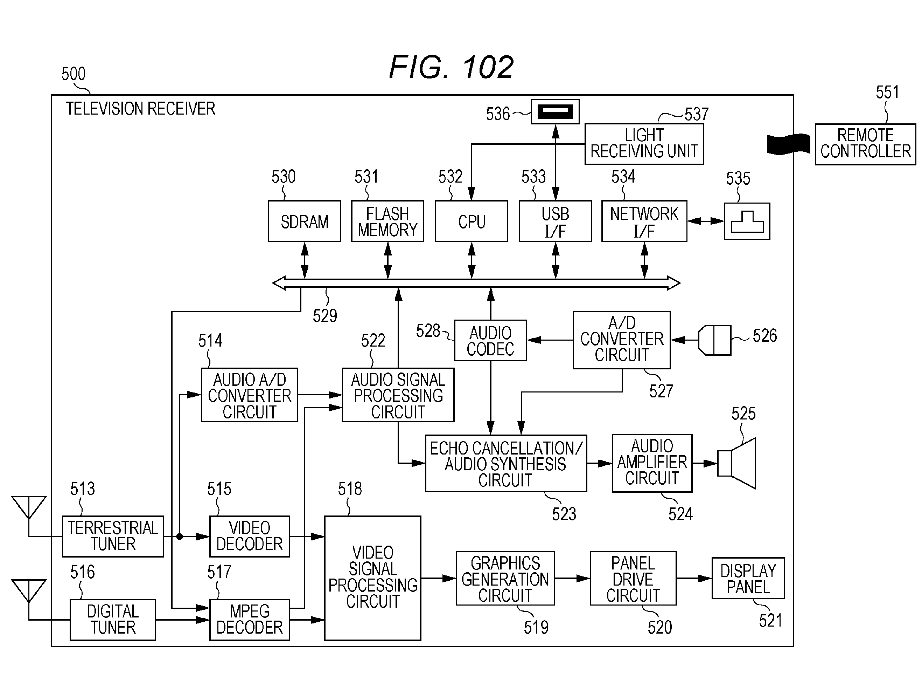

Fig. 102 is a block diagram showing a typical example structure of a television receiver using a decoding device to which the present technique is applied.

The television receiver 500 shown in Fig. 102 includes a terrestrial tuner 513, a video decoder 515, a video signal processing circuit 518, a graphics generation circuit 519, a panel drive circuit 520, and a display panel 521.

The terrestrial tuner 513 receives a broadcast wave signal of analog terrestrial broadcasting via an antenna, and demodulates the signal to obtain a video signal. The terrestrial tuner 513 supplies the video signal to the video decoder 515. The video decoder 515 performs a decoding operation on the video signal supplied from the terrestrial tuner 513, and supplies the resultant digital component signal to the video signal processing circuit 518.

The video signal processing circuit 518 performs predetermined processing such as denoising on the video data supplied from the video decoder 515, and supplies the resultant video data to the graphics generation circuit 519.

The graphics generation circuit 519 generates video data of a show to be displayed on the display panel 521, or generates image data by performing an operation based on an application supplied via a network. The graphics generation circuit 519 supplies the generated video data or image data to the panel drive circuit 520. The graphics generation circuit 519 also generates video data (graphics) for displaying a screen to be used by a user to select an item, and superimposes the video data on the video data of the show. The resultant video data is supplied to the panel drive circuit 520 where appropriate.

Based on the data supplied from the graphics generation circuit 519, the panel drive circuit 520 drives the display panel 521, and causes the display panel 521 to display the video image of the show and each screen described above.

The display panel 521 is formed with an LCD (Liquid Crystal Display) or the like, and displays the video image of a show or the like under the control of the panel drive circuit 520.

The television receiver 500 also includes an audio A/D (Analog/Digital) converter circuit 514, an audio signal processing circuit 522, an echo cancellation/audio synthesis circuit 523, an audio amplifier circuit 524, and a speaker 525.

The terrestrial tuner 513 obtains not only a video signal but also an audio signal by demodulating a received broadcast wave signal. The terrestrial tuner 513 supplies the obtained audio signal to the audio A/D converter circuit 514.

The audio A/D converter circuit 514 performs an A/D converting operation on the audio signal supplied from the terrestrial tuner 513, and supplies the resultant digital audio signal to the audio signal processing circuit 522.

The audio signal processing circuit 522 performs predetermined processing such as denoising on the audio data supplied from the audio A/D converter circuit 514, and supplies the resultant audio data to the echo cancellation/audio synthesis circuit 523.

The echo cancellation/audio synthesis circuit 523 supplies the audio data supplied from the audio signal processing circuit 522 to the audio amplifier circuit 524.

The audio amplifier circuit 524 performs a D/A converting operation and an amplifying operation on the audio data supplied from the echo cancellation/audio synthesis circuit 523. After adjusted to a predetermined sound level, the sound is output from the speaker 525.

The television receiver 500 further includes a digital tuner 516 and an MPEG decoder 517.

The digital tuner 516 receives a broadcast wave signal of digital broadcasting (digital terrestrial broadcasting or digital BS (Broadcasting Satellite)/CS (Communications Satellite) broadcasting) via the antenna, and demodulates the broadcast wave signal, to obtain an MPEG-TS (Moving Picture Experts Group-Transport Stream). The MPEG-TS is supplied to the MPEG decoder 517.

The MPEG decoder 517 descrambles the MPEG-TS supplied from the digital tuner 516, and extracts the stream containing the data of the show to be reproduced (to be viewed). The MPEG decoder 517 decodes the audio packet forming the extracted stream, and supplies the resultant audio data to the audio signal processing circuit 522. The MPEG decoder 517 also decodes the video packet forming the stream, and supplies the resultant video data to the video signal processing circuit 518. The MPEG decoder 517 also supplies EPG (Electronic Program Guide) data extracted from the MPEG-TS to a CPU 532 via a path (not shown).

The television receiver 500 uses the above described decoding device 100 as the MPEG decoder 517, which decodes the video packet as described above. Accordingly, like the decoding device 100, the MPEG decoder 517 can reduce usage of memory bandwidth and load thereon, while preventing decreases in inter prediction precision.

The video data supplied from the MPEG decoder 517 is subjected to predetermined processing at the video signal processing circuit 518, as in the case of the video data supplied from the video decoder 515. At the graphics generation circuit 519, generated video data and the like are superimposed on the video data subjected to the predetermined processing, where appropriate. The resultant video data is supplied to the display panel 521 via the panel drive circuit 520, and the image is displayed.

The audio data supplied from the MPEG decoder 517 is subjected to predetermined processing at the audio signal processing circuit 522, as in the case of the audio data supplied from the audio A/D converter circuit 514. The audio data subjected to the predetermined processing is supplied to the audio amplifier circuit 524 via the echo cancellation/audio synthesis circuit 523, and is subjected to a D/A converting operation or an amplifying operation. As a result, a sound that is adjusted to a predetermined sound level is output from the speaker 525.

The television receiver 500 also includes a microphone 526 and an A/D converter circuit 527.

The A/D converter circuit 527 receives a signal of a user's voice captured by the microphone 526 provided for voice conversations in the television receiver 500. The A/D converter circuit 527 performs an A/D converting operation on the received audio signal, and supplies the resultant digital audio data to the echo cancellation/audio synthesis circuit 523.

When audio data of a user (a user A) of the television receiver 500 is supplied from the A/D converter circuit 527, the echo cancellation/audio synthesis circuit 523 performs echo cancellation on the audio data of the user A. After the echo cancellation, the echo cancellation/audio synthesis circuit 523 then combines the audio data with other audio data or the like, and causes the speaker 525 to output the resultant audio data via the audio amplifier circuit 524.

The television receiver 500 further includes an audio codec 528, an internal bus 529, an SDRAM (Synchronous Dynamic Random Access Memory) 530, a flash memory 531, the CPU 532, a USB (Universal Serial Bus) I/F 533, and a network I/F 534.

The A/D converter circuit 527 receives a signal of a user's voice captured by the microphone 526 provided for voice conversations in the television receiver 500. The A/D converter circuit 527 performs an A/D converting operation on the received audio signal, and supplies the resultant digital audio data to the audio codec 528.

The audio codec 528 transforms the audio data supplied from the A/D converter circuit 527 into data in a predetermined format for transmission via a network, and supplies the resultant data to the network I/F 534 via the internal bus 529.

The network I/F 534 is connected to a network via a cable attached to a network terminal 535. The network I/F 534 transmits the audio data supplied from the audio codec 528 to another device connected to the network, for example. The network I/F 534 also receives, via the network terminal 535, audio data transmitted from another device connected to the network, and supplies the audio data to the audio codec 528 via the internal bus 529.

The audio codec 528 transforms the audio data supplied from the network I/F 534 into data in a predetermined format, and supplies the resultant data to the echo cancellation/audio synthesis circuit 523.

The echo cancellation/audio synthesis circuit 523 performs echo cancellation on the audio data supplied from the audio codec 528, and combines the audio data with other audio data or the like. The resultant audio data is output from the speaker 525 via the audio amplifier circuit 524.

The SDRAM 530 stores various kinds of data necessary for the CPU 532 to perform processing.

The flash memory 531 stores the program to be executed by the CPU 532. The program stored in the flash memory 531 is read by the CPU 532 at a predetermined time, such as when the television receiver 500 is activated. The flash memory 531 also stores EPG data obtained through digital broadcasting, data obtained from a predetermined server via a network, and the like.

For example, the flash memory 531 stores a MPEG-TS containing content data obtained from a predetermined server via a network, under the control of the CPU 532. The flash memory 531 supplies the MPEG-TS to the MPEG decoder 517 via the internal bus 529, under the control of the CPU 532, for example.

The MPEG decoder 517 processes the MPEG-TS, as in the case of the MPEG-TS supplied from the digital tuner 516. In this manner, the television receiver 500 receives the content data formed with a video image and a sound via the network, and decodes the content data by using the MPEG decoder 517, to display the video image and output the sound.

The television receiver 500 also includes a light receiving unit 537 that receives an infrared signal transmitted from a remote controller 551.

The light receiving unit 537 receives an infrared ray from the remote controller 551, and performs demodulation. The light receiving unit 537 outputs a control code indicating the contents of a user operation obtained through the demodulation, to the CPU 532.

The CPU 532 executes the program stored in the flash memory 531, and controls the entire operation of the television receiver 500 in accordance with the control code and the like supplied from the light receiving unit 537. The respective components of the television receiver 500 are connected to the CPU 532 via a path (not shown).

The USB I/F 533 exchanges data with an apparatus that is located outside the television receiver 500 and is connected thereto via a USB cable attached to a USB terminal 536. The network I/F 534 is connected to the network via the cable attached to the network terminal 535, and also exchanges data other than audio data with various kinds of devices connected to the network.

By using the decoding device 100 as the MPEG decoder 517, the television receiver 500 can reduce usage of memory bandwidth and load thereon, while preventing decreases in inter prediction precision.

<Example Structure of a Portable Telephone Device>

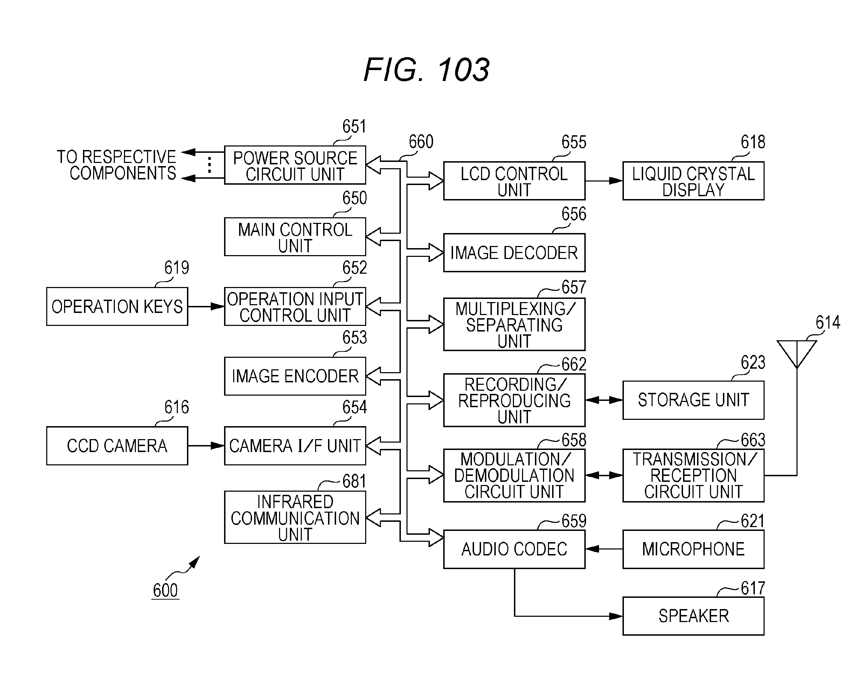

Fig. 103 is a block diagram showing a typical example structure of a portable telephone device using an encoding device and a decoding device to which the present technique is applied.

The portable telephone device 600 shown in Fig. 103 includes a main control unit 650 designed to collectively control respective components, a power source circuit unit 651, an operation input control unit 652, an image encoder 653, a camera I/F unit 654, an LCD control unit 655, an image decoder 656, a multiplexing/separating unit 657, a recording/reproducing unit 662, a modulation/demodulation circuit unit 658, and an audio codec 659. Those components are connected to one another via a bus 660.

The portable telephone device 600 also includes operation keys 619, a CCD (Charge Coupled Device) camera 616, a liquid crystal display 618, a storage unit 623, a transmission/reception circuit unit 663, an antenna 614, a microphone (mike) 621, and a speaker 617.

When a call is ended or the power key is switched on by a user's operation, the power source circuit unit 651 puts the portable telephone device 600 into an operable state by supplying power from a battery pack to the respective components.

Under the control of the main control unit 650 formed with a CPU, a ROM, a RAM, and the like, the portable telephone device 600 performs various kinds of operations, such as transmission and reception of audio signals, transmission and reception of electronic mail and image data, image capturing, and data recording, in various kinds of modes such as a voice communication mode and a data communication mode.

In the portable telephone device 600 in the voice communication mode, for example, an audio signal captured by the microphone (mike) 621 is transformed into digital audio data by the audio codec 659, and the digital audio data is subjected to spread spectrum processing at the modulation/demodulation circuit unit 658. The resultant data is then subjected to a digital-analog converting operation and a frequency converting operation at the transmission/reception circuit unit 663. The portable telephone device 600 transmits the transmission signal obtained through the converting operations to a base station (not shown) via the antenna 614. The transmission signal (audio signal) transmitted to the base station is further supplied to the portable telephone device at the other end of the communication via a public telephone line network.

Also, in the portable telephone device 600 in the voice communication mode, for example, a reception signal received by the antenna 614 is amplified at the transmission/ reception circuit unit 663, and is further subjected to a frequency converting operation and an analog- digital converting operation. The resultant signal is subjected to inverse spread spectrum processing at the modulation/ demodulation circuit unit 658, and is transformed into an analog audio signal by the audio codec 659. The portable telephone device 600 outputs, from the speaker 617, the analog audio signal obtained through the conversions.

Further, when electronic mail is transmitted in the data communication mode, for example, the operation input control unit 652 of the portable telephone device 600 receives text data of the electronic mail that is input by operating the operation keys 619. The portable telephone device 600 processes the text data at the main control unit 650, and displays the text data as an image on the liquid crystal display 618 via the LCD control unit 655.

In the portable telephone device 600, the main control unit 650 generates electronic mail data, based on text data, a user's instruction, or the like received by the operation input control unit 652. The portable telephone device 600 subjects the electronic mail data to spread spectrum processing at the modulation/demodulation circuit unit 658, and to a digital-analog converting operation and a frequency converting operation at the transmission/reception circuit unit 663. The portable telephone device 600 transmits the transmission signal obtained through the converting operations to a base station (not shown) via the antenna 614. The transmission signal (electronic mail) transmitted to the base station is supplied to a predetermined address via a network, a mail server, and the like.

When electronic mail is received in the data communication mode, for example, the transmission/reception circuit unit 663 of the portable telephone device 600 receives a signal transmitted from a base station via the antenna 614, and the signal is amplified and is further subjected to a frequency converting operation and an analog-digital converting operation. The portable telephone device 600 subjects the received signal to inverse spread spectrum processing at the modulation/demodulation circuit unit 658, to restore the original electronic mail data. The portable telephone device 600 displays the restored electronic mail data on the liquid crystal display 618 via the LCD control unit 655.

The portable telephone device 600 can also record (store) received electronic mail data into the storage unit 623 via the recording/reproducing unit 662.

The storage unit 623 is a rewritable storage medium. The storage unit 623 may be a semiconductor memory such as a RAM or an internal flash memory, a hard disk, or a removable medium such as a magnetic disk, a magnetooptical disk, an optical disk, a USB memory, or a memory card. It is of course possible to use a memory other than the above.

Further, when image data is transmitted in the data communication mode, for example, the portable telephone device 600 generates the image data at the CCD camera 616 capturing an image. The CCD camera 616 includes optical devices such as a lens and a diaphragm, and a CCD as a photoelectric conversion device. The CCD camera 616 captures an image of an object, converts the intensity of the received light into an electrical signal, and generates image data of the image of the object. The image encoder 653 then performs compression encoding on the image data via the camera I/F unit 654 by using a predetermined encoding method such as MPEG2 or MPEG4. Thus, the image data is converted into encoded image data.

The portable telephone device 600 uses the above described encoding device 10 as the image encoder 653 that performs the above operation. Accordingly, like the encoding device 10, the image encoder 653 can reduce usage of memory bandwidth and load thereon, while preventing decreases in inter prediction precision.

At the same time as above, in the portable telephone device 600, the sound that is captured by the microphone (mike) 621 during the image capturing by the CCD camera 616 is analog-digital converted at the audio codec 659, and is further encoded.

The multiplexing/separating unit 657 of the portable telephone device 600 multiplexes the encoded image data supplied from the image encoder 653 and the digital audio data supplied from the audio codec 659 by a predetermined method. The portable telephone device 600 subjects the resultant multiplexed data to spread spectrum processing at the modulation/demodulation circuit unit 658, and to a digital-analog converting operation and a frequency converting operation at the transmission/reception circuit unit 663. The portable telephone device 600 transmits the transmission signal obtained through the converting operations to a base station (not shown) via the antenna 614. The transmission signal (image data) transmitted to the base station is supplied to the other end of the communication via a network or the like.

When image data is not transmitted, the portable telephone device 600 can also display image data generated at the CCD camera 616 on the liquid crystal display 618 via the LCD control unit 655, instead of the image encoder 653.

When the data of a moving image file linked to a simplified homepage or the like is received in the data communication mode, for example, the transmission/reception circuit unit 663 of the portable telephone device 600 receives a signal transmitted from a base station via the antenna 614. The signal is amplified, and is further subjected to a frequency converting operation and an analog-digital converting operation. The portable telephone device 600 subjects the received signal to inverse spread spectrum processing at the modulation/demodulation circuit unit 658, to restore the original multiplexed data. The portable telephone device 600 divides the multiplexed data into encoded image data and audio data at the multiplexing/separating unit 657.

By decoding the encoded image data at the image decoder 656 using a decoding method compatible with a predetermined encoding method such as MPEG2 or MPEG4, the portable telephone device 600 generates reproduced moving image data, and displays the reproduced moving image data on the liquid crystal display 618 via the LCD control unit 655. In this manner, the moving image data contained in a moving image file linked to a simplified homepage, for example, is displayed on the liquid crystal display 618.

The portable telephone device 600 uses the above described decoding device 100 as the image decoder 656 that performs the above operation. Accordingly, like the decoding device 100, the image decoder 656 can reduce usage of memory bandwidth and load thereon, while preventing decreases in inter prediction precision.

At the same time as above, the portable telephone device 600 transforms the digital audio data into an analog audio signal at the audio codec 659, and outputs the analog audio signal from the speaker 617. In this manner, the audio data contained in a moving image file linked to a simplified homepage, for example, is reproduced.

As in the case of electronic mail, the portable telephone device 600 can also record (store) received data linked to a simplified homepage or the like into the storage unit 623 via the recording/reproducing unit 662.

The main control unit 650 of the portable telephone device 600 can also analyze a two-dimensional code obtained by the CCD camera 616 performing image capturing, and obtain the information recorded in the two-dimensional code.

Further, an infrared communication unit 681 of the portable telephone device 600 can communicate with an external apparatus by using infrared rays.

By using the encoding device 10 as the image encoder 653, the portable telephone device 600 can reduce usage of memory bandwidth and load thereon, while preventing decreases in inter prediction precision.

By using the decoding device 100 as the image decoder 656, the portable telephone device 600 can also reduce usage of memory bandwidth and load thereon, while preventing decreases in inter prediction precision.

In the above description, the portable telephone device 600 uses the CCD camera 616. However, instead of the CCD camera 616, an image sensor (a CMOS image sensor) using a CMOS (Complementary Metal Oxide Semiconductor) may be used. In that case, the portable telephone device 600 can also capture an image of an object, and generate the image data of the image of the object, as in the case where the CCD camera 616 is used.

Although the portable telephone device 600 has been described above, the encoding device 10 and the decoding device 100 can also be applied to any device in the same manner as in the case of the portable telephone device 600, as long as the device has the same image capturing function and the same communication function as the portable telephone 600. Such a device may be a PDA (Personal Digital Assistant), a smartphone, an UMPC (Ultra Mobile Personal Computer), a netbook, or a notebook personal computer, for example.

<Example Structure of a Hard Disk Recorder>

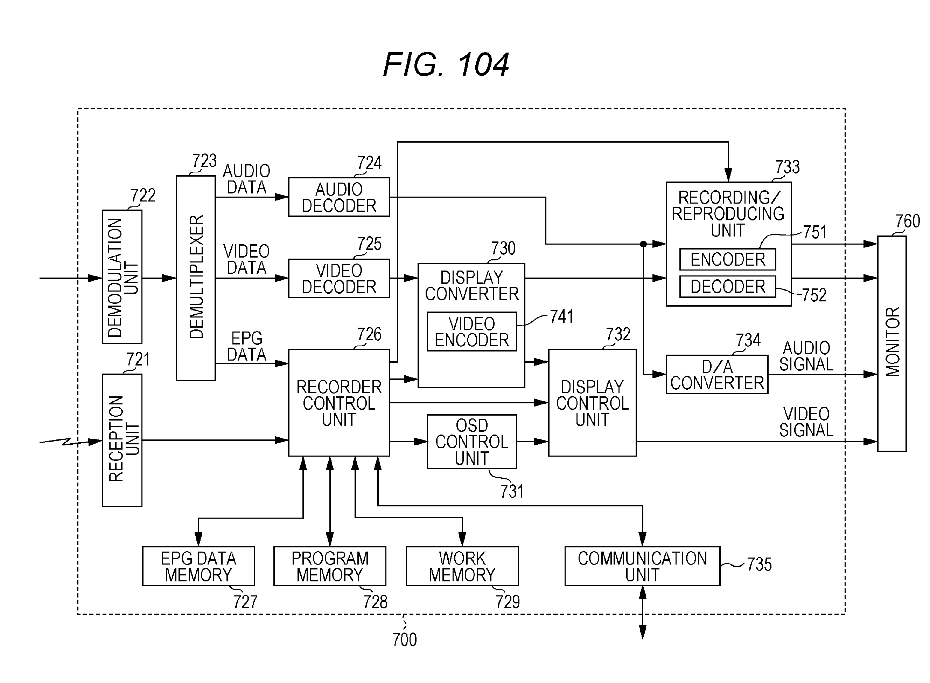

Fig. 104 is a block diagram showing a typical example structure of a hard disk recorder using an encoding device and a decoding device to which the present technique is applied.

The hard disk recorder (a HDD recorder) 700 shown in Fig. 104 is a device that stores, into an internal hard disk, the audio data and the video data of a broadcast show contained in a broadcast wave signal (a television signal) that is transmitted from a satellite or a terrestrial antenna or the like and is received by a tuner, and provides the stored data to a user at a time designated by an instruction from the user.

The hard disk recorder 700 can extract audio data and video data from a broadcast wave signal, for example, decode those data where appropriate, and store the data into an internal hard disk. Also, the hard disk recorder 700 can obtain audio data and video data from another device via a network, for example, decode those data where appropriate, and store the data into an internal hard disk.

Further, the hard disk recorder 700 can decode audio data and video data recorded on an internal hard disk, for example, supply those data to a monitor 760, and display the image on the screen of the monitor 760. The hard disk recorder 700 can also output the sound from the speaker of the monitor 760.

Also, the hard disk recorder 700 can decode audio data and video data extracted from a broadcast wave signal obtained via a tuner, or audio data and video data obtained from another device via a network, for example, supply those data to the monitor 760, and display the image on the screen of the monitor 760. The hard disk recorder 700 can also output the sound from the speaker of the monitor 760.

The hard disk recorder 700 can of course perform operations other than the above.

As shown in Fig. 104, the hard disk recorder 700 includes a reception unit 721, a demodulation unit 722, a demultiplexer 723, an audio decoder 724, a video decoder 725, and a recorder control unit 726. The hard disk recorder 700 further includes an EPG data memory 727, a program memory 728, a work memory 729, a display converter 730, an OSD (On-Screen Display) control unit 731, a display control unit 732, a recording/reproducing unit 733, a D/A converter 734, and a communication unit 735.

The display converter 730 includes a video encoder 741. The recording/reproducing unit 733 includes an encoder 751 and a decoder 752.

The reception unit 721 receives an infrared signal from a remote controller (not shown), converts the infrared signal into an electrical signal, and outputs the electrical signal to the recorder control unit 726. The recorder control unit 726 is formed with a microprocessor, for example, and performs various kinds of operations in accordance with a program stored in the program memory 728. At this point, the recorder control unit 726 uses the work memory 729 where necessary.

The communication unit 735 is connected to a network, and performs a communication operation with another device via the network. For example, under the control of the recorder control unit 726, the communication unit 735 communicates with a tuner (not shown), and outputs a station select control signal mainly to the tuner.

The demodulation unit 722 demodulates a signal supplied from the tuner, and outputs the signal to the demultiplexer 723. The demultiplexer 723 divides the data supplied from the demodulation unit 722 into audio data, video data, and EPG data. The demultiplexer 723 outputs the audio data, the video data, and the EPG data to the audio decoder 724, the video decoder 725, and the recorder control unit 726, respectively.

The audio decoder 724 decodes the input audio data by an MPEG method, for example, and outputs the decoded audio data to the recording/reproducing unit 733. The video decoder 725 decodes the input video data by the MPEG method, for example, and outputs the decoded video data to the display converter 730. The recorder control unit 726 supplies and stores the input EPG data into the EPG data memory 727.

The display converter 730 encodes video data supplied from the video decoder 725 or the recorder control unit 726 into video data compliant with the NTSC (National Television Standards Committee) standards, for example, using the video encoder 741. The encoded video data is output to the recording/reproducing unit 733. Also, the display converter 730 converts the screen size of video data supplied from the video decoder 725 or the recorder control unit 726 into a size compatible with the size of the monitor 760. The display converter 730 further converts the video data having the converted screen size into video data compliant with the NTSC standards by using the video encoder 741. The NTSC video data is then converted into an analog signal, and is output to the display control unit 732.

Under the control of the recorder control unit 726, the display control unit 732 superimposes an OSD signal output from the OSD (On-Screen Display) control unit 731 on the video signal input from the display converter 730, and outputs the resultant signal to the display of the monitor 760 to display the image.

Audio data that is output from the audio decoder 724 and is converted into an analog signal by the D/A converter 734 is also supplied to the monitor 760. The monitor 760 outputs the audio signal from an internal speaker.

The recording/reproducing unit 733 includes a hard disk as a storage medium for recording video data, audio data, and the like.

The recording/reproducing unit 733 causes the encoder 751 to encode audio data supplied from the audio decoder 724 by an MPEG method, for example. The recording/reproducing unit 733 also causes the encoder 751 to encode video data supplied from the video encoder 741 of the display converter 730 by an MPEG method. The recording/reproducing unit 733 combines the encoded data of the audio data with the encoded data of the video data, using a multiplexer. The recording/reproducing unit 733 amplifies the combined data through channel coding, and writes the resultant data on the hard disk via a recording head.

The recording/reproducing unit 733 reproduces data recorded on the hard disk via a reproduction head, amplifies the data, and divides the data into audio data and video data by using a demultiplexer. The recording/reproducing unit 733 decodes the audio data and the video data by using the decoder 752 by an MPEG method. The recording/reproducing unit 733 performs a D/A conversion on the decoded audio data, and outputs the resultant data to the speaker of the monitor 760. The recording/reproducing unit 733 also performs a D/A conversion on the decoded video data, and outputs the resultant data to the display of the monitor 760.

Based on a user's instruction indicated by an infrared signal that is transmitted from a remote controller and is received via the reception unit 721, the recorder control unit 726 reads the latest EPG data from the EPG data memory 727, and supplies the EPG data to the OSD control unit 731. The OSD control unit 731 generates image data corresponding to the input EPG data, and outputs the image data to the display control unit 732. The display control unit 732 outputs the video data input from the OSD control unit 731 to the display of the monitor 760 to display the image. In this manner, an EPG (Electronic Program Guide) is displayed on the display of the monitor 760.

The hard disk recorder 700 can also obtain various kinds of data, such as video data, audio data, and EPG data, which are supplied from another device via a network such as the Internet.

Under the control of the recorder control unit 726, the communication unit 735 obtains encoded data of video data, audio data, EPG data, and the like from another device via a network, and supplies those data to the recorder control unit 726. For example, the recorder control unit 726 supplies encoded data of obtained video data and audio data to the recording/reproducing unit 733, and stores those data on the hard disk. At this point, the recorder control unit 726 and the recording/reproducing unit 733 may perform an operation such as a re-encoding where necessary.

The recorder control unit 726 also decodes encoded data of obtained video data and audio data, and supplies the resultant video data to the display converter 730. The display converter 730 processes the video data supplied from the recorder control unit 726 in the same manner as processing of video data supplied from the video decoder 725, and supplies the resultant data to the monitor 760 via the display control unit 732 to display the image.

In synchronization with the image display, the recorder control unit 726 may supply the decoded audio data to the monitor 760 via the D/A converter 734, and output the sound from the speaker.

Further, the recorder control unit 726 decodes encoded data of obtained EPG data, and supplies the decoded EPG data to the EPG data memory 727.

The above described hard disk recorder 700 uses the decoding device 100 as the video decoder 725, the decoder 752, and the decoder provided in the recorder control unit 726. Accordingly, like the decoding device 100, the video decoder 725, the decoder 752, and the decoder provided in the recorder control unit 726 can reduce usage of memory bandwidth and load thereon, while preventing decreases in inter prediction precision.

The hard disk recorder 700 also uses the encoding device 10 as the encoder 751. Accordingly, like the encoding device 10, the encoder 751 can reduce usage of memory bandwidth and load thereon, while preventing decreases in inter prediction precision.

In the above description, the hard disk recorder 700 that records video data and audio data on a hard disk has been described. However, any other recording medium may be used. For example, as in the case of the above described hard disk recorder 700, the encoding device 10 and the decoding device 100 can be applied to a recorder that uses a recording medium such as a flash memory, an optical disk, or a videotape, other than a hard disk.

<Example Structure of a Camera>

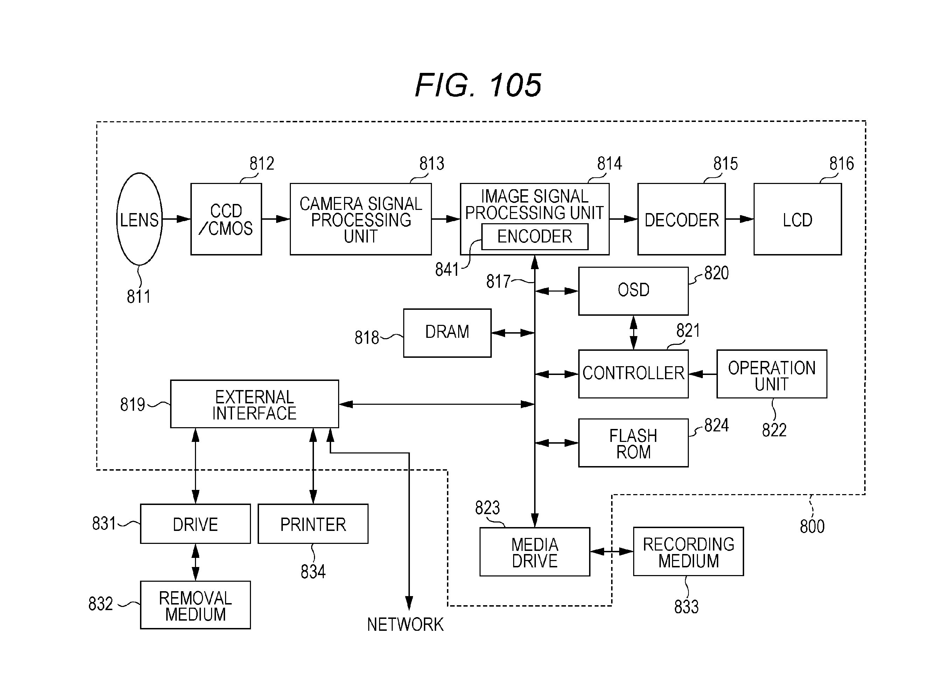

Fig. 105 is a block diagram showing a typical example structure of a camera using an encoding device and a decoding device to which the present technique is applied.

The camera 800 shown in Fig. 105 captures an image of an object, and displays the image of the object on an LCD 816 or records the image of the object as image data on a recording medium 833.

A lens block 811 has light (or a video image of an object) incident on a CCD/CMOS 812. The CCD/CMOS 812 is an image sensor using a CCD or a CMOS. The CCD/CMOS 812 converts the intensity of the received light into an electrical signal, and supplies the electrical signal to a camera signal processing unit 813.

The camera signal processing unit 813 transforms the electrical signal supplied from the CCD/CMOS 812 into a YCrCb chrominance signal, and supplies the signal to an image signal processing unit 814. Under the control of a controller 821, the image signal processing unit 814 performs predetermined image processing on the image signal supplied from the camera signal processing unit 813, and causes the encoder 841 to encode the image signal by an MPEG method. The image signal processing unit 814 supplies the encoded data generated by encoding the image signal to a decoder 815. The image signal processing unit 814 further obtains display data generated at an on-screen display (OSD) 820, and supplies the display data to the decoder 815.

In the above operation, the camera signal processing unit 813 uses a DRAM (Dynamic Random Access Memory) 818 connected thereto via a bus 817, to store the image data and the encoded data or the like generated by encoding the image data into the DRAM 818 where necessary.

The decoder 815 decodes the encoded data supplied from the image signal processing unit 814, and supplies the resultant image data (decoded image data) to the LCD 816. The decoder 815 also supplies the display data supplied from the image signal processing unit 814 to the LCD 816. The LCD 816 combines the image corresponding to the decoded image data supplied from the decoder 815 with the image corresponding to the display data, and displays the combined image.

Under the control of the controller 821, the on-screen display 820 outputs the display data of a menu screen formed with symbols, characters, and figures, and icons, to the image signal processing unit 814 via the bus 817.

Based on a signal indicating contents designated by a user using an operation unit 822, the controller 821 performs various kinds of operations, and controls, via the bus 817, the image signal processing unit 814, the DRAM 818, an external interface 819, the on-screen display 820, a media drive 823, and the like. A flash ROM 824 stores programs, data, and the like necessary for the controller 821 to perform various kinds of operations.

For example, in place of the image signal processing unit 814 and the decoder 815, the controller 821 can encode the image data stored in the DRAM 818, and decode the encoded data stored in the DRAM 818. In doing so, the controller 821 may perform encoding and decoding operations by using the same methods as the encoding and decoding methods used by the image signal processing unit 814 and the decoder 815, or may perform encoding and decoding operations by using methods that are not compatible with the image signal processing unit 814 and the decoder 815.

When a start of image printing is requested through the operation unit 822, for example, the controller 821 reads image data from the DRAM 818, and supplies the image data to a printer 834 connected to the external interface 819 via the bus 817, so that the printing is performed.

Further, when image recording is requested through the operation unit 822, for example, the controller 821 reads encoded data from the DRAM 818, and supplies and stores the encoded data into the recording medium 833 mounted on the media drive 823 via the bus 817.

The recording medium 833 is a readable and writable removable medium, such as a magnetic disk, a magnetooptical disk, an optical disk, or a semiconductor memory. The recording medium 833 may be any kind of removable medium, and may be a tape device, a disk, or a memory card. It is of course possible to use a noncontact IC card or the like.

Alternatively, the media drive 823 and the recording medium 833 may be integrated, and may be formed with an immobile storage medium such as an internal hard disk drive or an SSD (Solid State Drive).

The external interface 819 is formed with a USB input/output terminal and the like, for example, and is connected to the printer 834 when image printing is performed. Also, a drive 831 is connected to the external interface 819 where necessary, and a removable medium 832 such as a magnetic disk, an optical disk, or a magnetooptical disk is mounted on the drive 831 where appropriate. A computer program that is read from such a disk is installed in the flash ROM 824 where necessary.

Further, the external interface 819 includes a network interface connected to a predetermined network such as a LAN or the Internet. In accordance with an instruction from the operation unit 822, for example, the controller 821 can read encoded data from the DRAM 818, and supply the encoded data from the external interface 819 to another device connected thereto via a network. Also, the controller 821 can obtain encoded data and image data supplied from another device via a network, and store the data into the DRAM 818 or supply the data to the image signal processing unit 814 via the external interface 819.

The above described camera 800 uses the decoding device 100 as the decoder 815. Accordingly, like the decoding device 100, the decoder 815 can reduce usage of memory bandwidth and load thereon, while preventing decreases in inter prediction precision.

The camera 800 also uses the encoding device 10 as the encoder 841. Accordingly, like the encoding device 10, the encoder 841 can reduce usage of memory bandwidth and load thereon, while preventing decreases in inter prediction precision.

The decoding method used by the decoding device 100 may be applied to decoding operations to be performed by the controller 821. Likewise, the encoding method used by the encoding device 10 may be applied to encoding operations to be performed by the controller 821.

Image data to be captured by the camera 800 may be of a moving image, or may be of a still image.

It is of course possible to apply the encoding device 10 and the decoding device 100 to any devices and systems other than the above described devices.

It should be noted that embodiments of the present technique are not limited to the above described embodiments, and various modifications may be made to them without departing from the scope of the present technique.

The present technique may also be embodied in the structures described below.

(1) An image processing device including:

a pixel read unit that reads predetermined pixels from a reference image in an inter prediction; and
an arithmetic operation unit that calculates a pixel having a fractional position in the reference image as a pixel in a predicted image in the inter prediction by using the predetermined pixels read by the pixel read unit,
wherein the pixel read unit reads the predetermined pixels so that the number of the predetermined pixels corresponding to an outer pixel in the predicted image is smaller than the number of the predetermined pixels corresponding to an inner pixel in the predicted image.

(2) The image processing device of (1), wherein the position of the outer pixel in the reference image is a position outside the range of the size of the predicted image in a reference block formed with all the predetermined pixels to be used in calculating the respective pixels in the predicted image.

(3) The image processing device of (2), wherein the pixel read unit reads the predetermined pixels so that the pixels located outside the range of the size of the predicted pixel in the reference block among the predetermined pixels corresponding to the outer pixel are identical to the pixels located outside the range of the size of the predicted image in the reference block among the predetermined pixels corresponding to the inner pixel.

(4) The image processing device of (1), wherein the position of the outer pixel in the reference image is a position located on a boundary between the range of the size of the predicted image in a reference block formed with all the predetermined pixels to be used in calculating the respective pixels in the predicted image and a range located outside the range of the size of the predicted image.

(5) The image processing device of any of (1) through (4), wherein the pixel read unit reads the predetermined pixels so that the number of the predetermined pixels corresponding to an outermost pixel in the predicted image is two.

(6) The image processing device of any of (1) through (5), wherein the pixel read unit reads the predetermined pixels so that the number of the predetermined pixels corresponding to an outermost pixel in the predicted image is two, the number of the predetermined pixels corresponding to the second outermost pixel located on the inner side of the outermost pixel is four, and the number of the predetermined pixels corresponding to each of the pixels that are located on the inner side of the second outermost pixel and include the innermost pixels in the predicted image is six.

(7) The image processing device of any of (1) through (6), further including
a storage unit that stores outer coefficients corresponding to an outer pixel in the predicted image and inner coefficients corresponding to an inner pixel in the predicted image,
wherein, when the predetermined pixels read by the pixel read unit correspond to the outer pixel in the predicted image, the arithmetic operation unit performs the calculation by using the predetermined pixels and the outer coefficients, and, when the predetermined pixels read by the pixel read unit correspond to the inner pixel in the predicted image, the arithmetic operation unit performs the calculation by using the predetermined pixels and the inner coefficients.

(8) The image processing device of any of (1) through (4), further including
a pixel generation unit that, when the number of the predetermined pixels read by the pixel read unit is smaller than a predetermined number, replicates an outer pixel among the predetermined pixels by the difference number between the number of the predetermined pixels and the predetermined number, and generates the predetermined number of pixels including the replicated pixel and the predetermined pixels,
wherein the arithmetic operation unit calculates a pixel in the predicted image by using the predetermined number of pixels generated by the pixel generation unit.

(9) The image processing device of (8), wherein the pixel read unit reads the predetermined pixels so that the number of the predetermined pixels corresponding to an outermost pixel in the predicted image is four, the number of the predetermined pixels corresponding to the second outermost pixel located on the inner side of the outermost pixel is five, and the number of the predetermined pixels corresponding to each of the pixels that are located on the inner side of the second outermost pixel and include the innermost pixels in the predicted image is six, and
the predetermined number is six.

(10) The image processing device of any of (1) through (4) and (8), wherein, when each pixel in the predicted image has a fractional position in only one of the horizontal direction and the vertical direction in the reference image, the pixel read unit reads the predetermined pixels so that the number of the predetermined pixels corresponding to an outer pixel in the predicted image is larger than when each pixel in the predicted image has a fractional position in both directions.

(11) The image processing device of any of (1) through (4), (8), and (10), wherein, when the size of the predicted image is larger than a predetermined size, the pixel read unit reads the predetermined pixels so that the number of the predetermined pixels corresponding to an outer pixel in the predicted image is larger than when the size of the predicted image is equal to or smaller than the predetermined size.

(12) The image processing device of any of (1) through (4), (8), (10), and (11), wherein, when the inter prediction has a predicting direction of a unidirectional prediction, the pixel read unit reads the predetermined pixels so that the number of the predetermined pixels corresponding to an outer pixel in the predicted image is larger than when the inter prediction is a bidirectional prediction.

(13) The image processing device of (1), wherein the pixel read unit reads the predetermined pixels so that the number of the predetermined pixels that correspond to an outer pixel in the predicted image and are located on the outer side of the predicted pixel is smaller than the number of the predetermined pixels that correspond to an inner pixel in the predicted image and are located on the outer side of the predicted pixel.

(14) The image processing device of (13), further including
a pixel generation unit that, when the number of the predetermined pixels read by the pixel read unit is smaller than a predetermined number, replicates an outer pixel among the predetermined pixels by the difference number between the number of the predetermined pixels and the predetermined number, and generates the predetermined number of pixels including the replicated pixel and the predetermined pixels,
wherein the arithmetic operation unit calculates a pixel in the predicted image by using the predetermined number of pixels generated by the pixel generation unit.

(15) The image processing device of any of (1) through (4), (8), and (10) through (14), wherein the pixel read unit reads the predetermined pixels so that the number of the predetermined pixels corresponding to an outer pixel in the predicted image is smaller than the number of the predetermined pixels corresponding to an inner pixel in the predicted image, and the number of the predetermined pixels aligned in one of the horizontal direction and the vertical direction is smaller than the number of the predetermined pixels aligned in the other one of the horizontal direction and the vertical direction.

(16) The image processing device of any of (1) through (15), further including
a difference calculation unit that calculates the difference between the predicted image and an encoding target image.

(17) The image processing device of any of (1) through (16), further including
an adding operation unit that adds the predicted image to a decoding target image.

(18) An image processing method to be performed by an image processing device, including:

a pixel read step of reading predetermined pixels from a reference image in an inter prediction; and
an arithmetic operation step of calculating a pixel having a fractional position in the reference image as a pixel in a predicted image in the inter prediction by using the predetermined pixels read through the procedure of the pixel read step,
wherein the procedure of the pixel read step includes reading the predetermined pixels so that the number of the predetermined pixels corresponding to an outer pixel in the predicted image is smaller than the number of the predetermined pixels corresponding to an inner pixel in the predicted image.

(19) A program for causing a computer to execute:

a pixel read step of reading predetermined pixels from a reference image in an inter prediction; and
an arithmetic operation step of calculating a pixel having a fractional position in the reference image as a pixel in a predicted image in the inter prediction by using the predetermined pixels read through the procedure of the pixel read step,
wherein the procedure of the pixel read step includes reading the predetermined pixels so that the number of the predetermined pixels corresponding to an outer pixel in the predicted image is smaller than the number of the predetermined pixels corresponding to an inner pixel in the predicted image.

REFERENCE SIGNS LIST

10 Encoding device, 13 Arithmetic operation unit, 20 Addition unit, 24 Inter prediction unit, 41 Reference image read unit, 43 2-tap FIR filter, 44 4-tap FIR filter, 45 6-tap FIR filter, 46 2-tap filter coefficient memory, 47 4-tap filter coefficient memory, 48 6-tap filter coefficient memory, 100 Decoding device, 105 Addition unit, 111 Inter prediction unit, 160 Reference image read unit, 161 Pixel generation unit, 180, 200, 210, 220, 251, 271 Reference image read unit, 272 Image generation unit, 291 Reference image read unit, 292 Pixel output unit, 293 8-tap FIR filter, 294 4-tap FIR filter, 295 8-tap filter coefficient memory, 296 4-tap filter coefficient memory

**Claims**

1. An image processing device comprising:

a pixel read unit configured to read predetermined pixels from a reference image in an inter prediction; and
an arithmetic operation unit configured to calculate a pixel having a fractional position in the reference image as a pixel in a predicted image in the inter prediction, by using the predetermined pixels read by the pixel read unit,
wherein the pixel read unit reads the predetermined pixels so that the number of the predetermined pixels corresponding to an outer pixel in the predicted image is smaller than the number of the predetermined pixels corresponding to an inner pixel in the predicted image.

2. The image processing device according to claim 1, wherein a position of the outer pixel in the reference image is a position outside a range of a size of the predicted image in a reference block formed with all the predetermined pixels to be used in calculating respective pixels in the predicted image.

3. The image processing device according to claim 2, wherein the pixel read unit reads the predetermined pixels so that pixels located outside the range of the size of the predicted pixel in the reference block among the predetermined pixels corresponding to the outer pixel are identical to pixels located outside the range of the size of the predicted image in the reference block among the predetermined pixels corresponding to the inner pixel.

4. The image processing device according to claim 1, wherein a position of the outer pixel in the reference image is a position located on a boundary between a range of a size of the predicted image in a reference block formed with all the predetermined pixels to be used in calculating respective pixels in the predicted image and a range located outside the range of the size of the predicted image.

5. The image processing device according to claim 1, wherein the pixel read unit reads the predetermined pixels so that the number of the predetermined pixels corresponding to an outermost pixel in the predicted image is two.

6. The image processing device according to claim 1, wherein the pixel read unit reads the predetermined pixels so that the number of the predetermined pixels corresponding to an outermost pixel in the predicted image is two, the number of the predetermined pixels corresponding to a second outermost pixel located on an inner side of the outermost pixel is four, and the number of the predetermined pixels corresponding to one of pixels that are located on an inner side of the second outermost pixel and include innermost pixels in the predicted image is six.

7. The image processing device according to claim 1, further comprising

a storage unit configured to store outer coefficients corresponding to an outer pixel in the predicted image and inner coefficients corresponding to an inner pixel in the predicted image,

wherein, when the predetermined pixels read by the pixel read unit correspond to the outer pixel in the predicted image, the arithmetic operation unit performs the calculation by using the predetermined pixels and the outer coefficients, and, when the predetermined pixels read by the pixel read unit correspond to the inner pixel in the predicted image, the arithmetic operation unit performs the calculation by using the predetermined pixels and the inner coefficients.

8. The image processing device according to claim 1, further comprising

a pixel generation unit configured to, when the number of the predetermined pixels read by the pixel read unit is smaller than a predetermined number, replicate an outer pixel among the predetermined pixels by a difference number between the number of the predetermined pixels and the predetermined number, and generate the predetermined number of pixels including a replicated pixel and the predetermined pixels,

wherein the arithmetic operation unit calculates a pixel in the predicted image by using the predetermined number of pixels generated by the pixel generation unit.

9. The image processing device according to claim 8, wherein the pixel read unit reads the predetermined pixels so that the number of the predetermined pixels corresponding to an outermost pixel in the predicted image is four, the number of the predetermined pixels corresponding to a second outermost pixel located on an inner side of the outermost pixel is five, and the number of the predetermined pixels corresponding to one of pixels that are located on an inner side of the second outermost pixel and include innermost pixels in the predicted image is six, and the predetermined number is six.

10. The image processing device according to claim 1, wherein, when each pixel in the predicted image has a fractional position in only one of a horizontal direction and a vertical direction in the reference image, the pixel read unit reads the predetermined pixels so that the number of the predetermined pixels corresponding to an outer pixel in the predicted image is larger than when each pixel in the predicted image has a fractional position in both of the directions.

11. The image processing device according to claim 1, wherein, when a size of the predicted image is larger than a predetermined size, the pixel read unit reads the predetermined pixels so that the number of the predetermined pixels corresponding to an outer pixel in the predicted image is larger than when the size of the predicted image is equal to or smaller than the predetermined size.

12. The image processing device according to claim 1, wherein, when the inter prediction has a predicting direction of a unidirectional prediction, the pixel read unit reads the predetermined pixels so that the number of the predetermined pixels corresponding to an outer pixel in the predicted image is larger than when the inter prediction is a bidirectional prediction.

13. The image processing device according to claim 1, wherein the pixel read unit reads the predetermined pixels so that the number of the predetermined pixels that correspond to an outer pixel in the predicted image and are located on an outer side of the predicted pixel is smaller than the number of the predetermined pixels that correspond to an inner pixel in the predicted image and are located on an outer side of the predicted pixel.

14. The image processing device according to claim 13, further comprising

a pixel generation unit configured to, when the number of the predetermined pixels read by the pixel read unit is smaller than a predetermined number, replicate an outer pixel among the predetermined pixels by a difference number between the number of the predetermined pixels and the predetermined number, and generate the predetermined number of pixels including a replicated pixel and the predetermined pixels,

wherein the arithmetic operation unit calculates a pixel in the predicted image by using the predetermined number of pixels generated by the pixel generation unit.

15. The image processing device according to claim 1, wherein the pixel read unit reads the predetermined pixels so that the number of the predetermined pixels corresponding to an outer pixel in the predicted image is smaller than the number of the predetermined pixels corresponding to an inner pixel in the predicted image, and the number of the predetermined pixels aligned in one of a horizontal direction and a vertical direction is smaller than the number of the predetermined pixels aligned in the other one of the horizontal direction and the vertical direction.

16. The image processing device according to claim 1, further comprising

a difference calculation unit configured to calculate a difference between the predicted image and an encoding target image.

**17.** The image processing device according to claim 1, further comprising
an adding operation unit configured to add the predicted image to a decoding target image.

**18.** An image processing method to be performed by an image processing device, comprising:

a pixel read step of reading predetermined pixels from a reference image in an inter prediction; and
an arithmetic operation step of calculating a pixel having a fractional position in the reference image as a pixel in a predicted image in the inter prediction, by using the predetermined pixels read through the procedure of the pixel read step,
wherein the procedure of the pixel read step includes reading the predetermined pixels so that the number of the predetermined pixels corresponding to an outer pixel in the predicted image is smaller than the number of the predetermined pixels corresponding to an inner pixel in the predicted image.

**19.** A program for causing a computer to execute:

a pixel read step of reading predetermined pixels from a reference image in an inter prediction; and
an arithmetic operation step of calculating a pixel having a fractional position in the reference image as a pixel in a predicted image in the inter prediction, by using the predetermined pixels read through the procedure of the pixel read step,
wherein the procedure of the pixel read step includes reading the predetermined pixels so that the number of the predetermined pixels corresponding to an outer pixel in the predicted image is smaller than the number of the predetermined pixels corresponding to an inner pixel in the predicted image.

# FIG. 1

# FIG. 2

## FIG. 3

INPUT SIGNAL → A/D CONVERTER (11) → SCREEN REARRANGEMENT BUFFER (12) → (+/−) (13) → ORTHOGONAL TRANSFORM UNIT (14) → QUANTIZATION UNIT (15) → LOSSLESS ENCODING UNIT (16) → ACCUMULATION BUFFER (17) → COMPRESSED IMAGE INFORMATION

RATE CONTROL UNIT (27)

INVERSE QUANTIZATION UNIT (18)

INVERSE ORTHOGONAL TRANSFORM UNIT (19)

(20)

INTRA PREDICTION UNIT (23)

DEBLOCKING FILTER (21)

SELECTION UNIT (26)

INTER PREDICTION UNIT (24)

FRAME MEMORY (22)

MOTION PREDICTION UNIT (25)

10

## FIG. 4

EP 2 651 135 A1

*FIG. 5*

*FIG. 6*

# FIG. 7

FIG. 8

FIG. 9

## FIG. 10

## FIG. 11

*FIG. 12*

*FIG. 13*

*FIG. 14*

## FIG. 15

## FIG. 16

## FIG. 17

# FIG. 18

# FIG. 19

## FIG. 20

```
( ENCODING OPERATION START )
              │
              ▼
┌──────────────────────────────┐ S11
│   PERFORM A/D CONVERSION      │
└──────────────────────────────┘
              │
              ▼
┌──────────────────────────────┐ S12
│   PERFORM REARRANGEMENT       │
└──────────────────────────────┘
              │
              ▼
┌──────────────────────────────┐ S13
│   PERFORM INTRA PREDICTION    │
└──────────────────────────────┘
              │
              ▼
┌──────────────────────────────┐ S14
│  PERFORM MOTION PREDICTION    │
│    USING REFERENCE IMAGE      │
└──────────────────────────────┘
              │
              ▼
┌──────────────────────────────┐ S15
│  INTER PREDICTION OPERATION   │
└──────────────────────────────┘
              │
              ▼
┌──────────────────────────────┐ S16
│  DETERMINE OPTIMUM PREDICTION │
│ MODE BASED ON COST FUNCTION VALUES │
└──────────────────────────────┘
              │
              ▼
           ◇ S17
    IS OPTIMUM
  PREDICTION MODE  ──── No ────┐
  INTER PREDICTION             │
      MODE?                    │
      │ Yes                    ▼
      ▼                   ┌──────────────────┐ S19
┌──────────────────────┐ │ PERFORM LOSSLESS │
│ PERFORM LOSSLESS     │ │ ENCODING ON INTRA│
│ ENCODING ON INTER    │ │ PREDICTION MODE  │
│ PREDICTION MODE      │ │ INFORMATION      │
│ INFORMATION AND      │ └──────────────────┘
│ MOTION VECTOR   S18  │        │
└──────────────────────┘        │
      │◄────────────────────────┘
      ▼
┌──────────────────────┐ S20
│ SUBTRACT PREDICTED   │
│ IMAGE FROM IMAGE     │
└──────────────────────┘
      │
      ▼
┌──────────────────────┐ S21
│ PERFORM ORTHOGONAL   │
│ TRANSFORM ON RESIDUAL│
│ ERROR INFORMATION    │
└──────────────────────┘
      │
      ▼
┌──────────────────────┐ S22
│ QUANTIZE COEFFICIENT │
└──────────────────────┘
      │
      ▼
┌──────────────────────┐ S23
│ PERFORM LOSSLESS ENCODING │
│ ON QUANTIZED COEFFICIENT  │
└──────────────────────┘
      │
      ▼
     (1)
```

# FIG. 21

ACCUMULATE COMPRESSED
IMAGE INFORMATION — S24

OUTPUT COMPRESSED
IMAGE INFORMATION — S25

INVERSELY QUANTIZE
QUANTIZED COEFFICIENT — S26

PERFORM INVERSE ORTHOGONAL
TRANSFORM ON COEFFICIENT — S27

ADD RESIDUAL ERROR
INFORMATION TO PREDICTED IMAGE — S28

PERFORM FILTERING — S29

ACCUMULATE FILTERED IMAGE — S30

END

# FIG. 22

Flowchart:

INTER PREDICTION OPERATION START

S50 — IDENTIFY REFERENCE IMAGE BASED ON PREDICTING DIRECTION AND REFERENCE INDEX

S51 — DETERMINE SIZE OF PREDICTED IMAGE BASED ON BLOCK SIZE OF INTER PREDICTION BLOCK

S52 — READ REFERENCE PIXELS BASED ON MOTION VECTOR AND SIZE OF PREDICTED IMAGE

S53 — DETERMINE GENERATION TARGET PREDICTED PIXEL

S54 — DETERMINE NUMBER OF REFERENCE PIXELS BASED ON POSITION OF GENERATION TARGET PREDICTED PIXEL IN PREDICTED IMAGE

S55 — READ REFERENCE PIXELS BASED ON NUMBER OF REFERENCE PIXELS AND POSITION OF GENERATION TARGET PREDICTED PIXEL IN REFERENCE IMAGE

S56 — READ FILTER COEFFICIENT STORED AND ASSOCIATED WITH FRACTIONAL VALUE OF MOTION VECTOR

S57 — IS NUMBER OF REFERENCE PIXELS TWO?
- Yes → S58 — PERFORM CALCULATION BY USING TWO GENERATION PIXELS AND FILTER COEFFICIENT
- No → S59 — IS NUMBER OF REFERENCE PIXELS FOUR?
  - Yes → S60 — PERFORM CALCULATION BY USING FOUR REFERENCE PIXELS AND FILTER COEFFICIENT
  - No → S61 — PERFORM CALCULATION BY USING SIX REFERENCE PIXELS AND FILTER COEFFICIENT

S62 — ARE BOTH FRACTIONAL VALUES OF HORIZONTAL COMPONENT AND VERTICAL COMPONENT OF MOTION VECTOR OTHER THAN ZERO?
- Yes → S65 — STORE Sub Pel
- No → S63 — OUTPUT PIXEL AS PREDICTED PIXEL

S66 — HAVE ALL PREDICTION-ASSOCIATED PIXELS BEEN GENERATED?
- No → (loop back)
- Yes → 1

S64 — HAVE ALL PREDICTED PIXELS BEEN GENERATED?
- No → (loop back)
- Yes → RETURN

# FIG. 23

①

S67 DETERMINE GENERATION TARGET PREDICTED PIXEL

S68 DETERMINE NUMBER OF Sub Pels BASED ON POSITION OF GENERATION TARGET PREDICTED PIXEL IN VERTICAL DIRECTION IN PREDICTED IMAGE

S69 READ Sub Pels BASED ON NUMBER OF Sub Pels AND POSITION OF GENERATION TARGET PREDICTED PIXEL IN REFERENCE IMAGE

S70 READ FILTER COEFFICIENT STORED AND ASSOCIATED WITH FRACTIONAL VALUE OF VERTICAL COMPONENT OF MOTION VECTOR

S71 IS NUMBER OF Sub Pels TWO?

No

S73 IS NUMBER OF Sub Pels FOUR?

No

Yes

S72 PERFORM CALCULATION BY USING TWO Sub Pels AND FILTER COEFFICIENT

Yes

S74 PERFORM CALCULATION BY USING FOUR Sub Pels AND FILTER COEFFICIENT

S75 PERFORM CALCULATION BY USING SIX Sub Pels AND FILTER COEFFICIENT

S76 OUTPUT Sub Pel AS PREDICTED PIXEL

S77 HAVE ALL PREDICTED PIXELS BEEN GENERATED?

No

Yes

RETURN

## FIG. 24

COMPRESSED IMAGE INFORMATION → ACCUMULATION BUFFER (101) → LOSSLESS DECODING UNIT (102) → INVERSE QUANTIZATION UNIT (103) → INVERSE ORTHOGONAL TRANSFORM UNIT (104) → (105) → DEBLOCKING FILTER (106) → SCREEN REARRANGEMENT BUFFER (107) → D/A CONVERTER (108) → OUTPUT SIGNAL

INTRA PREDICTION UNIT (110)

INTER PREDICTION UNIT (111)

FRAME MEMORY (109)

(112)

100

EP 2 651 135 A1

## FIG. 25

```
┌─────────────────────────────────┐
│    DECODING OPERATION START      │
└─────────────────────────────────┘
                 │
                 ▼
┌─────────────────────────────────┐
│     ACCUMULATE COMPRESSED        │  S101
│       IMAGE INFORMATION          │
└─────────────────────────────────┘
                 │
                 ▼
┌─────────────────────────────────┐
│   PERFORM LOSSLESS DECODING ON   │  S102
│   COMPRESSED IMAGE INFORMATION   │
└─────────────────────────────────┘
                 │
                 ▼
┌─────────────────────────────────┐
│   INVERSELY QUANTIZE QUANTIZED   │  S103
│           COEFFICIENT            │
└─────────────────────────────────┘
                 │
                 ▼
┌─────────────────────────────────┐
│   PERFORM INVERSE ORTHOGONAL     │  S104
│    TRANSFORM ON COEFFICIENT      │
└─────────────────────────────────┘
                 │
                 ▼
```

S105

HAS INTER PREDICTION MODE INFORMATION BEEN SUPPLIED?

No → PERFORM INTRA PREDICTION — S107

Yes

PERFORM INTER PREDICTION OPERATION — S106

ADD RESIDUAL ERROR INFORMATION TO PREDICTED IMAGE — S108

PERFORM FILTERING — S109

ACCUMULATE FILTERED IMAGE — S110

PERFORM REARRANGEMENT — S111

PERFORM D/A CONVERSION — S112

END

# FIG. 26

FIG. 27

*FIG. 28*

INTER PREDICTION OPERATION START

IDENTIFY REFERENCE IMAGE BASED ON PREDICTING DIRECTION AND REFERENCE INDEX — S150

DETERMINE SIZE OF PREDICTED IMAGE BASED ON BLOCK SIZE OF INTER PREDICTION BLOCK — S151

READ REFERENCE PIXELS BASED ON MOTION VECTOR AND SIZE OF PREDICTED IMAGE — S152

DETERMINE GENERATION TARGET PREDICTED PIXEL — S153

DETERMINE NUMBER OF REFERENCE PIXELS BASED ON POSITION OF GENERATION TARGET PREDICTED PIXEL IN PREDICTED IMAGE — S154

READ REFERENCE PIXELS BASED ON NUMBER OF REFERENCE PIXELS AND POSITION OF GENERATION TARGET PREDICTED PIXEL IN REFERENCE IMAGE — S155

READ FILTER COEFFICIENT STORED AND ASSOCIATED WITH FRACTIONAL VALUE OF MOTION VECTOR — S156

S157
IS NUMBER OF REFERENCE PIXELS FOUR? — No

Yes

REPLICATE OUTER REFERENCE PIXEL TO CREATE TWO PIXELS, AND GENERATE SIX GENERATION PIXELS — S158

S159
IS NUMBER OF REFERENCE PIXELS FIVE? — No

Yes — S160
REPLICATE OUTER REFERENCE PIXEL TO CREATE ONE PIXEL, AND GENERATE SIX GENERATION PIXELS

S161
PERFORM CALCULATION BY USING SIX GENERATION PIXELS AND FILTER COEFFICIENT

S162
ARE BOTH FRACTIONAL VALUES OF HORIZONTAL COMPONENT AND VERTICAL COMPONENT OF MOTION VECTOR OTHER THAN ZERO? — No

Yes — S165
STORE Sub Pel

S163
OUTPUT PIXEL AS PREDICTED PIXEL

S166
HAVE ALL PREDICTION-ASSOCIATED PIXELS BEEN GENERATED? — No

Yes

1

S164
HAVE ALL PREDICTED PIXELS BEEN GENERATED? — No

Yes

RETURN

# FIG. 29

①

DETERMINE GENERATION TARGET PREDICTED PIXEL — S167

DETERMINE NUMBER OF Sub Pels BASED ON POSITION OF GENERATION TARGET PREDICTED PIXEL IN VERTICAL DIRECTION IN PREDICTED IMAGE — S168

READ Sub Pels BASED ON NUMBER OF Sub Pels AND POSITION OF GENERATION TARGET PREDICTED PIXEL IN REFERENCE IMAGE — S169

READ FILTER COEFFICIENT STORED AND ASSOCIATED WITH FRACTIONAL VALUE OF VERTICAL COMPONENT OF MOTION VECTOR — S170

S171 IS NUMBER OF Sub Pels FOUR? — No

Yes

REPLICATE OUTER Sub Pel TO CREATE TWO PIXELS, AND GENERATE SIX GENERATION PIXELS — S172

S173 IS NUMBER OF Sub Pels FIVE? — No

Yes

REPLICATE OUTER Sub Pel TO CREATE ONE PIXEL, AND GENERATE SIX GENERATION PIXELS — S174

PERFORM CALCULATION BY USING SIX GENERATION PIXELS AND FILTER COEFFICIENT — S175

OUTPUT Sub Pel AS PREDICTED PIXEL — S176

S177 HAVE ALL PREDICTED PIXELS BEEN GENERATED? — No

Yes

RETURN

# FIG. 30

REFERENCE
IMAGE

FROM 22 →

INTER PREDICTION
MODE INFORMATION

FROM 25 →

MOTION VECTOR

REFERENCE
IMAGE READ
UNIT
180

PIXEL
GENERATION
UNIT
161

6-TAP FIR
FILTER
45

PIXEL
SELECTION
UNIT
162

PREDICTED
IMAGE →

6-TAP FILTER
COEFFICIENT
MEMORY
48

INTERMEDIATE
RESULT
MEMORY
50

24

EP 2 651 135 A1

# FIG. 31

# FIG. 32

# FIG. 33

## FIG. 34

## FIG. 35

# FIG. 36

# FIG. 37

INTER PREDICTION OPERATION START

IDENTIFY REFERENCE IMAGE BASED ON PREDICTING DIRECTION AND REFERENCE INDEX — S181

READ OPERATION — S182

DETERMINE GENERATION TARGET PREDICTED PIXEL — S183

DETERMINE NUMBER OF REFERENCE PIXELS BASED ON POSITION OF GENERATION TARGET PREDICTED PIXEL IN PREDICTED IMAGE AND FRACTIONAL VALUE OF MOTION VECTOR — S184

READ REFERENCE PIXELS BASED ON NUMBER OF REFERENCE PIXELS AND POSITION OF GENERATION TARGET PREDICTED PIXEL IN REFERENCE IMAGE — S185

READ FILTER COEFFICIENT STORED AND ASSOCIATED WITH FRACTIONAL VALUE OF MOTION VECTOR — S186

IS NUMBER OF REFERENCE PIXELS FOUR? — S187
No
Yes

IS NUMBER OF REFERENCE PIXELS FIVE? — S189
No
Yes

REPLICATE OUTER REFERENCE PIXEL TO CREATE TWO PIXELS, AND GENERATE SIX GENERATION PIXELS — S188

REPLICATE OUTER REFERENCE PIXEL TO CREATE ONE PIXEL, AND GENERATE SIX GENERATION PIXELS — S190

PERFORM CALCULATION BY USING SIX GENERATION PIXELS AND FILTER COEFFICIENT — S191

ARE BOTH FRACTIONAL VALUES OF HORIZONTAL COMPONENT AND VERTICAL COMPONENT OF MOTION VECTOR OTHER THAN ZERO? — S192
No
Yes

STORE Sub Pel — S195

OUTPUT PIXEL AS PREDICTED PIXEL — S193

HAVE ALL PREDICTION-ASSOCIATED PIXELS BEEN GENERATED? — S196
No
Yes

HAVE ALL PREDICTED PIXELS BEEN GENERATED? — S194
No
Yes

1

RETURN

# FIG. 38

( 1 )

DETERMINE GENERATION
TARGET PREDICTED PIXEL — S197

DETERMINE NUMBER OF Sub Pels BASED ON
POSITION OF GENERATION TARGET PREDICTED
PIXEL IN VERTICAL DIRECTION IN PREDICTED IMAGE — S198

READ Sub Pels BASED ON NUMBER OF Sub Pels
AND POSITION OF GENERATION TARGET
PREDICTED PIXEL IN REFERENCE IMAGE — S199

READ FILTER COEFFICIENT STORED AND
ASSOCIATED WITH FRACTIONAL VALUE OF
VERTICAL COMPONENT OF MOTION VECTOR — S200

S201
IS NUMBER OF
Sub Pels FOUR? — No

Yes

REPLICATE OUTER Sub Pel TO
CREATE TWO PIXELS, AND
GENERATE SIX GENERATION PIXELS — S202

S203
IS NUMBER OF
Sub Pels FIVE? — No

Yes

REPLICATE OUTER Sub Pel TO
CREATE ONE PIXEL, AND
GENERATE SIX GENERATION PIXELS — S204

PERFORM CALCULATION BY USING
SIX GENERATION PIXELS AND
FILTER COEFFICIENT — S205

OUTPUT Sub Pel AS PREDICTED PIXEL — S206

S207
HAVE ALL
PREDICTED PIXELS BEEN
GENERATED? — No

Yes

RETURN

## FIG. 39

```
READ OPERATION START
```

S221 — ARE BOTH FRACTIONAL VALUES OF HORIZONTAL COMPONENT AND VERTICAL COMPONENT OF MOTION VECTOR OTHER THAN ZERO?

No →

S222 (Yes) — DETERMINE REFERENCE PIXEL RANGE THAT CONSISTS OF BLOCK HAVING SIZE OF INTER PREDICTION BLOCK, BLOCK OF ONE ROW OF PIXELS BELOW THE BLOCK, AND BLOCK OF ONE COLUMN OF PIXELS ON RIGHT SIDE OF BLOCK CONSISTING OF THE TWO BLOCKS

S223 — IS FRACTIONAL VALUE OF HORIZONTAL COMPONENT OF MOTION VECTOR OTHER THAN ZERO?

No →

S224 (Yes) — DETERMINE REFERENCE PIXEL RANGE THAT CONSISTS OF BLOCK HAVING SIZE OF INTER PREDICTION BLOCK, AND BLOCK OF ONE COLUMN OF PIXELS AND BLOCK OF ONE COLUMN OF PIXELS ON RIGHT AND LEFT SIDES OF THE BLOCK

S225 — DETERMINE REFERENCE PIXEL RANGE THAT CONSISTS OF BLOCK HAVING SIZE OF INTER PREDICTION BLOCK, AND BLOCK OF ONE ROW OF PIXELS AND BLOCK OF ONE ROW OF PIXELS ABOVE AND BELOW THE BLOCK

S226 — READ REFERENCE PIXELS IN POSITION CORRESPONDING TO MOTION VECTOR FROM DETERMINED RANGE

```
RETURN
```

FIG. 40

## FIG. 41

## FIG. 42

# FIG. 43

FIG. 44

## FIG. 45

```
( INTER PREDICTION OPERATION START )
            │
            ▼
┌─────────────────────────────────────┐  S231
│  IDENTIFY REFERENCE IMAGE BASED ON   │
│ PREDICTING DIRECTION AND REFERENCE INDEX │
└─────────────────────────────────────┘
            │
            ▼
┌─────────────────────────────────────┐  S232
│           READ OPERATION             │
└─────────────────────────────────────┘
```

```
┌─────────────────────────────────────┐  S233
│ DETERMINE GENERATION TARGET PREDICTED PIXEL │
└─────────────────────────────────────┘
            │
            ▼
┌─────────────────────────────────────┐  S234
│  DETERMINE NUMBER OF REFERENCE PIXELS BASED ON │
│ POSITION OF GENERATION TARGET PREDICTED PIXEL IN │
│ PREDICTED IMAGE AND SIZE OF INTER PREDICTION BLOCK │
└─────────────────────────────────────┘
            │
            ▼
┌─────────────────────────────────────┐  S235
│    READ REFERENCE PIXELS BASED ON NUMBER OF     │
│   REFERENCE PIXELS AND POSITION OF GENERATION   │
│  TARGET PREDICTED PIXEL IN REFERENCE IMAGE      │
└─────────────────────────────────────┘
            │
            ▼
┌─────────────────────────────────────┐  S236
│  READ FILTER COEFFICIENT STORED AND ASSOCIATED  │
│    WITH FRACTIONAL VALUE OF MOTION VECTOR       │
└─────────────────────────────────────┘
            │
            ▼
         S237
< IS NUMBER OF REFERENCE PIXELS FOUR? > ──No──┐
            │                                  ▼
           Yes                             S239
            │                        < IS NUMBER OF REFERENCE PIXELS FIVE? > ──No──┐
            ▼                                  │                                    │
┌─────────────────────────────────┐ S238     Yes                                  │
│ REPLICATE OUTER REFERENCE PIXEL TO CREATE TWO │  │                               │
│ PIXELS, AND GENERATE SIX GENERATION PIXELS │   ▼                                 │
└─────────────────────────────────┘        S240                                   │
  S241      │                        ┌─────────────────────────────┐              │
            ▼                        │ REPLICATE OUTER REFERENCE   │              │
┌─────────────────────────────────┐ │ PIXEL TO CREATE ONE PIXEL, AND │           │
│ PERFORM CALCULATION BY USING SIX GENERATION │ │ GENERATE SIX GENERATION PIXELS │ │
│   PIXELS AND FILTER COEFFICIENT │ └─────────────────────────────┘              │
└─────────────────────────────────┘        │                                     │
            │                               │                                     │
            ▼                               │                                     │
         S242                               │                                     │
< ARE BOTH FRACTIONAL VALUES OF            │                                     │
  HORIZONTAL COMPONENT AND VERTICAL  > ──No─┼─────────────────────────────────────┘
  COMPONENT OF MOTION VECTOR                │
  OTHER THAN ZERO?                          │
            │                               │
           Yes       S245                   ▼              S243
            ▼                        ┌─────────────────────────────┐
┌─────────────────────┐             │ OUTPUT PIXEL AS PREDICTED PIXEL │
│    STORE Sub Pel     │             └─────────────────────────────┘
└─────────────────────┘                     │
            │         S246                   ▼              S244
            ▼                        < HAVE ALL PREDICTED PIXELS BEEN GENERATED? > ──No──┐
< HAVE ALL PREDICTION-ASSOCIATED   >                │
  PIXELS BEEN GENERATED? > ──No──┐                 Yes
            │                     │                  │
           Yes                    │                  ▼
            ▼                      │             ( RETURN )
          ( 1 )                    │
```

## FIG. 46

①

DETERMINE GENERATION TARGET PREDICTED PIXEL — S247

DETERMINE NUMBER OF Sub Pels BASED ON POSITION OF GENERATION TARGET PREDICTED PIXEL IN VERTICAL DIRECTION IN PREDICTED IMAGE AND SIZE OF INTER PREDICTION BLOCK — S248

READ Sub Pels BASED ON NUMBER OF Sub Pels AND POSITION OF GENERATION TARGET PREDICTED PIXEL IN REFERENCE IMAGE — S249

READ FILTER COEFFICIENT STORED AND ASSOCIATED WITH FRACTIONAL VALUE OF VERTICAL COMPONENT OF MOTION VECTOR — S250

IS NUMBER OF Sub Pels FOUR? — S251

No →

IS NUMBER OF Sub Pels FIVE? — S253

No →

Yes ↓

REPLICATE OUTER Sub Pel TO CREATE ONE PIXEL, AND GENERATE SIX GENERATION PIXELS — S254

Yes ↓

REPLICATE OUTER Sub Pel TO CREATE TWO PIXELS, AND GENERATE SIX GENERATION PIXELS — S252

PERFORM CALCULATION BY USING SIX GENERATION PIXELS AND FILTER COEFFICIENT — S255

OUTPUT Sub Pel AS PREDICTED PIXEL — S256

HAVE ALL PREDICTED PIXELS BEEN GENERATED? — S257

No →

Yes ↓

RETURN

# FIG. 47

**READ OPERATION START**

S261 — IS SIZE OF INTER PREDICTION BLOCK SMALLER THAN 8×8 PIXELS?

No →

Yes ↓ S262 — DETERMINE REFERENCE PIXEL RANGE THAT CONSISTS OF BLOCK HAVING SIZE OF INTER PREDICTION BLOCK, BLOCK OF ONE ROW OF PIXELS BELOW THE BLOCK, AND BLOCK OF ONE COLUMN OF PIXELS ON RIGHT SIDE OF BLOCK CONSISTING OF THE TWO BLOCKS

S263 — IS SIZE OF INTER PREDICTION BLOCK SMALLER THAN 16×16 PIXELS?

No →

Yes ↓ S264 — DETERMINE REFERENCE PIXEL RANGE THAT CONSISTS OF BLOCK HAVING SIZE OF INTER PREDICTION BLOCK, BLOCK OF ONE ROW OF PIXELS AND BLOCK OF ONE ROW OF PIXELS ABOVE AND BELOW THE BLOCK, AND BLOCK OF ONE COLUMN OF PIXELS AND BLOCK OF ONE COLUMN OF PIXELS ON RIGHT AND LEFT SIDES OF BLOCK CONSISTING OF THE THREE BLOCKS

S265 — DETERMINE REFERENCE PIXEL RANGE THAT CONSISTS OF BLOCK HAVING SIZE OF INTER PREDICTION BLOCK IN POSITION CORRESPONDING TO MOTION VECTOR, BLOCK OF ONE ROW OF PIXELS ABOVE THE BLOCK AND BLOCK OF TWO ROWS OF PIXELS BELOW THE BLOCK, AND BLOCK OF ONE COLUMN OF PIXELS ON LEFT SIDE OF THE THREE BLOCKS AND BLOCK OF TWO COLUMNS OF PIXELS ON RIGHT SIDE OF THE THREE BLOCKS

S226 — READ REFERENCE PIXELS IN POSITION CORRESPONDING TO MOTION VECTOR FROM DETERMINED RANGE

**RETURN**

## FIG. 48

## FIG. 49

INTER PREDICTION OPERATION START

IDENTIFY REFERENCE IMAGE BASED ON PREDICTING DIRECTION AND REFERENCE INDEX  S271

READ OPERATION  S272

DETERMINE GENERATION TARGET PREDICTED PIXEL  S273

DETERMINE NUMBER OF REFERENCE PIXELS BASED ON POSITION OF GENERATION TARGET PREDICTED PIXEL IN PREDICTED IMAGE AND PREDICTING DIRECTION  S274

READ REFERENCE PIXELS BASED ON NUMBER OF REFERENCE PIXELS AND POSITION OF GENERATION TARGET PREDICTED PIXEL IN REFERENCE IMAGE  S275

READ FILTER COEFFICIENT STORED AND ASSOCIATED WITH FRACTIONAL VALUE OF MOTION VECTOR  S276

S277 IS NUMBER OF REFERENCE PIXELS FOUR?  No

Yes

REPLICATE OUTER REFERENCE PIXEL TO CREATE TWO PIXELS, AND GENERATE SIX GENERATION PIXELS  S278

S279 IS NUMBER OF REFERENCE PIXELS FIVE?  No

Yes

REPLICATE OUTER REFERENCE PIXEL TO CREATE ONE PIXEL, AND GENERATE SIX GENERATION PIXELS  S280

S281 PERFORM CALCULATION BY USING SIX GENERATION PIXELS AND FILTER COEFFICIENT

S282 ARE BOTH FRACTIONAL VALUES OF HORIZONTAL COMPONENT AND VERTICAL COMPONENT OF MOTION VECTOR OTHER THAN ZERO?  No

Yes

STORE Sub Pel  S285

OUTPUT PIXEL AS PREDICTED PIXEL  S283

No  S286 HAVE ALL PREDICTION-ASSOCIATED PIXELS BEEN GENERATED?

HAVE ALL PREDICTED PIXELS BEEN GENERATED?  S284  No

Yes

(1)

Yes

RETURN

## FIG. 50

①

DETERMINE GENERATION
TARGET PREDICTED PIXEL — S287

DETERMINE NUMBER OF Sub Pels BASED ON
POSITION OF GENERATION TARGET PREDICTED
PIXEL IN VERTICAL DIRECTION IN PREDICTED
IMAGE AND PREDICTING DIRECTION — S288

READ Sub Pels BASED ON NUMBER OF Sub Pels
AND POSITION OF GENERATION TARGET
PREDICTED PIXEL IN REFERENCE IMAGE — S289

READ FILTER COEFFICIENT STORED AND
ASSOCIATED WITH FRACTIONAL VALUE OF
VERTICAL COMPONENT OF MOTION VECTOR — S290

S291
IS NUMBER OF
Sub Pels FOUR? — No

Yes

REPLICATE OUTER Sub Pel TO
CREATE TWO PIXELS, AND
GENERATE SIX GENERATION PIXELS — S292

S293
IS NUMBER OF
Sub Pels FIVE? — No

Yes — S294

REPLICATE OUTER Sub Pel TO
CREATE ONE PIXEL, AND
GENERATE SIX GENERATION PIXELS

PERFORM CALCULATION BY USING
SIX GENERATION PIXELS AND
FILTER COEFFICIENT — S295

OUTPUT Sub Pel AS PREDICTED PIXEL — S296

S297
HAVE ALL
PREDICTED PIXELS BEEN
GENERATED? — No

Yes

RETURN

## FIG. 51

```
        ( READ OPERATION START )
                    │
                    ▼
              S301
      ╱─────────────────────╲
     ╱   IS PREDICTING        ╲        No
     ╲   DIRECTION             ╱────────────────────┐
      ╲  "Bi-prediction"?     ╱                      │
        ╲─────────────────╱                          │
                    │ Yes                             │
                    ▼                                 │
              S302                                    │
```

DETERMINE REFERENCE PIXEL RANGE THAT CONSISTS OF BLOCK
HAVING SIZE OF INTER PREDICTION BLOCK, BLOCK OF ONE ROW
OF PIXELS BELOW THE BLOCK, AND BLOCK OF ONE COLUMN OF
PIXELS ON RIGHT SIDE OF BLOCK CONSISTING OF THE TWO BLOCKS

S303

DETERMINE REFERENCE PIXEL RANGE THAT
CONSISTS OF BLOCK HAVING SIZE OF INTER
PREDICTION BLOCK IN POSITION CORRESPONDING TO
MOTION VECTOR, BLOCK OF ONE ROW OF PIXELS ABOVE
THE BLOCK AND BLOCK OF TWO ROWS OF PIXELS
BELOW THE BLOCK, AND BLOCK OF ONE COLUMN OF
PIXELS ON LEFT SIDE OF THE THREE BLOCKS
AND BLOCK OF TWO COLUMNS OF PIXELS
ON RIGHT SIDE OF THE THREE BLOCKS

S304

READ REFERENCE PIXELS IN POSITION CORRESPONDING
TO MOTION VECTOR FROM DETERMINED RANGE

```
                    ▼
              ( RETURN )
```

# FIG. 52

EP 2 651 135 A1

# FIG. 53

EP 2 651 135 A1

| INTER PREDICTION | | | MINIMUM NUMBER OF REFERENCE PIXELS USED FOR OUTER PREDICTED PIXEL | | | REFERENCE PIXEL RANGE | | | | | |
| --- | --- | --- | --- | --- | --- | --- | --- | --- | --- | --- | --- |
| | | | | | | Inner | | Outer h | | Outer v | |
| PREDICTING DIRECTION | SIZE IN VERTICAL DIRECTION | SIZE IN HORIZONTAL DIRECTION | Inner | Outerh | Outerv | SIZE IN VERTICAL DIRECTION | SIZE IN HORIZONTAL DIRECTION | SIZE IN VERTICAL DIRECTION | SIZE IN HORIZONTAL DIRECTION | SIZE IN VERTICAL DIRECTION | SIZE IN HORIZONTAL DIRECTION |
| L0 PREDICTION/L1 PREDICTION | 4 | 4 | 5 | 6 | 6 | 8 | 8 | 4 | 9 | 9 | 4 |
| L0 PREDICTION/L1 PREDICTION | 4 | 8 | 6 | 6 | 6 | 9 | 13 | 4 | 13 | 9 | 8 |
| L0 PREDICTION/L1 PREDICTION | 8 | 4 | 6 | 6 | 6 | 13 | 9 | 8 | 9 | 13 | 4 |
| L0 PREDICTION/L1 PREDICTION | 8 | 8 | 6 | 6 | 6 | 13 | 13 | 8 | 13 | 13 | 8 |
| L0 PREDICTION/L1 PREDICTION | 8 | 16 | 6 | 6 | 6 | 13 | 21 | 8 | 21 | 13 | 16 |
| L0 PREDICTION/L1 PREDICTION | 16 | 8 | 6 | 6 | 6 | 21 | 13 | 16 | 13 | 21 | 8 |
| L0 PREDICTION/L1 PREDICTION | 16 | 16 | 6 | 6 | 6 | 21 | 21 | 16 | 21 | 21 | 16 |
| L0 PREDICTION/L1 PREDICTION | 16 | 32 | 6 | 6 | 6 | 21 | 37 | 16 | 37 | 21 | 32 |
| L0 PREDICTION/L1 PREDICTION | 32 | 16 | 6 | 6 | 6 | 37 | 21 | 32 | 21 | 37 | 16 |
| L0 PREDICTION/L1 PREDICTION | 32 | 32 | 6 | 6 | 6 | 37 | 37 | 32 | 37 | 37 | 32 |
| L0 PREDICTION/L1 PREDICTION | 32 | 64 | 6 | 6 | 6 | 37 | 69 | 32 | 69 | 37 | 64 |
| L0 PREDICTION/L1 PREDICTION | 64 | 32 | 6 | 6 | 6 | 69 | 37 | 64 | 37 | 69 | 32 |
| L0 PREDICTION/L1 PREDICTION | 64 | 64 | 6 | 6 | 6 | 69 | 69 | 64 | 69 | 69 | 64 |
| Bi-prediction | 4 | 4 | 2 | 5 | 5 | 5 | 5 | 4 | 8 | 8 | 4 |
| Bi-prediction | 4 | 8 | 3 | 6 | 5 | 6 | 10 | 4 | 13 | 8 | 8 |
| Bi-prediction | 8 | 4 | 3 | 5 | 6 | 10 | 6 | 8 | 8 | 13 | 4 |
| Bi-prediction | 8 | 8 | 4 | 6 | 6 | 11 | 11 | 8 | 13 | 13 | 8 |
| Bi-prediction | 8 | 16 | 5 | 6 | 6 | 12 | 20 | 8 | 21 | 13 | 16 |
| Bi-prediction | 16 | 8 | 5 | 6 | 6 | 20 | 12 | 16 | 13 | 21 | 8 |
| Bi-prediction | 16 | 16 | 6 | 6 | 6 | 21 | 21 | 16 | 21 | 21 | 16 |
| Bi-prediction | 16 | 32 | 6 | 6 | 6 | 21 | 37 | 16 | 37 | 21 | 32 |
| Bi-prediction | 32 | 16 | 6 | 6 | 6 | 37 | 21 | 32 | 21 | 37 | 16 |
| Bi-prediction | 32 | 32 | 6 | 6 | 6 | 37 | 37 | 32 | 37 | 37 | 32 |
| Bi-prediction | 32 | 64 | 6 | 6 | 6 | 37 | 69 | 32 | 69 | 37 | 64 |
| Bi-prediction | 64 | 32 | 6 | 6 | 6 | 69 | 37 | 64 | 37 | 69 | 32 |
| Bi-prediction | 64 | 64 | 6 | 6 | 6 | 69 | 69 | 64 | 69 | 69 | 64 |

## FIG. 54

| INTER PREDICTION | | | MINIMUM NUMBER OF REFERENCE PIXELS USED FOR OUTER PREDICTED PIXEL | | | REFERENCE PIXEL RANGE | | | | | |
|---|---|---|---|---|---|---|---|---|---|---|---|
| | | | | | | Inner | | Outer h | | Outer v | |
| PREDICTING DIRECTION | SIZE IN VERTICAL DIRECTION | SIZE IN HORIZONTAL DIRECTION | Inner | Outerh | Outerv | SIZE IN VERTICAL DIRECTION | SIZE IN HORIZONTAL DIRECTION | SIZE IN VERTICAL DIRECTION | SIZE IN HORIZONTAL DIRECTION | SIZE IN VERTICAL DIRECTION | SIZE IN HORIZONTAL DIRECTION |
| L0 PREDICTION/L1 PREDICTION | 4 | 4 | 5 | 6 | 6 | 8 | 8 | 4 | 9 | 9 | 4 |
| L0 PREDICTION/L1 PREDICTION | 4 | 8 | 6 | 6 | 6 | 9 | 13 | 4 | 13 | 9 | 8 |
| L0 PREDICTION/L1 PREDICTION | 8 | 4 | 6 | 6 | 6 | 13 | 9 | 8 | 9 | 13 | 4 |
| L0 PREDICTION/L1 PREDICTION | 8 | 8 | 6 | 6 | 6 | 13 | 13 | 8 | 13 | 13 | 8 |
| L0 PREDICTION/L1 PREDICTION | 8 | 16 | 6 | 6 | 6 | 13 | 21 | 8 | 21 | 13 | 16 |
| L0 PREDICTION/L1 PREDICTION | 16 | 8 | 6 | 6 | 6 | 21 | 13 | 16 | 13 | 21 | 8 |
| L0 PREDICTION/L1 PREDICTION | 16 | 16 | 6 | 6 | 6 | 21 | 21 | 16 | 21 | 21 | 16 |
| L0 PREDICTION/L1 PREDICTION | 16 | 32 | 6 | 6 | 6 | 21 | 37 | 16 | 37 | 21 | 32 |
| L0 PREDICTION/L1 PREDICTION | 32 | 16 | 6 | 6 | 6 | 37 | 21 | 32 | 21 | 37 | 16 |
| L0 PREDICTION/L1 PREDICTION | 32 | 32 | 6 | 6 | 6 | 37 | 37 | 32 | 37 | 37 | 32 |
| L0 PREDICTION/L1 PREDICTION | 32 | 64 | 6 | 6 | 6 | 37 | 69 | 32 | 69 | 37 | 64 |
| L0 PREDICTION/L1 PREDICTION | 64 | 32 | 6 | 6 | 6 | 69 | 37 | 64 | 37 | 69 | 32 |
| L0 PREDICTION/L1 PREDICTION | 64 | 64 | 6 | 6 | 6 | 69 | 69 | 64 | 69 | 69 | 64 |
| Bi-prediction | 4 | 4 | 3 | 6 | 6 | 6 | 6 | 4 | 9 | 9 | 4 |
| Bi-prediction | 4 | 8 | 4 | 6 | 6 | 7 | 11 | 4 | 13 | 9 | 8 |
| Bi-prediction | 8 | 4 | 4 | 6 | 6 | 11 | 7 | 8 | 9 | 13 | 4 |
| Bi-prediction | 8 | 8 | 5 | 6 | 6 | 12 | 12 | 8 | 13 | 13 | 8 |
| Bi-prediction | 8 | 16 | 6 | 6 | 6 | 13 | 21 | 8 | 21 | 13 | 16 |
| Bi-prediction | 16 | 8 | 6 | 6 | 6 | 21 | 13 | 16 | 13 | 21 | 8 |
| Bi-prediction | 16 | 16 | 6 | 6 | 6 | 21 | 21 | 16 | 21 | 21 | 16 |
| Bi-prediction | 16 | 32 | 6 | 6 | 6 | 21 | 37 | 16 | 37 | 21 | 32 |
| Bi-prediction | 32 | 16 | 6 | 6 | 6 | 37 | 21 | 32 | 21 | 37 | 16 |
| Bi-prediction | 32 | 32 | 6 | 6 | 6 | 37 | 37 | 32 | 37 | 37 | 32 |
| Bi-prediction | 32 | 64 | 6 | 6 | 6 | 37 | 69 | 32 | 69 | 37 | 64 |
| Bi-prediction | 64 | 32 | 6 | 6 | 6 | 69 | 37 | 64 | 37 | 69 | 32 |
| Bi-prediction | 64 | 64 | 6 | 6 | 6 | 69 | 69 | 64 | 69 | 69 | 64 |

*FIG. 55*

```
            ( INTER PREDICTION OPERATION START )
                            │
    ┌───────────────────────────────────────────┐  S311
    │         IDENTIFY REFERENCE IMAGE BASED ON  │
    │ PREDICTING DIRECTION AND REFERENCE INDEX   │
    └───────────────────────────────────────────┘
                            │
    ┌───────────────────────────────────────────┐  S312
    ││              READ OPERATION              ││
    └───────────────────────────────────────────┘
                            │
    ┌───────────────────────────────────────────┐  S313
    │  DETERMINE GENERATION TARGET PREDICTED PIXEL│
    └───────────────────────────────────────────┘
                            │
    ┌───────────────────────────────────────────┐  S314
    │ DETERMINE NUMBER OF REFERENCE PIXELS BASED ON│
    │ POSITION OF GENERATION TARGET PREDICTED PIXEL IN│
    │     PREDICTED IMAGE, MOTION VECTOR, SIZE OF │
    │ INTER PREDICTION BLOCK, AND PREDICTING DIRECTION│
    └───────────────────────────────────────────┘
                            │
    ┌───────────────────────────────────────────┐  S315
    │  READ REFERENCE PIXELS BASED ON NUMBER OF  │
    │ REFERENCE PIXELS AND POSITION OF GENERATION│
    │ TARGET PREDICTED PIXEL IN REFERENCE IMAGE  │
    └───────────────────────────────────────────┘
                            │
    ┌───────────────────────────────────────────┐  S316
    │ READ FILTER COEFFICIENT STORED AND ASSOCIATED│
    │   WITH FRACTIONAL VALUE OF MOTION VECTOR   │
    └───────────────────────────────────────────┘
                            │
                        S317
              IS NUMBER OF
    No ◁─── REFERENCE PIXELS SMALLER ───▷
               THAN SIX?
                            │ Yes
    ┌───────────────────────────────────────────┐  S318
    │        REPLICATE OUTER REFERENCE PIXEL,    │
    │      AND GENERATE SIX GENERATION PIXELS    │
    └───────────────────────────────────────────┘
                            │
    ┌───────────────────────────────────────────┐  S319
    │  PERFORM CALCULATION BY USING SIX GENERATION│
    │          PIXELS AND FILTER COEFFICIENT     │
    └───────────────────────────────────────────┘
                            │
                  ARE BOTH          S320
         FRACTIONAL VALUES OF
    HORIZONTAL COMPONENT AND VERTICAL ───▷ No
      COMPONENT OF MOTION VECTOR
            OTHER THAN ZERO?
                            │ Yes
                        S323
    ┌──────────────────────┐          ┌──────────────────────────────┐ S321
    │     STORE Sub Pel     │          │ OUTPUT PIXEL AS PREDICTED PIXEL│
    └──────────────────────┘          └──────────────────────────────┘
                            │                          │
                        S324                       S322
       HAVE ALL PREDICTION-ASSOCIATED     HAVE ALL PREDICTED
    No ◁── PIXELS BEEN GENERATED? ──      ── PIXELS BEEN GENERATED? ──▷ No
                            │ Yes                      │ Yes
                          ( 1 )                   ( RETURN )
```

## FIG. 56

①

DETERMINE GENERATION TARGET PREDICTED PIXEL — S325

DETERMINE NUMBER OF Sub Pels BASED ON POSITION OF GENERATION TARGET PREDICTED PIXEL IN VERTICAL DIRECTION IN PREDICTED IMAGE, SIZE OF INTER PREDICTION BLOCK, AND PREDICTING DIRECTION — S326

READ Sub Pels BASED ON NUMBER OF Sub Pels AND POSITION OF GENERATION TARGET PREDICTED PIXEL IN REFERENCE IMAGE — S327

READ FILTER COEFFICIENT STORED AND ASSOCIATED WITH FRACTIONAL VALUE OF VERTICAL COMPONENT OF MOTION VECTOR — S328

S329 IS NUMBER OF Sub Pels SMALLER THAN SIX?

No

Yes

REPLICATE OUTER Sub Pel, AND GENERATE SIX GENERATION PIXELS — S330

PERFORM CALCULATION BY USING SIX GENERATION PIXELS AND FILTER COEFFICIENT — S331

OUTPUT Sub Pel AS PREDICTED PIXEL — S332

S333 HAVE ALL PREDICTED PIXELS BEEN GENERATED?

No

Yes

RETURN

# FIG. 57

## FIG. 58

| INTER PREDICTION | | | MINIMUM NUMBER OF REFERENCE PIXELS USED FOR OUTER PREDICTED PIXEL | | | REFERENCE PIXEL RANGE | | | | | |
|---|---|---|---|---|---|---|---|---|---|---|---|
| | | | | | | Inner | | Outer h | | Outer v | |
| PREDICTING DIRECTION | SIZE IN VERTICAL DIRECTION | SIZE IN HORIZONTAL DIRECTION | Inner | Outerh | Outerv | SIZE IN VERTICAL DIRECTION | SIZE IN HORIZONTAL DIRECTION | SIZE IN VERTICAL DIRECTION | SIZE IN HORIZONTAL DIRECTION | SIZE IN VERTICAL DIRECTION | SIZE IN HORIZONTAL DIRECTION |
| L0 PREDICTION/L1 PREDICTION | 4 | 4 | 5 | 8 | 8 | 8 | 8 | 4 | 11 | 11 | 4 |
| L0 PREDICTION/L1 PREDICTION | 4 | 8 | 7 | 8 | 8 | 10 | 14 | 4 | 15 | 11 | 8 |
| L0 PREDICTION/L1 PREDICTION | 8 | 4 | 7 | 8 | 8 | 14 | 10 | 8 | 11 | 15 | 4 |
| L0 PREDICTION/L1 PREDICTION | 8 | 8 | 8 | 8 | 8 | 15 | 15 | 8 | 15 | 15 | 8 |
| L0 PREDICTION/L1 PREDICTION | 8 | 16 | 8 | 8 | 8 | 15 | 23 | 8 | 23 | 15 | 16 |
| L0 PREDICTION/L1 PREDICTION | 16 | 8 | 8 | 8 | 8 | 23 | 15 | 16 | 15 | 23 | 8 |
| L0 PREDICTION/L1 PREDICTION | 16 | 16 | 8 | 8 | 8 | 23 | 23 | 16 | 23 | 23 | 16 |
| L0 PREDICTION/L1 PREDICTION | 16 | 32 | 8 | 8 | 8 | 23 | 39 | 16 | 39 | 23 | 32 |
| L0 PREDICTION/L1 PREDICTION | 32 | 16 | 8 | 8 | 8 | 39 | 23 | 32 | 23 | 39 | 16 |
| L0 PREDICTION/L1 PREDICTION | 32 | 32 | 8 | 8 | 8 | 39 | 39 | 32 | 39 | 39 | 32 |
| L0 PREDICTION/L1 PREDICTION | 32 | 64 | 8 | 8 | 8 | 39 | 71 | 32 | 71 | 39 | 64 |
| L0 PREDICTION/L1 PREDICTION | 64 | 32 | 8 | 8 | 8 | 71 | 39 | 64 | 39 | 71 | 32 |
| L0 PREDICTION/L1 PREDICTION | 64 | 64 | 8 | 8 | 8 | 71 | 71 | 64 | 71 | 71 | 64 |
| Bi-prediction | 4 | 4 | 3 | 7 | 7 | 6 | 6 | 4 | 10 | 10 | 4 |
| Bi-prediction | 4 | 8 | 4 | 8 | 7 | 7 | 11 | 4 | 15 | 10 | 8 |
| Bi-prediction | 8 | 4 | 4 | 7 | 8 | 11 | 7 | 8 | 10 | 15 | 4 |
| Bi-prediction | 8 | 8 | 5 | 8 | 8 | 12 | 12 | 8 | 15 | 15 | 8 |
| Bi-prediction | 8 | 16 | 7 | 8 | 8 | 14 | 22 | 8 | 23 | 15 | 16 |
| Bi-prediction | 16 | 8 | 7 | 8 | 8 | 22 | 14 | 16 | 15 | 23 | 8 |
| Bi-prediction | 16 | 16 | 8 | 8 | 8 | 23 | 23 | 16 | 23 | 23 | 16 |
| Bi-prediction | 16 | 32 | 8 | 8 | 8 | 23 | 39 | 16 | 39 | 23 | 32 |
| Bi-prediction | 32 | 16 | 8 | 8 | 8 | 39 | 23 | 32 | 23 | 39 | 16 |
| Bi-prediction | 32 | 32 | 8 | 8 | 8 | 39 | 39 | 32 | 39 | 39 | 32 |
| Bi-prediction | 32 | 64 | 8 | 8 | 8 | 39 | 71 | 32 | 71 | 39 | 64 |
| Bi-prediction | 64 | 32 | 8 | 8 | 8 | 71 | 39 | 64 | 39 | 71 | 32 |
| Bi-prediction | 64 | 64 | 8 | 8 | 8 | 71 | 71 | 64 | 71 | 71 | 64 |

# FIG. 59

| INTER PREDICTION | | | MINIMUM NUMBER OF REFERENCE PIXELS USED FOR OUTER PREDICTED PIXEL | | | REFERENCE PIXEL RANGE | | | | | |
| --- | --- | --- | --- | --- | --- | --- | --- | --- | --- | --- | --- |
| | | | | | | Inner | | Outer h | | Outer v | |
| PREDICTING DIRECTION | SIZE IN VERTICAL DIRECTION | SIZE IN HORIZONTAL DIRECTION | Inner | Outerh | Outerv | SIZE IN VERTICAL DIRECTION | SIZE IN HORIZONTAL DIRECTION | SIZE IN VERTICAL DIRECTION | SIZE IN HORIZONTAL DIRECTION | SIZE IN VERTICAL DIRECTION | SIZE IN HORIZONTAL DIRECTION |
| L0 PREDICTION/L1 PREDICTION | 4 | 4 | 6 | 8 | 8 | 9 | 9 | 4 | 11 | 11 | 4 |
| L0 PREDICTION/L1 PREDICTION | 4 | 8 | 8 | 8 | 8 | 11 | 15 | 4 | 15 | 11 | 8 |
| L0 PREDICTION/L1 PREDICTION | 8 | 4 | 8 | 8 | 8 | 15 | 11 | 8 | 11 | 15 | 4 |
| L0 PREDICTION/L1 PREDICTION | 8 | 8 | 8 | 8 | 8 | 15 | 15 | 8 | 15 | 15 | 8 |
| L0 PREDICTION/L1 PREDICTION | 8 | 16 | 8 | 8 | 8 | 15 | 23 | 8 | 23 | 15 | 16 |
| L0 PREDICTION/L1 PREDICTION | 16 | 8 | 8 | 8 | 8 | 23 | 15 | 16 | 15 | 23 | 8 |
| L0 PREDICTION/L1 PREDICTION | 16 | 16 | 8 | 8 | 8 | 23 | 23 | 16 | 23 | 23 | 16 |
| L0 PREDICTION/L1 PREDICTION | 16 | 32 | 8 | 8 | 8 | 23 | 39 | 16 | 39 | 23 | 32 |
| L0 PREDICTION/L1 PREDICTION | 32 | 16 | 8 | 8 | 8 | 39 | 23 | 32 | 23 | 39 | 16 |
| L0 PREDICTION/L1 PREDICTION | 32 | 32 | 8 | 8 | 8 | 39 | 39 | 32 | 39 | 39 | 32 |
| L0 PREDICTION/L1 PREDICTION | 32 | 64 | 8 | 8 | 8 | 39 | 71 | 32 | 71 | 39 | 64 |
| L0 PREDICTION/L1 PREDICTION | 64 | 32 | 8 | 8 | 8 | 71 | 39 | 64 | 39 | 71 | 32 |
| L0 PREDICTION/L1 PREDICTION | 64 | 64 | 8 | 8 | 8 | 71 | 71 | 64 | 71 | 71 | 64 |
| Bi-prediction | 4 | 4 | 3 | 8 | 8 | 6 | 6 | 4 | 11 | 11 | 4 |
| Bi-prediction | 4 | 8 | 5 | 8 | 8 | 8 | 12 | 4 | 15 | 11 | 8 |
| Bi-prediction | 8 | 4 | 5 | 8 | 8 | 12 | 8 | 8 | 11 | 15 | 4 |
| Bi-prediction | 8 | 8 | 6 | 8 | 8 | 13 | 13 | 8 | 15 | 15 | 8 |
| Bi-prediction | 8 | 16 | 8 | 8 | 8 | 15 | 23 | 8 | 23 | 15 | 16 |
| Bi-prediction | 16 | 8 | 8 | 8 | 8 | 23 | 15 | 16 | 15 | 23 | 8 |
| Bi-prediction | 16 | 16 | 8 | 8 | 8 | 23 | 23 | 16 | 23 | 23 | 16 |
| Bi-prediction | 16 | 32 | 8 | 8 | 8 | 23 | 39 | 16 | 39 | 23 | 32 |
| Bi-prediction | 32 | 16 | 8 | 8 | 8 | 39 | 23 | 32 | 23 | 39 | 16 |
| Bi-prediction | 32 | 32 | 8 | 8 | 8 | 39 | 39 | 32 | 39 | 39 | 32 |
| Bi-prediction | 32 | 64 | 8 | 8 | 8 | 39 | 71 | 32 | 71 | 39 | 64 |
| Bi-prediction | 64 | 32 | 8 | 8 | 8 | 71 | 39 | 64 | 39 | 71 | 32 |
| Bi-prediction | 64 | 64 | 8 | 8 | 8 | 71 | 71 | 64 | 71 | 71 | 64 |

# FIG. 60

| INTER PREDICTION | | | MINIMUM NUMBER OF REFERENCE PIXELS USED FOR OUTER PREDICTED PIXEL | | | REFERENCE PIXEL RANGE | | | | | |
|---|---|---|---|---|---|---|---|---|---|---|---|
| | | | | | | Inner | | Outer h | | Outer v | |
| PREDICTING DIRECTION | SIZE IN VERTICAL DIRECTION | SIZE IN HORIZONTAL DIRECTION | Inner | Outerh | Outerv | SIZE IN VERTICAL DIRECTION | SIZE IN HORIZONTAL DIRECTION | SIZE IN VERTICAL DIRECTION | SIZE IN HORIZONTAL DIRECTION | SIZE IN VERTICAL DIRECTION | SIZE IN HORIZONTAL DIRECTION |
| L0 PREDICTION/L1 PREDICTION | 4 | 4 | 5 | 12 | 12 | 8 | 8 | 4 | 15 | 15 | 4 |
| L0 PREDICTION/L1 PREDICTION | 4 | 8 | 7 | 12 | 12 | 10 | 14 | 4 | 19 | 15 | 8 |
| L0 PREDICTION/L1 PREDICTION | 8 | 4 | 7 | 12 | 12 | 14 | 10 | 8 | 15 | 19 | 4 |
| L0 PREDICTION/L1 PREDICTION | 8 | 8 | 10 | 12 | 12 | 17 | 17 | 8 | 19 | 19 | 8 |
| L0 PREDICTION/L1 PREDICTION | 8 | 16 | 12 | 12 | 12 | 19 | 27 | 8 | 27 | 19 | 16 |
| L0 PREDICTION/L1 PREDICTION | 16 | 8 | 12 | 12 | 12 | 27 | 19 | 16 | 19 | 27 | 8 |
| L0 PREDICTION/L1 PREDICTION | 16 | 16 | 12 | 12 | 12 | 27 | 27 | 16 | 27 | 27 | 16 |
| L0 PREDICTION/L1 PREDICTION | 16 | 32 | 12 | 12 | 12 | 27 | 43 | 16 | 43 | 27 | 32 |
| L0 PREDICTION/L1 PREDICTION | 32 | 16 | 12 | 12 | 12 | 43 | 27 | 32 | 27 | 43 | 16 |
| L0 PREDICTION/L1 PREDICTION | 32 | 32 | 12 | 12 | 12 | 43 | 43 | 32 | 43 | 43 | 32 |
| L0 PREDICTION/L1 PREDICTION | 32 | 64 | 12 | 12 | 12 | 43 | 75 | 32 | 75 | 43 | 64 |
| L0 PREDICTION/L1 PREDICTION | 64 | 32 | 12 | 12 | 12 | 75 | 43 | 64 | 43 | 75 | 32 |
| L0 PREDICTION/L1 PREDICTION | 64 | 64 | 12 | 12 | 12 | 75 | 75 | 64 | 75 | 75 | 64 |
| Bi-prediction | 4 | 4 | 3 | 7 | 7 | 6 | 6 | 4 | 10 | 10 | 4 |
| Bi-prediction | 4 | 8 | 4 | 12 | 7 | 7 | 11 | 4 | 19 | 10 | 8 |
| Bi-prediction | 8 | 4 | 4 | 7 | 12 | 11 | 7 | 8 | 10 | 19 | 4 |
| Bi-prediction | 8 | 8 | 5 | 12 | 12 | 12 | 12 | 8 | 19 | 19 | 8 |
| Bi-prediction | 8 | 16 | 7 | 12 | 12 | 14 | 22 | 8 | 27 | 19 | 16 |
| Bi-prediction | 16 | 8 | 7 | 12 | 12 | 22 | 14 | 16 | 19 | 27 | 8 |
| Bi-prediction | 16 | 16 | 10 | 12 | 12 | 25 | 25 | 16 | 27 | 27 | 16 |
| Bi-prediction | 16 | 32 | 12 | 12 | 12 | 27 | 43 | 16 | 43 | 27 | 32 |
| Bi-prediction | 32 | 16 | 12 | 12 | 12 | 43 | 27 | 32 | 27 | 43 | 16 |
| Bi-prediction | 32 | 32 | 12 | 12 | 12 | 43 | 43 | 32 | 43 | 43 | 32 |
| Bi-prediction | 32 | 64 | 12 | 12 | 12 | 43 | 75 | 32 | 75 | 43 | 64 |
| Bi-prediction | 64 | 32 | 12 | 12 | 12 | 75 | 43 | 64 | 43 | 75 | 32 |
| Bi-prediction | 64 | 64 | 12 | 12 | 12 | 75 | 75 | 64 | 75 | 75 | 64 |

FIG. 61

EP 2 651 135 A1

## FIG. 62

INTER PREDICTION OPERATION START

IDENTIFY REFERENCE IMAGE BASED ON
PREDICTING DIRECTION AND REFERENCE INDEX — S361

READ OPERATION — S362

DETERMINE GENERATION TARGET PREDICTED PIXEL — S363

DETERMINE NUMBER OF REFERENCE PIXELS BASED ON
POSITION OF GENERATION TARGET PREDICTED PIXEL IN
PREDICTED IMAGE, MOTION VECTOR, SIZE OF
INTER PREDICTION BLOCK, AND PREDICTING DIRECTION — S364

READ REFERENCE PIXELS BASED ON NUMBER OF
REFERENCE PIXELS AND POSITION OF GENERATION
TARGET PREDICTED PIXEL IN REFERENCE IMAGE — S365

READ FILTER COEFFICIENT STORED AND ASSOCIATED
WITH FRACTIONAL VALUE OF MOTION VECTOR — S366

SUPPLY REFERENCE PIXELS IN ACCORDANCE
WITH NUMBER OF REFERENCE PIXELS — S367

PERFORM CALCULATION BY USING REFERENCE PIXELS
AND FILTER COEFFICIENT — S368

ARE BOTH
FRACTIONAL VALUES OF
HORIZONTAL COMPONENT AND VERTICAL
COMPONENT OF MOTION VECTOR
OTHER THAN ZERO? — S369

No → OUTPUT PIXEL AS PREDICTED PIXEL — S370

Yes

STORE Sub Pel — S372

HAVE ALL PREDICTION-ASSOCIATED
PIXELS BEEN GENERATED? — S373

No

Yes

(1)

HAVE ALL PREDICTED
PIXELS BEEN GENERATED? — S371

No

Yes

RETURN

## FIG. 63

①

DETERMINE GENERATION TARGET PREDICTED PIXEL — S374

DETERMINE NUMBER OF Sub Pels
BASED ON POSITION OF GENERATION
TARGET PREDICTED PIXEL IN
VERTICAL DIRECTION IN PREDICTED IMAGE,
SIZE OF INTER PREDICTION BLOCK,
AND PREDICTING DIRECTION — S375

READ Sub Pels BASED ON NUMBER OF Sub Pels
AND POSITION OF GENERATION TARGET
PREDICTED PIXEL IN REFERENCE IMAGE — S376

READ FILTER COEFFICIENT STORED AND
ASSOCIATED WITH FRACTIONAL VALUE OF
VERTICAL COMPONENT OF MOTION VECTOR — S377

SUPPLY Sub Pels IN ACCORDANCE
WITH NUMBER OF Sub Pels — S378

PERFORM CALCULATION BY USING
Sub Pels AND FILTER COEFFICIENT — S379

OUTPUT Sub Pel AS PREDICTED PIXEL — S380

HAVE ALL
PREDICTED PIXELS BEEN
GENERATED? — S381

No

Yes

RETURN

## FIG. 64

REFERENCE IMAGE
FROM 22 →

INTER PREDICTION MODE INFORMATION
FROM 25 →

MOTION VECTOR →

251 — REFERENCE IMAGE READ UNIT

252 — PIXEL OUTPUT UNIT

6-TAP FIR FILTER — 45

162 — PIXEL SELECTION UNIT → PREDICTED IMAGE

253 — 6-TAP FILTER COEFFICIENT MEMORY

INTERMEDIATE RESULT MEMORY — 50

24

EP 2 651 135 A1

FIG. 65

## FIG. 66

INTER PREDICTION OPERATION START

IDENTIFY REFERENCE IMAGE BASED ON PREDICTING DIRECTION AND REFERENCE INDEX — S400

DETERMINE SIZE OF PREDICTED IMAGE BASED ON BLOCK SIZE OF INTER PREDICTION BLOCK — S401

READ REFERENCE PIXELS BASED ON MOTION VECTOR AND SIZE OF PREDICTED IMAGE — S402

DETERMINE GENERATION TARGET PREDICTED PIXEL — S403

READ SIX REFERENCE PIXELS BASED ON POSITION OF GENERATION TARGET PREDICTED PIXEL IN REFERENCE IMAGE — S404

IS POSITION OF PREDICTION-ASSOCIATED PIXEL IN PREDICTED IMAGE ON OUTER SIDE? — S405

No → READ FILTER COEFFICIENT STORED AND ASSOCIATED WITH FRACTIONAL VALUE OF MOTION VECTOR AND "3" — S407

Yes ↓

READ FILTER COEFFICIENT STORED AND ASSOCIATED WITH FRACTIONAL VALUE OF MOTION VECTOR AND "2" — S406

PERFORM CALCULATION BY USING SIX REFERENCE PIXELS AND FILTER COEFFICIENT — S408

ARE BOTH FRACTIONAL VALUES OF HORIZONTAL COMPONENT AND VERTICAL COMPONENT OF MOTION VECTOR OTHER THAN ZERO? — S409

No → OUTPUT PIXEL AS PREDICTED PIXEL — S410

Yes ↓

STORE Sub Pel — S412

HAVE ALL PREDICTION-ASSOCIATED PIXELS BEEN GENERATED? — S413

No

HAVE ALL PREDICTED PIXELS BEEN GENERATED? — S411

No

Yes ↓

① 

Yes ↓

RETURN

# FIG. 67

① 

DETERMINE GENERATION TARGET PREDICTED PIXEL — S414

READ SIX Sub Pels BASED ON POSITION OF GENERATION TARGET PREDICTED PIXEL IN REFERENCE IMAGE — S415

S416 — IS POSITION OF GENERATION TARGET PREDICTED PIXEL IN PREDICTED IMAGE ON OUTER SIDE?

No →

READ FILTER COEFFICIENT STORED AND ASSOCIATED WITH FRACTIONAL VALUE OF VERTICAL COMPONENT OF MOTION VECTOR AND "3" — S418

Yes ↓

READ FILTER COEFFICIENT STORED AND ASSOCIATED WITH FRACTIONAL VALUE OF VERTICAL COMPONENT OF MOTION VECTOR AND "2" — S417

PERFORM CALCULATION BY USING SIX Sub Pels AND FILTER COEFFICIENT — S419

OUTPUT Sub Pel AS PREDICTED PIXEL — S420

S421 — HAVE ALL PREDICTED PIXELS BEEN GENERATED?

No →

Yes ↓

RETURN

# FIG. 68

## FIG. 69

## FIG. 70

FIG. 71

EP 2 651 135 A1

# *FIG. 72*

*FIG. 73*

```
         ( INTER PREDICTION OPERATION START )
                          │
                          ▼
   ┌─────────────────────────────────────────────┐  S440
   │        IDENTIFY REFERENCE IMAGE BASED ON      │
   │    PREDICTING DIRECTION AND REFERENCE INDEX   │
   └─────────────────────────────────────────────┘
                          │
                          ▼
   ┌─────────────────────────────────────────────┐  S441
   │   DETERMINE SIZE OF PREDICTED IMAGE BASED ON  │
   │      BLOCK SIZE OF INTER PREDICTION BLOCK     │
   └─────────────────────────────────────────────┘
                          │
                          ▼
   ┌─────────────────────────────────────────────┐  S442
   │        READ REFERENCE PIXELS BASED ON MOTION  │
   │       VECTOR AND SIZE OF PREDICTED IMAGE      │
   └─────────────────────────────────────────────┘
                          │
                          ▼
   ┌─────────────────────────────────────────────┐  S443
   │     DETERMINE GENERATION TARGET PREDICTED PIXEL│
   └─────────────────────────────────────────────┘
                          │
                          ▼
   ┌─────────────────────────────────────────────┐  S444
   │       READ REFERENCE PIXELS BASED ON POSITION OF│
   │ GENERATION TARGET PREDICTED PIXEL IN REFERENCE IMAGE│
   └─────────────────────────────────────────────┘
                          │
                          ▼
             ◇ IS POSITION OF                S445
             PREDICTION-ASSOCIATED PIXEL IN PREDICTED ◇── No ──┐
             IMAGE ON OUTER SIDE?                              │
                          │ Yes                                ▼
                          ▼                        ┌──────────────────────────┐ S447
   ┌─────────────────────────────────────────┐ S446│  READ FILTER COEFFICIENT STORED│
   │  READ FILTER COEFFICIENT STORED AND ASSOCIATED│  │  AND ASSOCIATED WITH FRACTIONAL│
   │ WITH FRACTIONAL VALUE OF MOTION VECTOR AND "2"│  │ VALUE OF MOTION VECTOR AND "3" │
   └─────────────────────────────────────────┘     └──────────────────────────┘
                          │◄─────────────────────────────────┘
                          ▼
             ◇ IS NUMBER OF REFERENCE PIXELS FIVE? ◇── No ──┐
                      S448                                  │
                          │ Yes                             │
                          ▼                                 │
   ┌─────────────────────────────────────────┐ S449         │
   │  REPLICATE OUTER REFERENCE PIXEL TO CREATE │            │
   │ ONE PIXEL, AND GENERATE SIX GENERATION PIXELS│          │
   └─────────────────────────────────────────┘              │
                          │◄────────────────────────────────┘
                          ▼
   ┌─────────────────────────────────────────┐ S450
   │     PERFORM CALCULATION BY USING SIX       │
   │  GENERATION PIXELS AND FILTER COEFFICIENT  │
   └─────────────────────────────────────────┘
                          │
                          ▼
             ◇ ARE BOTH                         S451
             FRACTIONAL VALUES OF
             HORIZONTAL COMPONENT AND VERTICAL ◇── No ──┐
             COMPONENT OF MOTION VECTOR                 │
             OTHER THAN ZERO?                           ▼
                          │ Yes      S454    ┌────────────────────────────┐ S452
                          ▼                  │ OUTPUT PIXEL AS PREDICTED PIXEL│
   ┌─────────────────────────────┐           └────────────────────────────┘
   │         STORE Sub Pel        │                        │
   └─────────────────────────────┘                        ▼
                          │          S455          ◇ HAVE ALL         S453
                          ▼                        PREDICTED PIXELS BEEN ◇── No ──┐
   No ──◇ HAVE ALL PREDICTION-ASSOCIATED ◇          GENERATED?                    │
         PIXELS BEEN GENERATED?                         │ Yes                     │
                          │ Yes                         ▼                         │
                          ▼                        ( RETURN )                     │
                        ( 1 )
```

## FIG. 74

① 

DETERMINE GENERATION
TARGET PREDICTED PIXEL — S456

READ Sub Pels BASED ON POSITION
OF GENERATION TARGET PREDICTED
PIXEL IN REFERENCE IMAGE — S457

IS POSITION
OF GENERATION TARGET
PREDICTED PIXEL IN PREDICTED
IMAGE ON OUTER
SIDE? — S458

No →

READ FILTER COEFFICIENT
STORED AND ASSOCIATED
WITH FRACTIONAL VALUE OF
VERTICAL COMPONENT
OF MOTION VECTOR AND "3" — S460

Yes ↓

READ FILTER COEFFICIENT STORED
AND ASSOCIATED WITH FRACTIONAL
VALUE OF VERTICAL COMPONENT
OF MOTION VECTOR AND "2" — S459

IS NUMBER OF
Sub Pels FIVE? — S461

No →

Yes ↓

REPLICATE OUTER Sub Pel TO
CREATE ONE PIXEL, AND GENERATE
SIX GENERATION PIXELS — S462

PERFORM CALCULATION BY
USING SIX GENERATION PIXELS
AND FILTER COEFFICIENT — S463

OUTPUT Sub Pel AS PREDICTED PIXEL — S464

HAVE ALL
PREDICTED PIXELS BEEN
GENERATED? — S465

No →

Yes ↓

RETURN

# FIG. 75

# FIG. 76

FIG. 77

EP 2 651 135 A1

# FIG. 78

# FIG. 79

FIG. 80

# FIG. 81

INTER PREDICTION OPERATION START

IDENTIFY REFERENCE IMAGE BASED ON PREDICTING DIRECTION AND REFERENCE INDEX — S480

DETERMINE SIZE OF PREDICTED IMAGE BASED ON BLOCK SIZE OF INTER PREDICTION BLOCK — S481

READ REFERENCE PIXELS BASED ON MOTION VECTOR AND SIZE OF PREDICTED IMAGE — S482

DETERMINE GENERATION TARGET PREDICTED PIXEL — S483

READ EIGHT REFERENCE PIXELS BASED ON POSITION OF GENERATION TARGET PREDICTED PIXEL IN REFERENCE IMAGE — S484

S485 — IS POSITION OF PREDICTION-ASSOCIATED PIXEL IN PREDICTED IMAGE ON OUTER SIDE? — No

Yes

READ FILTER COEFFICIENT STORED AND ASSOCIATED WITH FRACTIONAL VALUE OF MOTION VECTOR AND "3" — S486

READ FILTER COEFFICIENT STORED AND ASSOCIATED WITH FRACTIONAL VALUE OF MOTION VECTOR AND "4" — S487

PERFORM CALCULATION BY USING EIGHT REFERENCE PIXELS AND FILTER COEFFICIENT — S488

S489 — ARE BOTH FRACTIONAL VALUES OF HORIZONTAL COMPONENT AND VERTICAL COMPONENT OF MOTION VECTOR OTHER THAN ZERO? — No

Yes

STORE Sub Pel — S492

OUTPUT PIXEL AS PREDICTED PIXEL — S490

S493 — HAVE ALL PREDICTION-ASSOCIATED PIXELS BEEN GENERATED? — No

HAVE ALL PREDICTED PIXELS BEEN GENERATED? — S491 — No

Yes

Yes

① 

RETURN

# FIG. 82

①

DETERMINE GENERATION TARGET PREDICTED PIXEL — S494

READ FOUR Sub Pels BASED ON POSITION OF GENERATION TARGET PREDICTED PIXEL IN REFERENCE IMAGE — S495

IS POSITION OF GENERATION TARGET PREDICTED PIXEL IN PREDICTED IMAGE ON OUTER SIDE? — S496

No →

READ FILTER COEFFICIENT STORED AND ASSOCIATED WITH FRACTIONAL VALUE OF VERTICAL COMPONENT OF MOTION VECTOR AND "2" — S498

Yes ↓

READ FILTER COEFFICIENT STORED AND ASSOCIATED WITH FRACTIONAL VALUE OF VERTICAL COMPONENT OF MOTION VECTOR AND "1" — S497

PERFORM CALCULATION BY USING FOUR Sub Pels AND FILTER COEFFICIENT — S499

OUTPUT Sub Pel AS PREDICTED PIXEL — S500

HAVE ALL PREDICTED PIXELS BEEN GENERATED? — S501

No →

Yes ↓

RETURN

# FIG. 83

```
┌─────────────────────────────────────────┐
│                                          │
│   ┌─────────────────────────┐            │
│   │      COLOR INTER        │            │
│   │    PREDICTION UNIT      │~~~~~~~~~~─ 321
│   └─────────────────────────┘            │
│                                          │
│   ┌─────────────────────────┐            │
│   │    LUMINANCE INTER      │            │
│   │    PREDICTION UNIT      │~~~~~~~~~~─ 322
│   └─────────────────────────┘            │
│                                          │
│        INTER PREDICTION UNIT             │
│                                          │
└─────────────────────────────────────────┘
                    24
```

*FIG. 84*

FIG. 85

# FIG. 86

| PREDICTING DIRECTION | SIZE OF BLOCK IN HORIZONTAL DIRECTION | SIZE OF BLOCK IN VERTICAL DIRECTION | Sub Pel | NUMBER OF GENERATION PIXELS IN HORIZONTAL DIRECTION | | | NUMBER OF GENERATION PIXELS IN VERTICAL DIRECTION | | |
|---|---|---|---|---|---|---|---|---|---|
| | | | | MAXIMUM 6.1 | MAXIMUM 5.2 | MAXIMUM 3.8 | MAXIMUM 6.1 | MAXIMUM 5.2 | MAXIMUM 3.8 |
| Uni | 4 | 4 | abc | 8 | 8 | 8 | * | * | * |
| Uni | 4 | 4 | dhl | * | * | * | 8 | 8 | 8 |
| Uni | 4 | 4 | efgijkmno | 8 | 8 | 4 | 4 | 4 | 4 |
| Uni | 8 | 4 | abc | 8 | 8 | 8 | * | * | * |
| Uni | 8 | 4 | dhl | * | * | * | 8 | 8 | 8 |
| Uni | 8 | 4 | efgijkmno | 8 | 8 | 4 | 8 | 8 | 8 |
| Uni | 4 | 8 | abc | 8 | 8 | 8 | * | * | * |
| Uni | 4 | 8 | dhl | * | * | * | 8 | 8 | 8 |
| Uni | 4 | 8 | efgijkmno | 8 | 8 | 8 | 8 | 8 | 4 |
| Uni | 8 | 8 | abc | 8 | 8 | 8 | * | * | * |
| Uni | 8 | 8 | dhl | * | * | * | 8 | 8 | 8 |
| Uni | 8 | 8 | efgijkmno | 8 | 8 | 8 | 8 | 8 | 8 |
| Uni | 16 | 8 | abc | 8 | 8 | 8 | * | * | * |
| Uni | 16 | 8 | dhl | * | * | * | 8 | 8 | 8 |
| Uni | 16 | 8 | efgijkmno | 8 | 8 | 8 | 8 | 8 | 8 |
| Uni | 8 | 16 | abc | 8 | 8 | 8 | * | * | * |
| Uni | 8 | 16 | dhl | * | * | * | 8 | 8 | 8 |
| Uni | 8 | 16 | efgijkmno | 8 | 8 | 8 | 8 | 8 | 8 |
| Uni | 16 | 16 | abc | 8 | 8 | 8 | * | * | * |
| Uni | 16 | 16 | dhl | * | * | * | 8 | 8 | 8 |
| Uni | 16 | 16 | efgijkmno | 8 | 8 | 8 | 8 | 8 | 8 |
| Uni | 32 | 16 | abc | 8 | 8 | 8 | * | * | * |
| Uni | 32 | 16 | dhl | * | * | * | 8 | 8 | 8 |
| Uni | 32 | 16 | efgijkmno | 8 | 8 | 8 | 8 | 8 | 8 |
| Uni | 16 | 32 | abc | 8 | 8 | 8 | * | * | * |
| Uni | 16 | 32 | dhl | * | * | * | 8 | 8 | 8 |
| Uni | 16 | 32 | efgijkmno | 8 | 8 | 8 | 8 | 8 | 8 |
| Uni | 32 | 32 | abc | 8 | 8 | 8 | * | * | * |
| Uni | 32 | 32 | dhl | * | * | * | 8 | 8 | 8 |
| Uni | 32 | 32 | efgijkmno | 8 | 8 | 8 | 8 | 8 | 8 |
| Uni | 64 | 32 | abc | 8 | 8 | 8 | * | * | * |
| Uni | 64 | 32 | dhl | * | * | * | 8 | 8 | 8 |
| Uni | 64 | 32 | efgijkmno | 8 | 8 | 8 | 8 | 8 | 8 |
| Uni | 32 | 64 | abc | 8 | 8 | 8 | * | * | * |
| Uni | 32 | 64 | dhl | * | * | * | 8 | 8 | 8 |
| Uni | 32 | 64 | efgijkmno | 8 | 8 | 8 | 8 | 8 | 8 |
| Uni | 64 | 64 | abc | 8 | 8 | 8 | * | * | * |
| Uni | 64 | 64 | dhl | * | * | * | 8 | 8 | 8 |
| Uni | 64 | 64 | efgijkmno | 8 | 8 | 8 | 8 | 8 | 8 |

# FIG. 87

| PREDICTING DIRECTION | SIZE OF BLOCK IN HORIZONTAL DIRECTION | SIZE OF BLOCK IN VERTICAL DIRECTION | Sub Pel | NUMBER OF GENERATION PIXELS IN HORIZONTAL DIRECTION | | | NUMBER OF GENERATION PIXELS IN VERTICAL DIRECTION | | |
|---|---|---|---|---|---|---|---|---|---|
| | | | | MAXIMUM 6.1 | MAXIMUM 5.2 | MAXIMUM 3.8 | MAXIMUM 6.1 | MAXIMUM 5.2 | MAXIMUM 3.8 |
| Bi | 4 | 4 | abc | 8 | 4 | 4 | * | * | * |
| Bi | 4 | 4 | dhl | * | * | * | 8 | 4 | 4 |
| Bi | 4 | 4 | efgijkmno | 4 | 4 | 4 | 4 | 4 | 4 |
| Bi | 8 | 4 | abc | 8 | 8 | 8 | * | * | * |
| Bi | 8 | 4 | dhl | * | * | * | 8 | 4 | 4 |
| Bi | 8 | 4 | efgijkmno | 4 | 4 | 4 | 4 | 4 | 4 |
| Bi | 4 | 8 | abc | 8 | 8 | 8 | * | * | * |
| Bi | 4 | 8 | dhl | * | * | * | 8 | 8 | 8 |
| Bi | 4 | 8 | efgijkmno | 4 | 4 | 4 | 4 | 4 | 4 |
| Bi | 8 | 8 | abc | 8 | 8 | 8 | * | * | * |
| Bi | 8 | 8 | dhl | * | * | * | 8 | 8 | 8 |
| Bi | 8 | 8 | efgijkmno | 8 | 8 | 4 | 4 | 4 | 4 |
| Bi | 16 | 8 | abc | 8 | 8 | 8 | * | * | * |
| Bi | 16 | 8 | dhl | * | * | * | 8 | 8 | 8 |
| Bi | 16 | 8 | efgijkmno | 8 | 4 | 4 | 8 | 8 | 4 |
| Bi | 8 | 16 | abc | 8 | 8 | 8 | * | * | * |
| Bi | 8 | 16 | dhl | * | * | * | 8 | 8 | 8 |
| Bi | 8 | 16 | efgijkmno | 8 | 8 | 4 | 8 | 4 | 4 |
| Bi | 16 | 16 | abc | 8 | 8 | 8 | * | * | * |
| Bi | 16 | 16 | dhl | * | * | * | 8 | 8 | 8 |
| Bi | 16 | 16 | efgijkmno | 8 | 8 | 8 | 8 | 8 | 4 |
| Bi | 32 | 16 | abc | 8 | 8 | 8 | * | * | * |
| Bi | 32 | 16 | dhl | * | * | * | 8 | 8 | 8 |
| Bi | 32 | 16 | efgijkmno | 8 | 8 | 8 | 8 | 8 | 8 |
| Bi | 16 | 32 | abc | 8 | 8 | 8 | * | * | * |
| Bi | 16 | 32 | dhl | * | * | * | 8 | 8 | 8 |
| Bi | 16 | 32 | efgijkmno | 8 | 8 | 8 | 8 | 8 | 8 |
| Bi | 32 | 32 | abc | 8 | 8 | 8 | * | * | * |
| Bi | 32 | 32 | dhl | * | * | * | 8 | 8 | 8 |
| Bi | 32 | 32 | efgijkmno | 8 | 8 | 8 | 8 | 8 | 8 |
| Bi | 64 | 32 | abc | 8 | 8 | 8 | * | * | * |
| Bi | 64 | 32 | dhl | * | * | * | 8 | 8 | 8 |
| Bi | 64 | 32 | efgijkmno | 8 | 8 | 8 | 8 | 8 | 8 |
| Bi | 32 | 64 | abc | 8 | 8 | 8 | * | * | * |
| Bi | 32 | 64 | dhl | * | * | * | 8 | 8 | 8 |
| Bi | 32 | 64 | efgijkmno | 8 | 8 | 8 | 8 | 8 | 8 |
| Bi | 64 | 64 | abc | 8 | 8 | 8 | * | * | * |
| Bi | 64 | 64 | dhl | * | * | * | 8 | 8 | 8 |
| Bi | 64 | 64 | efgijkmno | 8 | 8 | 8 | 8 | 8 | 8 |

FIG. 88

REFERENCE IMAGE  
FROM 22 → REFERENCE IMAGE READ UNIT (351)

PIXEL SORTER UNIT (352)

2-TAP FIR FILTER (43)

4-TAP FIR FILTER (44)

PIXEL SELECTION UNIT (353) → PREDICTED IMAGE

INTER PREDICTION MODE INFORMATION  
FROM 25

LUT (354)

MOTION VECTOR

2-TAP FILTER COEFFICIENT MEMORY (46)

4-TAP FILTER COEFFICIENT MEMORY (47)

INTERMEDIATE RESULT MEMORY (50)

322

# FIG. 89

| PREDICTING DIRECTION | SIZE OF BLOCK IN HORIZONTAL DIRECTION | SIZE OF BLOCK IN VERTICAL DIRECTION | Sub Pel | NUMBER OF GENERATION PIXELS IN HORIZONTAL DIRECTION | | NUMBER OF GENERATION PIXELS IN VERTICAL DIRECTION | |
|---|---|---|---|---|---|---|---|
| | | | | MAXIMUM 4.5 | MAXIMUM 3.1 | MAXIMUM 4.5 | MAXIMUM 3.1 |
| Uni | 2 | 2 | abc | 4 | 4 | * | * |
| Uni | 2 | 2 | dhl | * | * | 4 | 4 |
| Uni | 2 | 2 | efgijkmno | 4 | 2 | 2 | 2 |
| Uni | 4 | 2 | abc | 4 | 4 | * | * |
| Uni | 4 | 2 | dhl | * | * | 4 | 4 |
| Uni | 4 | 2 | efgijkmno | 4 | 2 | 4 | 4 |
| Uni | 2 | 4 | abc | 4 | 4 | * | * |
| Uni | 2 | 4 | dhl | * | * | 4 | 4 |
| Uni | 2 | 4 | efgijkmno | 4 | 4 | 4 | 2 |
| Uni | 4 | 4 | abc | 4 | 4 | * | * |
| Uni | 4 | 4 | dhl | * | * | 4 | 4 |
| Uni | 4 | 4 | efgijkmno | 4 | 4 | 4 | 4 |
| Uni | 8 | 4 | abc | 4 | 4 | * | * |
| Uni | 8 | 4 | dhl | * | * | 4 | 4 |
| Uni | 8 | 4 | efgijkmno | 4 | 4 | 4 | 4 |
| Uni | 4 | 8 | abc | 4 | 4 | * | * |
| Uni | 4 | 8 | dhl | * | * | 4 | 4 |
| Uni | 4 | 8 | efgijkmno | 4 | 4 | 4 | 4 |
| Uni | 8 | 8 | abc | 4 | 4 | * | * |
| Uni | 8 | 8 | dhl | * | * | 4 | 4 |
| Uni | 8 | 8 | efgijkmno | 4 | 4 | 4 | 4 |
| Uni | 16 | 8 | abc | 4 | 4 | * | * |
| Uni | 16 | 8 | dhl | * | * | 4 | 4 |
| Uni | 16 | 8 | efgijkmno | 4 | 4 | 4 | 4 |
| Uni | 8 | 16 | abc | 4 | 4 | * | * |
| Uni | 8 | 16 | dhl | * | * | 4 | 4 |
| Uni | 8 | 16 | efgijkmno | 4 | 4 | 4 | 4 |
| Uni | 16 | 16 | abc | 4 | 4 | * | * |
| Uni | 16 | 16 | dhl | * | * | 4 | 4 |
| Uni | 16 | 16 | efgijkmno | 4 | 4 | 4 | 4 |
| Uni | 32 | 16 | abc | 4 | 4 | * | * |
| Uni | 32 | 16 | dhl | * | * | 4 | 4 |
| Uni | 32 | 16 | efgijkmno | 4 | 4 | 4 | 4 |
| Uni | 16 | 32 | abc | 4 | 4 | * | * |
| Uni | 16 | 32 | dhl | * | * | 4 | 4 |
| Uni | 16 | 32 | efgijkmno | 4 | 4 | 4 | 4 |
| Uni | 32 | 32 | abc | 4 | 4 | * | * |
| Uni | 32 | 32 | dhl | * | * | 4 | 4 |
| Uni | 32 | 32 | efgijkmno | 4 | 4 | 4 | 4 |

# FIG. 90

| PREDICTING DIRECTION | SIZE OF BLOCK IN HORIZONTAL DIRECTION | SIZE OF BLOCK IN VERTICAL DIRECTION | Sub Pel | NUMBER OF GENERATION PIXELS IN HORIZONTAL DIRECTION | | NUMBER OF GENERATION PIXELS IN VERTICAL DIRECTION | |
|---|---|---|---|---|---|---|---|
| | | | | MAXIMUM 4.5 | MAXIMUM 3.1 | MAXIMUM 4.5 | MAXIMUM 3.1 |
| Bi | 2 | 2 | abc | 2 | 2 | * | * |
| Bi | 2 | 2 | dhl | * | * | 2 | 2 |
| Bi | 2 | 2 | efgijkmno | 2 | 2 | 2 | 2 |
| Bi | 4 | 2 | abc | 4 | 2 | * | * |
| Bi | 4 | 2 | dhl | * | * | 2 | 2 |
| Bi | 4 | 2 | efgijkmno | 2 | 2 | 2 | 2 |
| Bi | 2 | 4 | abc | 2 | 2 | * | * |
| Bi | 2 | 4 | dhl | * | * | 4 | 2 |
| Bi | 2 | 4 | efgijkmno | 2 | 2 | 2 | 2 |
| Bi | 4 | 4 | abc | 4 | 2 | * | * |
| Bi | 4 | 4 | dhl | * | * | 4 | 2 |
| Bi | 4 | 4 | efgijkmno | 4 | 2 | 2 | 2 |
| Bi | 8 | 4 | abc | 4 | 4 | * | * |
| Bi | 8 | 4 | dhl | * | * | 4 | 2 |
| Bi | 8 | 4 | efgijkmno | 2 | 2 | 4 | 2 |
| Bi | 4 | 8 | abc | 4 | 2 | * | * |
| Bi | 4 | 8 | dhl | * | * | 4 | 4 |
| Bi | 4 | 8 | efgijkmno | 4 | 2 | 2 | 2 |
| Bi | 8 | 8 | abc | 4 | 4 | * | * |
| Bi | 8 | 8 | dhl | * | * | 4 | 4 |
| Bi | 8 | 8 | efgijkmno | 4 | 4 | 4 | 2 |
| Bi | 16 | 8 | abc | 4 | 4 | * | * |
| Bi | 16 | 8 | dhl | * | * | 4 | 4 |
| Bi | 16 | 8 | efgijkmno | 4 | 2 | 4 | 4 |
| Bi | 8 | 16 | abc | 4 | 4 | * | * |
| Bi | 8 | 16 | dhl | * | * | 4 | 4 |
| Bi | 8 | 16 | efgijkmno | 4 | 4 | 4 | 2 |
| Bi | 16 | 16 | abc | 4 | 4 | * | * |
| Bi | 16 | 16 | dhl | * | * | 4 | 4 |
| Bi | 16 | 16 | efgijkmno | 4 | 4 | 4 | 4 |
| Bi | 32 | 16 | abc | 4 | 4 | * | * |
| Bi | 32 | 16 | dhl | * | * | 4 | 4 |
| Bi | 32 | 16 | efgijkmno | 4 | 4 | 4 | 4 |
| Bi | 16 | 32 | abc | 4 | 4 | * | * |
| Bi | 16 | 32 | dhl | * | * | 4 | 4 |
| Bi | 16 | 32 | efgijkmno | 4 | 4 | 4 | 4 |
| Bi | 32 | 32 | abc | 4 | 4 | * | * |
| Bi | 32 | 32 | dhl | * | * | 4 | 4 |
| Bi | 32 | 32 | efgijkmno | 4 | 4 | 4 | 4 |

## FIG. 91

```
( COLOR INTER PREDICTION OPERATION START )
                    │
                    ▼
┌─────────────────────────────────────────┐  S521
│ IDENTIFY REFERENCE IMAGE BASED ON        │
│ PREDICTING DIRECTION AND REFERENCE INDEX │
└─────────────────────────────────────────┘
                    │
                    ▼
┌─────────────────────────────────────────┐  S522
│ DETERMINE SIZE OF PREDICTED IMAGE BASED ON │
│ BLOCK SIZE OF INTER PREDICTION BLOCK     │
└─────────────────────────────────────────┘
                    │
                    ▼
┌───────────────────────────────────────────────────┐  S523
│ READ NUMBER OF GENERATION PIXELS CORRESPONDING     │
│ TO SIZE OF PREDICTED IMAGE, PREDICTING DIRECTION,  │
│ AND FRACTIONAL VALUE OF MOTION VECTOR              │
└───────────────────────────────────────────────────┘
                    │
                    ▼
┌───────────────────────────────────────────────────┐  S524
│ READ COLOR COMPONENTS OF REFERENCE PIXELS          │
│ BASED ON NUMBER OF GENERATION PIXELS,              │
│ MOTION VECTOR, AND SIZE OF PREDICTED IMAGE         │
└───────────────────────────────────────────────────┘
                    │
                    ▼
┌───────────────────────────────────────────────────┐  S525
│ DETERMINE GENERATION TARGET PREDICTED PIXEL        │
└───────────────────────────────────────────────────┘
                    │
                    ▼
┌───────────────────────────────────────────────────┐  S526
│ READ COLOR COMPONENTS OF SAME NUMBER OF            │
│ REFERENCE PIXELS AS NUMBER OF GENERATION PIXELS,   │
│ BASED ON POSITION OF GENERATION TARGET PREDICTED   │
│ PIXEL IN REFERENCE IMAGE                           │
└───────────────────────────────────────────────────┘
                    │
                    ▼
            S527
    ◇ IS NUMBER OF REFERENCE ◇──── No ──────┐
    ◇ PIXELS EIGHT?         ◇               ▼
            │                        ┌──────────────────────┐  S529
            │ Yes                    │ PERFORM CALCULATION BY│
            ▼                        │ USING COLOR COMPONENTS OF│
┌───────────────────────────────┐   │ FOUR REFERENCE PIXELS AND│
│ PERFORM CALCULATION BY USING   │S528│ FILTER COEFFICIENT    │
│ COLOR COMPONENTS OF EIGHT      │   └──────────────────────┘
│ REFERENCE PIXELS AND FILTER    │               │
│ COEFFICIENT                    │               │
└───────────────────────────────┘               │
                    │◄──────────────────────────┘
                    ▼
            S530
    ◇ ARE BOTH FRACTIONAL VALUES OF      ◇──── No ──────┐
    ◇ HORIZONTAL COMPONENT AND VERTICAL  ◇              ▼
    ◇ COMPONENT OF MOTION VECTOR         ◇       ┌──────────────────────┐  S531
    ◇ OTHER THAN ZERO?                   ◇       │ OUTPUT COLOR COMPONENT│
            │                                    │ OF PIXEL AS COLOR     │
            │ Yes          S533                  │ COMPONENT OF PREDICTED│
            ▼                                    │ PIXEL                 │
┌───────────────────────────────┐               └──────────────────────┘
│ STORE COLOR COMPONENT OF Sub Pel│                         │
└───────────────────────────────┘                         ▼
                    │              S534            S532
    No ◇ HAVE COLOR COMPONENTS OF ALL ◇      ◇ HAVE COLOR COMPONENTS ◇ No
       ◇ PREDICTION-ASSOCIATED          ◇      ◇ OF ALL PREDICTED PIXELS◇
       ◇ PIXELS BEEN GENERATED?         ◇      ◇ BEEN GENERATED?       ◇
            │ Yes                                   │ Yes
            ▼                                       ▼
          ( 1 )                                  ( END )
```

# FIG. 92

① 

DETERMINE GENERATION
TARGET PREDICTED PIXEL — S535

READ NUMBER OF GENERATION PIXELS
CORRESPONDING TO SIZE OF PREDICTED
IMAGE, PREDICTING DIRECTION, AND
FRACTIONAL VALUE OF MOTION VECTOR — S536

READ COLOR COMPONENTS OF SAME
NUMBER OF Sub Pels AS NUMBER OF
GENERATION PIXELS, BASED ON POSITION
OF GENERATION TARGET PREDICTED
PIXEL IN REFERENCE IMAGE — S537

IS NUMBER OF
Sub Pels EIGHT? — S538

No →

PERFORM CALCULATION
BY USING COLOR COMPONENTS
OF FOUR Sub Pels AND
FILTER COEFFICIENT — S540

Yes ↓

PERFORM CALCULATION BY
USING COLOR COMPONENTS OF EIGHT
Sub Pels AND FILTER COEFFICIENT — S539

OUTPUT COLOR COMPONENT
OF Sub Pel AS COLOR COMPONENT
OF PREDICTED PIXEL — S541

HAVE COLOR
COMPONENTS OF ALL
PREDICTED PIXELS BEEN
GENERATED? — S542

No →

Yes ↓

END

# FIG. 93

FIG. 94

FIG. 95

FIG. 96

FIG. 97

FIG. 98

FIG. 99

# FIG. 100

FIG. 101

EP 2 651 135 A1

**FIG. 102**

500 TELEVISION RECEIVER

- 551 REMOTE CONTROLLER
- 537 LIGHT RECEIVING UNIT
- 536
- 535
- 534 NETWORK I/F
- 533 USB I/F
- 532 CPU
- 531 FLASH MEMORY
- 530 SDRAM
- 529
- 526
- 527 A/D CONVERTER CIRCUIT
- 528 AUDIO CODEC
- 522 AUDIO SIGNAL PROCESSING CIRCUIT
- 525
- 524 AUDIO AMPLIFIER CIRCUIT
- 523 ECHO CANCELLATION/AUDIO SYNTHESIS CIRCUIT
- 521 DISPLAY PANEL
- 520 PANEL DRIVE CIRCUIT
- 519 GRAPHICS GENERATION CIRCUIT
- 518 VIDEO SIGNAL PROCESSING CIRCUIT
- 514 AUDIO A/D CONVERTER CIRCUIT
- 515 VIDEO DECODER
- 517 MPEG DECODER
- 513 TERRESTRIAL TUNER
- 516 DIGITAL TUNER

## FIG. 103

TO RESPECTIVE COMPONENTS

651 POWER SOURCE CIRCUIT UNIT

650 MAIN CONTROL UNIT

619 OPERATION KEYS

652 OPERATION INPUT CONTROL UNIT

653 IMAGE ENCODER

616 CCD CAMERA

654 CAMERA I/F UNIT

681 INFRARED COMMUNICATION UNIT

660

655 LCD CONTROL UNIT

618 LIQUID CRYSTAL DISPLAY

656 IMAGE DECODER

657 MULTIPLEXING/ SEPARATING UNIT

662 RECORDING/ REPRODUCING UNIT

623 STORAGE UNIT

658 MODULATION/ DEMODULATION CIRCUIT UNIT

663 TRANSMISSION/ RECEPTION CIRCUIT UNIT

614

659 AUDIO CODEC

621 MICROPHONE

617 SPEAKER

600

EP 2 651 135 A1

## FIG. 104

# FIG. 105

EP 2 651 135 A1

EP 2 651 135 A1

**INTERNATIONAL SEARCH REPORT**

International application No.

PCT/JP2011/078235

A.   CLASSIFICATION OF SUBJECT MATTER
*H04N7/32*(2006.01)i

According to International Patent Classification (IPC) or to both national classification and IPC

B.   FIELDS SEARCHED

Minimum documentation searched (classification system followed by classification symbols)
H04N7/24-7/68

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 2007-129370 A  (Matsushita Electric Industrial Co., Ltd.),<br>24 May 2007 (24.05.2007),<br>paragraphs [0113] to [0124], [0125] to [0153]<br>(Family: none) | 1-9,13-19<br>10-12 |
| Y | WO 2009/126924 A1  (QUALCOMM INC.),<br>15 October 2009 (15.10.2009),<br>fig. 4, 5<br>& JP 2011-517237 A        & US 2009/0257493 A1<br>& KR 10-2010-0129339 A   & CN 101990758 A | 10 |
| Y | JP 2004-7337 A  (Sony Corp.),<br>08 January 2004 (08.01.2004),<br>paragraphs [0046] to [0047]<br>& US 2004/0213470 A1 | 11,12 |

☒   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05 March, 2012 (05.03.12) | Date of mailing of the international search report<br>13 March, 2012 (13.03.12) |
|---|---|
| Name and mailing address of the ISA/<br>    Japanese Patent Office | Authorized officer |
| Facsimile No. | Telephone No. |

Form PCT/ISA/210 (second sheet) (July 2009)

| | INTERNATIONAL SEARCH REPORT | International application No. |
|---|---|---|
| | | PCT/JP2011/078235 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-346368 A  (Matsushita Electric Industrial Co., Ltd.), 14 December 1999 (14.12.1999), entire text; all drawings & US 6259734 B1 | 1-19 |
| A | JP 2001-521343 A  (Robert Bosch GmbH), 06 November 2001 (06.11.2001), entire text; all drawings & US 6714593 B1          & WO 1999/021365 A1 | 1-19 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DMYTRO RUSANOVSKYY ; KEMAL UGUR ; ANTTI HALLAPURO ; JANI LAINEMA ; MONCEF GABBOUJ.** Video Coding With Low-Complexity Directional Adaptive Interpolation Filters. *IEEE TRANSACTIONS ON CIRCUITS AND SYSTEMS FOR VIDEO TECHNOLOGY,* August 2009, vol. 19 (8